# EUROPEAN PATENT APPLICATION

(11) **EP 4 036 821 A1**
(43) Date of publication of application: **03.08.2022**
(21) Application number: 20904058.3
(22) Date of filing: 20.11.2020
(51) Int. Cl.: G06Q 10/04, G06Q 30/02, G06F 9/44, G06F 8/35

(54) **SYSTEM FOR THE MATRIX-DIGITAL TRANSFORMATION OF A VARIABLE DATA SET**

(30) Priority: 20.12.2019 RU 2019142636
(71) Applicant: Merkulova, Yuliya Vladislavovna, Moscow, 123592 (RU)
(72) Inventor: Merkulova, Yuliya Vladislavovna, Moscow, 123592 (RU)
(74) Representative: Sloboshanin, Sergej
(86) International application number: PCT/RU2020/050337
(87) International publication number: WO 2021/126012

(57) **Abstract**

The present invention (IPC G06Q 10/00) contains two objects, which are inextricably linked to one another, namely a system and a way, a system contains: the web-server, proxy-server, server of databases; «MySQL Server»; the computing server; servers of the applications over synthesis of strategies, over digital transformation of data, over the target appointment; the file server; the controller of the domain; interactive panels; the system operates in an interactive manner and includes six subsystems to allow the servers to rapidly carry out operational and communication processes relating to the consecutive execution of models describing six stages of the claimed way and its steps and operations, which all together make up a unified model of a way and which, with the aid of instruments of the matrix-digital mechanism of a way, make it possible to generate and transform data as a plurality, thereby, increasing the synergetic effectiveness of a situational-strategic program of the offer of products.

## Description

The declared invention consists in both an invented system and an invented way of matrix-digital transformation of a variable plurality of the data, which are named subsequently the System and the Way, which are inseparably linked with each other, because they cannot be carried out without each other, and they are intended for increase of speed of generating documents of the situational-strategic program of the offer of products, for increase of the productivity, accuracy and reliability of data of program, and in the end result, for the best satisfaction of public needs owing to increase of aggregate useful effect from products.

### Area of the technique to which the invention belongs

Classification over IPK: G06Q10/00;
G06 - «Data processing, calculation, account»;
G06Q - «The data processing systems or ways, which are specially intended for the administrative, commercial, financial, administrative, supervising or predictive purposes»;
G06Q10/00 - «The systems or ways, which are specially intended for the administrative, commercial, financial, administrative, supervising or predictive purposes, not provided in other subclasses».

The invention belongs to a system of processing of data that are intended for the commercial, administrative, predictive purposes namely for processing, the analysis, assessment, forecasting, planning, optimization, situational transformation of a variable plurality of data of the consumer indicators of products in interrelation with temporal and spatial parameters.

### Objects of the invention:

1. System consisting of set of the interacting structural elements, communication channels between them, and it is created for exercise of the Way over request of the enterprise.
2. Way consisting of a certain sequence of stages, their steps and operations of each step of performance of actions with data, namely actions over collecting, systematization, a clustering, storage, the analysis, forecast, synthesis, planning of a variable plurality of data on the basis of use of matrix-digital mechanisms of their transformation.

Data are a registered information. Therefore, data are a material object [CMMI-DEV (Ver. 1.3, November 2010). Carnegie Mellon University Software Engineering Institute (2010)]. Transformation of a variable plurality of data consists always in management of a plurality of the registered information, provided in the material form suitable for transfer, communication, for processing by the person or by means of automatic means [Systems ISO/IEC/IEEE 24765-2010 and programming - Dictionary].

The tool - a subject, the device, the mechanism, the machine, used for impact on an object: its changes or measurements for achievement of useful effect [The tool in the Big Soviet encyclopedia//the Big Soviet encyclopedia: [B 30 τ.] / Under edition A. M. Prohorov . - the 3rd edition - M.: Soviet encyclopedia, 1969 -1978].

Means of software, which are a material object of impact on data are widely used for exercise of the operations of the Way. Besides, material tools for exercise of actions over transformation of data are created in the course of the Way. At the first stage the structured relational databases forming a block of databases are created; at the second stage - the object-relational models for management of databases forming a block of DBMS; at the third stage - the unstructured databases and temporal rows of forecasted data forming an analytical block; at the fourth stage - the long-term and current strategies forming a block of strategies; at the fifth stage - matrix-digital models of the strategic planning of a plurality of output data forming a block of strategic programs, at the sixth stage - matrix-digital situational models for updating a plurality of output data forming a block of the current programs and an integrated block of the situational-strategic program. All created objects, as a result of operating process of each stage, actually are different blocks of data, i.e. by material objects that, on the one hand, are a result of data transformation in the course of the Way, and on the other hand, are tools of impact on data as all of them are logically connected with each other, each next stage cannot be carried out without previous stage, they form unity and integrity at implementing a matrix-digital mechanism of the Way.

In the course of the Way a material tool for transformation of a plurality of data was created, which works on the basis of use of interactive displays and of the corresponding software for creation of models in 3D format, the matrix-digital models for situational-strategic planning on this basis were created. Thus, the created mechanisms and tools for data transformation are material objects for impact on data, namely one material object influences other material object.

Variable data of the offer of products of the company can be changed in the various direction in dependence from change of the markets and temporal phases of positioning of products, consumer demand, resource base of the company, its business environment, the competition in the markets. As a result of processing and assessment of data, decisions have to be accepted or about preservation of data in a steady state, or about direction of transformation of data.

Currently, technical solutions are known, which are devoted to transformation and optimization of technical parameters of the products characterizing their quality, consumer cost, but still there were no inventions - of technical decisions, in form of a system and of a way, which allow to decide a task over increase of the effectiveness of program of the offer of products owing to perfecting by means of technical means of a synergistic plurality of variable data in process of their dynamic transformation from the point of view of situational maneuvering by a plurality of data in various spatial and temporary coordinates. For solution of this task in the process of elaboration of the technical mechanism of the System and tools of the Way the previous level of technique, including the universal technical means that are well-known from level of the technique and are widely used, was studied.

### Previous level of the technique

The declared invention does not belong to the known level of the technique, but the invention has prototypes, which characterize technical level before the declared invention, which were chosen among the known technical solutions of data processing.

**Firstly**, technical decision: «The way of business management and automation of operations at the enterprise» is known [RU2651182]. The way of business management and automation of operations at the enterprise is the system consisting at least of the server and the user Electronic Computers, this way is intended for business management and performance of operations at the enterprise, by namely: for action of the specified system set including two blocks of computer programs, in which the first block is the part of system set closed for editing computer programs by consumers, and the second block of computer programs is a part of system set open for viewing and editing computer programs by consumers, and data of the enterprise are stored in the uniform database; control is exercised through DBMS working together with the first block of computer programs and with the second block of computer programs.

Procedures of authentication, of authorization, of registration, differentiation of access for users, of object transformation are applied at functioning of the first and second block of computer programs. The model of data, in which objects are specialized over type of use, is static and includes the static information, data about events, total data and their history. The essence of a way consists in actions over automatic data collection from external information sources, including websites of other companies and Internet aggregators, as well as interpretation of these data and translation them into virtual model of the enterprise for further use in scenario logic of decision-making.

Advantages: the system of interaction of computer programs and their various blocks for recognition and transformation of data is constructed; it allows to study process on the basis of the comprehensive, system approach. Besides, data are classified over type of use; constructed model of interaction of various type of statistical data, data about events, total data and their history is determined; a certain logic of decision-making as the procedure of object transformation is developed.

Shortcomings: spatial-temporary approach to transformation of data is absent, also the model does not contain of the list of the sequences of stages, steps and operations of data transformation; updated data of process of interaction with the external environment is generated, but nothing is told about influence of internal factors on process of transformation and about system of restrictions, for example, in resources, in requirements of the enterprise and external consumers that always should be considered for increase in effectiveness and accuracy of transformation; digital technologies of data transformation are not used, what slows down data transformation process.

**Secondly**, technical decision: «System and way of formation of base of decisions» is known [RU2601150], system contains the computer and the server connected by a communication network and contains the block of the initiator of a task that has to be solved; the block of distribution of roles among users of system for formation of base of decisions in dependence from a task that has to be solved; the publication block having a possibility of the publication of a task for the general access of users of system to formation of a base of decision-making; block implementing a possibility of reception of solutions of a task from users of system; assessment block of a task according to the set criteria; the choice block implementing a possibility of the choice of at least one decision on the basis of the received assessments; the database having a possibility of storage of the chosen decisions.

**Thirdly,** technical decision: «System and way of introduction of decisions» is known [RU 2665242], this technical decision is connected with system and way of formation of base of decisions [RU2601150] and consists in formation of the initial database, as well as of a block of reception of a task, block of distribution of roles among users of system, block of the publication of a task, the block of reception of solutions, assessment block according to the set parameters in the automatic mode, choice block, executed with a possibility of the choice of at least one decision on the basis of the received assessment, the database for storage of the chosen decisions, the block of realization of at least one chosen decision, with its description, establishment of performance terms and tracking of observance of established periods.

Advantages: technical solutions over creation of system and a way of formation of base of decisions and introductions of decisions are aimed at the end result and use system approach to choose and introduce the best decisions, for this purpose in both technical solutions the system of similar blocks, which are connected with each other and united in the general process, is offered. At system of introduction of decisions, the automated assessment of data of the solution over the key parameters is used, it increases the accuracy of estimates in the accepted borders. This way is similar with way of planning data on key indicators [Raytsberg B. A., Lozovsky L. Sh., Starodubtsev E. B. Modernist style economic dictionary. - the 2^{nd} edition., M.: INFRA-M., 1999. - P. 479; Kurakov L. P., Kurakov V. L., Kurakov A. L. Economy and rights: reference of the dictionary. - M.: Higher educational institution and school, 2004. - P. 1072]. A way of data transformation, at which values of key indicators (the set of parameters) are used for finding of decision by the target task and for plans of introduction of decisions, has advantages, because it allows to take into account the key factors of success (tasked parameters) at planning data. This way is effective, if it is possible to determine rather precisely the set parameters, limiters, but in the conditions of fast changes in inquiries of consumers this way of data transformation is not productive.

Shortcomings: technology of this way is quite narrow and does not allow to carry out a comprehensive, integrated approach and to consider influence of various factors at the solution of a problem of formation of the database, including database for planning the offer of products. Besides, this way does not allow to implement spatial-temporary approach and to carry out maneuverable situational transformation of data of the offer of the products of the company for increase of effectiveness and accuracy of final decisions, also the system of restrictions is not built, evaluation criteria are insufficiently exact and productive; many factors and parameters at the choice of optimal solutions are not investigated; influence of data on each other is not considered at their transformation, it does not allow to find their most productive optimum plurality; digital technologies are not used, it reduces the speed of generating decisions.

**Fourthly**, technical decision «Automatic control system of the enterprise» is known [RU2695987]; this decision contains connected databases of planned tasks, block of assessment of level of significance of planned tasks and block of assessment of time frames of performance of planned tasks, which has several entrances, and at different stages it is connected with the block of assessment of level of significance of functional tasks, with the block of medium-term planning, with the block of random access memory of additional tasks, with the block of assessment of level of significance of additional tasks, the block of assessment of time frames of performance of additional tasks, and also with the block of calculation of salary and of working hours.

Advantage: the mutually agreed system of blocks over formation of data of the medium-term plan is constructed, but also it has the block of assessment of time frames of performance of planned tasks, and consequently, system considers time factor, it is aimed at achievement of the balanced data of the medium-term plan.

Shortcomings: too difficult and tangled scheme of interrelations between blocks, which complicates a way, this increases labor-consuming and duration of a way; assessment block includes assessment of level of significance of task and of time frames of its decision only, but there is no assessment of degree of the solution of the task, and also assessment of the choice of the optimal solution, it reduces the accuracy and effectiveness of system. The system consists in realization of an automated control system of the enterprise, but has no mechanism of digital transformation of data.

**Fifthly**, technical decision «System and method of adjusting of models of processes» is known [RU2686820]. The system of control for improvement of work of the enterprise contains the following elements: server that is connected to system of control for communication with the enterprise through a communication network; computer system having the platform functioning on the basis of network, intended for reception and transfer over a communication network of data of the enterprise about its work; the display device for interactive data presentation of the enterprise; the coordination block for comparison of actual data of the enterprise with results of work of model of functioning of technological process from the special processor of modeling and coordination of data over a set of control points.

Advantage: computer system is created, it includes server, communication channels for reception and transfer of data, and also the device in form of display for interactive reflection of data that increases the speed and accuracy of data processing. Created block of coordination of data over control points allows to predict critical values of the planned parameters, below which they cannot fall [Breker of T, Lander L. The differentiated sprouts and cases. Translation from English.M. Mir1977r. 208p.]. It will allow to define an admissible interval of data during planning and to increase effectiveness of this process. This way is very effective in the condition of high stability of the environment, the markets, supply and demand, but at once finds shortcomings at dynamically changing conditions, high competition, at high instability of supply and demand.

Shortcomings: planning and modeling of data over set of control points does not allow to carry out dynamic transformation of data, to consider time factor, to carry out comprehensive assessment of data, and consequently, in the conditions of dynamically changing markets this way is insufficiently exact and productive, speed of implementation of system is low, as it is analog system, which does not include digital transformation of data.

Sixthly, technical decision «System of transformation, analysis and assessment of information signs of an object» [RU2622857] is known; system contains: user's automated workplace; the block of visualization of data; the server of databases; the block of the choice of recommendations; the block of formation of information signs of an object, which is connected to the block of comparison and choice of optimal decisions. The block of the choice of decisions has several entrances and exits and has complex system of connection with the server of databases, with user's automated workplace, with the block of formation of rules of a solver, with the block of establishment of a scale of transformation and with the block of transformation of absolute values into relative values, and at last, through many entrances and exits with the block of calculation of indicators of system, as well as with the block of calculation of effectiveness coefficient of system and correlation dependences between information indicators; this system allows to choose the best recommendations about transformation of data of an object.

Advantages: the system of the analysis, assessment and transformation of data of an object is constructed; the system is aimed at the solution of a specific objective of transformation of data of an object, and therefore contains the block of a solver and the block of calculations of data of indicators of system and correlation dependences between various data, which allows to consider influence of various factors on an object; the system contains the block of the choice of recommendations for realization of process of comparison of various recommendations among themselves by means of calculation of effectiveness coefficient of system for each of them, and it allows to choose the most exact data from all recommended.

Shortcomings: very difficult and labor-consuming system, does not solve a problem of synergistic interaction of data, as system is not intended for finding optimal plurality of data by means of definition of influence of data at each other; spatial-temporary parameters are not considered at finding solutions; insufficiently exact estimates of data and options of them transformation are used; digital technologies of transformation of data are not used, it decreases the speed of data processing and work of all system in a whole.

**Seventhly**, technical decision «Way of assessment of information on efficiency of functioning of system and the device on its basis for the solution of tasks of management, control and diagnostics» [RU2622858] is known. The way includes operations: users write down in memory devices necessary basic data in the form of set of variable and constant values of indicators about system and situations of development, analyze conformity of versions of decisions for different situations, display information about a situation on screen of the display block, define value of an indicator of management efficiency, define time of implementation of decisions, also probability of timely implementation of the made decisions, reflect them on the screen of the block of display, analyze the obtained information. For exercise of a way, users reduce size of data owing to the correlation analysis, also they lead information indicators for each situation to relative units with use of special scales and formulas.

Advantages: the system allows to analyze data of situations and conformity of versions of decisions to situations, to operate constant and variable data, to analyze information by means of the block of display of data at the screen, it increases not only the accuracy, but also speed of process of assessment of efficiency of functioning of system. The system allows to consider time factor, i.e. to define time of implementation of decisions, probability of timely implementation of the made decisions, it increases the speed and effectiveness of system.

Shortcomings: insufficiently effective way of assessment by means of a special scale is used, it is similar to system of estimates by means of numerical score that has quite high degree of approximation, therefore, the probability degree of an error of such estimates is high, also the way is based on use of the correlation analysis, which do not allow to reach many-sided assessment and transformation of data over several parameters at once.

**Eighthly,** technical decision «Management of reforming» is known [RU2419874], technical decision contains estimation of an object and contains stages, at which data of the analyzed object are generated; data of an object include, at least, both one variable corresponding to an object and one variable containing set of the inducing factors; data of an object are entered into the analytical tool, which consists from plurality of cells, and each cell contains a subset of the basic data providing a measure of each inducing factor relating to a condition of community, which is part of an object. Positioning of cells concerning each other is defined by interrelation of the basic data, which are contained in cells. Users generate the output data in the analytical tool and implement evolutionary model on the basis of the output data for definition of how reforming or action in an object can influence an object; as a result, users generate the report with use of the output data.

This way «Management of reforming» includes following tools: the databases, the cluster analysis of basic data; the analytical tool, which contains a set of cells represented in the form of a two-dimensional matrix of basic data. At the same time, the analytical tool is two-dimensional image of the three-dimensional model. Users compare output data with basic data for formation of a result that is used for estimation and management of reforming of an object. The system for estimation of an image of an object contains the generator for generating a plurality of data of the analyzed object. The evolutionary model contains a plurality of the output data for definition of influence on an object of at least one of options of reforming and for definition of the direction of the most productive transformation allowing to achieve higher productivity level. As a result, the company generates the report with use of the output data.

Advantages: the way allows to estimate a data set as a plurality, considering at the same time, time factor, because the evolutionary model is used and optimizing tools for generating data are created; the analytical tool in the form of the set of cells and the generator of a plurality of data of the analyzed object is created; the way is based on the comparison and estimate of options of reforming of an object, and it is aimed at the end result, namely allows to generate the report with use of the output data.

Shortcomings: the way allows to analyze only factors of stimulation and does not consider possible restrictions, for example, restrictions in conditions or in opportunities over resources; communication of a set of factors of stimulation in one variable is allowed, but in some cases, factors of stimulation can be incompatible and contradict each other. These shortcomings decrease the accuracy of estimates. Technical solution does not allow to estimate influence of the spatial-temporary factors at each other and on an object, on the output data, also to generate the output data as a plurality and to estimate synergistic effectiveness from a plurality of the generated data; technical solution is aimed mainly at assessment of the analyzed data, but not on assessment of useful effect of transformation of data and does not contain mechanisms of situational transformation of data for their updating, taking into account the changed external factors, it reduces the effectiveness and accuracy of a way. Absence the mechanism of digital transformation reduces the speed of generating data.

All investigated systems and ways of management and transformation of data of the enterprise for formation of decisions are analogs of the declared invention in the previous technique level, as they have similarity in an object of a research and in object of the invention, in the used tools and devices. Object of a research is process of making decision over transformation of data of the enterprise, also processes of reception, transfer, display, measurement, coordination, modeling of the data relating to work of the enterprise; it is similar to an object of a research of the declared invention. Object of these inventions is a system or a way of creation and realization of decisions of the enterprise in the form of the interconnected blocks and special tools of transformation of data. It is similar to an object of declared invention.

Common features of declared invention with all investigated systems consists in their aiming to receiving output data by means of creation of a control system, automation of operations, medium-term planning, modeling, introduction of decisions of the enterprise, also in use for this of tools in the form of the database of the enterprise, the block of the analysis of data of the external environment, the block of planning or generating decisions, the block of assessment and the choice of decisions, as well as in use of system of the connected computer programs and logic of decision-making. Similar devices for interactive reflection of information by means of screens for the analysis of basic data in form of a plurality of both variable and constant data that characterize situations and for the analysis of conformity of solutions versions by situations are used in technical solutions [RU2622858 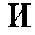 RU2622857].

However, for choice of a priority it is necessary similarity in technical solution too. Technical solution «Management of transformation» [RU 2419874] is the closest to the declared way of matrix-digital transformation of a variable plurality of data, as it is characterized by similar receptions, operations and tools of transformation of data. Technical solution «System of transformation, the analysis and assessment of information signs of an object» is closest [RU2622857] to the invented system of exercise of a way of transformation of a variable plurality of data, because this system has common features in its organization, which contains the user's automated workplace; the block of visualization of data; the server of databases; the block of the choice of recommendations. Therefore, these technical solutions are chosen by me as prototypes of the declared invention.

### Advantage of the invention

Similarity of the declared invention with prototypes consists:
firstly, in a coinciding index of classification MPC: G06Q 10/00;
secondly, in a similar object of a research of processes of the analysis, assessment, transformation of data of the enterprise;
thirdly, in similar object of the invention over creation of a system for exercise of a way of transformation and generating final documents of the enterprise;
fourthly, in target appointment - for exercise of a way and for finding, the choice of an optimal variant of transformation and generating the output data for formation of final documents of the enterprise; in the declared invention it is the situational-strategic program of the offer of products of the enterprise;
fifthly, in similar operations of a way of transformation of data and in the tools of impact on data of used for this purpose, namely in such tools, as: databases, analytical tools in the form of numerical rows of reference data, the cluster analysis, the matrix tools for generating data (more similarity with technical solution «Management of transformation» [RU 2419874]);
sixthly, in similar channels of the movement of data for their transformation in computer system and similar blocks of system, such as a block of databases, a block of the analysis of data, a block of comparison and block of choice of versions of the decision, of output data (more similarity with technical solution «System of transformation, analysis and assessment of information signs of an object» [RU2622857]).

Distinctive features of the declared invention from prototypes.

Firstly, invention consists in elaboration not only of the way, as in technical solution «Management of transformation» [RU 2419874] and not only of the System, as in technical solution «System of transformation, analysis and assessment of information signs of an object» [RU2622857], but it is both a matrix-digital way of transformation of a variable plurality of data and a computer system of its implementation, which are inseparably linked with each other and can be been performed and to provide the technical result only in interaction with each other.

Secondly, the invented computer system unlike prototypes and all known decisions is characterized by a unique set of servers, their software and by communication channels between them for implementing operations of the Way and by formation of each of digital blocks of the System. Each of servers of the invented System is equipped by the software that is known from technique level, widely is used, and it is the most universal, perspective software and the basic among programs of its class as this software provides good industrial applicability of an invention.

The technical means for providing action and implementing functions of the System over creation of databases and of DBMS of the Way include the following software types that are known from technique level:
1) computer program «Microsoft Excel», which is the most widespread and universal program in its class of programs, is intended for forming in original form of any databases on any plurality of parameters (the databases that are created in the program «Excel» are capable to be converted into standard systems of management by databases, of type «MySQL») [«Microsoft Excel» in the Internet: https://ru.wikipedia.org/wiki/Microsoft-Excel];
2) software «MySQL Workbench» is standard and universal in this class of computer programs, this software is applied in system with the software «MySQL» and is intended for building object-relational models of the System of management by databases, i.e. for establishment of communications between data of different databases and their digital keys [Basics of work with MySQL Workbench: the fast start, management by scheme of the data: http://mithrandir.ru/professional/soft-and-hardware/mysql-workbench-basics.html; https://ru.wikipedia.org/wiki/MySQL_Workbench; «MySQL Workbench» in the Internet: https://www.mysql.com/products/workbench/];
3) the software «MySQL» is universal and the most widespread software in this class of computer programs, and it is intended for creation of the structured relational databases and for forming the System of management by databases [«MySQL»: https://andew.ru/ru/pages/page/installing-mysql-on-windows-from-zip-archive; https://ru.wikipedia.org/wiki/MySQL];
4) the software «NoSQL» is the most universal in this class of computer programs, and it is intended for creation of the unstructured and not relational databases for systematization and storage of analytical data, including economic, commercial information [«NoSQL» in the Internet: https://docs.microsoft.com/ru-ru/azure/architecture/data-guide/big-data/non-relational-data; https://ru.wikipedia.org/wiki/NoSQL].

The technical means for providing action and implementing functions of the System over performance of computing, analytical operations and predicted operations, as well as operations for comparison and choice of the optimal decisions include the following software types that are known from technique level:
1) software «IBM SPSS Statistics Standard» is universal and contains except basic module-component the additional components for more complete and advanced analysis of statistical data, the computer program is intended for the solution of a wide range of economic and analytical tasks, covering all cycle of statistical data processing from process of collecting statistical data and until processes of their planning and control; in the invented System this program is basic for functioning of the computing server and is intended for performing any operations of the Way connected with calculation, including the set of formulas for the wide analysis of actual data and forecasted data of demand; this computer program is combined with other programs of IBM for optimization of data and them of modeling [«IBM SPSS Statistics Standard» in the Internet: https://ru.wikipedia.org/wiki/SPSS; https://ibm-spss.syssoft.ru/?utm_source=yandex_direct&utm_medium=k],
2) software «SAS^{∗} Visual Forecasting» is the universal and popular software product of the SAS company, which is intended for forecast of the temporal rows of data of demand for both long-term and current period; the program has a large number of tools and various techniques of forecasting in the arsenal, including for singular spectrum analysis and the forecast of the temporal rows of data, and allows to carry out forecasts in the automatic mode, increasing their accuracy and speed of implementing; in the invented System the program «SAS^{∗} Visual Forecasting» is used for exercise of functions of the computing server, because for performance of operations of the Way over forecasting of the temporal rows of data not enough tools of the program for processing statistical data; therefore, additional tools, which are provided by the program «SAS^{∗} Visual Forecasting» for most deep and comprehensive spectral forecast of data are necessary [«SAS^{∗} Visual Forecasting» in the Internet: https://www.sas.com/ru_ru/software/visual-forecasting/features-list.html],
3) software «SAS^{∗} Visual Analitics» is widely used software product of the SAS company, which is capable to build the general system for business, to accumulate the different data and databases (both structured and unstructured databases) in a uniform common source with the subsequent data processing; the program has a big arsenal of tools and of techniques of the analysis for most deep data studying, the forecasted temporal rows of data, communications between data and is intended for definition of trends, regularities of development and conversion of different groups of data; in the invented System the program is used for implementing functional purpose of the application server over synthesis of strategies as the wide arsenal of analytical tools of the program allows to exercise operations of the Way over synthesis of both the long-term and short-term strategies of conversion of different groups of data the most productively [«SAS^{∗} Visual Analitics» in the Internet: https://www.sas.com/ru_ru/software/visual-analytics.html];
4) software «DecideIT» is the universal and the most used software product for the comparative multicriteria analysis and the choice of optimal solutions; in the invented System this program is used for the choice of an optimum combination of a plurality of data of the offer of products, taking into account several criteria, namely for the choice of an optimum plurality of data of both the strategic and current program of the offer of products, respectively at the fifth and sixth stage of the Way; program «DecideIT» is used by the computing server, but over appointment and in purposes of the application server of target appointment [DecideIT in the Internet: https://en.wikipedia.org/wiki/DecideIT].

For providing action of the System and operations over modeling combinations of a plurality of data, the application server of target appointment is equipped by following software that is know from technique level: 1) computer program «IBM WebSphere Business Modeler» is the leader in this class of programs for modeling business of processes, and it is capable to generate output documents in the most popular formats, to describe business processes by means of the standard «BPMN», also it is easily integrated with other software products «IBM».

In the invented System the program «IBM WebSphere Business Modeler» is intended for multi-purpose optimization of a plurality of data and generating the output data of both the strategic and current program and provides unity of technical tools of strategic planning and situational transformation of data, it is very important for the best compatibility of technical tools of work with data and for compatibility of a plurality of data of the strategic and current program [«IBM WebSphere Business Modeler in the Internet: https://www.ibm.com/developerworks/ru/library/0611_wen/; https://www.cfin.ru/software/kis/b-model.shtml].

The technical means for providing action of the System and for implementing functions of the application server of digital transformation of data over performance of the corresponding operations of the Way include the following software types that are known from technique level:
1) computer program «Serial Key Generator» is the most widespread and universal program in this class of programs, and this program is intended for generating the digital keys and digital codes of data, including the integrated codes of data according the specified parameters [«Serial Key Generator» in the Internet: https://softdroids.com/1596-serial-key-generator.htmll;
2) computer program «ActiveBarcode» is the most productive in this class of programs, this program is intended for generating barcodes according the specified parameters and is capable to correct intermediate barcodes in final, it is compatible to the program «Microsoft Excel» [«ActiveBarcode» in the Internet: [http://en.wikipedia.org/wiki/Barcode; https://www.activebarcode.com/barcode/].

The technical means for providing action of the System and for implementing functions of modeling and transformation of data at performance of the corresponding operations of the Way by the application server of target appointment include the following software types that are known from technique level:
1) software «ZWCAD» is intended for creation of models in a format 3D and for their display on interactive screens, as well as for implementing operations for planning data, in order that to receive an optimum synergistic plurality of data of the situational-strategic program [ZWCAD: https://uk.wikipedia.org/wiki/ZWCAD];
2) computer program «ADVANCED GRAPHER» is widely available and popular among users for the solution of various graphic tasks and calculations on the basis of schedules; this program supports any types of schedules and allows to create schedules not only in two-dimensional, but also in the three-dimensional system of coordinates, and to preserve them in widespread formats, the program is compatible to many programs and can be applied as their additional graphic tool; in the invented System the program is intended for situational graphic modeling of an optimum plurality of data of the offer according to parameters of demand, the chosen strategy of positioning of a product and the revealed regularities of change of functions of supply and demand of a product at the realized strategy and restrictions in resources [«ADVANCED GRAPHER» in the Internet: https://soft.mydiv.net/win/download-Advanced-Grapher.html] .

Except software for exercise of the operating processes, which is intended for performance of the operations of the Way by different servers of the System, the System includes the technical means allowing to exercise control, communication communications between various operational processes for both the fastest and exact data transmission from the server to the server, namely includes:
1) the file system «NTFS» [https://docs.microsoft.com/ru-ru/windows-server/storage/file-server/ntfs-overview];
2) the software «FTR Ruch» allows not only to send files between the computer and the server (direct and inverse transfer), but also supports files transfer directly between servers (FXP). The program allows to work with several protocols FTP at the same time, possesses the flexible, adjusted interface, includes the built-in designer of tasks, also supports a work with a proxy [«FTR Ruch» in the Internet: https://apps24.org/windows/razrabotchikam/ftp-klienty/ftprush; https://ru.wikipedia.org/wiki/FTP; https://www.softportal.com/software-3201-ftprush.html];
3) software OLE DB on the basis COM is the technology of access to data created by Microsoft, which consists in set COM - of interfaces allowing to work with data of the various sources and of storages of information in various appendixes according standards of unification, in order that to implement the mechanism of interprocessor interaction based on COM, as well as OLE on the basis COM, it provides data exchange between streams of one or different processes [«OLE» in the Internet: https://docs.microsoft.com/ru-ru/cpp/mfc/ole-background?view=vs-2017; technology «OLE», for realization of the interprocessor interaction based on «COM» in the Internet: https://ru.wikipedia.org/wiki/OLE_DB: http://bourabai.kz/alg/com/gl09.htm; Cross-process interaction- (wikipedia.org)];
4) software «DPT» (Distributed Processing Technology), namely, controllers of the domain «DPT RAID» of the fifth generation «Smart RAID V.», of series «Millennium», which are known their by the modularity, high-speed performance and strong support of different operating systems, including the operating system «Windows NT» that is used by the invented System; software «Millennium» is controller «DPT» of enterprise scale, differs by the high-speed performance (the central mechanism is implemented on i960HD-66MHz) and by the wide opportunities (support until 3-x Ultra2 SCSI channels or 2-x Fiber channel, until 256 MB memory cache), it is issued also for 32bit and for 64bit PCI and has possibility of connection Battery Backup module (only for 64bit variant), also ensures control and smooth operation of all invented System [«DPT RAID», «Smart RAID V.», of series «Millennium» in the Internet: https://www.ixbt.com/storage/raids-1.html; https://ru.wikipe-dia.org/wiki//%D0%9A%D0%BE%D0%BD%D1%82%D1%80%D0%BE%D0%BB%D0%BB%D0%B5%D1%80_%D0%B4% D0%BE%D0%BC%D0%B5%D0%BD%D0%B0].

Each of above-mentioned programs taken separately belongs to the known level of the technique, but their application in a common system, in which the compatibility of different programs, their interaction is set, there are a certain sequence of their use, also the uniform purpose and functional appointment for action of the System for the purpose of implementing the Way, when one part of programs is intended for performance of operating processes of the Way, and other part of programs is intended for establishment of communications and transfer of data streams between servers of the System and between different operating processes of the Way, it is essentially new technical solution that has no analogs.

Thirdly, except the programs providing the technical mechanism of the System, the System has the technical devices in the form of interactive panels of type «SMART Board», of series 7000 Pro with IQ, which are intended for placement on interactive displays of models in format 3 D for strategic planning, situational monitoring and updating data and for collective work in regime of the current time with data of these models. Interactive screens «SMART» work on the basis of programs «SMART Meeting Pro» and «SMART ink», and also program «SMART TeamWorks» for remote access [«SMART Board», of series 7000Pro in the Internet: https://www.smarttech.com/en/products/business-displays/smart-board-pro-7000; https://www.smarttech.com/en/products/business-displays; «SMART Meeting Pro», «SMART ink» in the Internet: http://www.smarttech.ru/meetingpro.html; «SMART TeamWorks»: https://www.smarttech.com/en/products/business-software].

The interactive panels «SMART» with their software have relation to the known level of the technique too, but displays «SMART» that are used in the invented System not only with software «SMART» but also with software of the computing server, application servers over synthesis of strategies and the application server of target appointment of the System are becoming necessary element of the multi-function device of the System, its distinctive technical characteristic. The mechanism and sequence of use of these technical devices by different servers for performance of operations of the Way, also their interaction with other programs and tools are established in the System; it is essentially new technical solution.

Fourthly, the invented System differs from all known technical solutions not only by set of the used servers and by their software, by the interaction of the technical means and devices, but the System is interactive, as the temporal networks of six interactive subsystems for performance of six stages of the Way are forming inside network of the System. Subsystems are not constant structural formations, they have the temporal mechanism of action, subsystems are creating for exercise of operating process of each stage of the Way, and for this purpose the servers of the System are uniting in various time into various networks with different channels of communications and with data flows. It is essentially new technical solution, which is capable to increase effectiveness of the System until new level in comparison with all known technical solutions.

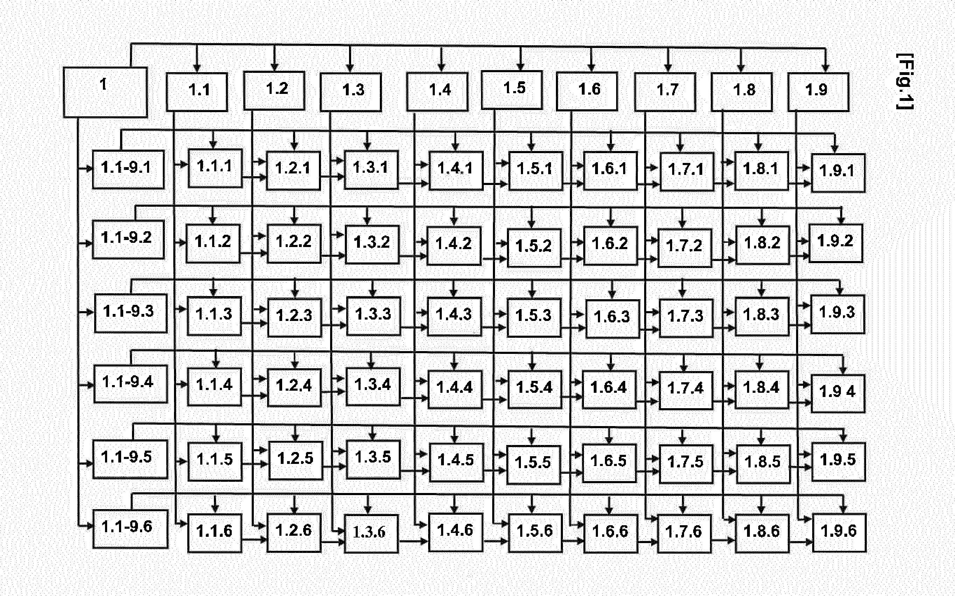

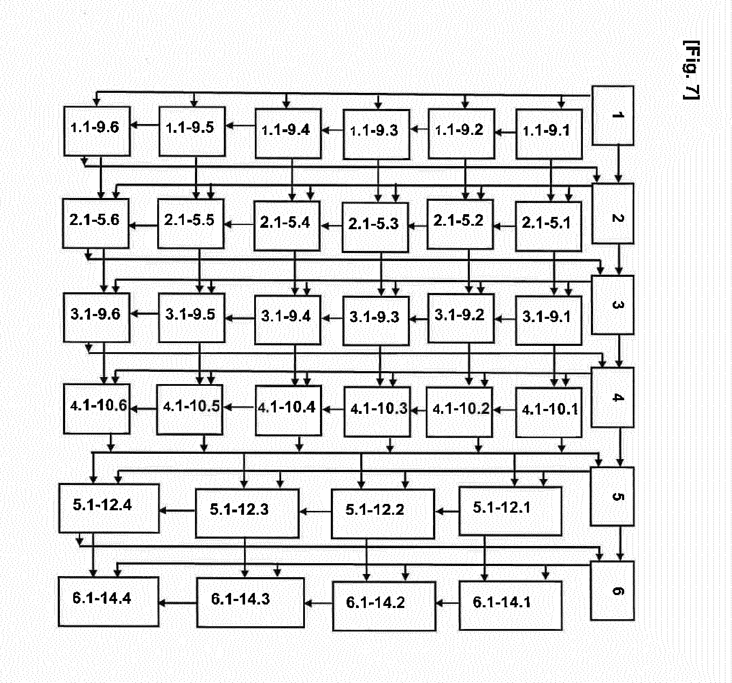

Fifthly, unlike prototypes and the known technical solutions the invented Way embodies a matrix-digital mechanism that consists not only in the matrix mechanism of process of transformation of data as a plurality by means of use of the technical tools, computer programs, devices but also in digital transformation of data, in designation by digital codes of both separate data and their plurality, as well as in a digital mechanism of implementing the Way, namely in creation of an essentially new digital list of the sequences of the operations, steps and stages of the Way, which has not analogs and is described by six digital models, each of which characterizes process of creation of the corresponding digital block of the System; the created blocks, namely a block of databases, a block of DBMS, an analytical block, a block of strategies, a block of the target strategic programs and a block of the current programs are connected with each other, as well as digital models of implementation of each stage of the Way[Fig.1-6], which all together form the seventh integrated digital model of the Way [Fig.7], are also an essentially new technical solution for generating an integrated digital block of the situational-strategic program of the offer of products.

Sixthly, unlike prototypes the invented way embodies not only the digital but also a space-time mechanism of data transformation, which allows to generate the new output data of the offer of products of the enterprise in interrelation with temporary and spatial parameters, also the temporal and spatial parameters are considering indissolubly from each other, as they depend from each other, and therefore, all data are transforming by means of schedules and program tools and always in the system of coordinates of time and space, it characterizes novelty of the Way.

Seventhly, the novelty of the Way consists in the procedure of impact on data for the planning, optimization, updating and monitoring of data by means of the created 3D models, which owing to use on interactive displays and with the software not only «SMART» but of the System in a whole become by a tool for transformation of data as plurality in interrelation with each other and for obtaining a synergistic result at generating the output data of program documents.

### Technical task

The technical task of the invention consists in finding of a technical solution over creation of such way of transformation of a variable plurality of data of consumer indicators of products in interrelation with temporal and spatial parameters, also of such computer system of exercise of this way, when they organically supplement each other, providing integrity of a system and way, and as a result, would lead to achievement of bigger technical result, than all known decisions and prototypes of the invention, namely to increase of speed of processes of optimization and situational transformation of data and generating of the situational-strategic program over products, also to achievement of bigger accuracy, reliability and effectiveness of its output data; as a result, to growth of aggregate useful effect from products and to the best satisfaction of public needs.

### Disclosure of the invention

### Essence of the invention

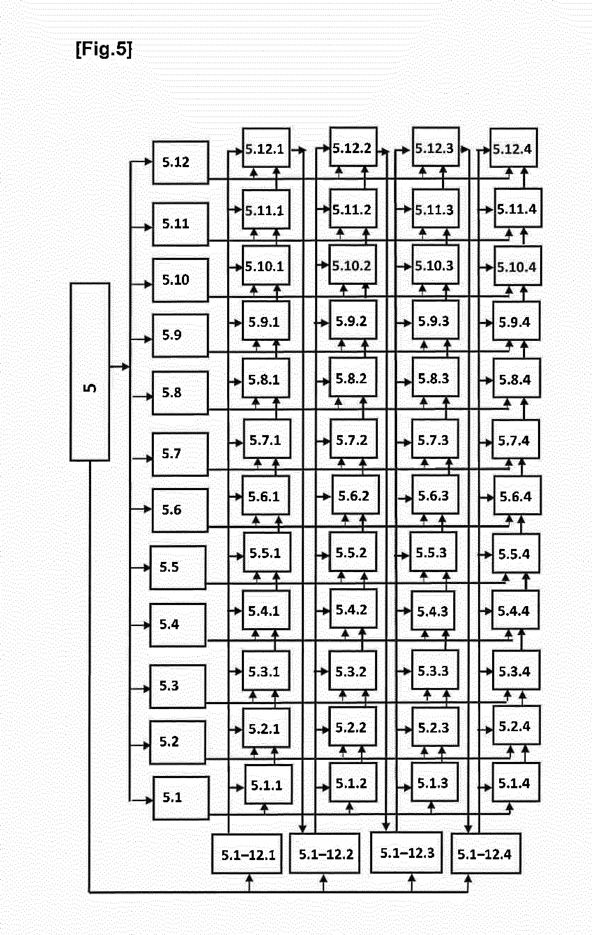

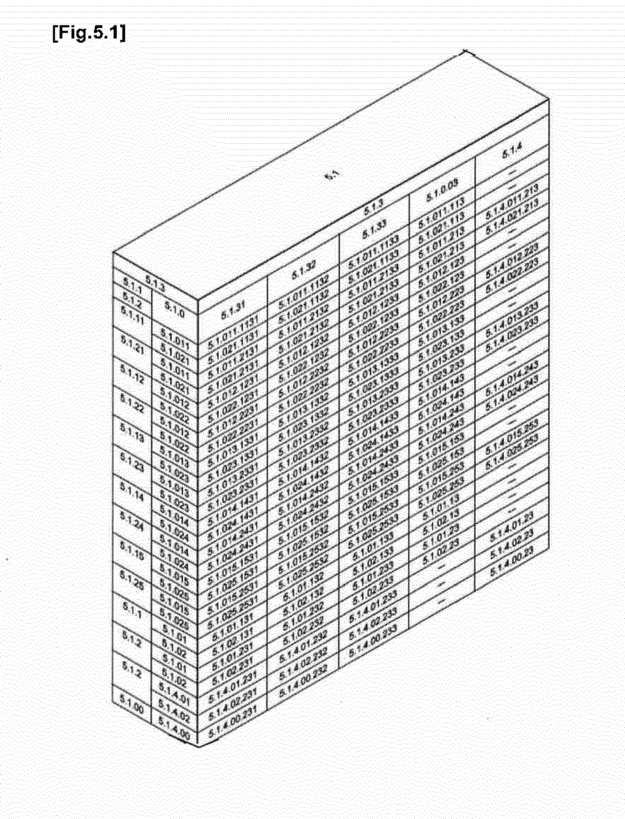

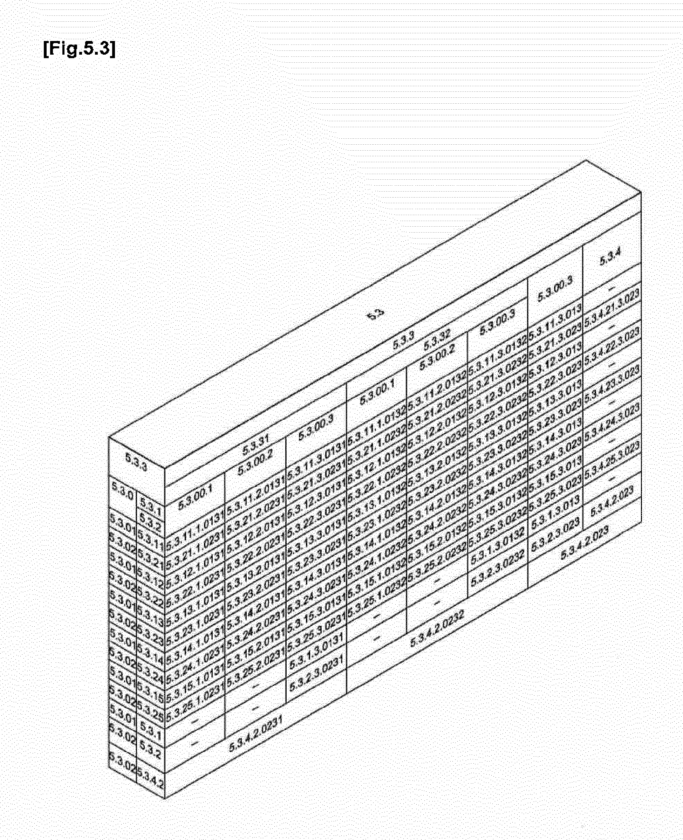

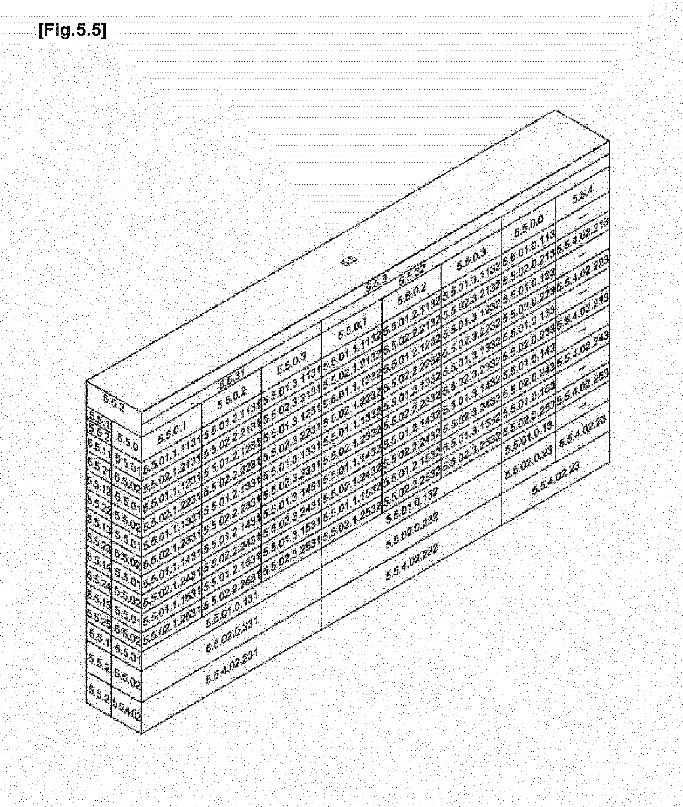

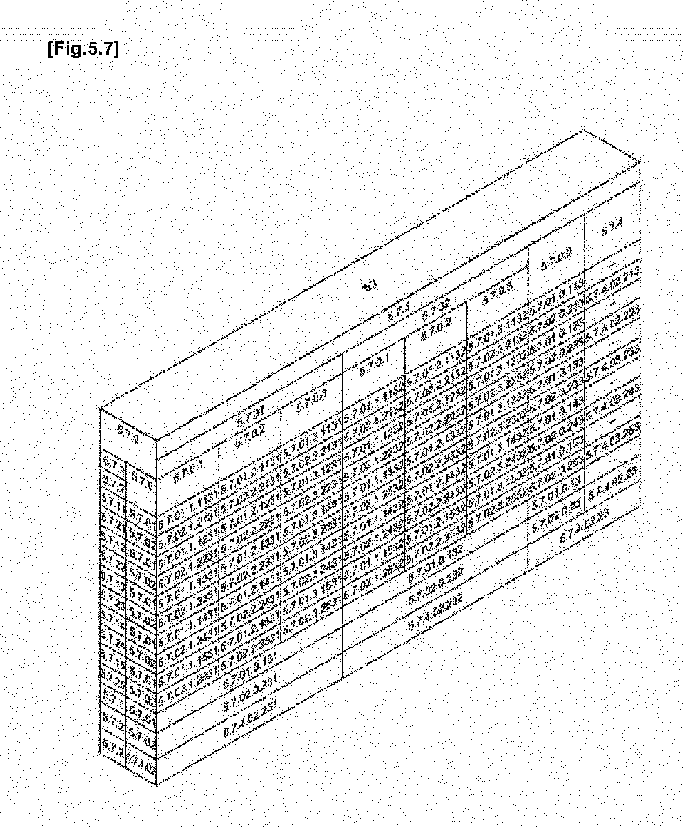

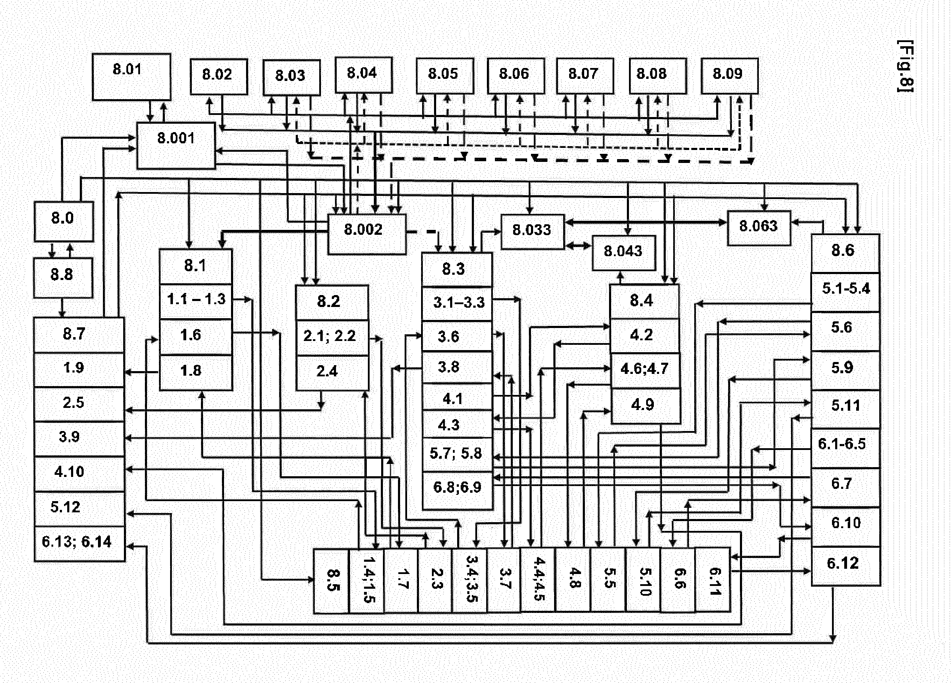

The essence of the declared invention consists in the solution of a technical task owing to creation of the Way of matrix-digital transformation of a variable plurality of data and the System of its exercise, which are organically connected and supplement each other, forming unity and integrity; the System has with a prototype constructive similarity, which is limited to existence among its structural elements of the server of databases and by actions over forming the interconnected blocks of visualization of data, developments of recommendations, comparison and the choice of solutions variants [RU2622857], but System differs from a prototype and the known technical solutions by a set of essential technical features: by constructive device, software, action principle, communication channels, interaction of elements, namely the System has external and internal sphere of action and consists of the following structural elements [Fig.8]: the web-server, proxy-server, server of databases - «Data Server»; «MySQL Server»; the computing server; the application server over synthesis of strategies; the application server of digital transformation of data; the application server of the target appointment; the file server; the controller of the domain; interactive panels; each of servers is equipped with the operating system of family «Windows NT», of the type Windows 10, what provides their compatibility and community, as well as each server has special software that is known from technique level and is compatible to the used version of the operating system, with the software of other servers, and it is the functioning mechanism by means of which the server carries out the functional appointment, but at the same time, this its software, being used in a certain sequence and together with the software of other servers, it is a necessary element of the technical mechanism of the created System, what defines its technical characteristics, namely servers are equipped by the following software: server of databases - «Data Server» works on the basis of the software of type «Microsoft Excel», what allows to form the own matrix structure of databases; server «MySQL» works on the basis of the software of type «MySQL» and «MySQL Workbench» basing on the structured language of inquiries; computing server works on the basis of software over creation of unstructured databases of type «NoSQL», of software of type «DecideIT» for comparison of all combinations of data and the choice on the basis of the multicriteria analysis of an optimal solution, as well as the software of type «IBM SPSS Statistics Standard» and of type «SAS^{∗} Visual Forecasting», which are compatible with each other, allow to import and export data to «Microsoft Excel», to save files in the compatible «sav» format, and which are used for providing the widest range of computing, analytical operations and operations of the forecast of data both for long-term and the current period; the application server of digital transformation of data works on the basis of software of type «Serial Key Generator» and of type «ActiveBarcode», these programs are used for creation of the adjustable digital codes and barcodes according the specified parameters, and programs are capable to export generated codes to any program through the cloudy clipboard, over communication channels by means of technology «OLE» through the mechanism of interprocessor interaction based on «COM»; the application server over synthesis of strategies carries out the target appointment on the basis of software of type «SAS^{∗} Visual Analitics», this software allows to implement comprehensive analysis of the big array of the structured and unstructured data, including graphical analysis of development trends, testing of possible scenarios for synthesis of long-term and current strategies of the offer of various products in various markets during the different temporal periods; the application server of the target appointment works on the basis of the programs of type «IBM WebSphere Business Modeler» and of type «Advanced Grapher» for generating of various combinations of the planned data at the specified restrictions, and also on the basis of the program, of type «ZWCAD», for creation in 3D format of matrix-digital models that are tools for exercise of mechanism of optimal planning a plurality of output data of the situational-strategic program over products; the file server is intended for storage and the file operations of any type of data and is equipped by the file system of new technology «NTFS» on the basis of the software of type «Windows Server 2012 R2 NTFS», of family of operating systems «Windows NT»; the file server and other servers, participating in process of performance of operations of the Way and in the course of data transmission from the server to the server, work with the help of the installed program of type «FTP Rush» - FTP - client», this program has the Scheduler of tasks and provides direct files transfer from the server to the server by means of session «FXP» under «FTP» protocol (File exchange Protocol); all servers are connected over communication channels with each other through controller of the domain of type «DPT RAID», which supports the operating system «Windows NT», and it acts on the basis of software of the fifth generation «Smart RAID V.», of series «Millennium» that is controller for servers of the enterprise scale; the System includes visual displays of type of interactive panels «SMART Board», series 7000 Pro c IQ for Windows 10, which work on the basis of software «SMART Meeting Pro» and «SMART ink» and are joined by means of a cable «HDMI» to computers of the computing server, the application server over synthesis of strategies and the application server of the target appointment for data visualization that is required at performing by these servers of operations of the Way, as well as for providing of simultaneous work on different blocks of the distributed data of the project of several people that can work, using not only one interactive display or displays installing in one room and connected with one computer but and the different displays connected with different computers by means of the program for remote access of type «SMART TeamWorks»; interactive displays «SMART Board», which are used in invented System not only on the basis them of the software, but and together with the software of other servers of the System, as well as for implementing operations of the Way, become necessary element of multi-function device of the System, their functions expand, because they use already not only for input, exit and reflection of data at the screens, but also for the analysis, the forecast, synthesis of strategies, for modeling data, generating of strategic programs, monitoring of demand, situational updating of the current programs in real time, it is essential distinctive sign of the System; the System is characterized by communications with external servers: web-server of the System, receiving request from the external web-server of the enterprise on exercise of the Way, forms inquiries via the System proxy-server and directs them to web-servers of archival and library resources, sales markets of products, suppliers of material resources, suppliers of technologies and means of labor, suppliers of work force, resellers, financial intermediaries, buyers; the answers from external servers are arriving on the proxy-server of the System over neural network, it allows to find out data in the automatic mode, and through the intermediate buffer for temporal storage of data of a proxy-server the sorted data go to different servers of internal network of the System in dependence from appointment; essential distinctive sign of the System consists in the interactive principle of its action, namely in creation of six nonstructural and not hierarchical interactive subsystems for exercise of six stages, which are designated as the First subsystem, Second subsystem, Third subsystem, Fourth subsystem, Fifth subsystem, Sixth subsystem, each of subsystems has several levels, at which different steps of a certain stage of the Way are performed; all subsystems are connected with each other by communication channels in uniform network of the System, but each subsystem includes as identical servers of the System for performance of typical operations of general appointment, so and the individual main server having general functional purpose with a certain subsystem only, also each subsystem has different nature of communications and interaction between elements, because each subsystem is characterized absolutely by different system of entrances and exits of data, the operating processes, communication interrelations, channels of the movement of the data established for exercise of the purposes of a certain stage of the Way, it forms network of each of subsystems of the System [Fig.8], namely: the network of the First subsystem unites the server of databases; the application server of digital transformation of data; the file server; these servers are intended for performance of operations of the first stage of the Way over generating analog-digital databases and formation of a digital block of databases; the network of the Second subsystem unites «MySQL Server», the application server of digital transformation of data; the file server; these servers are intended for performance of operations of the second stage of the Way over creation of the object-relational models of DBMS and formation of a digital block of the object-relational models of DBMS; the network of the Third subsystem unites the computing server that is equipped by interactive panels; the application server of digital transformation of data; the file server; these servers are intended for performance of operations of the third stage of the Way over forecast of temporal rows of data and formation of a digital analytical block; the network of the Fourth subsystem unites the application server over synthesis of strategies, which is equipped by interactive panels; the application server of digital transformation of data; the computing server that is equipped by interactive panels too; the file server; these servers are intended for performance of operations of the fourth stage of the Way over synthesis of strategies and formation of a digital block of strategies; the network of the Fifth subsystem unites the application server of the target appointment, which is equipped by interactive panels; the computing server that is equipped by interactive panels too; the application server of digital transformation of data; the file server; these servers are intended for performance of operations of the fifth stage of the Way over generating the output data of the strategic program of the offer of products and formation of a digital block of strategic programs; the network of the Sixth subsystem unites the application server of the target appointment, which is equipped by interactive panels; the computing server that is equipped by interactive panels too; the application server of digital transformation of data; the file server; these servers are intended for performance of operations of the sixth stage of the Way over situational transformation of the output data of the current program of the offer of products and creation of a digital block of the current programs, as well as an integrated digital block of the situational-strategic program over products, thereby, each subsystem has the system of communications between servers in its network, which is coming to an end by the file server storing final files in blocks of each stage, also each subsystem has external relations with other interactive subsystems concerning data transmission from the server of one internal subnet of the System to the server of other its internal subnet; the interactive principle of action of the System on the basis of interaction of its nonstructural interactive subsystems in its network, each of which is formed for performance of a certain stage of the Way and has action during time of exercise of its operating process, along with the constructive device and the software of the System is an essential technical characteristic of the System, which influences not only its effectiveness, but also on effectiveness of implementing by System of the Way; Way of matrix-digital transformation of a variable plurality of data for generating the situational-strategic program of the offer of products has similarity to a prototype [RU2419874], it is limited to use of similar tools of transformation of data in the form of databases, the multidimensional matrix tool for management of transformation of data, but invented way is different from a prototype and the known technical solutions by the essential technical features affecting effectiveness of the Way, which consist in creation in a digital form of the list of the sequences from six stages, their steps, consecutive operations of each stage and matrix interrelations between them in the form of a chain of the connected matrix-digital models of each stage [Fig. 1 - 6], these models are connected with each other by the general process and purpose of the Way, they are united into a common matrix-digital model of the Way [Fig.7] and embody the matrix-digital mechanism of operating processes of the Way that at each stage is expressed, firstly, in digital transformation of data, when digital codes, keys of data, barcodes are generated according established parameters for forming interrelations between data in the form of the connected digital codes, keys for automation of various operations over transformation of data with the help of use of an arsenal of the modern technical means, computer programs, which are specified at the description of the System; secondly, into use of matrix mechanisms of the operating processes indissolubly with digital transformation of data, these signs the following ways embody: a way of formation of databases over the matrix principle and creation of analog-digital databases for data storage in both a matrix form and digital form; a way of formation of the object-relational models of DBMS for establishment of matrix-digital interrelations between various type of data; a way of mutually agreed synthesis of the long-term and current strategies of transformation of data in a system of the coordinates of the time and space by means of using a computer program of the vector analysis; a way of the forecast of multidimensional temporal rows of data of demand on the basis of programs of the spectral analysis; ways of strategic planning and situational transformation of any type of data as plurality and in the uniform system of coordinates of time and space by means of creation in 3D format of the matrix-digital models [Fig.5.1, 5.3, 5.5, 5.7], and in their using on interactive displays in role of tools for multi-purpose optimization of data, which on the basis of software of the System allow to generate the output data of the situational-strategic program of the offer of products in form of synergistic plurality; essential distinctive sign of the Way is that process of exercise of each its stage consists in actions over creation of the corresponding digital block, and in fact it characterizes a way of formation of digital blocks, namely: at the first stage - of a block of databases; at the second stage - of a block of the object-relational models of the DBMS; at the third stage - of an analytical block; at the fourth stage - of a block of strategies; at the fifth stage - of a block of strategic programs; at the sixth stage - of a block of the current programs; digital blocks of each stage are logically connected with each other, as data of one digital block are base for formation of subsequent blocks, and all digital blocks participate in formation of an integrated digital block of the situational-strategic program of the offer of products; all created digital blocks are a product not only of exercise of the Way, but also action of the System, because they characterize speed and effectiveness not only of a Way, but also a System in a whole; the Way forms a whole with the System and cannot be carried out without it, because all operations of the Way are carried out on various servers of the System and by means of the software of these servers; therefore, all essential signs of the System and Way form unity and provide the general technical result.

### Technical result

The technical result follows from technical solution.

The declared invention owing to the constructive device of the System, as well as of its cumulative software and interactive principle of action on the basis of creation of six interactive subsystems intended for performance of the corresponding stages of the Way and owing to the simulated list of the sequences of implementing stages, steps and operations of the Way and of the matrix-digital mechanism of performance of operating processes of the Way over transformation of a variable plurality of data of consumer indicators of products provides bigger speed and effectiveness of operations and is leading to bigger cumulative technical result, than the prototypes and all the known previous analogs. This main technical result from the declared invention is achieved owing to following essential technical features of the System and the Way.

**Firstly,** the constructive device of the System, in which profile servers, such as server of databases, MySQL Server, computing server, the application server over synthesis of strategies and the application server of target appointment, which provide realization of operating process of each stage of the Way, are combined with the servers of general functional appointment, such as the web-server, the proxy-server, the controller of the domain, the file server, the application server of digital transformation of data, which perform the service of action of System in a whole, as well as perform typical operations of control, of storage, digital transformation and communication processes over transfer of data flows, is rational, because this System has no excess elements, servers are loaded over functional appointment only, i.e. on performance of narrow operations, for which they are intended, it increases their productivity, and owing to absence of any excess elements in construct and ability of the application server of digital transformation of data to interact with any servers and to carry out operations over digital transformation of data for any stage of the Way, saving of means at combination with high effectiveness of the System is reached. Profile servers unlike multipurpose servers have higher level of automatism in work, they are less often subjected to failures, mistakes, overloads at the expense of difficult, unusual operations for them; these servers carry out the typical operations more quickly and qualitatively. Therefore, performance of operations by means of use of specially intended profile servers will raise not only the productivity, speed of performance of operations of the Way, but it will lead to increase qualitative level of transformed data as a result of operations, respectively to increase of accuracy of calculations, forecasts of temporary rows, to generating the more exact output data of the strategic and current programs.

**Secondly,** the System differs from analogs by the bigger productivity as each of servers uses the progressive, high-performance software, but at the same time universal computer programs, widely approved and used by users, it reduces risk of failures of the System, increases its reliability, fault tolerance.

The system differs by simplicity and reliability of communication channels, use of the productive controller of the domain of the fifth generation «Smart RAID V.», of series «Millennium», which is characterized by speed and high fault tolerance, reliability, and this controller of the domain is capable to provide uninterrupted operating process of all System. However, the main advantage of the System before analogs even not that each of servers uses the perspective and productive programs, but that the software of each of servers of the System is compatible to general operating system and to the software of all other its servers, and also that in the System each program is used in a certain sequence and together with other programs and becomes more productive owing to this. As a result, the software of each server becomes a part of a whole and forms the united software of the System in a whole, which does not have analogs over the productivity as the productivity of such software of the System will exceed the productivity of each program used separately and also productivity of the analogs known from technique level.

**Thirdly**, the interactive principle of action of the System consisting in creation of six interactive subsystems interacting with each other over communication channels in network of the System, but when each subsystem has the internal network, in which servers of the System are temporarily united for performance of operational and communication processes over implementing the certain stages of the Way, promotes increase in flexibility, maneuverability of the System, reduction of time of transition from operation to operation, as well as duration of transfer of data over communication channels, and not only due to use of programs of direct data transmission from the server to the server, but also due to interactive action of the System, reliability of communication channels. Besides, each server at interactive action of the System installs the system of an entrance and an exit of a data flow from it for a certain network of a subsystem, which exists only during time of its functioning in this network, and at an exit from it the same server installs already other system of an entrance and a release of data, what allows to unload and systematize flows of the data which is arriving to each server and come out of it. It leads to increase of speed of implementing by the System of all operations of the Way, also the interactive principle of action of the System increases it reliability.

**Fourthly**, the neural networks are used as communication channels for receiving data from external web-servers, neural networks allow to distinguish data in the automatic mode and to send them to the necessary address; the proxy-server uses several folders of a cache, which are the intermediate buffer for temporal data storage, it allows to select information for direction of data further to different servers, it is the essential sign of the System allowing to increase the speed of its work.

**Fifthly,** the interactive panels «SMART», which are an integral part of the System, interact with servers of the System and not only on the basis of the software «SMART», but interactive displays are connected with software of servers of the System, it considerably increases their productivity, the technical result, because expands their functionality, they become a necessary element of the multi-function device of the System and are used not only for input, exit, reflection of the information, but also for the analysis, synthesis, forecasting, planning, monitoring and transformation of data. The interactive displays, which are used together with the program for remote access, increase the speed of work of the System at implementing operations of the Way. Besides, interactive displays activate use of brain storms, expand use of new methods of collective work of developers, it influences quality of the made decisions, promotes increase in accuracy and reliability of the generated program documents.

However, the System is inseparably linked with Way, because the System is intended for implementing the Way. Therefore, the technical result consisting in bigger reliability, speed and effectiveness of generating data in comparison with the known analogs can be received only at implementing by the System directly of the Way. At the same time, the Way makes the contribution for increase of technical result too.

First, the invented list of the sequences of stages, steps and operations of the Way defines the sequence and time of their implementing, also the established communications between various operations, steps and stages of the Way by means of matrix-digital models allow to provide the best interaction them. It allows, on the one hand, to regulate process of performance of the operations in order that to increase the speed of performance of each stage of the Way and Way in a whole, as well as to calculate costs of resources for performance of various operations of the Way the more precisely, and on the other hand, to reach synergistic interaction of all operations, steps and stages of Ways, because creation of cumulative model of process of implementing the Way on the basis of models of implementing each stage allows to connect result of operating process of both each step and each stage with each other and to focus them on achievement of the best end result. Modeling of operating processes of implementing the Way allows to increase its effectiveness in comparison with all known analogs, it is expressed in increase of accuracy, reliability and effectiveness of the output data of the situational-strategic program of the offer of products, provides increase of aggregate useful effect of products.

Secondly, the digital mechanism of process of implementing each stage of the Way, which consists in designation by digital codes not only of each operation but of all data, allows to establish connection between operations and between various data in the form of communications between their digital codes, it allows to expedite performance of the Way by System, because allows to automate a row of operations over transformation of data, to accelerate machine processing of data, it provides technical result in the form of increase of speed and productivity of processes of transformation of a variable plurality of data.

Thirdly, the matrix mechanism of process of implementing each stage of the Way allows to transform all data as a plurality and in the system of coordinates of time and space, when data transform, taking into account their influence at each other and on synergistic result from their plurality and relatively of certain parameters of time and space considered in indissoluble unity; it provides generating the more exact data at both forecasting temporary rows of data of demand and synthesis of strategies and at planning output data of situational-strategic program of the offer of products. Transformation of data as a synergistic plurality provides higher end result, i.e. it promotes not only to achievement of bigger accuracy and effectiveness of program documents, but also it leads to increase of the useful effect from offering products in comparison with a prototype and the known analogs, promotes the best satisfaction of public needs.

However, the matrix-digital mechanism of process of implementing each stage of the Way provides local technical results too, which consist in increase of the effectiveness and productivity of created products of each stage of the Way, namely:
1) the completeness of the created analog-digital databases and volume of information in them are increased at achievement of their bigger functionality, compactness and usability, including machine processing of data, owing to use of a matrix form of data storage and designation by digital codes of all data in databases;
2) indicators of the accuracy of transformation of data, of level of the synergistic interaction them in program of the offer of products are increased owing to use of software «MySQL Server» and of building the object-relational models in a digital form, which allow to establish interrelations between data and their influence at each other both in each database and between different databases and in the form of communications between their digital codes;
3) the accuracy of the generated temporal rows of forecasted data of demand in comparison with the known analogs is increased owing to forecast of data as a plurality in the system of coordinates of time and space by means of the computer program of the multidimensional spectral analysis;
4) the accuracy of definition of the directions (of strategies) of development and transformation of data in comparison with analogs is increased owing to mutually agreed synthesis of the long-term and current strategies in the system of coordinates of time and space by means of the computer program of the vector analysis;
5) the accuracy and speed of planning of temporal and spatial parameters of positioning products in the markets during their life cycles in comparison with the decisions known from technique level are increased owing to use of the digital mechanism of a way of synchronization of temporal parameters of supply and demand and planning them together with spatial parameters of placement of products in the markets in the long-term and during the current period;
6) indicators of the reliability and effectiveness of the output data of strategic programs and indicators of the speed and of accuracy of the transformation and updating of the output data of the current programs in comparison with traditional known ways of the planning and updating of data are increased owing to use of software of application server of target appointment and creation of matrix-digital models of multi-purpose optimization of the data in 3D format, which are used on interactive screens in role of tools - of machines for generating and transformation of data as a plurality at planning strategic range of data for the long-term period, at monitoring of demand in real time and updating data of the offer of products in the current period.

The used software products, matrix technologies and the digital mechanism of process of transformation of data of the invented Way are inseparable from each other. Therefore, all technical results over increase of speed of transformation of data, their accuracy and reliability are achieved owing to the uniform matrix-digital mechanism of the Way. The essential sign of the Way consists in elaboration of the special mechanism of formation of the integrated digital codes, which are generated by means of the software of the server over digital transformation of data according specified parameters, which install references in composition of digital codes to identifiers of many other codes, for example, of the markets, temporal phases of demand, various products, their indicators, data of supply and demand, and consequently, such mechanism of formation of digital codes enhances technical result that is expressed in the following:
first, the integrated digital designations of data allow to establish in the automatic mode the connection between various types of data, taking into account belonging them to types of products and to certain temporal and spatial parameters, it promotes increase in speed of generating documents of the situational-strategic program of the offer of products in a digital format;
secondly, the integrated digital codes of data, used in databases, allow to systematize big data arrays in a compact form, to increase the capacity of databases, to analyze the bigger volume of information in a condensed form, as well as to establish connection between various types of data more quickly;
thirdly, the integrated digital codes of options of demand dynamics, which contain references not only to codes of the predicted indicators and to types of products but also to digital codes of conditions and factors, as well as to codes of temporal and spatial parameters, promote increase of speed and accuracy of the forecast of dynamics of consumer demand during the long-term period, because these codes allow at the automated data processing to coordinate change of data of demand not only in conformity with certain markets and temporal phases but with certain groups of conditions and factors;
fourthly, the integrated digital codes of scenarios of development, which contain references not only to codes of types of products, to codes of temporary and spatial parameters but also to codes of groups of conditions and resources restrictions (of opportunities) promote increase of speed and accuracy of definition of the strategies of development at the automated data processing, because allow to bind the formed strategies with certain markets and phases of life cycle and with certain groups of conditions and resources restrictions;
fifthly, the integrated digital codes of data of the strategic program, which include references to codes of products, indicators of their supply and demand, as well as to codes of the markets and phases of life cycle promote increase of speed and effectiveness of processes of optimization of data, because allow to coordinate in the automatic mode possible ranges of data of the strategic program of the offer of each product with demand of a certain market into a certain phase of life cycle;
sixthly, the integrated digital codes of data of the current program, which include references not only to digital identifiers of the market, a temporary phase, type of a product, various indicators but also to the corresponding codes of the current data of demand and data of the strategic program of the offer of products promote increase of productivity of process of updating of data of the current program, because allow to coordinate in the automatic mode the updated current data of the offer of products not only to data of the current demand of a certain market into a certain temporary phase but also and to data of the strategic program, it allows to determine the range of possible updating of data and to increase the accuracy of updating of data.

Thus, matrix-digital tools of each stage of the Way promote increase of technical result, because they allow to use machine processing of data, interactive displays and are compatible to the invented System, its software. Only the unity of all matrix and digital mechanisms of the created Way and System of their implementing is capable to provide the highest synergistic result and to lead not only to increase of productivity of each stage of a way, but also to growth of effectiveness, accuracy and reliability of the output data of documents of the situational-strategic program in a whole, namely, to achievement of the best end result. It provides such increase of consumer parameters of products, which leads to growth of public useful effect of products, to the best satisfaction of public needs.

### Industrial applicability

Firstly, the system, which is offered to introduction, is simple constructive device with the interactive nature of the action, and it is available for creation at the enterprises. Availability of creation of the System and simplicity of its use opens ample opportunities for industrial application of the invention.

Secondly, the program mechanism of the System, which is offered to introduction, consist from the operating system and installed programs that are compatible to the operating system and with each other and are used in a certain sequence and for implementing certain operations of the Way, this mechanism, firstly, is rather productive, because the various known programs are compatible in it so that to strengthen productivity of each other; secondly, action of the System is based on use of already known software, which is recognizable and should not cause rejection by its users. Each server of the System for implementing functional appointment is equipped by computer programs, which not only are progressive, universal in their class of technical means, but also these programs are enough known, widely used by many enterprises already, it allows to develop action of the System already on the familiar platform and with the familiar software. This mechanism makes the System more economic, as it is possible to save on programs that are already established and also at the expense of decrease of duration and costs of training of personnel, also System, which is more recognizable for users, creates both economic and psychological, and technological prerequisites for its wide industrial use.

Thirdly, not only the System but also the Way are offered to introduction. The process of implementing the Way of matrix-digital transformation of a variable plurality of data is modeled, namely, the developed list of the sequences of stages, their steps and operations of the Way is embodied in seven matrix-digital models, from which six models define of the sequences of operations and steps of each stage of the Way, and the seventh model is cumulative and connects into a whole all six stages of a way and their models. Models, the mechanism of their formation, as well as a list of the sequences of stages, their steps and operations, which are offered to introduction, are rather universal, they can find broad application in work of the enterprises of various profile.

Fourthly, the matrix-digital models of multi-purpose optimization of data of the strategic program of the offer of products, which are created in a format 3 D, also flowcharts for comparison of decisions versions and the choice of an optimal variant on the basis of the multicriteria analysis are offered to introduction. The offered tools in aggregate with the corresponding software allow to optimize not separate data, but their plurality and to estimate aggregate useful effect from a plurality of data, it allows to generate more exact data. This Way leads to increase of effectiveness of the formed programs, it can also be demanded in the most various branches of the national economy; the need for use of matrix-digital tools of a way will increase in process of introduction of digital economy.

Fifthly, ways of formation of various digital blocks, namely, of the block of analog-digital databases, the block of the object-relational models of DBMS, the analytical block, the block of strategies, the block of strategic programs, the block of the current programs, as well as the integrated digital block of the situational-strategic program is offered to introduction in various branches of the national economy, taking into account that mechanism of formation and appointment of blocks are rather universal, they can find the broadest practical application.

Sixthly, the offered way of formation of the integrated codes of data according specified parameters, when each digital code of the program of the offer of products incorporates references to digital codes of the market, a phase of life cycle, type of a product, to other data with which the planned indicator is connected, as well as of formatting a chain of the connected codes of data allows to increase the speed of transformation of data at machine processing of data, this digital technology is very topical in modern conditions of managing, and therefore, it has good prospects for broad application.

Seventhly, the mechanism of use of interactive panels «SMART» that are the structural elements entering in device of the System and being its integral part is offered to introduction; panels interact with servers of the System and accelerate work not only owing to a possibility of collective work of developers for performance of operations of the Way, including the mode of remote access owing to use of the program «SMART TeamWorks, but also owing to use of panels «SMART» as device for work with 3D model over optimization of a plurality of data, it is topical at strategic planning, and it is especially topical at current planning, because in this case interactive panels can be used as screens for monitoring and updating of data of the current demand in real time, what considerably accelerates process of transformation of data of the current offer. Achievement of balance of supply and demand in huge degree depends from acceleration of process of current planning, because demand changes very quickly, and timely transformations of the offer of products have to be made very quickly. The solution of this task is included into the center of attention of most of producers, what promotes industrial applicability of the invented way.

Eighthly, the offered way allows to optimize all data in unity of temporary and spatial coordinates and also in unity of a system of situational and strategic planning, it is very topical for increase of effectiveness and reliability of both strategic and current programs, as well as for the choice of optimum temporary parameters and market segments of positioning of products and causes demand in use of the Way.

Ninthly, the industrial applicability of an invention is caused also by the fact that introduction of an invention does not demand of heavy expenses. Target expenses will be required for the organization of work, creation of the situational and strategic centers of planning at the enterprises and the equipment them by modern computer technology and the software for implementing operations of the Way and work of the System and also for training of personnel only in the beginning, but subsequently investments will bring big benefit, because all operations will become faster and will be carried out with smaller expenses. Thus, the considerable big effectiveness, accuracy and reliability of documents of the program will be reached with saving of means. The high speed, reliability and productivity of the way of matrix-digital transformation of a variable plurality of data and the systems of its implementing does an invention by preferable, attractive and available to wide industrial applications.

### Short description of drawings

The system of implementing a way of matrix-digital transforming a variable plurality of data is characterized by the drawing [Fig.8]. The invented way of matrix-digital transformation of a variable plurality of data for generating programs of the offer of products includes six stages, each stage is characterized by the model of the list of the sequences and by the drawing [Fig. 1-6], and each model is a component of the cumulative model of the Way, which allows to establish of connection between all stages of the Way [Fig.7]. Thus, all main drawings, which characterize the invented System and the Way, are designated by integers, their numbering is carried out one after another.

The fifth stage of a way includes examples of flowcharts for comparison of options and the choice of optimal solutions, as well as examples of matrix-digital models of optimization and situational transformation of a variable plurality of data of consumer indicators of products, which are characterized by drawings [Fig. 5.1 - 5.8]. Thereby, drawings that characterize examples of implementing the separate operations of the invented way are numbered by two figures. The first digit indicates belonging to the main drawing and a stage of a way; the second digit - numbering of drawings of examples.

All of digital designations, which is installed inside drawings, have the following principle of formation: the first two digits define its sequence number, and they characterize the functional purpose of a certain process of transformation of data, for example: 5.1- designation of process of generating the commodity assortments, whereas all subsequent numbering of data in the drawing is defined by operations of this process already.

The model of each stage describes process, which includes a certain number of steps, their consecutive operations, which are connected among themselves. Each stage, step and operation are denoted by the digital code. In the accepted conditional digital designation of the sequences the first digit means sequence number of a stage; the second digit - sequence number of an operation; the last digit - sequence number of a step. Thus, the number of operations is established in the middle at numbering steps of each stage; each step of a certain stage includes several operations. For example, designation [1.1-9.2] specifies, that the second step of the first stage includes consecutive operations from the 1^{st} to the 9^{th}. When numbering each operation only one digit is defined in the middle. For example, designation [1.2.3] indicates the second operation of the third step of the first stage.
Fig. 1 - «Matrix-digital model of process of formation of analog-digital databases and the digital block of databases for creation of programs of the offer of products». The drawing [Fig. 1] reflects the content of the first stage of the Way.
Fig. 2 - «Matrix-digital model of process of formation of the object-relational models of the DBMS and their digital block for synthesis of data in programs of the offer of products». The drawing [Fig.2] reflects the content of the second stage of the Way.
Fig. 3 - «Matrix-digital model of process of generating the temporal rows of forecasted data and formation of the digital analytical block». The drawing [Fig.3] reflects the content of the third stage of the Way.
Fig. 4 - «Matrix-digital model of process of synthesis of strategies and formation of the digital block of strategies». The drawing [Fig.4] reflects the content of the fourth stage of the Way.
Fig. 5 - «Matrix-digital model of process of generating a plurality of data of the target strategic program of the offer of products and formation of the digital block of strategic programs». The drawing [Fig. 5] reflects the content of the fifth stage of the Way.
Examples of multidimensional matrix-digital models of transformation of a variable plurality of data and flowcharts for the decision-making choice, which are described at the fifth stage, are characterized by drawings [Fig. 5.1 - 5.9].
Fig. 51- «Matrix-digital model of generating a plurality of data of the offer of assortments in interrelation with temporal and spatial parameters».

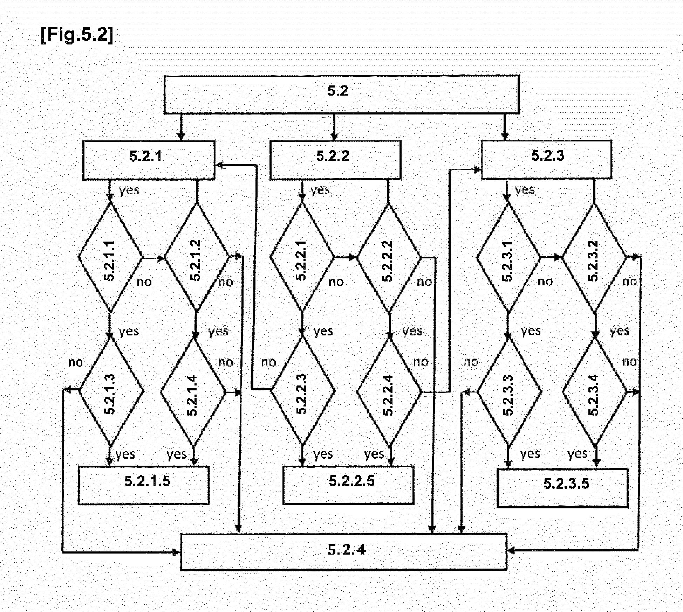

Fig. 5.2 - «The flowchart of decision-making over transformation of width of the offer of an assortment».
Fig. 5.3 - «Matrix-digital model of generating a plurality of temporal parameters of the offer of products in interrelation with spatial parameters».

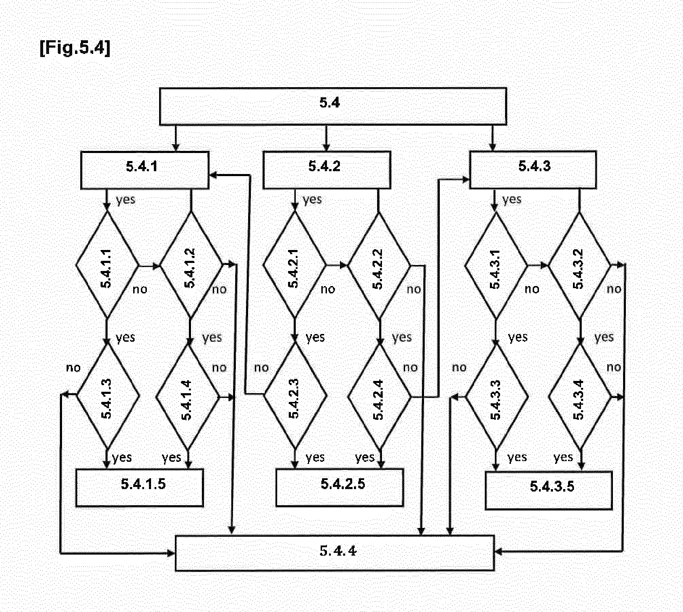

Fig. 5.4 - «The flowchart of decision-making over transformation of temporal parameters of the offer of a product».
Fig.5.5 - «Matrix-digital model of generating a plurality of data of target function and quality of the offer of products in interrelation with temporal and spatial parameters».

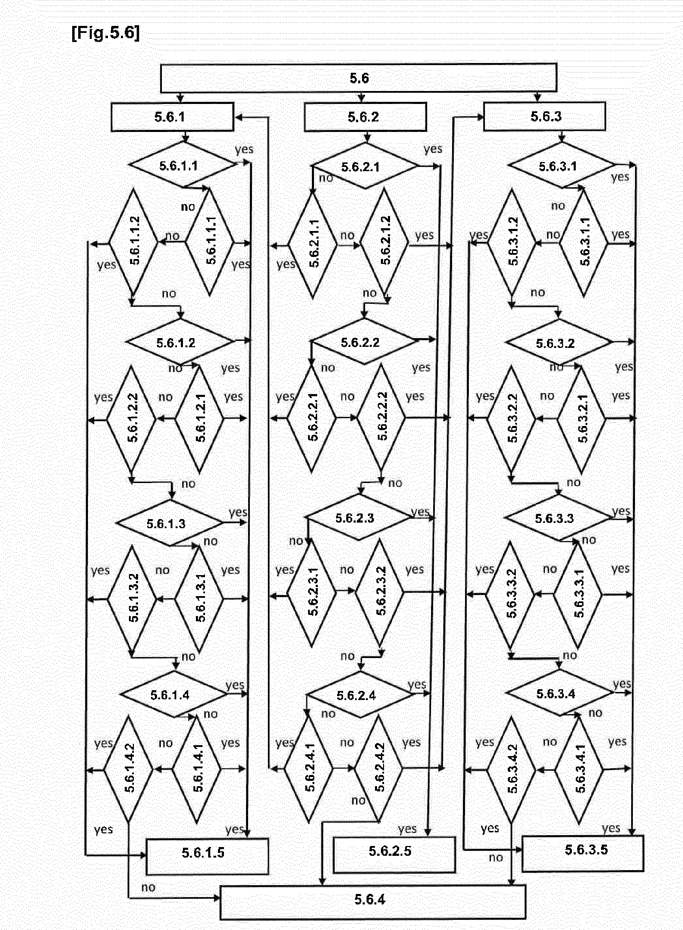

Fig. 5.6 - «The flowchart of decision-making over transformation of effectiveness and cumulative cost of target function of a product».
Fig.5.7 - «Matrix-digital model of generating a plurality of data of effectiveness of target function, the volumes and prices of the offer of products in interrelation with temporal and spatial parameters».

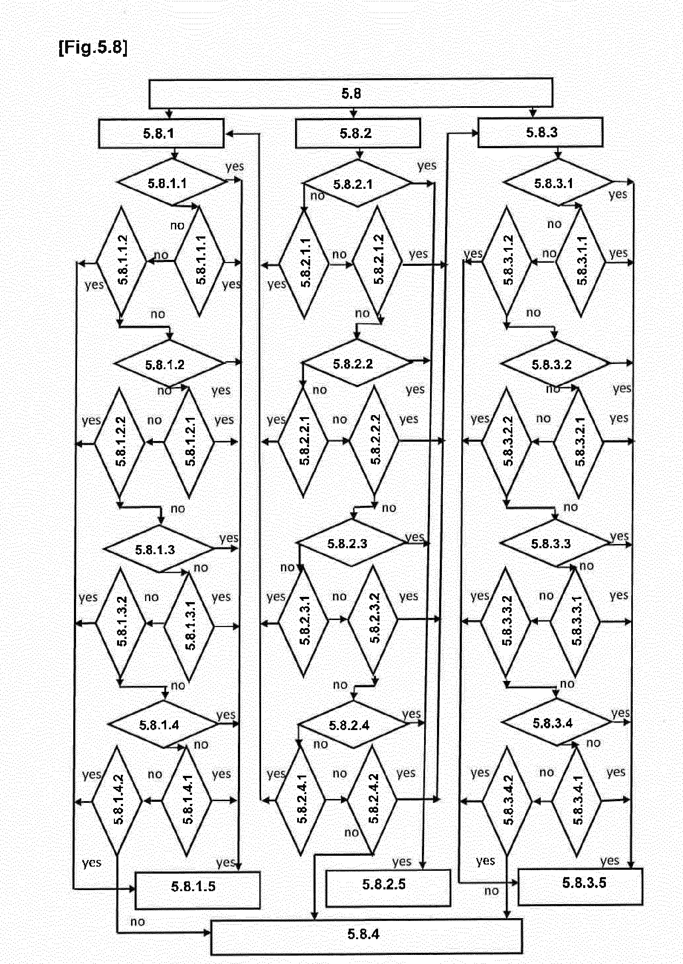

Fig. 5.8 - «The flowchart of decision-making over transformation of the price and volume of the offer of a product».

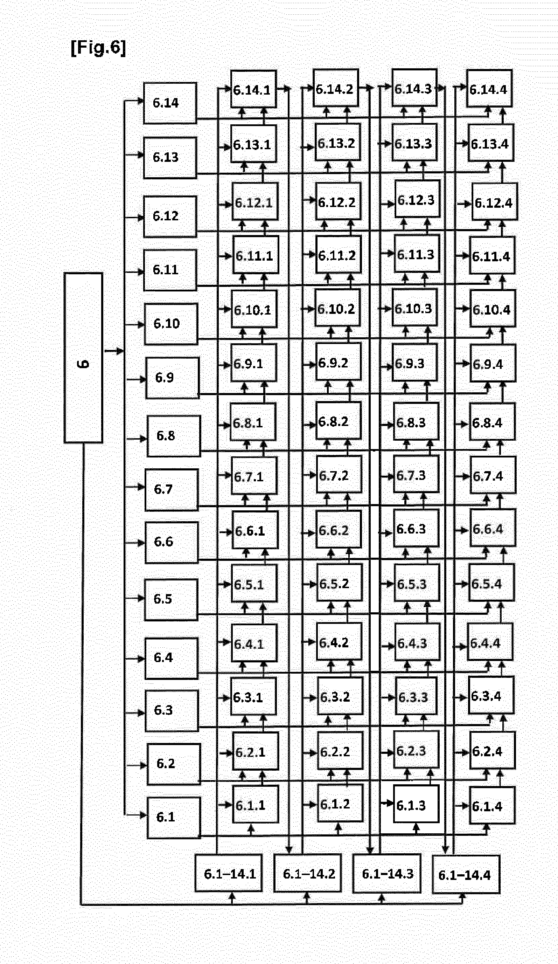

Fig. 6 - «Matrix-digital model of process of situational transformation of a plurality of data of the current program of the offer of products and formation of the digital block of the situational-strategic program over products». The drawing [Fig.6] reflects the content of the sixth stage of the Way.
Fig. 7 - «Aggregate matrix-digital model of a way of transformation of a variable plurality of data of the consumer indicators of products in interrelation with temporal and spatial parameters».
Fig.8 - «System of implementing a way of matrix-digital transformation of a plurality of data of the consumer indicators of products».

### Implementing an invention

The essence of the invention consists in the elaboration of the Way of matrix-digital transformation of a variable plurality of data of the offer of products owing to performance of a certain sequence of stages, their steps and operations of each step [Fig. 1 - 7], and in the created System of exercise of this way [Fig. 8], which is characterized by the constructive device and the technical mechanism.

[Fig. 8] - «System of exercise of the way of matrix-digital transformation of a variable plurality of data of consumer indicators of products».

### Description of essence of the System.

The System has external and internal sphere of action and consists of the following structural elements: of the web-server, proxy-server, server of databases - «Data Server», «MySQL Server», of the computing server, the application server over synthesis of strategies, the application server of digital transformation of data, the application server of the target appointment, the file server, the controller of the domain, interactive panels, which all are connected by communication channels and interact for exercise of various operations of the Way.

Each of servers is equipped with the operating system of family «Windows NT», of the type Windows 10, what provides their compatibility and community, as well as each server has special software that is known from technique level and is compatible to the used version of the operating system, with the software of other servers, and it is as its functioning mechanism by means of which the server carries out the functional purpose, so and this software, being used in a certain sequence and together with the software of other servers, is a necessary element of the technical mechanism of the created System, what defines its technical characteristics, namely servers are equipped by the following software: server of databases - «Data Server» is intended for collecting, systematization and storage of constant data and carries out the target appointment on the basis of software of type «Microsoft Excel», what allows to form the own matrix structure of databases in the format allowing to export the created database to a format «MySQL Workbench», «MySQL» or their analogs; server «MySQL» is intended for management by databases and carries out the target appointment on the basis of the software of type «MySQL» and of type «MySQL Workbench» basing on the structured language of inquiries; computing server is intended for processing of the arriving variable analytical data, for creation of analytical, commercial databases, as well as for estimating, computing, comparative operations, operations over forecast of data, and computing server carries out the target appointment on the basis of software over creation of unstructured databases of type «NoSQL», of software of type «DecideIT» for comparison of all combinations of data and the choice on the basis of the multicriteria analysis of an optimal solution, as well as the software of type «IBM SPSS Statistics Standard» and of type «SAS^{∗} Visual Forecasting», which are compatible with each other, allow to import and export data to «Microsoft Excel», to save files in the compatible «sav» format, and which are used for providing the widest range of computing, analytical operations and operations of the forecast of data both for long-term and the current period; the application server of digital transformation of data is intended for generating the digital codes, including digital indexes, digital keys and barcodes of data, and works on the basis of software of type «Serial Key Generator» and of type «ActiveBarcode», which are used for creation of the adjustable digital codes and barcodes according the specified parameters, and programs are capable to export generated codes to any program through the cloudy clipboard, over communication channels by means of technology «OLE» through the mechanism of interprocessor interaction based on «COM»; the application server over synthesis of strategies is intended for synthesis of the interconnected long-term and current development strategies of the company and its products and carries out the target appointment on the basis of software of type «SAS^{∗} Visual Analitics», this software allows to implement comprehensive analysis of the big array of the structured and unstructured data, including graphical analysis of development trends, testing of possible scenarios for synthesis of the long-term and current strategies of the offer of various products in various markets during the different temporal periods; the application server of the target appointment for creation of the situational-strategic program works on the basis of the programs of type «IBM WebSphere Business Modeler» and of type «Advanced Grapher» for generating of various combinations of the planned data at the specified restrictions, and also on the basis of the program of type «ZWCAD» for creation in a format «3D» of matrix-digital models that are tools for exercise of mechanism of optimal planning of a plurality of output data of the situational-strategic program over products; the file server is intended for storage and the file operations of any type of data and is equipped by the file system of new technology «NTFS» on the basis of the software of type «Windows Server 2012 R2 NTFS», of family of operating systems «Windows NT»; the file server and other servers, participating in process of performance of operations of the Way and in the course of data transmission from the server to the server, work with the help of the installed program of type «FTP Rush - FTP - client», this program has the Scheduler of tasks and provides direct files transfer from the server to the server by means of session «FXP» under the protocol «FTP» (File exchange Protocol).

All servers are connected over communication channels with each other through controller of the domain of type «DPT RAID», which supports the operating system «Windows NT», and it acts on the basis of software of the fifth generation «Smart RAID V.», of series «Millennium» that is controller for servers of the enterprise scale.

System includes visual displays of type of interactive panels «SMART Board», series 7000 Pro c IQ for Windows 10, which work on the basis of the software «SMART Meeting Pro» and «SMART ink» and are joined by means of a cable «HDMI» to computers of the computing server, the application server over synthesis of strategies and the application server of the target appointment for data visualization that is required at performing by these servers of operations of the Way, as well as for providing of simultaneous work on different blocks of the distributed data of the project of several people that can work, using not only one interactive display or displays installing in one room and connected with one computer but and the different displays connected with different computers by means of the program for remote access of type «SMART TeamWorks». The interactive displays «SMART Board», which are used in invented System not only on the basis them of the software, but and together with the software of other servers of the System, as well as for implementing operations of the Way, become necessary element of multi-function device of the System, their functions expand, because they use already not only for input, exit and reflection of data at the screens, but also for the analysis, the forecast, synthesis of strategies, for modeling data, generating of strategic programs, monitoring of demand, situational updating of the current programs in real time, it influences technical characteristics of System and on technical result from it.

System has the external environment and interacts with external servers: web-server of System, receiving request from the external web-server of the enterprise on exercise of the Way, forms inquiries via the System proxy-server and directs them to web-servers of archival and library resources, sales markets of products, suppliers of material resources, suppliers of technologies and means of labor, suppliers of work force, resellers, financial intermediaries, buyers for obtaining the information and analytical data necessary for performance of operations of the Way; the answers from external servers are arriving on the proxy-server of the System over neural network, it allows to find out data in the automatic mode; the sorted constant and variable data come in different folders of a cache (of the intermediate buffer for temporal storage of data) of proxy-server and from it go to different servers of the internal environment of the System in dependence from appointment, namely users send constant data to the server of databases, whereas analytical data - to the computing server.

Essential feature of the System consists in the interactive principle of its action, namely in creation of six nonstructural and not hierarchical interactive subsystems for exercise of six stages, which are designated as the First subsystem, Second subsystem, Third subsystem, Fourth subsystem, Fifth subsystem, Sixth subsystem, each of subsystems has several levels, at which different steps of a certain stage of the Way are performed; all subsystems are connected with each other by communication channels in uniform network of the System, but each subsystem includes as identical servers of the System for performance of typical operations of general appointment, so and the individual main server having general functional purpose with a certain subsystem only, also each subsystem has different nature of communications and interaction between elements, because each subsystem is characterized absolutely by different system of entrances and exits of data, the operating processes, communication interrelations, channels of the movement of the data established for exercise of the purposes of a certain stage of the Way; it forms network of each of System subsystems.

### List of designations of the System [Fig. 8]:

8.0 - System;
8.001 - web-server of the System;
8.002 - proxy-server of the System;
8.033; 8.043; 8.063 - interactive panels of type «SMART Board», which are used by the computing server, the application server over synthesis of strategies and the application server of the target appointment, respectively;
8.01 - the web-server of the enterprise from which the request arrives and which obtains information from the web-server of the System about generating files and results of operations of the System;
8.02 - web-servers of archive and library resources;
8.03 - web-servers of the markets;
8.04 - web-servers of consumers;
8.05 - web-servers of suppliers of work forces;
8.06 - web-servers of suppliers of material resources;
8.07 - web-servers of suppliers of technologies and means of labor;
8.08 - web-servers of resellers;
8.09 - web-servers of financial intermediaries;
8.1 - server of databases of the System «Data Server»;
8.2 - server «MySQL Server» of the System for management of object- relational databases and for creation of object-relational models;
8.3 - computing server of the System;
8.4 - the server of the application of the System over synthesis of strategies;
8.5 - the server of the application of the System over digital data transformation;
8.6 - server of the application of the target appointment of the System;
8.7 - the file server of the System;
8.8 - controllers of the System;
→ - communication channels;
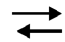 - direct (forward) and backward channels of communication (request and data acquisition for continuous storage);
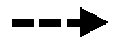 - request of analytical information;
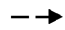 - arrived information of analytical character;
1.1 - 1.9 - the operations of the first stage of the Way, which are carried out on different servers in operating network of the First subsystem;
2.1 - 2.5 - the operations of the second stage of the Way, which are carried out on different servers in operating network of the Second subsystem;
3.1 -3.9 - the operations of the third stage of the Way, which are carried out on different servers in operating network of the Third subsystem;
4.1 - 4.10 - the operations of the fourth stage of the Way, which are carried out on different servers in operating network of the Fourth subsystem;
5.1 - 5.12 - the operations of the fifth stage of the Way, which are carried out on different servers in operating network of the Fifth subsystem;
6.1-6.14 - the operations of the sixth stage of the Way, which are carried out on different servers in operating network of the Sixth subsystem.

The System includes network of the First interactive subsystem [Fig.8], into which users make entry for exercise of the first stage of the Way [Fig.1].

The network of the First subsystem unites the following interacting elements of the System: the server of databases with the software of type «Microsoft Excel»; the application server of digital transformation of data with the software of type «Serial Key Generator» and of type «ActiveBarcode»; the file server with the software of type «Windows Server 2012 R2 NTFS»; these servers are connected with each other by communication channels. The server of databases receives over communication channels from the proxy-server constant data for formation of databases and interacts with other servers of the First subsystem that has six levels connected over communication channels by the general installation, the general process of exercise of six steps of the first stage of the Way. Action of servers of the First subsystem is intended for generating the analog-digital databases and formation of a digital block of databases and consists in work of servers of this subsystem over performance of the operating processes consisting in consecutive performance of operations of each step of the first stage of the Way, and the communication processes consisting in procedures of an entrance and exit from operating process on each of servers and in their interaction with each other by means of communication channels for transfer of a stream of data received owing to operating process at implementing the following steps of the first stage of the Way: 1.1-9.1; 1.1-9.2; 1.1-9.3; 1.1-9.4; 1.1-9.5; 1.1-9.6, respectively at the 1st, 2nd, 3rd, 4th, 5th, 6th level of the First subsystem.

The list of designations of structural elements of the first subsystem - of the 1st fragment of the System [Fig. 8]:
8.0 - System;
8.001 - web-server of the System;
8.002 - proxy-server of the System;
8.1 - server of databases of the System - «Data Server»;
8.5 - the server of the application of the System over digital data transformation;
8.7 - file server of the System;
8.8 - controllers of the System.

At all levels of the First subsystem the following operations are carried out:
1.1 - 1.9 - the operations of the first stage of the Way, which are carried out on different servers in operating network of the First subsystem.

### List of designations of the first stage of the Way [Fig. 1].

The 1st stage - the Way of creation of the analog-digital databases and a digital block of databases for formation of the information basis of programs of the offer of products.

[Fig.1] - «The matrix-digital process model of forming the analog-digital databases and a digital block of databases for creation of programs of the offer of products» is the first the main model of the Way, which in a digital form characterizes the sequence of steps of the first stage and operations of each step, also matrix interrelations between steps and operations of the first stage.

List of designations of steps of the first stage [Fig. 1]:
1.1-9.1 - users create the digital sequence of operations and the matrix-digital mechanism of process of generating an analog-digital database for planning a business environment of the company;
1.1-9.2 -users create the digital sequence of operations and the matrix-digital mechanism of process of generating an analog-digital database for planning development strategies of the company;
1.1-9.3 - users create the digital sequence of operations and the matrix-digital mechanism of process of generating an analog-digital database for creation of programs of the commodity nomenclature and assortments;
1.1-9.4 - users create the digital sequence of operations and the matrix-digital mechanism of process of generating an analog-digital database for creation of programs over the cumulative life cycle of products;
1.1-9.5 - users create the digital sequence of operations and the matrix-digital mechanism of process of generating an analog-digital database for creation of programs over the target function and quality of products;
1.1-9.6 - users create the digital sequence of operations and the matrix-digital mechanism of process of generating an analog-digital database for creation of programs of the offer of products.

List of designations of operations of the first stage [Fig. 1]:
1.1 - users enter operating process of the server of databases, obtain over neural networks through the proxy-server the data of constant character, sort them over key indicators for the subsequent storage by means of use of the program of type «Microsoft Excel», namely constant data necessary for the subsequent analysis, assessment, forecasting, planning, including a formulas for assessment, respectively of the competition, of a business environment of the company, efficiency, profitability of the company and its products, width, saturation of nomenclature, width, depth, elasticity, harmony of assortments, life cycles of resources and the released products, of the target function, quality of products, indicators of useful effect of products for producers and consumers, aggregate useful effect of products for the subsequent creation of the corresponding databases in process of steps of the first stage of the Way [Merkulova Yu. V. Situational-strategic planning in economy. Volume 1. Methodology of optimization of indicators of supply and demand. The 3rd edition, with additions and changes. - M.: Economy, 2017, p.57 -80; 117-125;183- 187;191-194; 197; 206-2164; 263- 270; 301-310];
1.2 - users classify and systematize data, using the program of type «Microsoft Excel», build classification models of structure of data for creation of a database at each step of the first stage of the Way;
1.3 - users define structure and fields in an analog-digital format of each database, send tasks for generating the digital codes, keys over communication channels to the application server of digital transformation of data and come out of operating process of the server of databases;
1.4 - users enter operating process of the application server of digital transformation of data, generate the integrated digital codes for each cell of a certain database by use of the program of type «Serial Key Generator» and according the specified parameters of indexes of lines and columns of a database created on each of steps of the first stage of the Way;
1.5 - users generate the internal and external keys for each table in a database formed at each step of the first stage of the Way according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6 - users enter operating process of the server of databases and on the basis of the received digital codes carry out the matrix-digital mechanism of formation of databases by use of the program of type Microsoft Excel that allows to form a matrix structure of each database over any parameters, according this mechanism all data are grouped in an analog-digital format over the matrix principle, i.e. not only horizontally, but also over vertically for specification of each group of data by plurality of parameters; as a result, users create analog-digital databases at each step of the first stage of the Way; users send tasks for generating the barcodes over communication channels to the application server of digital transformation of data and come out of operating process of the server of databases;
1.7 - users enter operating process of the application server of digital transformation of data and according the specified parameters by means of use of the software of type «ActiveBarcode» generate the barcodes of type «QR» or «Data Matrix» for designation not only of each created database, but also for designation of each table in it for the subsequent automatic input and identification of an analog-digital database created on each of steps of the first stage of the Way; as a result, users form the barcode for designation of an integrated block of all databases created at the first stage of the Way; users transfer digital data to the server of databases over communication channels by means of OLE DB technology, implementing the mechanism of interprocessor interaction based on COM, and come out of operating process of the application server of digital transformation of data;
1.8 - users enter operating process of the server of databases and denote by the received barcodes the databases and tables in them, preserve in a form of «csv» files the analog-digital databases, created at each step of the first stage of the Way and intended for the subsequent planning a business environment of the company and strategic zones of its managing, development strategies of the company, the commodity nomenclature and assortments, life cycles of products, the target function and quality of products, indicators of the offer of products; users carry out direct transfer of the created files to the file server owing to using by servers of the installed program «FTP Rush» by means of «FXP» session under «FTP» protocol and come out of operating process on the server of databases;
1.9 - users enter operating process of the file server, register the received files of analog-digital databases for their storage and file operations, send the files of analog-digital databases, created at each step of the first stage of the Way, into storage of the file server and place under their barcodes in the formed digital block of databases, which is denoted by an integrated barcode, and this block is a result of operating process of all steps of the first stage of the Way at all levels of the First subsystem; users carry out direct transfer of databases files from a digital block of databases of storage of the file server to the MySQL Server owing to using by servers of installed program «FTP Rush» by means of «FXP» session under «FTP» protocol and come out of operating process of the file server.

The 1st step - users create the digital sequence of operations and the matrix-digital mechanism of process of generating an analog-digital database for planning a business environment of the company.

List of designations of operations of the first step of the first stage [Fig. 1]:
1.1.1 - users enter operating process of the server of databases, obtain over neural networks through the proxy-server the data of constant character, sort them over key indicators for the subsequent storage by use of the program of type «Microsoft Excel», namely collect constant data about process, stages, indicators of planning a business environment of the company in the markets, including constant formulas of calculation of key indicators of rationality of a business environment of the company, namely of number and composition of suppliers, intermediaries, competitors, buyers, also formulas for assessment of effectiveness of these data and their transformation [Merkulova Yu.V. Situational-strategic planning in economy. Volume 1. Methodology of optimization of indicators of supply and demand. The 3rd edition, with additions and changes. - M.: Economy, 2017, p.263 -270; 301 - 307];
1.2.1 - users classify and systematize the constant data for the subsequent planning of number and the list of suppliers, resellers, financial intermediaries, competitors by means of use of the program of type «Microsoft Excel», also build classification model about possible business contacts and a business environment of the company for creation of the corresponding database;
1.3.1 - users define structure and fields in an analog-digital format of database for planning a business environment of the company and its strategic zones of managing, send a task for generating the digital codes, keys over communication channels to the application server of digital transformation of data and come out of operating process of the server of databases;
1.4.1 - users enter operating process of the application server of digital transformation of data, generate the integrated digital codes for each cell of a database for planning a business environment of the company by use of the program of type «Serial Key Generator», according the specified parameters of indexes of lines and columns;
1.5.1 - users generate the internal and external keys for each table in a database for planning a business environment of the company according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6.1 - users enter operating process of the server of databases and on the basis of the received digital codes carry out the matrix-digital mechanism of formation of a database for planning a business environment of the company and its strategic zones of managing by means of use of the program of type Microsoft Excel that allows to form a matrix structure of a database over any parameters, according this mechanism all data are grouped in an analog-digital format over the matrix principle, i.e. not only horizontally: over types of business partners, namely over suppliers, intermediaries, sellers, buyers, competitors, but also over vertically: over the composition of each group of business partners, in order that to systematize data for planning a business environment of the company and its strategic zones of managing; as a result, users create an analog-digital database for planning a business environment of the company; users send a task for generating the barcodes over communication channels to the application server of digital transformation of data and come out of operating process of the server of databases;
1.7.1 - users enter operating process of the application server of digital transformation of data and according the specified parameters by means of use of the software of type «ActiveBarcode» generate the barcodes of type «QR» or «Data Matrix» for designation not only of a database for planning a business environment of the company and its strategic zones of managing, but also for designation of each table in it for the subsequent automatic input and identification of an analog-digital database for planning a business environment of the company; users transfer digital data to the server of databases over communication channels by means of OLE DB technology, implementing the mechanism of interprocessor interaction based on COM, and come out of operating process of the application server of digital transformation of data;
1.8.1 - users enter operating process of the server of databases and denote by the received barcodes a database and tables in it for planning a business environment of the company and its strategic zones of managing, preserve in a form of «csv» file an analog-digital database that is intended for the subsequent creation of programs of a business environment of the company; users carry out direct transfer of the created file to the file server owing to using by servers of the installed program «FTP Rush» by means of «FXP» session under «FTP» protocol and come out of operating process of the server of databases;
1.9.1 - users enter operating process of the file server, register the received file of an analog-digital database for planning a business environment of the company and its strategic zones of managing for storage and the file operations, send a file of analog-digital database, created at the first step of the first stage of the Way, into storage of the file server and place under its barcode into the formed digital block of databases, which unites the files of analog-digital databases created at all steps of the first stage of the Way; users carry out direct transfer of a file of database for planning a business environment of the company and its strategic zones of managing from a digital block of databases of storage of the file server to the MySQL Server owing to using by servers of installed program «FTP Rush» by means of «FXP» session under «FTP» protocol and come out of operating process of the file server.

The 2nd step - users create the digital sequence of operations and the matrix-digital mechanism of process of generating an analog-digital database for planning development strategies of the company.

List of designations of operations of the second step of the first stage [Fig. 1]:
1.1.2 - users enter operating process of the server of databases, obtain over neural networks through the proxy-server the data of constant character, sort them over key indicators for the subsequent storage by use of the program of type «Microsoft Excel», namely collect constant data about stages, content of process of planning, estimated indicators, about the possible long-term and current strategies of the company and about the main indicators for each of possible development strategies [Merkulova Yu. V. Situational and strategic planning in economy. Volume 1. Methodology of optimization of indicators of supply and demand. The 3rd edition, with additions and changes. -M.: Economy, 2017, p. 183-187; 191-194;197];
1.2.2 - users classify and systematize the constant data about structure of the enterprise, functions of its divisions, about essence, problems, tasks of production and about stages of planning of the long-term and current strategies by means of use of the program of type «Microsoft Excel», also build classification model about possible strategies of development of the company for creation of the corresponding database;
1.3.2 - users define structure and fields in an analog-digital format of database for planning the development strategies of the company, send a task for generating the digital codes, keys over communication channels to the application server of digital transformation of data and come out of operating process of the server of databases;
1.4.2 - users enter operating process of the application server of digital transformation of data, generate the integrated digital codes for each cell of a database for planning the development strategies of the company by use of the program of type «Serial Key Generator», according the specified parameters of indexes of lines and columns;
1.5.2 - users generate the internal and external keys for each table in a database for planning the development strategies of the company according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6.2 - users enter operating process of the server of databases and on the basis of the received digital codes carry out the matrix-digital mechanism of formation of a database for planning the development strategies of the company by means of use of the program of type Microsoft Excel that allows to form a matrix structure of a database over any parameters, according this mechanism all data are grouped in an analog-digital format over the matrix principle, i.e. not only horizontally: over types of the long-term and current strategies, but also over vertically for specification of each group of strategies, their parameters, principles, stages, features, in order that to systematize data for planning the development strategies of the company; as a result, users create an analog-digital database for planning the development strategies of the company; users send a task for generating the barcodes over communication channels to the application server of digital transformation of data and come out of operating process of the server of databases;
1.7.2 - users enter operating process of the application server of digital transformation of data and according the specified parameters by means of use of the software of type «ActiveBarcode» generate the barcodes of type «QR» or «Data Matrix» for designation not only of a database for planning the development strategies of the company, but also for designation of each table in it for the subsequent automatic input and identification of an analog-digital database for planning the development strategies of the company; users transfer digital data to the server of databases over communication channels by means of OLE DB technology, implementing the mechanism of interprocessor interaction based on COM, and come out of operating process of the application server of digital transformation of data;
1.8.2 - users enter operating process of the server of databases and denote by the received barcodes a database and tables in it for planning the development strategies of the company, preserve in a form of «csv» file an analog-digital database that is intended for the subsequent creation of programs of the development strategies of the company; users carry out direct transfer of the created file to the file server owing to using by servers of the installed program «FTP Rush» by means of «FXP» session under «FTP» protocol and come out of operating process of the server of databases;
1.9.2 - users enter operating process of the file server, register the received file of an analog-digital database for planning the development strategies of the company for storage and the file operations, send a file of analog-digital database, created at the second step of the first stage of the Way, into storage of the file server and place under its barcode into the formed digital block of databases, which unites the files of analog-digital databases created at all steps of the first stage of the Way; users carry out direct transfer of a file of database for planning the development strategies of the company from a digital block of databases of storage of the file server to the MySQL Server owing to using by servers of installed program «FTP Rush» by means of «FXP» session under «FTP» protocol and come out of operating process of the file server.

The 3rd step - users create the digital sequence of operations and the matrix-digital mechanism of process of generating an analog-digital database for creation of programs of the commodity nomenclature and assortments.

List of designations of operations of the third step of the first stage [Fig. 1]:
1.1.3 - users enter operating process of the server of databases, obtain over neural networks through the proxy-server the data of constant character, sort them over key indicators for the subsequent storage by use of the program of type «Microsoft Excel», namely collect constant data about indicators and categories of planning the nomenclature and assortments, including constant formulas of calculation of key indicators of saturation, width of the commodity nomenclature, width, depth, harmony, elasticity of commodity assortments, also formulas of assessment of the efficiency from data transformation of these indicators [Merkulova Yu.V. Situational and strategic planning in economy. Volume 1. Methodology of optimization of indicators of supply and demand. The 3rd edition, with additions and changes. - M.: Economy, 2017, p.57 -80];
1.2.3 - users classify and systematize the constant data about structure and indicators of the commodity nomenclature and assortments by means of use of the program of type «Microsoft Excel», also build classification model of structure of the commodity nomenclature and assortments for creation of the corresponding database;
1.3.3 - users define structure and fields in an analog-digital format of database for planning the commodity nomenclature and assortments, send a task for generating the digital codes, keys over communication channels to the application server of digital transformation of data and come out of operating process of the server of databases;
1.4.3 - users enter operating process of the application server of digital transformation of data, generate the integrated digital codes for each cell of a database for planning the commodity nomenclature and assortments by use of the program of type «Serial Key Generator», according the specified parameters of indexes of lines and columns;
1.5.3 - users generate the internal and external keys for each table in a database for planning the commodity nomenclature and assortments according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6.3 - users enter operating process of the server of databases and on the basis of the received digital codes carry out the matrix-digital mechanism of formation of a database for planning the commodity nomenclature and assortments by means of use of the program of type Microsoft Excel that allows to form a matrix structure of a database over any parameters, according this mechanism all data are grouped in an analog-digital format over the matrix principle, i.e. not only horizontally: over structure of commodity nomenclature, which consists of various groups of assortments, but also over vertically: over composition of each commodity assortment and indicators of its width, depth, elasticity, harmony, in order that to systematize data for planning the commodity nomenclature and assortments; as a result, users create an analog-digital database for planning the commodity nomenclature and assortments; users send a task for generating the barcodes over communication channels to the application server of digital transformation of data and come out of operating process of the server of databases;
1.7.3 - users enter operating process of the application server of digital transformation of data and according the specified parameters by means of use of the software of type «ActiveBarcode» generate the barcodes of type «QR» or «Data Matrix» for designation not only of a database for planning the commodity nomenclature and assortments, but also for designation of each table in it for the subsequent automatic input and identification of an analog-digital database for planning the commodity nomenclature and assortments; users transfer digital data to the server of databases over communication channels by means of OLE DB technology, implementing the mechanism of interprocessor interaction based on COM, and come out of operating process of the application server of digital transformation of data;
1.8.3 - users enter operating process of the server of databases and denote by the received barcodes a database and tables in it for planning the commodity nomenclature and assortments, preserve in a form of «csv» file an analog-digital database that is intended for the subsequent creation of programs of the commodity nomenclature and assortments; users carry out direct transfer of the created file to the file server owing to using by servers of the installed program «FTP Rush» by means of «FXP» session under «FTP» protocol and come out of operating process of the server of databases;
1.9.3 - users enter operating process of the file server, register the received file of an analog-digital database for planning the commodity nomenclature and assortments for storage and the file operations, send a file of analog-digital database, created at the third step of the first stage of the Way, into storage of the file server and place under its barcode into the formed digital block of databases, which unites the files of analog-digital databases created at all steps of the first stage of the Way; users carry out direct transfer of a file of database for planning the commodity nomenclature and assortments from a digital block of databases of storage of the file server to the MySQL Server owing to using by servers of installed program «FTP Rush» by means of «FXP» session under «FTP» protocol and come out of operating process of the file server.

The 4th step - users create the digital sequence of operations and the matrix-digital mechanism of process of generating an analog-digital database for creation of programs over the cumulative life cycle of products.

List of designations of operations of the fourth step of the first stage [Fig. 1]:
1.1.4 - users enter operating process of the server of databases, obtain over neural networks through the proxy-server the data of constant character, sort them over key indicators for the subsequent storage by use of the program of type «Microsoft Excel», namely collect constant data about structure and the maintenance of cumulative life cycle of each type of a product of different functional appointment, about constant formulas for calculation of temporal stability of supply and demand, including temporal parameters of stability over quality and the price, also formulas of assessment of the efficiency from data transformation of these indicators [Merkulova Yu. V. Situational and strategic planning in economy. Vol. 1. Methodology of optimization of indicators of supply and demand. The 3rd edition, with additions and changes. - M.: Economy, 2017, p.327, 328];
1.2.4 - users classify and systematize the constant data about stages of creation, placement in the markets and using of products of various target appointment, about structure of life cycles of supply and demand by means of use of the program of type «Microsoft Excel», also build classification model of structure of cumulative life cycle of products of various appointment for creation of the corresponding database;
1.3.4 - users define structure and fields in an analog-digital format of database for planning the life cycles of products, send a task for generating the digital codes, keys over communication channels to the application server of digital transformation of data and come out of operating process of the server of databases;
1.4.4 - users enter operating process of the application server of digital transformation of data, generate the integrated digital codes for each cell of a database for planning the cumulative life cycles of products of various appointment by use of the program of type «Serial Key Generator», according the specified parameters of indexes of lines and columns;
1.5.4 - users generate the internal and external keys for each table in a database for planning the life cycles of products according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6.4 - users enter operating process of the server of databases and on the basis of the received digital codes carry out the matrix-digital mechanism of formation of a database for planning the cumulative life cycle of products by means of use of the program of type Microsoft Excel that allows to form a matrix structure of a database over any parameters, according this mechanism all data are grouped in an analog-digital format over the matrix principle, i.e. not only horizontally: over types of life cycles of products (of resources), but also over vertically: over structure and stages of various types of life cycles, in order that to systematize data for planning the cumulative life cycle of products of various appointment; as a result, users create an analog-digital database for planning the cumulative life cycle of products; users send a task for generating the barcodes over communication channels to the application server of digital transformation of data and come out of operating process of the server of databases;
1.7.4 - users enter operating process of the application server of digital transformation of data and according the specified parameters by means of use of the software of type «ActiveBarcode» generate the barcodes of type «QR» or «Data Matrix» for designation not only of each created database for planning the life cycles of products, but also for designation of each table in it for the subsequent automatic input and identification of the analog-digital database for planning the life cycles of products; users transfer digital data to the server of databases over communication channels by means of OLE DB technology, implementing the mechanism of interprocessor interaction based on COM, and come out of operating process of the application server of digital transformation of data;
1.8.4 - users enter operating process of the server of databases and denote by the received barcodes a database and tables in it for planning the life cycles of products, preserve in a form of «csv» file an analog-digital database that is intended for the subsequent creation of programs of the cumulative life cycle of products; users carry out direct transfer of the created file to the file server owing to using by servers of the installed program «FTP Rus» by means of «FXP» session under «FTP» protocol and come out of operating process of the server of databases;
1.9.4 - users enter operating process of the file server, register the received file of an analog-digital database for planning the life cycles of products for storage and the file operations, send a file of analog-digital database, created at the fourth step of the first stage of the Way, into storage of the file server and place under its barcode into the formed digital block of databases, which unites the files of analog-digital databases created at all steps of the first stage of the Way; users carry out direct transfer of a file of database for planning the life cycles of products from a digital block of databases of storage of the file server to the MySQL Server owing to using by servers of installed program « FTP Rush» by means of «FXP» session under «FTP» protocol and come out of operating process of the file server.

The 5th step - users create the digital sequence of operations and the matrix-digital mechanism of process of generating an analog-digital database for creation of programs over the target function and quality of products.

List of designations of operations of the fifth step of the first stage [Fig. 1]:
1.1.5 - users enter operating process of the server of databases, obtain over neural networks through the proxy-server the data of constant character, sort them over key indicators for the subsequent storage by use of the program of type «Microsoft Excel», namely collect constant data about the main, basic, auxiliary functions of a product and the services rendered to them, about indicators of its quality and functional appointment, including formulas for assessment of indicators of the target function and quality of a product, its parameters of the effectiveness of the target function and cumulative expenses, also formulas of assessment of the efficiency from data transformation of these indicators [Merkulova Yu.V. Situational and strategic planning in economy. Volume 1. Methodology of optimization of indicators of supply and demand. The 3rd edition, with additions and changes. -M.: Economy, 2017, p.117-123];
1.2.5 - users classify and systematize the constant data about quality indicators of products and about the main, basic, auxiliary and serving functions by means of use of the program of type «Microsoft Excel», also build classification model of the system of quality indicators and structure of functional services of products of various appointment for creation of the corresponding database;
1.3.5 - users define structure and fields in an analog-digital format of database for planning the target function and quality of products, send a task for generating the digital codes, keys over communication channels to the application server of digital transformation of data and come out of operating process of the server of databases;
1.4.5 - users enter operating process of the application server of digital transformation of data, generate the integrated digital codes for each cell of a database for planning the target function and quality of products by use of the program of type «Serial Key Generator», according the specified parameters of indexes of lines and columns;
1.5.5 - users generate the internal and external keys for each table in a database for planning the target function, quality of products according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6.5 - users enter operating process of the server of databases and on the basis of the received digital codes carry out the matrix-digital mechanism of formation of a database for planning the target function, quality of products by means of use of the program of type Microsoft Excel that allows to form a matrix structure of a database over any parameters, according this mechanism all data are grouped in an analog-digital format over the matrix principle, i.e. not only horizontally: over typical groups of qualitative parameters for any product, but also over vertically for specification of functional properties of various types of products and their contribution to satisfaction of public needs, in order that to systematize data for planning the target function, quality of various products; as a result, users create an analog-digital database for planning the target function, quality of products; users send a task for generating the barcodes over communication channels to the application server of digital transformation of data and come out of operating process of the server of databases;
1.7.5 - users enter operating process of the application server of digital transformation of data and according the specified parameters by means of use of the software of type «ActiveBarcode» generate the barcodes of type «QR» or «Data Matrix» for designation not only of a database for planning the target function, quality of products, but also for designation of each table in it for the subsequent automatic input and identification of an analog-digital database for planning the target function, quality of products; users transfer digital data to the server of databases over communication channels by means of OLE DB technology, implementing the mechanism of interprocessor interaction based on COM, and come out of operating process of the application server of digital transformation of data;
1.8.5 - users enter operating process of the server of databases and denote by the received barcodes a database and tables in it for planning the target function, quality of products, preserve in a form of «csv» file an analog-digital database that is intended for the subsequent creation of programs over the target function, quality of products; users carry out direct transfer of the created file to the file server owing to using by servers of the installed program «FTP Rush» by means of «FXP» session under «FTP» protocol and come out of operating process of the server of databases;
1.9.5 - users enter operating process of the file server, register the received file of an analog-digital database for planning the target function, quality of products for storage and the file operations, send a file of analog-digital database, created at the fifth step of the first stage of the Way, into storage of the file server and place under its barcode into the formed digital block of databases, which unites the files of analog-digital databases created at all steps of the first stage of the Way; users carry out direct transfer of a file of database for planning the target function, quality of products from a digital block of databases of storage of the file server to the MySQL Server owing to using by servers of installed program «FTP Rush» by means of «FXP» session under «FTP» protocol and come out of operating process of the file server.

The 6th step - users create the digital sequence of operations and the matrix-digital mechanism of process of generating an analog-digital database for creation of programs of the offer of products.

List of designations of operations of the sixth step of the first stage [Fig. 1]:
1.1.6 - users enter operating process of the server of databases, obtain over neural networks through the proxy-server the data of constant character, sort them over key indicators for the subsequent storage by use of the program of type «Microsoft Excel», namely collect constant data about the main indicators of the offer of products in the markets, about the temporal and spatial parameters, about indicators of the effectiveness of products, including constant formulas for calculation of the efficiency of products for the producer, the consumer, intermediaries, also formulas of aggregate useful effect of a product and of useful effect from data transformation of indicators of the offer of products [Merkulova Yu.V. Situational and strategic planning in economy. Volume 1. Methodology of optimization of indicators of supply and demand. The 3rd edition, with additions and changes. - M.: Economy, 2017, p.183-187; 191-194; 197; 206- 213];
1.2.6 - users classify and systematize the constant data about system of indicators for planning demand and the offer of products, for assessment of production efficiency and products of the company and about factors which influence them by means of use of the program of type «Microsoft Excel», also build classification model of the structured data for creation of the corresponding database;
1.3.6 - users define structure and fields in an analog-digital format of database for planning the offer of products in various markets during their life cycle, send a task for generating the digital codes, keys over communication channels to the application server of digital transformation of data and come out of operating process of the server of databases;
1.4.6 - users enter operating process of the application server of digital transformation of data, generate the integrated digital codes for each cell of a database for planning the indicators of the offer of products by use of the program of type «Serial Key Generator», according the specified parameters of indexes of lines and columns;
1.5.6 - users generate the internal and external keys for each table in a database for planning the indicators of the offer of products according the specified parameters by means of program of type «Serial Key Generator)); users transfer digital data to the server of databases over communication channels by means of OLE DB technology, implementing the mechanism of interprocessor interaction based on COM, and come out of operating process of the application server of digital transformation of data;
1.6.6 - users enter operating process of the server of databases and on the basis of the received digital codes carry out the matrix-digital mechanism of formation of a database for planning the indicators of the offer of products by means of use of the program of type Microsoft Excel that allows to form a matrix structure of a database over any parameters, according this mechanism all data are grouped in an analog-digital format over the matrix principle, i.e. not only horizontally: over the most typical scenarios and groups of the main indicators of the offer of products in the markets, but also over vertically for specification of each scenario of the offer of products in dependence from influence of various factors, conditions, opportunities on its effectiveness, which are grouped over degree of importance and probability for various markets and temporal phases of demand, in order that to systematize data for planning the offer of products in interrelation with temporal and spatial parameters; as a result, users create an analog-digital database for planning the indicators of the offer of products; users send a task for generating the barcodes over communication channels to the application server of digital transformation of data and come out of operating process of the server of databases;
1.7.6 - users enter operating process of the application server of digital transformation of data and according the specified parameters by means of use of the software of type «ActiveBarcode» generate the barcodes of type «QR» or «Data Matrix» for designation not only of a database for planning the indicators of the offer of products, but also for designation of each table in it for the subsequent automatic input and identification of an analog-digital database for planning the indicators of the offer of products; users transfer digital data to the server of databases over communication channels by means of OLE DB technology, implementing the mechanism of interprocessor interaction based on COM, and come out of operating process of the application server of digital transformation of data;
1.8.6 - users enter operating process of the server of databases and denote by the received barcodes a database and tables in it for planning the indicators of the offer of products, preserve in a form of «csv» file an analog-digital database that is intended for the subsequent creation of programs of the offer of products of the company; users carry out direct transfer of the created file to the file server owing to using by servers of the installed program «FTP Rush» by means of «FXP» session under «FTP» protocol and come out of operating process of the server of databases;
1.9.6 - users enter operating process of the file server, register the received file of an analog-digital database for planning the indicators of the offer of products for storage and the file operations, send a file of analog-digital database, created at the sixth step of the first stage of the Way, into storage of the file server and place under its barcode into the formed digital block of databases, which unites the files of analog-digital databases created at all steps of the first stage of the Way; users carry out direct transfer of a file of database for planning the indicators of the offer of products from a digital block of databases of storage of the file server to the MySQL Server owing to using by servers of installed program «FTP Rush» by means of «FXP» session under «FTP» protocol and come out of operating process of the file server.

Upon termination of the ninth operation at all levels of the First subsystem and finishing of all steps of the first stage of the Way, users come out of network of the First subsystem.

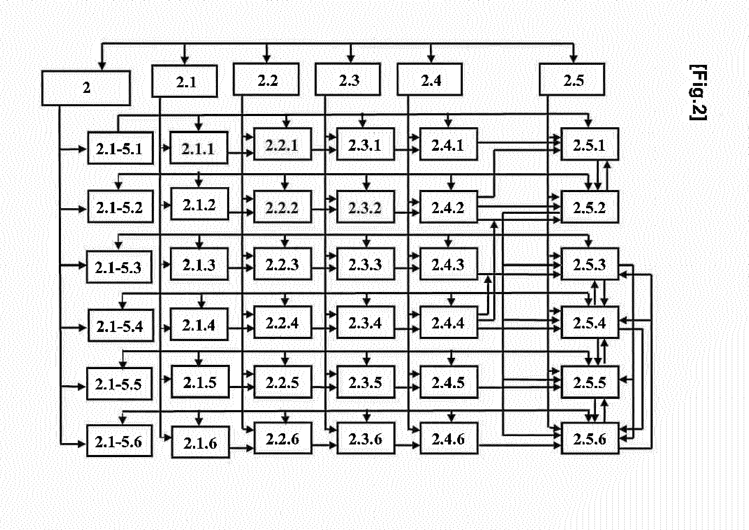

The System includes network of the Second interactive subsystem [Fig. 8], into which users make entry for exercise of the second stage of the Way [Fig.2].

The network of the Second subsystem unites the following interacting elements of the System: «MySQL Server» over management by databases with the installed program of type «MySQL», as well as the compatible program «MySQL Workbench» that is a tool for the visual and integrated designing and modeling of databases into uniform seamless space owing to establishment of interrelations between them in the system of databases «MySQL»; the application server of digital transformation of data with the software of type «Serial Key Generator» and of type «ActiveBarcode»; the file server with the software of type «Windows Server 2012 R2 NTFS»; these servers are connected with each other by communication channels. Server «MySQL», using the program of direct file transfer «FTP Rush» by means of «FXP» session under «FTP» protocol, receives «csv» files from a block of databases of storage of the file server, and users of the server «MySQL» carry out import their into the installed program «MySQL Workbench» for implementing the databases management system by means of creation of object-relational models and interact with other servers of the Second subsystem that has six levels connected over communication channels by the general installation, the general process of exercise of six steps of the second stage of the Way.

Action of servers of the Second subsystem is intended for creation of object-relational digital models of the Databases Management System (DBMS), formation of their digital block and consists in work of servers of this subsystem over performance of the operating processes consisting in consecutive performance of operations of each step of the second stage of the Way, and the communication processes consisting in procedures of an entrance and exit from operating process on each of servers and in their interaction with each other by means of communication channels for transfer of a stream of data received owing to operating process at implementing the following steps of the second stage of the Way: 2.1-5.1; 2.1-5.2; 2.1-5.3; 2.1-5.4; 2.1-5.5; 2.1-5.6, respectively at the 1st, 2nd, 3rd, 4th, 5th, 6th levels of the Second subsystem.

The list of designations of structural elements of the second subsystem - of the 2nd fragment of the System [Fig. 8]:
8.0 - System;
8.1 - the server of databases of the System - «Data Server»;
8.2 - server «MySQL Server» of the Systems for creation of object-relational models of DBMS;
8.5 - the server of the application of the System over digital transformation of data;
8.7 - file server of the System;
8.8 - controllers of the System.

At all levels of the Second subsystem the following operations are carried out:
2.1 - 2.5 - the operations of the second stage of the Way, which are carried out on different servers in operating network of the Second subsystem.

### List of designations of the 2nd stage of the Way [Fig.2].

The 2nd stage - the Way of formation of the object-relational models of DBMS and a digital block of models for synthesis of data in programs of the offer of products.

[Fig.2] - «The matrix-digital model of process of formation of the object-relational models of DBMS and their digital block for synthesis of data in programs of the offer of products» is the second the main model of the Way, which in a digital form characterizes the sequence of steps of the second stage and operations of each step, also matrix interrelations between steps and operations of the second stage.

List of designations of steps of the second stage [Fig.2]:
2.1-5.1 - users create the digital sequence of operations and the matrix-digital mechanism of process of creation of an object-relational model of DBMS for synthesis of development strategies of a business environment of the company;
2.1-5.2 - users create the digital sequence of operations and the matrix-digital mechanism of process of creation of an object-relational model of DBMS for synthesis of development strategies of the company and its products;
2.1-5.3 - users create the digital sequence of operations and the matrix-digital mechanism of process of creation of an object-relational model of DBMS for synthesis of data in programs over the commodity nomenclature and assortments;
2.1-5.4 - users create the digital sequence of operations and the matrix-digital mechanism of process of creation of an object-relational model of DBMS for synthesis of data in programs of the life cycles of products;
2.1-5.5 - users create the digital sequence of operations and the matrix-digital mechanism of process of creation of an object-relational model of DBMS for synthesis of data in programs over the target function, quality of products;
2.1-5.6 - users create the digital sequence of operations and the matrix-digital mechanism of process of creation of an object-relational model of DBMS for synthesis of data in programs of the offer of products in interrelation with temporary and spatial parameters.

List of designations of operations of the second stage [Fig.2]:
2.1 - users enter operating process of the server «MySQL», carry out import of arrived «csv» files of the databases, created at the previous stage, into the installed program of «MySQL Workbench» by means of using the tools of the program, and in the section «Physical Schemas» they form a list of databases of the project and a list of tables for each database, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of each database for formation of DBMS in the process of performance of steps of the second stage of the Way;
2.2 - users install owing to use of such tools of the program «MySQL Workbench», as «Models», «+Add Diagram», «Column», «Referenced Column», parental and affiliated tables in each database for determination of nature of communications between their data; users, using the digital codes of data, defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of one appointment, but these tables have various hierarchy and level of detailing data and are a part of a certain database, and on the other hand, horizontally between data of tables of each certain database and data of the tables, which are a part of other databases of the block of the first stage, in order that to establish influence of various factors and data types on each other for formation of DBMS in a result of steps of the second stage of the Way; users send tasks for generating the barcodes over communication channels to the application server of digital transformation of data and come out of operating process of the server «MySQL»;
2.3 - users enter operating process of the application server of digital transformation of data and according the specified parameters by means of use of the program of type «ActiveBarcode» generate the barcodes of type «QR» or «Data Matrix» for designation of each database and its objects, respectively of the tables, EER charts, object-relational model of the System of management by each database, also for designation of the System of management by all databases that enter a block of the first stage and of an integrated digital block of the object-relational models of the second stage; users transfer digital data to the server «MySQL» over communication channels by means of OLE DB technology, implementing the mechanism of interprocessor interaction based on COM, and come out of operating process of the application server of digital transformation of data;
2.4 - users enter operating process of the server «MySQL», create in a digital format object-relational models of the DBMS by means of use of tools of the program of type «MySQL Workbench», as well as on the basis of the connected digital codes of data and the constructed EER charts at each step of the second stage of the Way; users unite all objects: namely: EER charts, tables, object-relational models, which are created in each database under their barcodes, into the uniform seamless management system by databases, keep all objects of DBMS in one general script by means of a tool of «Export to Self-Contained File» of the program «MySQL Workbench», carry out export of the backup copy into a file in the «*sql*» format, available for editing in the program «MySQL»; users export by means of use of tools of the program of «MySQL Workbench» the created files of object-relational models into the «*pdf*» format on each step of the second stage of the Way; users carry out direct transfer of the created files to the file server owing to using by servers of the installed program «FTP Rush» by means of «FXP» session under «FTP» protocol and come out of operating process of the server «MySQL»;
2.5 - users enter operating process of the file server, register the received files for their storage and file operations, direct the file in a format «*sql*» of the System of management by databases, as well as the «*pdf*» files of the object-relational models of the DBMS, which are created in process of steps of the second stage of the Way, into storage of the file server for placement of all files under their barcodes in a digital block of the object-relational models of the DBMS, this block is denoted by an integrated barcode, and it is a result of operating process of performance of all steps of the second stage of the Way at all levels of the Second subsystem; users carry out direct transfer of files from a digital block of databases of the first stage and the files of object-relational models of the DBMS from a digital block of the second stage, namely from blocks of storage of the file server to the computing server owing to using by servers of installed program «FTP Rush» by means of «FXP» session under «FTP» protocol and come out of operating process of the file server.

The 1st step - users create the digital sequence of operations and the matrix-digital mechanism of process of creation of an object-relational model of DBMS for synthesis of development strategies of a business environment of the company.

List of designations of operations of the first step of the second stage [Fig.2]:
2.1.1 - users enter operating process of the server «MySQL», carry out import of arrived «csv» file of a database for planning of a business environment of the company and of strategic zones of managing into the installed program of «MySQL Workbench» by means of using the tools of the program, and in the section «Physical Schemas» they form a list of tables, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of a database for planning a business environment of the company;
2.2.1 - users install owing to use of such tools of the program «MySQL Workbench», as «Models», «+Add Diagram», «Column», «Referenced Column», parental and affiliated tables in database for planning a business environment of the company; users, using the digital codes of data that are defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of various hierarchy and of level of detailing information about a business environment of the company, which enter in composition of a database for planning of a business environment of the company, and on the other hand, horizontally between data of tables of this database and data of the tables, which are a part of other databases of the block of the first stage, in order that to establish influence on a business environment of the company of various factors and for formation of the corresponding DBMS; users send a task for generating the barcodes over communication channels to server of the application over digital transformation of data and come out of operating process of the server «MySQL»;
2.3.1 - users enter operating process of the application server of digital transformation of data and according the specified parameters by means of use of the program of type «ActiveBarcode» generate the barcodes of type «QR» or «Data Matrix» for designation of a database for planning a business environment of the company and objects entering database, respectively of the tables, EER charts, object-relational model and of the System of management by a database for planning a business environment of the company; users transfer digital data to the server «MySQL» over communication channels by means of OLE DB technology, implementing the mechanism of interprocessor interaction based on COM, and come out of operating process of the application server of digital transformation of data;
2.4.1 - users enter operating process of the server «MySQL», create in a digital format an object-relational model of the System of management by a database for planning a business environment of the company by means of use of tools of the program of type «MySQL Workbench», as well as on the basis of the connected digital codes of data, the constructed EER charts, which allow to establish the essential connection of the indicators of a business environment of the company with each other and with data of other databases from a block of the first stage; users export by means of use of tools of the program of «MySQL Workbench» the created file of object-relational model, which is intended for synthesis of development strategies of a business environment of the company, into the «*pdf*» format; users perform direct transfer of the created file to the file server owing to using by servers of the installed program «FTP Rush» by means of «FXP» session under «FTP» protocol and come out of operating process of the server «MySQL»;
2.5.1 - users enter operating process of the file server, register the received file of an object-relational model for synthesis of data in programs of a business environment of the company for storage and file operations, direct a file, created at the first step of the second stage of the Way, into storage of the file server and place under its barcode in the formed digital block, which unites files of the object-relational models of DBMS of all steps of the second stage of the Way; users carry out direct transfer of a database file for planning of a business environment of the company from a digital block of databases of the first stage, a file of an object-relational model for management by data of a business environment of the company from a digital block of DBMS of the second stage, namely from blocks of storage of the file server to the computing server owing to using by servers of installed program «FTP Rush» by means of «FXP» session under «FTP» protocol and come out of operating process of the file server.

The 2nd step - users create the digital sequence of operations and the matrix-digital mechanism of process of creation of an object-relational model of DBMS for synthesis of development strategies of the company and its products.

List of designations of operations of the second step of the second stage [Fig.2]:
2.1.2 - users enter operating process of the server «MySQL», carry out import of arrived «csv» file of a database for planning the development strategies of the company into the installed program of «MySQL Workbench» by means of using the tools of the program, and in the section «Physical Schemas» they form a list of tables, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of a database for planning the development strategies of the company;
2.2.2 - users install owing to use of such tools of the program «MySQL Workbench», as «Models», «+Add Diagram», «Column», «Referenced Column», parental and affiliated tables in database for planning the development strategies of the company; users, using the digital codes of data that are defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of various hierarchy and of level of detailing information about the long-term and current strategies of the markets and products of the company, which enter in composition of the database for planning the development strategies of the company, and on the other hand, horizontally between data of tables of this database and data of the tables, which are a part of other databases of the block of the first stage, in order that to establish influence on choice of the development strategy of the company of various factors and for formation of the corresponding DBMS; users send a task for generating the barcodes over communication channels to server of the application over digital transformation of data and come out of operating process of the server «MySQL»;
2.3.2 - users enter operating process of the application server of digital transformation of data and according the specified parameters by means of use of the program of type «ActiveBarcode» generate the barcodes of type «QR» or «Data Matrix» for designation of a database for planning the development strategies of the company and objects entering database, respectively of the tables, EER charts, object-relational model and of the System of management by a database for planning the development strategies of the company; users transfer digital data to the server «MySQL» over communication channels by means of OLE DB technology, implementing the mechanism of interprocessor interaction based on COM, and come out of operating process of the application server of digital transformation of data;
2.4.2 - users enter operating process of the server «MySQL», create in a digital format an object-relational model of the System of management by a database for planning the development strategies of the company and its products by means of use of tools of the program of type «MySQL Workbench», as well as on the basis of the connected digital codes of data and the constructed EER charts, which allow to establish the essential connection of the long-term and current strategies with each other and with data of other databases from a block of the first stage; users export by means of use of tools of the program of «MySQL Workbench» the created file of object-relational model, which is intended for synthesis of strategies of the company, into the «*pdf*» format; users carry out direct transfer of the created file to the file server owing to using by servers of the installed program «FTP Rush» by means of «FXP» session under «FTP» protocol and come out of operating process of the server «MySQL»;
2.5.2 - users enter operating process of the file server, register the received file of object-relational model for synthesis of development strategies of the company for storage and file operations, direct a file, created at the second step of the second stage of the Way, into storage of the file server and place under its barcode in the formed digital block, which unites files of the object-relational models of DBMS of all steps of the second stage of the Way; users carry out direct transfer of a database file for planning of development strategies of the company from a digital block of databases of the first stage, a file of an object-relational model for management by data of development strategies of the company from a digital block of DBMS of the second stage, namely from blocks of storage of the file server to the computing server owing to using by servers of installed program «FTP Rush» by means of «FXP» session under «FTP» protocol and come out of operating process of the file server.

The 3rd step - users create the digital sequence of operations and the matrix-digital mechanism of process of creation of an object-relational model of DBMS for synthesis of data in programs over the commodity nomenclature and assortments.

List of designations of operations of the third step of the second stage [Fig.2]:
2.1.3 - users enter operating process of the server «MySQL», carry out import of arrived «csv» file of a database for planning of the commodity nomenclature and assortments into the installed program of «MySQL Workbench» by means of using the tools of the program, and in the section «Physical Schemas» they form a list of tables, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of a database for planning of the commodity nomenclature and assortments;
2.2.3 - users install owing to use of such tools of the program «MySQL Workbench», as «Models», «+Add Diagram», «Column», «Referenced Column», parental and affiliated tables in database for planning of the commodity nomenclature and assortments; users, using the digital codes of data that are defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of various hierarchy and of level of detailing information about structure, indicators of the commodity nomenclature, assortments, which enter in composition of the database for planning the commodity nomenclature, assortments, and on the other hand, horizontally between data of tables of this database and data of the tables, which are a part of other databases of the block of the first stage, in order that to establish influence on structure of the commodity nomenclature and on composition of assortments of various factors and for formation of the corresponding DBMS; users send a task for generating the barcodes over communication channels to server of the application over digital transformation of data and come out of operating process of the server «MySQL»;
2.3.3 - users enter operating process of the application server of digital transformation of data and according the specified parameters by means of use of the program of type «ActiveBarcode» generate the barcodes of type «QR» or «Data Matrix» for designation of a database for planning the commodity nomenclature, assortments and objects entering database, respectively of the tables, EER charts, object-relational model and of the System of management by a database for planning the commodity nomenclature, assortments; users transfer digital data to the server «MySQL» over communication channels by means of OLE DB technology, implementing the mechanism of interprocessor interaction based on COM, and come out of operating process of the application server of digital transformation of data;
2.4.3 - users enter operating process of the server «MySQL», create in a digital format an object-relational model of the System of management by a database for planning the commodity nomenclature, assortments by means of use of tools of the program of type «MySQL Workbench», as well as on the basis of the connected digital codes of data and the constructed EER charts, which allow to establish the essential connection of the indicators of width of the commodity nomenclature, width, depth, harmony of commodity assortments with each other and with data of other databases from a block of the first stage; users export by means of use of tools of the program of «MySQL Workbench» the created file of object-relational model, which is intended for synthesis of data of programs over commodity nomenclature and assortments, into the «*ρdf*» format; users carry out direct transfer of the created file to the file server owing to using by servers of the installed program «FTP Rush» by means of «FXP» session under «FTP» protocol and come out of operating process of the server «MySQL»;
2.5.3 - users enter operating process of the file server, register the received file of object-relational model for synthesis of data in programs of the commodity nomenclature, assortments for storage and file operations, direct a file, created at the third step of the second stage of the Way, into storage of the file server and place under its barcode in the formed digital block, which unites files of the object-relational models of DBMS of all steps of the second stage of the Way; users carry out direct transfer of a database file for planning of commodity nomenclature and assortments from a digital block of databases of the first stage, a file of an object-relational model for management by data of commodity nomenclature, assortments from a digital block of DBMS of the second stage, namely from blocks of storage of the file server to the computing server owing to using by servers of installed program «FTP Rush» by means of «FXP» session under «FTP» protocol and come out of operating process of the file server.

The 4th step - users create the digital sequence of operations and the matrix-digital mechanism of process of creation of an object-relational model of DBMS for synthesis of data in programs of the life cycles of products.

List of designations of operations of the fourth step of the second stage [Fig.2]:
2.1.4 - users enter operating process of the server «MySQL», carry out import of arrived «csv» file of a database for planning the life cycles of products into the installed program of «MySQL Workbench» by means of using the tools of the program, and in the section «Physical Schemas» they form a list of tables, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of a database for planning the life cycles of products;
2.2.4 - users install owing to use of such tools of the program «MySQL Workbench», as «Models», «+Add Diagram», «Column», «Referenced Column», parental and affiliated tables in database for planning the life cycles of products; users, using the digital codes of data that are defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of various hierarchy and of level of detailing information about life cycles of various products, services, resources, which are a part of the database for planning of life cycles of products, and on the other hand, horizontally between data of tables of this database and data of the tables, which are a part of other databases of the block of the first stage, in order that to establish influence on temporal parameters of various factors and for formation of the corresponding DBMS; users send a task for generating the barcodes over communication channels to server of the application over digital transformation of data and come out of operating process of the server «MySQL»;
2.3.4 - users enter operating process of the application server of digital transformation of data and according the specified parameters by means of use of the program of type «ActiveBarcode» generate the barcodes of type «QR» or «Data Matrix» for designation of a database for planning the life cycles of products and objects entering database, respectively of the tables, EER charts, object-relational model and of the System of management by a database for planning the life cycles of products; users transfer digital data to the server «MySQL» over communication channels by means of OLE DB technology, implementing the mechanism of interprocessor interaction based on COM, and come out of operating process of the application server of digital transformation of data;
2.4.4 - users enter operating process of the server «MySQL», create in a digital format an object-relational model of the System of management by a database for planning the life cycles of products by means of use of tools of the program of type «MySQL Workbench», as well as on the basis of the connected digital codes of data and the constructed EER charts, which allow to establish the essential connection of the indicators of life cycles of demand and the offer of products with each other and with data of other databases from a block of the first stage; users export by means of use of tools of the program of «MySQL Workbench» the created file of object-relational model, which is intended for synthesis of data in programs of the life cycles of products, into the «*ρdf*» format; users carry out direct transfer of the created file to the file server owing to using by servers of the installed program «FTP Rush» by means of «FXP» session under «FTP» protocol and come out of operating process of the server «My SQL»;
2.5.4 - users enter operating process of the file server, register the received file of an object-relational model for synthesis of data in programs of the life cycles of products for storage and file operations, direct a file, created at the fourth step of the second stage of the Way, into storage of the file server and place under its barcode in the formed digital block, which unites files of the object-relational models of DBMS of all steps of the second stage of the Way; users carry out direct transfer of a database file for planning of the life cycles of products from a digital block of databases of the first stage, a file of an object-relational model for management by data of the life cycles of products from a digital block of DBMS of the second stage, namely from blocks of storage of the file server to the computing server owing to using by servers of installed program «FTP Rush» by means of «FXP» session under «FTP» protocol and come out of operating process of the file server.

The 5th step - users create the digital sequence of operations and the matrix-digital mechanism of process of creation of an object-relational model of DBMS for synthesis of data in programs over the target function, quality of products.

List of designations of operations of the fifth step of the second stage [Fig.2]:
2.1.5 - users enter operating process of the server «MySQL», carry out import of arrived «csv» file of a database for planning the target function and quality of products into the installed program of «MySQL Workbench» by means of using the tools of the program, and in the section «Physical Schemas» they form a list of tables, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of a database for planning the target function, quality of products;
2.2.5 - users install owing to use of such tools of the program «MySQL Workbench», as «Models», «+Add Diagram», «Column», «Referenced Column», parental and affiliated tables in database for planning the target function and quality of products; users, using the digital codes of data that are defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of various hierarchy and of level of detailing information about quality indicators, parameters of target function of the products, which are a part of the database for planning of target function, quality of products, and on the other hand, horizontally between data of tables of this database and data of the tables, which are a part of other databases of the block of the first stage, in order that to establish influence on quality and target function of products of various factors and for formation of the corresponding DBMS; users send a task for generating the barcodes over communication channels to server of the application over digital transformation of data and come out of operating process of the server «MySQL»;
2.3.5 - users enter operating process of the application server of digital transformation of data and according the specified parameters by means of use of the program of type «ActiveBarcode» generate the barcodes of type «QR» or «Data Matrix» for designation of a database for planning the target function, quality of products and objects entering database, respectively of the tables, EER charts, object-relational model and of the System of management by a database for planning the target function and quality of products; users transfer digital data to the server «MySQL» over communication channels by means of OLE DB technology, implementing the mechanism of interprocessor interaction based on COM, and come out of operating process of the application server of digital transformation of data;
2.4.5 - users enter operating process of the server «MySQL», create in a digital format an object-relational model of the System of management by a database for planning the target function, quality of products by means of use of tools of the program of type «MySQL Workbench», as well as on the basis of the connected digital codes of data and the constructed EER charts, which allow to establish the essential connection of the indicators of target function, quality of products with each other and with data of other databases from a block of the first stage; users export by means of use of tools of the program of «MySQL Workbench» the created file of object-relational model, which is intended for synthesis of data in programs of the target function, quality of products, into the «*pdf*» format; users carry out direct transfer of the created file to the file server owing to using by servers of the installed program «FTP Rush» by means of «FXP» session under «FTP» protocol and come out of operating process of the server «MySQL Server»;
2.5.5 - users enter operating process of the file server, register the received file of object-relational model for synthesis of data in programs of the target function, quality of products for storage and file operations, direct a file, created at the fifth step of the second stage of the Way, into storage of the file server and place under its barcode in the formed digital block, which unites files of the object-relational models of DBMS of all steps of the second stage of the Way; users carry out direct transfer of a database file for planning of the target function and quality of products from a digital block of databases of the first stage, a file of an object-relational model for management by data of the target function, quality of products from a digital block of DBMS of the second stage, namely from blocks of storage of the file server to the computing server owing to using by servers of installed program «FTP Rush» by means of «FXP» session under «FTP» protocol and come out of operating process of the file server.

The 6th step - users create the digital sequence of operations and the matrix-digital mechanism of process of creation of an object-relational model of DBMS for synthesis of data in programs of the offer of products in interrelation with temporary and spatial parameters.

List of designations of operations of the sixth step of the second stage [Fig.2]:
2.1.6 - users enter operating process of the server «MySQL», carry out import of arrived «csv» file of a database for planning the indicators of the offer of products into the installed program of «MySQL Workbench» by means of using the tools of the program, and in the section «Physical Schemas» they form a list of tables, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of a database for planning the data of the offer of products;
2.2.6 - users install owing to use of such tools of the program «MySQL Workbench», as «Models», «+Add Diagram», «Column», «Referenced Column», parental and affiliated tables in database for planning the indicators of the offer of products; users, using the digital codes of data that are defined on the first stage of the Way, edit external digital keys in column «Foreign Keys» according to their multipurpose appointment, build EER chart - «essence - relation» for establishment of matrix interrelations and the connected digital codes of data, on the one hand, vertically between data of tables of various hierarchy and of level of detailing information about indicators of effectiveness of products, about stages, the mechanism and indicators of production and the offer of products in the markets, which are a part of the database for planning the indicators of the offer of products, and on the other hand, horizontally between data of tables of this database and data of the tables, which are a part of other databases of the block of the first stage, in order that to establish influence on indicators of the offer of products of various factors and for formation of the corresponding DBMS; users send a task for generating the barcodes over communication channels to server of the application over digital transformation of data and come out of operating process of the server «MySQL»;
2.3.6 - users enter operating process of the application server of digital transformation of data and according the specified parameters by means of use of the program of type «ActiveBarcode» generate the barcodes of type «QR» or «Data Matrix» for designation of a database for planning the indicators of the offer of products and objects entering database, respectively of the tables, EER charts, object-relational model and of the System of management by a database for planning the indicators of the offer of products; users transfer digital data to the server «MySQL» over communication channels by means of OLE DB technology, implementing the mechanism of interprocessor interaction based on COM, and come out of operating process of the application server of digital transformation of data;
2.4.6 - users enter operating process of the server «MySQL», create in a digital format an object-relational model of the System of management by a database for planning the indicators of the offer of products by means of use of tools of the program of type «MySQL Workbench», as well as on the basis of the connected digital codes of data and the constructed EER charts, which allow to establish the essential connection of the indicators of the offer of products with each other and with data of other databases from a block of the first stage; users export by means of use of tools of the program of «MySQL Workbench» the created file of object-relational model, which is intended for synthesis of data in programs of the offer of products, into the «*pdf*» format; users carry out direct transfer of the created files to the file server owing to using by servers of the installed program «FTP Rush» by means of «FXP» session under «FTP» protocol and come out of operating process of the server «MySQL»;
2.5.6 - users enter operating process of the file server, register the received file of object-relational model for synthesis of data of programs of the offer of products for storage and file operations, direct these files into storage of the file server and place under them barcodes in the formed digital block, which unites files of the object-relational models of DBMS of all steps of the second stage of the Way; users carry out direct transfer of a database file for planning of indicators of the offer of products from a digital block of databases of the first stage, a file of an object-relational model for management by data of the offer of products from a digital block of DBMS of the second stage, namely from blocks of storage of the file server to the computing server owing to using by servers of installed program «FTP Rush» by means of «FXP» session under «FTP» protocol and come out of operating process of the file server.

Upon termination of the fifth operation at all levels of the Second subsystem and finishing of all steps of the second stage of the Way, users come out of network of the Second subsystem.

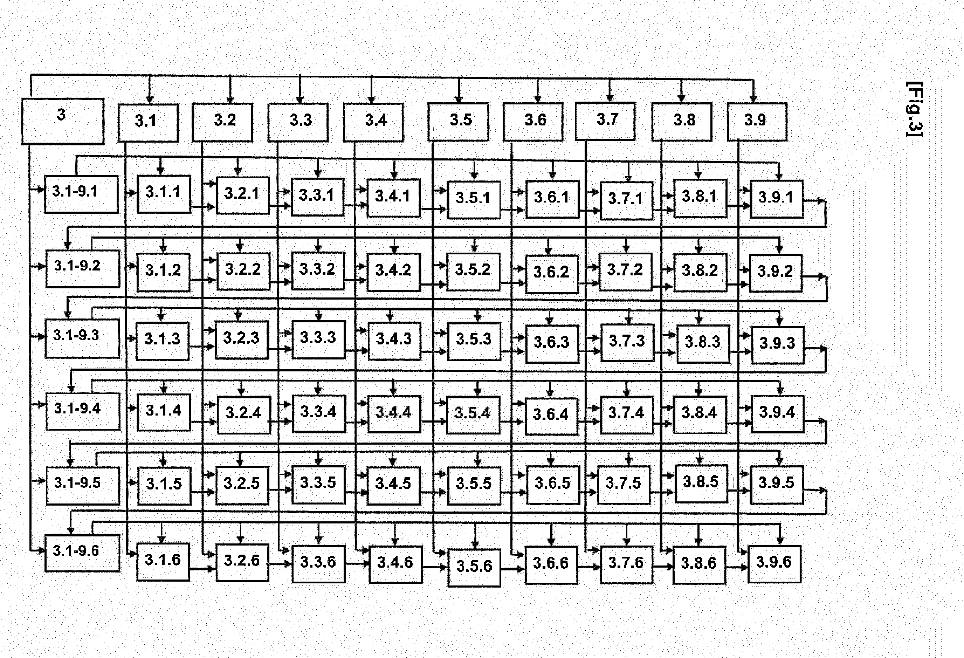

The system includes network of the Third interactive subsystem [Fig.8], into which users make entry for performance of the third stage of the Way [Fig.3]. The network of the Third subsystem unites the following interacting elements of the System: the computing server with the software of type «NoSQL», as well as of type «IBM SPSS Statistics Standard» and «SAS^{∗} Visual Forecasting»; the application server of digital transformation of data with the software of type «Serial Key Generator» and of type «ActiveBarcode»; the file server with the software of type «Windows Server 2012 R2 NTFS», these servers are connected with each other by communication channels. The computing server receives over neural communication channels through proxy-server the variable data of analytical character and receives files from block of databases and from block of the object-relational models of DBMS of the file server, using the program of direct file transfer «FTP Rush» by means of «FXP» session under «FTP» protocol. The computing server is equipped by interactive displays of type «SMART Board», of the series 7000 Pro, which work on basis of software «SMART Meeting Pro» and «SMART ink», and interacts with other servers of the Third subsystem that has six levels connected over communication channels by the general installation, the general process of performance of six steps of the third stage of the Way.

Action of servers of the Third subsystem is intended for generating the temporal rows of forecasted data of demand and formation of a digital analytical block and consists in work of servers of this subsystem over performance of the operating processes consisting in consecutive performance of operations of each step of the third stage of the Way, and the communication processes consisting in procedures of an entrance and exit from operating process on each of servers and in their interaction with each other by means of communication channels for transfer of a stream of data received owing to operating process at implementing the following steps of the third stage of the Way: 3.1-9.1; 3.1-9.2; 3.1-9.3; 3.1-9.4; 3.1-9.5; 3.1-9.6, respectively at the 1st, 2nd, 3rd, 4th, 5th, 6th level of the Third subsystem.

The list of designations of structural elements of the third subsystem - the 3rd fragment of the System [Fig. 8]:
8.0 - System;
8.001 - web-server of the System;
8.002 - proxy-server of the System;
8.3 - computing server of the System;
8.5 - server of the application of the System over digital transformation of data;
8.7 - file server of the System;
8.033 - interactive panels «SMART» of the computing server;
8.8 - controllers of the System.

At all levels of the Third subsystem the following operations are carried out:
3.1 -3.9 - the operations of the third stage of the Way, which are carried out on different servers in operating network of the Third subsystem.

### List of designations of the 3rd stage of the Way [Fig. 3].

The 3rd stage - the Way of generating of the temporal rows of forecasted data and of formation of the digital analytical block for creation of the programs of the offer of products».

[Fig.3] - «The matrix-digital model of process of generating the temporal rows of forecasted data and formation of the digital analytical block » is the third the main model of the Way, which characterizes in a digital form the sequence of steps of the third stage and operations of each step, also matrix interrelations between steps and operations of the third stage.

List of designations of steps of the third stage [Fig.3]:
3.1-9.1 - users create the digital sequence of operations and the matrix-digital mechanism of process of generating the temporal rows of forecasted data of markets and a business environment of the company;
3.1-9.2 - users create the digital sequence of operations and the matrix-digital mechanism of process of generating the temporal rows of forecasted data of demand in consumer effectiveness of products of the company;
3.1-9.3 - users create the digital sequence of operations and the matrix-digital mechanism of process of generating the temporal rows of forecasted data of life cycles of demand in commodity assortments;
3.1-9.4 - users create the digital sequence of operations and the matrix-digital mechanism of process of generating the temporal rows of forecasted data of life cycles of demand in products;
3.1-9.5 - users create the digital sequence of operations and the matrix-digital mechanism of process of generating the temporal rows of forecasted data of demand in the target function and quality of products;
3.1-9.6 - users create the digital sequence of operations and the matrix-digital mechanism of process of generating the temporal rows of forecasted data of demand in effectiveness of target function, in volume, price of products.

List of designations of operations of the third stage [Fig.3]:
3.1 - users enter operating process of the computing server and collect the analytical variable data arriving over communication channels from the proxy-server to the computing server, carry out their selection, analyze the obtained basic data of the markets, demand, consider the data structure, which is defined in relational databases of the first stage, and interrelations between data, which are defined by object-relational models of the second stage; users investigate trends in change of the markets, demand in various types of products on the basis of the multifactorial analysis of influence of the various factors (of the scientific and technical, economic, social, political, demographic, geographical, ethnic factors) on dynamics of change of the markets, demand in different types of products by means of use of the program of type «IBM SPSS Statistics»; users systematize analytical data over clusters, on the basis of which create and preserve microservices into files, each of which has an identification key and is a component of the not relational database of type «NoSQL» with the corresponding software «NoSQL» for control and storage of unstructured data, including commercial, analytical data and for formation of a control system of them on the basis of the flexible model of data supporting the microservices created for the different groups of data at each step of the third stage of the Way;
3.2 - users carry out the multidimensional forecast of trends of change of demand, taking into account weak signals, and carry out the singular spectral analysis (SSA), which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of various data of demand in products in the form of a matrix with the subsequent application to a temporal row of a method of the main components and determine amplitude of each temporal row, i.e. a deviation of its maximum and minimum values from average values; taking into account these amplitudes, users generate all possible options of change of the markets and demand during the predicted long-term period; users preserve versions of the forecast into files at performance of each step of the third stage of the Way;
3.3 - users estimate space of conditions of the dynamic variables influencing demand by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; the level of inflation and solvency of buyers; growth rates of the prices, tariffs; rates of updating of technologies and a product range; the level of intensity of the competition; users determine by method of the main components those factors of influence on consumer demand, which are insignificant, and they can be neglected; as a result, users establish the direction for adjustment of the forecasted range of data owing to suppression of high-frequency or low-frequency components of multidimensional temporal rows of forecasted data of the markets and demand in products for the long-term period, define probability degree of each version of the forecast of a plurality of data; users send tasks for generating the digital codes over communication channels to the application server of digital transformation of data and come out of operating process of the computing server;
3.4 - users enter operating process of the application server of digital transformation of data, set digital designations for each market, a temporal phase of demand, a product, for each factor that influences demand, for each indicator of consumer demand, and owing to use of the program of type of «Serial Key Generator» generate digital codes for each group of conditions and each variant of possible dynamics of demand, also define a digital key for each microservice of the database «NoSQL» at each step of the third stage of the Way;
3.5 - users generate the integrated digital codes for the temporal rows of data according the specified parameters and by means of use of the program of type «Serial Key Generator», namely, the integrated digital codes contain the references to both identifier of each indicator and identifiers of group of conditions and factors, which have the greatest impact on dynamics of this indicator, its fluctuation over different types of products and the markets during the forecasted long-term period; users transfer digital codes for forecasting the temporal rows at each step of the third stage of the Way to the computing server over communication channels by means of the OLE technology, implementing the mechanism of interprocessor interaction based on COM, and come out of operating process of the application server of digital transformation of data;
3.6 -users enter operating process of the computing server and carry out with use of the created digital codes the space-time forecast of dynamics of various indicators of the markets and demand in each product by means of use of the software of type «SAS Visual Forecasting», use graphic tools of the program and visual display units, of type of interactive panels «SMART Board, cep 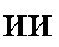 7000Pro», with the software of type «SMART Meeting Pro» and «SMART ink», for collaboration of a group of developers of the project for finishing of the forecast on the basis of the spectral analysis and modeling of multidimensional temporal rows of data of demand in products in the graphic system of coordinates of time and space in 3D format on the basis of the directions of smoothing of amplitudes of forecasted temporal rows of data, defined at the third operation; as a result, users generate in a digital format multidimensional temporal rows of data of demand in products during the forecasted long-term period and create their files at each step of the third stage of the Way; users form the structure of a digital analytical block consisting of three sections, everyone of sections include six compartments forming on each of steps of the third stage of the Way; users send tasks for generating the barcodes over communication channels to the application server of digital transformation of data and come out of operating process of the computing server;
3.7 - users enter operating process of the application server of digital transformation of data, according the specified parameters and by means of use of the program of type «ActiveBarcode» generate the barcodes of type «QR» or «Data Matrix» for designation of multidimensional temporal rows of data of demand in each product during the forecasted long-term period, as well as for the designation of each section and each compartment, which are formed at a certain step of the third stage of the Way; as a result, they form an integrated barcode for designation of an analytical block of the third stage of the Way; users transfer barcodes to the computing server over communication channels by means of the OLE technology, implementing the mechanism of interprocessor interaction based on COM, and come out of operating process of the application server of digital transformation of data;
3.8 - users enter operating process of the computing server; using results of the previous operations, also the generated barcodes, they form the corresponding compartment of a digital analytical block at each step of the third stage of the Way, create three sections in each compartment of an analytical block and include in them the files that are created in process of each step of the third stage of the Way on the computing server, namely: the files of microservices of the database of type «NoSQL», about actual data of demand indicators, about the factors influencing them are included in the first section; the files of all possible options of dynamics of various indicators of demand in products are included in the second section; the files of the forecasted multidimensional temporal rows of data of demand in products are included in third section; users carry out direct transfer of the created files to the file server owing to using by servers of the installed program «FTP Rush» by means of «FXP» session under «FTP» protocol and come out of operating process of the computing server;
3.9 - users enter operating process of the file server, register the received files for storage and file operations, send files of three sections of each compartment created at each step of the third stage of the Way into storage of the file server and place under their barcodes in structure of the formed digital analytical block, which is denoted by an integrated barcode and is created over the matrix principle from six vertical compartments and three horizontal sections of each compartment; this block is a result of operating process of performance of all steps of the third stage of the Way at all levels of the Third of subsystems; users carry out direct transfer of files of databases from a digital block of databases of the first stage, the files of the object-relational models from a digital block of the DBMS of the second stage, as well as the files of forecasted multidimensional temporal rows of data from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

The 1st step - users create the digital sequence of operations and the matrix-digital mechanism of process of generating the temporal rows of forecasted data of markets and a business environment of the company.

List of designations of operations of the first step of the third stage [Fig. 3]:
3.1.1 - users enter operating process of the computing server and collect the analytical variable data arriving over communication channels from the proxy-server to the computing server, carry out their selection, analyze the obtained basic data about the markets, demand, competition, suppliers, also about the resellers, financial intermediaries and consumer environment, consider the data structure, which is defined in relational databases of the first stage for planning of a business environment of the company, also interrelations between data, which are defined by object-relational model of the second stage for data management of a business environment of the company; users investigate trends in change of the markets and a business environment on the basis of the multifactorial analysis of influence of the various factors (of the scientific and technical, economic, social, political, demographic, geographical, ethnic factors) on dynamics of change of the markets and a business environment of the company by means of use of the program of type «IBM SPSS Statistics»; users systematize analytical data, unite them into a cluster of a business environment, on the basis of which create a microservice, which has an identification key and is a component of the not relational database of type «NoSQL» with the corresponding software «NoSQL», as well as it is preserved into a file for control and storage of unstructured data, including commercial, analytical data about segments of the markets, about conditions, factors of influence and indicators of development of a business environment of the company;
3.2.1 - users carry out the multidimensional forecast of trends of change of indicators of the markets and a business environment of the company (of the number of suppliers, buyers, resellers and financial intermediaries, competitors), taking into account weak signals, and carry out the singular spectral analysis (SSA), which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of the number of the markets, competitors, buyers, sellers, suppliers, resellers, financial intermediaries in the form of a matrix with the subsequent application to a temporal row of a method of the main components and determine amplitude of each temporal row, i.e. a deviation of its maximum and minimum values from average values; taking into account these amplitudes, users generate all possible options of change of indicators of a business environment for the forecasted long-term period, preserve a file of versions of the forecast of a business environment of the company;
3.3.1 - users estimate space of conditions of the dynamic variables influencing indicators of a business environment (of number of buyers, competitors, intermediaries, suppliers) by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; level of intensity of the competition, inflation and solvency of buyers; rates of expansion of the markets, emergence of new segments of the markets, change of capacity of the markets; users determine by method of the main components those factors of influence on a business environment, which are insignificant, and they can be neglected; as a result, users establish the direction for adjustment of the forecasted range of data owing to suppression of high-frequency or low-frequency components of multidimensional temporal rows of forecasted data of a business environment for the long-term period, define probability degree of each version of the forecast of a plurality of data of a business environment; users send a task for generating the digital codes over communication channels to the application server of digital transformation of data and come out of operating process of the computing server;
3.4.1 - users enter operating process of the application server of digital transformation of data, set digital designations for each market, a temporal phase, indicator of a business environment and factor influencing a business environment, generate digital codes for each group of conditions and each variant of possible dynamics of a business environment owing to use of the program of type of «Serial Key Generator» and according the specified parameters, also define a digital key for a microservice of a business environment of the database «NoSQL»;
3.5.1 - users generate the integrated digital codes for the temporal rows of data of a business environment according the specified parameters and by means of use of the program of type «Serial Key Generator», namely, the integrated digital codes contain the references to both identifiers of forecasted indicators and identifiers of group of conditions and factors, which have the greatest impact on dynamics of the indicators of a business environment during the forecasted long-term period; users transfer digital codes for forecasting of temporal rows of data of a business environment to the computing server over communication channels by means of the OLE technology, implementing the mechanism of interprocessor interaction based on COM, and come out of operating process of the application server of digital transformation of data;
3.6.1 - users enter operating process of the computing server and carry out with use of the created digital codes the space-time forecast of dynamics of data of a business environment by means of use of the software of type «SAS Visual Forecasting», use graphic tools of the program and visual display units, of type of interactive panels «SMART Board, cep 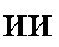 7000Pro», with the software of type «SMART Meeting Pro» and «SMART ink», for collaboration of a group of developers of the project for finishing of the forecast on the basis of the spectral analysis and modeling of multidimensional temporal rows of data of a business environment in the graphic system of coordinates of time and space in 3D format on the basis of the directions of smoothing of amplitudes of forecasted temporal rows; as a result, users generate in a digital format multidimensional temporal rows of data of a business environment of the company in the markets during the forecasted long-term period and create the corresponding file, also form the first compartment of a digital analytical block consisting of three sections; users send a task for generating the barcodes over communication channels to the application server of digital transformation of data and come out of operating process of the computing server;
3.7.1 - users enter operating process of the application server of digital transformation of data, according the specified parameters and by means of use of the program of type «ActiveBarcode» generate the barcodes of type «QR» or «Data Matrix» for designation of each multidimensional temporal row of data of a business environment into different phases of the forecasted long-term period, as well as for the designation of the first compartment and each section of this compartment of an analytical block; users transfer barcodes to the computing server over communication channels by means of the OLE technology, implementing the mechanism of interprocessor interaction based on COM, and come out of operating process of the application server of digital transformation of data;
3.8.1 - users enter operating process of the computing server; using results of the previous operations, also the generated barcodes, they form the first compartment of an analytical block, which contains analytical data about dynamics of a business environment, also users create three sections of the first compartment of a block and include in them the files that are created on the computing server, respectively a file of database microservice of type «NoSQL», which contains the basic data about a business environment, about factors influencing dynamics of the markets and a business environment; a file about all possible options of dynamics of data of a business environment (about numbers of competitors, buyers, suppliers, intermediaries); a file of the forecasted multidimensional temporal rows of data of a business environment; users carry out direct transfer of the created files of the first compartment to the file server owing to using by servers of the installed program «FTP Rush» by means of «FXP» session under «FTP» protocol and come out of operating process of the computing server;
3.9.1 - users enter operating process of the file server, register the received files of three sections of the first compartment for storage and file operations, send them into storage of the file server and place under their barcodes in structure of the formed digital analytical block, which is created over the matrix principle from six vertical compartment and three horizontal sections of each compartment; users carry out direct transfer of a file of a database for planning a business environment from a digital block of databases of the first stage, a file of an object-relational model for data management of a business environment of the company from a digital block of DBMS of the second stage, a file of temporal rows of data of an business environment from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

The 2nd step - users create the digital sequence of operations and the matrix-digital mechanism of process of generating the temporal rows of forecasted data of demand in consumer effectiveness of products of the company.

List of designations of operations of the second step of the third stage [Fig. 3]:
3.1.2 - users enter operating process of the computing server and collect the analytical variable data arriving over communication channels from the proxy-server to the computing server, carry out their selection, analyze the obtained basic data about indicators of intensity of the competition in certain types of products, about the level of saturation of demand in various products, consider the data structure of consumer inquiries, which is defined in relational databases of the first stage for planning the development strategies of the company, also interrelations between data of demand development, which are defined by object-relational model of the second stage for synthesis of strategies; users investigate trends in diversification and differentiation of inquiries of consumers in various markets on the basis of the multifactorial analysis of influence of the various factors (of the scientific and technical, economic, social, political, demographic, geographical, ethnic factors) on dynamics of differentiation and diversification of inquiries of consumers by means of use of the program of type «IBM SPSS Statistics»; users systematize analytical data, unite them into a cluster of consumer inquiries, on the basis of which create a microservice, which has an identification key and is a component of the not relational database of type «NoSQL» with the corresponding software «NoSQL», as well as it is preserved into a file for control and storage of unstructured data, including commercial, analytical data about conditions, factors of influence and indicators of differentiation and diversification of inquiries of consumers;
3.2.2 - users carry out the multidimensional forecast of trends of change of demand in the effectiveness of products for consumers, taking into account weak signals, and carry out the singular spectral analysis (SSA), which combines elements of the classical spectral analysis of the temporal rows, defined by Fourier method, multidimensional statistics, multidimensional geometry of processing of signals and dynamic systems by use of the program of type «SAS Visual Forecasting»; users begin the forecast of multidimensional temporal rows of data of demand in the consumer useful effect of different products in the form of a matrix with the subsequent application to a temporal row of a method of the main components and determine amplitude of each temporal row, i.e. a deviation of its maximum and minimum values from average values; taking into account these amplitudes, users generate all possible options of change of demand in data of the consumer useful effect of products for the forecasted long-term period, preserve a file of versions of the forecast of demand in useful effect of products for consumers;
3.3.2 - users estimate space of conditions of the dynamic variables influencing indicators of demand in the effectiveness of products by means of use of tools of the software of type «SAS Visual Forecasting», with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; level of intensity of the competition, inflation and solvency of buyers; growth rates of the prices, tariffs; rates of updating of technologies and a product range; also users determine by method of the main components those factors of influence on consumer inquiries in efficiency of products, which are insignificant, and they can be neglected; as a result, users establish the direction for adjustment of the forecasted range of data owing to suppression of high-frequency or low-frequency components of multidimensional temporal rows of forecasted data of demand in the consumer useful effect of products for the long-term period, define probability degree of each version of the forecast of data of demand in consumer effectiveness of products; users send a task for generating the digital codes over communication channels to the application server of digital transformation of data and come out of operating process of the computing server;
3.4.2 - users enter operating process of the application server of digital transformation of data, set digital designations for each market, a temporal phase of demand, product type, indicator of demand in the effectiveness of a product and factor influencing the demand, generate digital codes for each group of conditions and each version of possible dynamics of demand in the effectiveness of products owing to use of the program of type of «Serial Key Generator» and according the specified parameters, also define a digital key for a microservice of consumer inquiries of the database «NoSQL»;
3.5.2 - users generate the integrated digital codes for the temporal rows of data of demand in effectiveness of products according the specified parameters and by means of use of the program of type «Serial Key Generator», namely, the integrated digital codes contain the references to both identifier of forecasted indicator of effectiveness of a product and identifiers of group of conditions and factors, which have the greatest impact on dynamics of this indicator, its fluctuation over different types of products and the markets during the forecasted long-term period; users transfer digital codes for forecasting of temporal rows of demand in effectiveness of products to the computing server over communication channels by means of the OLE technology, implementing the mechanism of interprocessor interaction based on COM, and come out of operating process of the application server of digital transformation of data;
3.6.2 - users enter operating process of the computing server and carry out with use of the created digital codes the space-time forecast of dynamics of data of demand in the consumer useful effect of each product by means of use of the software of type «SAS Visual Forecasting», use graphic tools of the program and visual display units, of type of interactive panels «SMART Board, cep 7000Pro», with the software of type «SMART Meeting Pro» and «SMART ink», for collaboration of a group of developers of the project for finishing of the forecast on the basis of the spectral analysis and modeling of multidimensional temporal rows of data of demand in the effectiveness of products for consumers in the graphic system of coordinates of time and space in 3D format on the basis of the directions of smoothing of amplitudes of forecasted temporal rows; as a result, users generate in a digital format multidimensional temporal rows of data of demand in consumer useful effect of products during the forecasted long-term period and create the corresponding file, also form the second compartment of a digital analytical block consisting of three sections; users send a task for generating the barcodes over communication channels to the application server of digital transformation of data and come out of operating process of the computing server;
3.7.2 - users enter operating process of the application server of digital transformation of data, according the specified parameters and by means of use of the program of type «ActiveBarcode» generate the barcodes of type «QR» or «Data Matrix» for designation of each multidimensional temporal row of data of demand in the consumer useful effect of each product into different phases of the forecasted long-term period, as well as for the designation of the second compartment and each section of this compartment of an analytical block; users transfer barcodes to the computing server over communication channels by means of the OLE technology, implementing the mechanism of interprocessor interaction based on COM, and come out of operating process of the application server of digital transformation of data;
3.8.2 - users enter operating process of the computing server; using results of the previous operations, also the generated barcodes, they form the second compartment of an analytical block, which contains analytical data about dynamics of demand in the consumer effectiveness of products, also users create three sections of the second compartment of a block and include in them the files that are created on the computing server, respectively a file of database microservice of type «NoSQL», which contains the basic data about demand in the consumer effectiveness of products, about factors influencing dynamics of this indicator of demand; a file about all possible options of dynamics of data of demand in indicators of the consumer efficiency of products; a file of the forecasted multidimensional temporal rows of data of demand in the consumer useful effect of products; users carry out direct transfer of the created files of the second compartment to the file server owing to using by servers of the installed program «FTP Rush» by means of «FXP» session under «FTP» protocol and come out of operating process of the computing server;
3.9.2 - users enter operating process of the file server, register the received files of three sections of the second compartment for storage and file operations, send them into storage of the file server and place under their barcodes in structure of the formed digital analytical block, which is created over the matrix principle from six vertical compartment and three horizontal sections of each compartment; users carry out direct transfer of a file of a database for planning the development strategies of the company from a digital block of databases of the first stage, a file of an object-relational model for synthesis of strategies from a digital block of DBMS of the second stage, a file of temporal rows of data of demand in the consumer effectiveness of products from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

The 3rd step - users create the digital sequence of operations and the matrix-digital mechanism of process of generating the temporal rows of forecasted data of demand in commodity assortments.

List of designations of operations of the third step of the third stage [Fig.3]:
3.1.3 - users enter operating process of the computing server and collect the analytical variable data arriving over communication channels from the proxy-server to the computing server, carry out their selection, analyze the obtained basic data about consumer demand of various markets in commodity assortments, consider the structure of the commodity nomenclature and assortments, which is defined in relational databases of the first stage for planning the corresponding assortments data, also interrelations between data, which are defined by object-relational model of the second stage for data management of the commodity nomenclature and assortments; users investigate trends in change of demand in width of commodity nomenclature, in width and depth of the commodity assortments on the basis of the multifactorial analysis of influence of the various factors (of the scientific and technical, economic, social, political, demographic, geographical, ethnic factors) on dynamics of change of demand in the width of the commodity nomenclature and the width, depth of the commodity assortments by means of use of the program of type «IBM SPSS Statistics»; users systematize analytical data, unite them into a cluster of demand in assortments, on the basis of which create a microservice, which has an identification key and is a component of the not relational database of type «NoSQL» with the corresponding software «NoSQL», as well as it is preserved into a file for control and storage of unstructured data, including commercial, analytical data about conditions, factors of influence and indicators of demand in commodity nomenclature and assortments;
3.2.3 - users carry out the multidimensional forecast of trends of change of demand in the width of the commodity nomenclature and the width, depth of the commodity assortments, taking into account weak signals, and carry out the singular spectral analysis (SSA), which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of data of demand in the width of the commodity nomenclature and the width, depth of the commodity assortments in the form of a matrix with the subsequent application to a temporal row of a method of the main components and determine amplitude of each temporal row, i.e. a deviation of its maximum and minimum values from average values; taking into account these amplitudes, users generate all possible options of change of demand in indicators of the commodity nomenclature and assortments for the forecasted long-term period, preserve a file of versions of the forecast of demand in indicators of the commodity nomenclature and assortments;
3.3.3 - users estimate space of conditions of the dynamic variables influencing demand in indicators of the commodity assortments by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; level of intensity of the competition, inflation and solvency of buyers; rates of expansion of the markets, emergence of new segments of the markets; growth rates of the prices in resources; rates of updating of a product range, users determine by method of the main components those factors of influence on demand in assortments, which are insignificant, and they can be neglected; as a result, users establish the direction for adjustment of the forecasted range of data owing to suppression of high-frequency or low-frequency components of multidimensional temporal rows of forecasted data of demand in the width of the commodity nomenclature and the width, depth of the commodity assortments for the long-term period, define probability degree of each version of the forecast of a plurality of data of demand in the commodity nomenclature and assortments; users send a task for generating the digital codes over communication channels to the application server of digital transformation of data and come out of operating process of the computing server;
3.4.3 - users enter operating process of the application server of digital transformation of data, set digital designations for each market, a temporal phase of demand, assortment, indicator of consumer demand in assortment and factor influencing the demand, generate digital codes for each group of conditions and each version of possible dynamics of demand in assortments owing to use of the program of type of «Serial Key Generator» and according the specified parameters, also define a digital key for a microservice of demand in assortments of the database «NoSQL»;
3.5.3 - users generate the integrated digital codes for the temporal rows of data of demand in the width of the commodity nomenclature and in the width, depth of the commodity assortments according the specified parameters and by means of use of the program of type «Serial Key Generator», namely, the integrated digital codes contain the references to both identifiers of forecasted indicators of demand in assortments and identifiers of group of conditions and factors, which have the greatest impact on dynamics of these indicators in different markets during the forecasted long-term period; users transfer digital codes for forecasting of temporal rows of data of demand in each assortment to the computing server over communication channels by means of the OLE technology, implementing the mechanism of interprocessor interaction based on COM, and come out of operating process of the application server of digital transformation of data;
3.6.3 - users enter operating process of the computing server and carry out with use of the created digital codes the space-time forecast of dynamics of data of demand in indicators of the commodity nomenclature and assortments by means of use of the software of type «SAS Visual Forecasting», use graphic tools of the program and visual display units, of type of interactive panels «SMART Board, cep 7000Pro», with the software of type «SMART Meeting Pro» and «SMART ink», for collaboration of a group of developers of the project for finishing of the forecast on the basis of the spectral analysis and modeling of multidimensional temporal rows of data of demand in the width of the commodity nomenclature and the width, depth of the commodity assortments in the graphic system of coordinates of time and space in 3D format on the basis of the directions of smoothing of amplitudes of forecasted temporal rows; as a result, users generate in a digital format multidimensional temporal rows of data of demand in indicators of the commodity nomenclature and assortments during the forecasted long-term period and create the corresponding file, also form the third compartment of a digital analytical block consisting of three sections; users send a task for generating the barcodes over communication channels to the application server of digital transformation of data and come out of operating process of the computing server;
3.7.3 - users enter operating process of the application server of digital transformation of data, according the specified parameters and by means of use of the program of type «ActiveBarcode» generate the barcodes of type «QR» or «Data Matrix» for designation of each multidimensional temporal row of data of demand in indicators of the commodity nomenclature and each assortment into different phases of the forecasted long-term period, as well as for the designation of the third compartment and each section of this compartment of an analytical block; users transfer barcodes to the computing server over communication channels by means of the OLE technology, implementing the mechanism of interprocessor interaction based on COM, and come out of operating process of the application server of digital transformation of data;
3.8.3 - users enter operating process of the computing server; using results of the previous operations, also the generated barcodes, they form the third compartment of an analytical block, which contains analytical data about dynamics of demand in indicators of the commodity nomenclature and assortments, also users create three sections of the third compartment of a block and include in them the files that are created on the computing server, respectively a file of database microservice of type «NoSQL», which contains the basic data about demand in indicators of the commodity nomenclature and assortments, about factors influencing dynamics of these indicators of demand in assortments; a file about all possible options of dynamics of demand in indicators of the commodity nomenclature and assortments; a file of the forecasted multidimensional temporal rows of data of demand in the width of the commodity nomenclature and the width, depth of the commodity assortments; users carry out direct transfer of the created files of the third compartment to the file server owing to using by servers of the installed program «FTP Rush» by means of «FXP» session under «FTP» protocol and come out of operating process of the computing server;
3.9.3 - users enter operating process of the file server, register the received files of three sections of the third compartment for storage and file operations, send them into storage of the file server and place under their barcodes in structure of the formed digital analytical block, which is created over the matrix principle from six vertical compartment and three horizontal sections of each compartment; users carry out direct transfer of a file of a database for planning the commodity nomenclature and assortments from a digital block of databases of the first stage, a file of an object-relational model for synthesis of data of commodity nomenclature and assortments from a digital block of DBMS of the second stage, a file of temporal rows of data of demand in indicators of commodity nomenclature and assortments from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

The 4th step - users create the digital sequence of operations and the matrix-digital mechanism of process of generating the temporal rows of forecasted data of life cycles of demand in products.

List of designations of operations of the fourth step of the third stage [Fig.3]:
3.1.4 - users enter operating process of the computing server and collect the analytical variable data arriving over communication channels from the proxy-server to the computing server, carry out their selection, analyze the obtained basic data about temporal parameters of the beginning, duration and the termination of demand in various products, consider the structure of the life cycles of demand in products, which is defined in relational databases of the first stage, also interrelations between data, which are defined by object-relational model of the second stage for data management of the life cycles of demand; users investigate the temporal dynamics of demand in various types of products on the basis of the multifactorial analysis of influence of the various factors (of the scientific and technical, economic, social, political, demographic, geographical, ethnic factors) on trend in change of the temporal parameters of the demand in various products by means of use of the program of type «IBM SPSS Statistics»; users systematize analytical data, unite them into a cluster of the life cycles of demand, on the basis of which create a microservice, which has an identification key and is a component of the not relational database of type «NoSQL» with the corresponding software «NoSQL», as well as it is preserved into a file for control and storage of unstructured data, including commercial, analytical data about conditions, factors of influence and temporal parameters of demand in products;
3.2.4 - users carry out the multidimensional forecast of trends of change of temporal phases and their parameters of the beginning, duration, termination of demand in products, taking into account weak signals, and carry out the singular spectral analysis (SSA), which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of data of the life cycles of demand in products in the form of a matrix with the subsequent application to a temporal row of a method of the main components and determine amplitude of each temporal row, i.e. a deviation of its maximum and minimum values from average values; taking into account these amplitudes, users generate all possible options of change of indicators of life cycles of demand in different products for the forecasted long-term period, preserve a file of versions of the forecast of the temporal phases of demand in different products;
3.3.4 - users estimate space of conditions of the dynamic variables influencing indicators of the life cycles of demand by means of use of tools of the software of type «SAS Visual Forecasting», with help of visual display units, of type of interactive panels «SMART Board, series 7000 Pro», as well as with the software «SMART Meeting Pro» and «SMART ink», which are used for brain storms and the collective analysis of various factors, among which there are rates of scientific and technical progress; level of intensity of the competition, inflation and solvency of buyers; growth rates of the prices in resources; rates of updating of technologies and means of labor; rates of updating of a product range, also users determine by method of the main components those factors of influence on temporal phases of demand, which are insignificant, and they can be neglected; as a result, users establish the direction for adjustment of the forecasted range of data owing to suppression of high-frequency or low-frequency components of multidimensional temporal rows of forecasted data of time of the beginning, duration, the termination of phases of life cycle of demand in products for the long-term period, define probability degree of each version of the forecast of indicators of the life cycles of demand in various products; users send a task for generating the digital codes over communication channels to the application server of digital transformation of data and come out of operating process on the computing server;
3.4.4 - users enter operating process of the application server of digital transformation of data, set digital designations for each market, a temporal phase of demand, a product, temporal parameter of demand and factor influencing the demand, generate digital codes for each group of conditions and each version of possible dynamics of life cycles of demand in products owing to use of the program of type of «Serial Key Generator» and according the specified parameters, also define a digital key for a microservice of life cycles of demand of the database «NoSQL»;
3.5.4 - users generate the integrated digital codes for the temporal rows of data of the beginning, duration, the termination of phases of life cycle of demand in each product according the specified parameters and by means of use of the program of type «Serial Key Generator», namely, the integrated digital codes contain the references to both identifiers of forecasted temporal parameters of demand and identifiers of group of conditions and factors, which have the greatest impact on dynamics and fluctuation of life cycles of demand during the forecasted long-term period; users transfer digital codes for forecasting of temporal rows of data of life cycles of demand in products to the computing server over communication channels by means of the OLE technology, implementing the mechanism of interprocessor interaction based on COM, and come out of operating process of the application server of digital transformation of data;
3.6.4 - users enter operating process of the computing server and carry out with use of the created digital codes the space-time forecast of dynamics of temporal parameters of demand in each product by means of use of the software of type «SAS Visual Forecasting», use graphic tools of the program and visual display units, of type of interactive panels «SMART Board, cep 7000Pro», with the software of type «SMART Meeting Pro» and «SMART ink», for collaboration of a group of developers of the project for finishing of the forecast on the basis of the spectral analysis and modeling of multidimensional temporal rows of data of the beginning, duration, the termination of phases of life cycle of demand in various products in the graphic system of coordinates of time and space in 3D format on the basis of the directions of smoothing of amplitudes of forecasted temporal rows; as a result, users generate in a digital format multidimensional temporal rows of data of the life cycles of demand in products during the forecasted long-term period and create the corresponding file, also form the fourth compartment of a digital analytical block consisting of three sections; users send a task for generating the barcodes over communication channels to the application server of digital transformation of data and come out of operating process of the computing server;
3.7.4 - users enter operating process of the application server of digital transformation of data, according the specified parameters and by means of use of the program of type «ActiveBarcode» generate the barcodes of type «QR» or «Data Matrix» for designation of each multidimensional temporal row of data of the life cycles of demand in each product into different phases of the forecasted long-term period, as well as for the designation of the fourth compartment and each section of this compartment of an analytical block; users transfer barcodes to the computing server over communication channels by means of the OLE technology, implementing the mechanism of interprocessor interaction based on COM, and come out of operating process of the application server of digital transformation of data;
3.8.4 - users enter operating process of the computing server; using results of the previous operations, also the generated barcodes, they form the fourth compartment of an analytical block, which contains analytical data about dynamics of life cycles of demand in products, also users create three sections of the fourth compartment of a block and include in them the files that are created on the computing server, respectively a file of database microservice of type «NoSQL», which contains the basic data about temporal parameters of demand in products and about factors influencing dynamics of the life cycles of demand in products; a file about all possible options of dynamics of the life cycles of demand in products; a file of the forecasted multidimensional temporal rows of data of the beginning, duration, the termination of phases of life cycle of demand in products; users carry out direct transfer of the created files of the fourth compartment to the file server owing to using by servers of the installed program «FTP Rush» by means of «FXP» session under «FTP» protocol and come out of operating process of the computing server;
3.9.4 - users enter operating process of the file server, register the received files of three sections of the fourth compartment for storage and file operations, send them into storage of the file server and place under their barcodes in structure of the formed digital analytical block, which is created over the matrix principle from six vertical compartment and three horizontal sections of each compartment; users carry out direct transfer of a file of a database for planning the life cycles of products from a digital block of databases of the first stage, a file of an object-relational model for synthesis of temporal parameters of the offer of products from a digital block of DBMS of the second stage, a file of temporal rows of data of the life cycles of demand in products from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

The 5th step - users create the digital sequence of operations and the matrix-digital mechanism of process of generating the temporal rows of forecasted data of demand in the target function and quality of products.

List of designations of operations of the fifth step of the third stage [Fig.3]:
3.1.5 - users enter operating process of the computing server and collect the analytical variable data arriving over communication channels from the proxy-server to the computing server, carry out their selection, analyze the obtained basic data about consumer demand of various markets in quality indicators, the target function of products, consider the functional structure of various products and their consumer cost, indicators of quality, which are defined in relational databases of the first stage for planning the target function and quality of products, also interrelations between functional properties and qualitative indicators of products, which are defined by object-relational model of the second stage for management of the qualitative parameters of products, users investigate trends in change of quality inquiries of consumers on the basis of the multifactorial analysis of influence of the various factors (of the scientific and technical, economic, social, political, demographic, geographical, ethnic factors) on tendencies in quality inquiries of consumers by means of use of the program of type «IBM SPSS Statistics»; users systematize analytical data, unite them into a cluster of the qualitative indicators of demand, on the basis of which create a microservice, which has an identification key and is a component of the not relational database of type «NoSQL» with the corresponding software «NoSQL», as well as it is preserved into a file for control and storage of unstructured data, including commercial, analytical data about indicators of demand in the target function and quality of products;
3.2.5 - users carry out the multidimensional forecast of trends of change of demand in the target function and in the main indicators of quality of products, taking into account weak signals and functional appointment of products, and carry out the singular spectral analysis (SSA), which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of data of demand in the target function, quality of products in the form of a matrix with the subsequent application to a temporal row of a method of the main components and determine amplitude of each temporal row, i.e. a deviation of its maximum and minimum values from average values; taking into account these amplitudes, users generate all possible options of change of demand in the target function and in indicators of quality of different products for the forecasted long-term period, preserve a file of versions of the forecast of demand in the target function and in indicators of quality of products;
3.3.5 - users estimate space of conditions of the dynamic variables influencing qualitative indicators of demand by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; level of intensity of the competition, inflation and solvency of buyers; growth rates of the prices in resources, materials; rates of updating of technologies and means of labor; rates of emergence of new materials; rates of updating of a product range; users determine by method of the main components those factors of influence on qualitative indicators of demand, which are insignificant, and they can be neglected; as a result, users establish the direction for adjustment of the forecasted range of data owing to suppression of high-frequency or low-frequency components of multidimensional temporal rows of forecasted data of demand in the target function and quality of products for the long-term period, define probability degree of each version of the forecast of a plurality of data of demand in the target function, qualitative indicators of products; users send a task for generating the digital codes over communication channels to the application server of digital transformation of data and come out of operating process of the computing server;
3.4.5 - users enter operating process of the application server of digital transformation of data, set digital designations for each market, a temporal phase of demand, a product, qualitative indicator of demand and factor influencing the demand, generate digital codes for each group of conditions and each version of possible dynamics of demand in the target function and quality of products owing to use of the program of type of «Serial Key Generator» and according the specified parameters, also define a digital key for a microservice of qualitative needs of the database «NoSQL»;
3.5.5 - users generate the integrated digital codes for the temporal rows of data of demand in the target function and quality of products according the specified parameters and by means of use of the program of type «Serial Key Generator», namely, the integrated digital codes contain the references to both identifiers of forecasted indicators of demand in the target function, quality of products and identifiers of group of conditions and factors, which have the greatest impact on dynamics of these indicators, their fluctuation over different products and markets during the forecasted long-term period; users transfer digital codes for forecasting of temporal rows of data of demand in the target function, quality of products to the computing server over communication channels by means of the OLE technology, implementing the mechanism of interprocessor interaction based on COM, and come out of operating process of the application server of digital transformation of data;
3.6.5 - users enter operating process of the computing server and carry out with use of the created digital codes the space-time forecast of dynamics of data of demand in the target function and quality of each product by means of use of the software of type «SAS Visual Forecasting», use graphic tools of the program and visual display units, of type of interactive panels «SMART Board, cep 7000Pro», with the software of type «SMART Meeting Pro» and «SMART ink», for collaboration of a group of developers of the project for finishing of the forecast on the basis of the spectral analysis and modeling of multidimensional temporal rows of data of demand in the target function and quality of products in the graphic system of coordinates of time and space in 3D format on the basis of the directions of smoothing of amplitudes of forecasted temporal rows; as a result, users generate in a digital format the multidimensional temporal rows of data of demand in the target function, quality of products during the forecasted long-term period and create the corresponding file, also form the fifth compartment of a digital analytical block consisting of three sections; users send a task for generating the barcodes over communication channels to the application server of digital transformation of data and come out of operating process of the computing server;
3.7.5 - users enter operating process of the application server of digital transformation of data, according the specified parameters and by means of use of the program of type «ActiveBarcode» generate the barcodes of type «QR» or «Data Matrix» for designation of each multidimensional temporal row of data of demand in the target function and quality of each product into different phases of the forecasted long-term period, as well as for the designation of the fourth compartment and each section of this compartment of an analytical block; users transfer barcodes to the computing server over communication channels by means of the OLE technology, implementing the mechanism of interprocessor interaction based on COM, and come out of operating process of the application server of digital transformation of data;
3.8.5 - users enter operating process of the computing server; using results of the previous operations, also the generated barcodes, they form the fifth compartment of an analytical block, which contains analytical data about dynamics of demand in the target function and indicators of quality of products, also users create three sections of the fifth compartment of a block and include in them the files that are created on the computing server, respectively a file of database microservice of type «NoSQL», which contains the basic data about demand in the target function, quality of products and about factors influencing dynamics of the qualitative indicators of demand; a file about all possible options of dynamics of demand in the target function and quality of products; a file of the forecasted multidimensional temporal rows of data of demand in the target function, qualitative parameters of products; users carry out direct transfer of the created files of the fifth compartment to the file server owing to using by servers of the installed program «FTP Rush» by means of «FXP» session under «FTP» protocol and come out of operating process of the computing server;
3.9.5 - users enter operating process of the file server, register the received files of three sections of the fifth compartment for storage and file operations, send them into storage of the file server and place under their barcodes in structure of the formed digital analytical block, which is created over the matrix principle from six vertical compartment and three horizontal sections of each compartment; users carry out direct transfer of a file of a database for planning the target function and quality of products from a digital block of databases of the first stage, a file of an object-relational model for synthesis of the qualitative parameters of the offer of products from a digital block of DBMS of the second stage, a file of temporal rows of data of demand in target function and quality of products of from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

The 6^{th} step - users create the digital sequence of operations and the matrix-digital mechanism of process of generating the temporal rows of forecasted data of demand in the effectiveness of target function, in volume, price of products.

List of designations of operations of the sixth step of the third stage [Fig.3]:
3.1.6 - users enter operating process of the computing server and collect the analytical variable data arriving over communication channels from the proxy-server to the computing server, carry out their selection, analyze the obtained basic data about consumer demand of various markets in data of the price, volume, effectiveness of target function of products, consider the structure of demand, which is defined in relational databases of the first stage, also interrelations between indicators of demand for products, which are defined by object-relational model of the second stage; users investigate trends in change of demand in effectiveness of target function, in volume, price of products on the basis of the multifactorial analysis of influence of the various factors (of the scientific and technical, economic, social, political, demographic, geographical, ethnic factors) on dynamics of the price, volume, qualitative parameters of consumer demand by means of use of the program of type «IBM SPSS Statistics»; users systematize analytical data, unite them into a cluster of demand in products, on the basis of which create a microservice, which has an identification key and is a component of the not relational database of type «NoSQL» with the corresponding software «NoSQL», as well as it is preserved into a file for control and storage of unstructured data, including commercial, analytical data about conditions, factors of influence and indicators of demand in the effectiveness of target function, the price, volume of products;
3.2.6 - users carry out the multidimensional forecast of trends of change of demand in the effectiveness of target function, in the volume, price of various products, taking into account weak signals, and carry out the singular spectral analysis (SSA), which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of data of demand in the effectiveness of target function, in the volume, price of various products in the form of a matrix with the subsequent application to a temporal row of a method of the main components and determine amplitude of each temporal row, i.e. a deviation of its maximum and minimum values from average values; taking into account these amplitudes, users generate all possible options of change of demand in the effectiveness of target function, in the volume, price of products for the forecasted long-term period, preserve a file of versions of the forecast of indicators data of demand in products;
3.3.6 - users estimate space of conditions of the dynamic variables influencing demand in the effectiveness of target function, in the volume, price of products by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; level of intensity of the competition, inflation and solvency of buyers; growth rates of the prices in resources; rates of appearance of new materials; rates of updating of technologies and means of labor; rates of updating of a product range, also users determine by method of the main components those factors of influence on a plurality of different indicators of demand, which are insignificant, and they can be neglected; as a result, users establish the direction for adjustment of the forecasted range of data owing to suppression of high-frequency or low-frequency components of multidimensional temporal rows of forecasted data of demand in the effectiveness of target function, in the volume, price of products for the long-term period, define probability degree of each version of the forecast of a plurality of data of the main indicators of demand in products; users send a task for generating the digital codes over communication channels to the application server of digital transformation of data and come out of operating process of the computing server;
3.4.6 - users enter operating process of the application server of digital transformation of data, set digital designations for each market, a temporal phase of demand, a product, indicator of demand in a product and factor influencing the demand, generate digital codes for each group of conditions and each version of possible dynamics of demand in indicators of the effectiveness of the target function, the volume, price of products owing to use of the program of type of «Serial Key Generator» and according the specified parameters, also define a digital key for a microservice of demand in products of the database «NoSQL»;
3.5.6 - users generate the integrated digital codes for the temporal rows of data of demand in the effectiveness of target function, in the volume, price of products according the specified parameters and by means of use of the program of type «Serial Key Generator», namely, the integrated digital codes contain the references to both identifiers of forecasted indicators of demand and identifiers of group of conditions and factors, which have the greatest impact on dynamics of these indicators, their fluctuation over different products and markets during the forecasted long-term period; users transfer digital codes for forecasting of temporal rows of data of demand in products to the computing server over communication channels by means of the OLE technology, implementing the mechanism of interprocessor interaction based on COM, and come out of operating process of the application server of digital transformation of data;
3.6.6 - users enter operating process of the computing server and carry out with use of the created digital codes the space-time forecast of dynamics of a plurality of data of key indicators of demand in each product by means of use of the software of type «SAS Visual Forecasting», use graphic tools of the program and visual display units, of type of interactive panels «SMART Board, cep 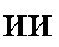 7000Pro», with the software of type «SMART Meeting Pro» and «SMART ink», for collaboration of a group of developers of the project for finishing of the forecast on the basis of the spectral analysis and modeling of multidimensional temporal rows of data of demand in the effectiveness of target function, in the volume, price of products in the graphic system of coordinates of time and space in 3D format on the basis of the directions of smoothing of amplitudes of forecasted temporal rows; as a result, users generate in a digital format the multidimensional temporal rows of data of demand in the effectiveness of target function, in the volume, price of products during the forecasted long-term period and create the corresponding file, also form the sixth compartment of a digital analytical block consisting of three sections; users send a task for generating the barcodes over communication channels to the application server of digital transformation of data and come out of operating process of the computing server;
3.7.6 - users enter operating process of the application server of digital transformation of data, according the specified parameters and by means of use of the program of type «ActiveBarcode» generate the barcodes of type «QR» or «Data Matrix» for designation of each multidimensional temporal row of data of demand in each product into different phases of the forecasted long-term period, as well as for the designation of the sixth compartment and each section of this compartment of an analytical block; users transfer barcodes to the computing server over communication channels by means of the OLE technology, implementing the mechanism of interprocessor interaction based on COM, and come out of operating process of the application server of digital transformation of data;
3.8.6 - users enter operating process of the computing server; using results of the previous operations, also the generated barcodes, they form the sixth compartment of an analytical block, which contains analytical data about dynamics of demand in products, also users create three sections of the sixth compartment of a block and include in them the files that are created on the computing server, respectively a file of database microservice of type «NoSQL», which contains the basic data about demand in the effectiveness of target function, in the volume, price of products and about the factors influencing dynamics of these indicators of demand; a file about all possible options of dynamics of a data plurality of demand in the qualitative parameters, in the volume, price of products; a file of the forecasted multidimensional temporal rows of data of demand in the effectiveness of target function, in the volume, price of products; users carry out direct transfer of the created files of the sixth compartment to the file server owing to using by servers of the installed program «FTP Rush» by means of «FXP» session under «FTP» protocol and come out of operating process of the computing server;
3.9.6 - users enter operating process of the file server, register the received files of three sections of the sixth compartment for storage and file operations, send them into storage of the file server and place under their barcodes in structure of the formed digital analytical block, which is created over the matrix principle from six vertical compartment and three horizontal sections of each compartment; users carry out direct transfer of a file of a database for planning the offer of products from a digital block of databases of the first stage, a file of an object-relational model for synthesis of data in program of the offer of products from a digital block of DBMS of the second stage, a file of temporal rows of data of demand in indicators of the effectiveness of target function, in the volume, price of products from a digital analytical block of the third stage of the Way, namely from blocks of storage of the file server to the computing server and to the application server over synthesis of strategies owing to using by servers of installed program «FTP Rush» by means of «FXP» session under «FTP» protocol and come out of operating process of the file server.

Upon termination of the ninth operation at all levels of the Third subsystem and finishing of all steps of the third stage of the Way, users come out of network of the Third subsystem.

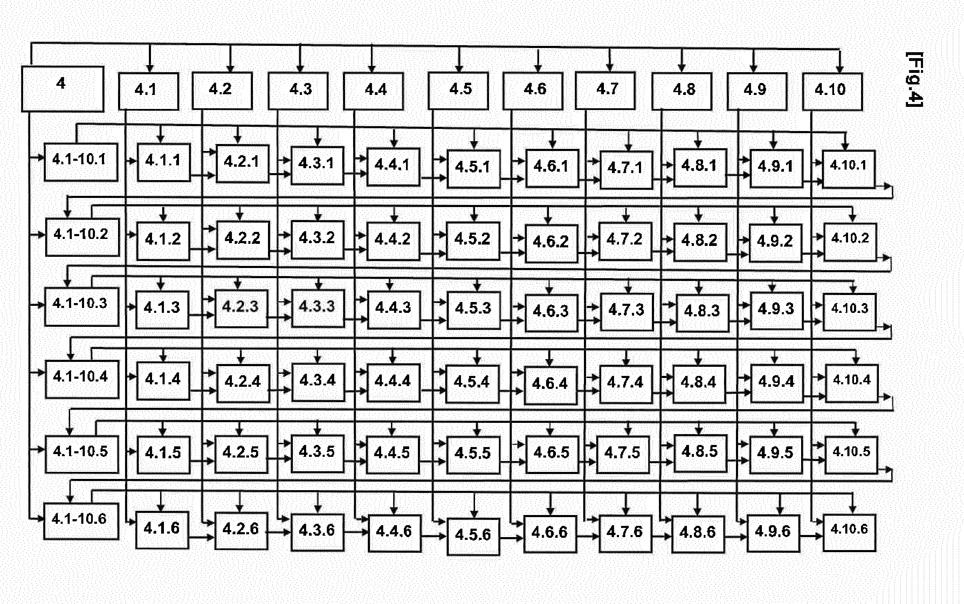

The System includes network of the fourth interactive subsystem [Fig. 8], into which users make entry for performance of the fourth stage of the Way [Fig.4].

The network of the Fourth subsystem unites the following interacting elements of the System: the computing server with the software of type «IBM SPSS Statistics Standard» and of type «SAS^{∗} Visual Forecasting»; the application server over synthesis of strategies with the software of type «SAS^{∗} Visual Analitics»; the application server of digital transformation of data with the software of type «Serial Key Generator» and of type «ActiveBarcode»; the file server with the software of type «Windows Server 2012 R2 NTFS»; these servers are connected with each other by communication channels; the computing server and the application server over synthesis of strategies, using the program of direct files transfer «FTP Rush» by means of «FXP»session under «FTP» protocol, receive files from blocks of storage of the file server: from blocks of databases and object-relational models of DBMS, as well as from an analytical block. The computing server and the application server over synthesis of strategies are connected with each other and are equipped by interactive displays of type «SMART Board», of series 7000 Pro, which work on the basis of the software «SMART Meeting Pro» and «SMART ink». These servers interact with other servers of the Fourth subsystem that has six levels connected over communication channels by the general installation, the general process of performance of six steps of the fourth stage of the Way.

Action of servers of the Fourth subsystem is intended for synthesis of the long-term and current strategies, formation of a digital block of strategies and consists in work of servers of this subsystem over performance of the operating processes consisting in consecutive performance of operations of each step of the fourth stage of the Way, and the communication processes consisting in procedures of an entrance and exit from operating process on each of servers and in their interaction with each other by means of communication channels for transfer of a stream of data received owing to operating process at implementing the following steps of the fourth stage of the Way: 4.1-10.1; 4.1-10.2; 4.1-10.3; 4.1-10.4; 4.1-10.5; 4.1-10.6, respectively at the 1st, 2nd, 3rd, 4th, 5th, 6th level of the Fourth subsystem.

The list of designations of structural elements of the fourth subsystem - the 4th fragment of the System [Fig. 8]:
8.0 - System;
8.3 - computing server of the System;
8.4 - server of the application of the System over to synthesis of strategies;
8.5 - server of the application of the System over digital transformation of data;
8.7 - file server of the System;
8.033; 8.043 - interactive panels «SMART Board» of the computing server and of the server of the application over synthesis of strategies;
8.8 - controllers of the System.

At all levels of the Fourth subsystem the following operations are carried out:
4.1 - 4.10 - the operations of the fourth stage of the Way, which are carried out on different servers in operating network of the Fourth subsystem.

### List of designations of the 4th stage of the Way [Fig.4].

The 4th stage - the Way of synthesis of strategies and formation of a digital block of strategies for creation of the programs of the offer of products.

[Fig.4] - «The matrix-digital model of process of synthesis of strategies and formation of a digital block of strategies» is the fourth the main model of the Way, which characterizes in a digital form the sequence of steps of the fourth stage and operations of each step, also matrix interrelations between steps and operations of the fourth stage.

List of designations of steps of the fourth stage [Fig.4]:
4.1-10.1 - users create the digital sequence of operations and the matrix-digital mechanism of process of synthesis of strategies of transformation of a business environment of the company and strategic zones of positioning of products in the markets;
4.1-10.2 - users create the digital sequence of operations and the matrix-digital mechanism of process of synthesis of strategies of development of the company and its products;
4.1-10.3 - users create the digital sequence of operations and the matrix-digital mechanism of process of synthesis of strategies of transformation of the commodity nomenclature and assortments;
4.1-10.4 - users create the digital sequence of operations and the matrix-digital mechanism of process of synthesis of strategies of transformation of life cycles of products;
4.1-10.5 - users create the digital sequence of operations and the matrix-digital mechanism of process of synthesis of strategies of transformation of the target function and quality of products;
4.1-10.6 - users create the digital sequence of operations and the matrix-digital mechanism of process of synthesis of strategies of data transformation of the offer of products in strategic segments of the markets.

List of designations of operations of the fourth stage [Fig.4]:
4.1 - users enter operating process of the computing server, assess by means of use of the software of type «IBM SPSS Statistics» all possible internal and external factors influencing change of conditions for transformation of strategies of the company, namely they define the motivational conditions, incentives on the basis of the development tasks, the reached data of the offer of products, reserves of the resources, growth rates of volumes of the offer of products, profitability, useful effect of products, share of coverage of the market by products of the company owing to using of databases of type «My SQL» and «NoSQL» and of the object-relational models of DBMS; at the same time, they determine objective conditions on the basis of the forecasted data of dynamics of level of expenses and the prices, rates of updating of a product range under the influence of scientific and technical progress, of the scale of expansion of sales markets, also of indicators of a business environment, level of the competition, quantitative inquiries of consumers and differentiation of their inquiries according the forecasted temporal rows of data of demand; users select and systematize all possible options of change of conditions of development of the markets, products, production, consumer requirements and create files about groups of conditions and about degree their constancy for transformation of strategies of development of the company and of the offer of products during the long-term period, respectively at each step of the fourth stage of the Way; users carry out direct transfer of the created files to the application server over synthesis of strategies owing to using by servers of the installed program «FTP Rush» by means of «FXP» session under «FTP» protocol and come out of operating process of the computing server;
4.2 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely: from a block of databases of type «MySQL» and «NoSQL»; from a block of the object-relational models of DBMS for definition of the essential communications between data; from an analytical block of multidimensional temporal rows of data of demand in different types of the products during the long-term period; on this basis users build graphs, network graphics, a tree of decisions, a block of charts for visual brainstorming by means of use of tools of software of type «SAS^{∗} Visual Analitics» and of interactive displays of type «SMART Board, series 7000Pro», with the software «SMART Meeting Pro» and «SMART ink»; as a result, users define for each group of the similar products all possible scenarios of transformation of indicators of their offer in a certain market during the forecasted long-term period, as well as all possible scenarios of development of the company and establish the main indicators and the directions of their transformation for each scenario of the proposal of different groups of the similar products, create files about all possible scenarios of development of the company and of the offer of products at each step of the fourth stage of the Way; users carry out direct file transfer to the computing server owing to using by servers of the installed program «FTP Rush» by means of «FXP» session under «FTP» protocol and come out of operating process on the application server over synthesis of strategies;
4.3 - users enter operating process of the computing server, assess potential of resources of the enterprise for implementing the scenarios of development of the company and its products, which are reflected on interactive displays, namely of technical base, the labor resources, the reached labor productivity level, capital productivity, rhythms of production, material consumption and the cost of products by means of use of the program of type «IBM SPSS Statistics, predict saving the resources owing to their rational use and introduction of achievements of science and technique, progress of technologies, also the volumes of financing at the expense to external investments and internal reserves on the purpose of development of the offered products during the forecasted long-term period and define restrictions in resources for transformation of data of various indicators of the offer of products by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of data transformation of the offer of products and according to their feasibility at financial restrictions, eliminate impracticable scenarios, as well as for all others define the rating of feasibility; as a result, users define a group of restrictions over resources and create files of possible scenarios, namely for scenarios of transformation of a business environment of the company, development of the company and its product range, the commodity nomenclature and assortments, the life cycles of products, the target function and quality of products, indicators of the offer of products in the markets, respectively at each step of the fourth stage of the Way; users send tasks for generating the digital codes over communication channels to the application server of digital transformation of data and come out of operating process of the computing server;
4.4 - users enter operating process of the application server of digital transformation of data and set digital designations for each type of a product, indicators of the offer and useful effect of a product, life cycle of the offer, its temporal phases, indicators of planning of resources, generate according the specified parameters by means of using of the program of type «Serial Key Generator» the digital codes for different groups of conditions and restrictions in resources at creation of various products at each step of the fourth stage of the Way;
4.5 - users according the specified parameters and by means of use of the program of type «Serial Key Generator» generate the integrated digital codes for each scenario of transformation of indicators of development of the company and the offer of its products, include into structure of these codes the references not only to digital identifiers of a certain market, a temporal phase, group of the conditions influencing the scenario, but also to identifiers of type of a product or an assortment and to the indicators defining the scenario of products development and establish connection of the formed codes with digital codes of temporal rows of data of demand in the corresponding indicators of the products forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6 - users enter operating process on the application server over synthesis of strategies; on the basis of the obtained digital codes and estimates of the computing server they make changes into files about scenarios of transformation of data at each step of the fourth stage of the Way, create files about groups of limitations over resources for each scenario and carry out the matrix-digital mechanism of synthesis of strategies of the proposal of each group of the similar products of the company by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of a certain group of similar products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to each chosen scenario define the long-term strategy of transformation of data of the offer of each group of similar products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of data of the offer of a certain group of similar products; as a result, users define long-term development strategies of the company and the offer of its products at the corresponding steps of the fourth stage of the Way;
4.7 - users synthesize the current strategies for each phase of the long-term period according to long-term strategies and create files of development strategies of the company and the offer of its products at each step of the fourth stage of the Way, form the structure of a digital block of strategies that consists from six compartments, each of which is created at the corresponding step of the fourth stage of the Way and includes four sections; users send tasks for generating the barcodes over communication channels to the application server of digital transformation of data and come out of operating process of the application server over synthesis of strategies;
4.8 - users enter operating process of the application server of digital transformation of data and according the specified parameters and by means of use of a program of type «ActiveBarcode» generate the barcodes of type «QR» or «Data Matrix» for designation of each long-term and current strategy of transformation of the offer of both each assortment and each group of similar products and for designation of development strategies of the company in a whole, include into structure of codes the references to identifiers not only of strategies, but also of the markets, temporal phases, chosen groups of the conditions and restrictions over resources, which influence the strategies choice, as well as create the connected barcodes for each from six compartment and for each of four sections that enter into each compartment, form an integrated barcode for designation of a block of strategies, which unites all sections and compartments of the fourth stage of the Way; users transfer digital data to the application server over synthesis of strategies over communication channels by means of the OLE technology, implementing the mechanism of interprocessor interaction based on COM, and come out of operating process of the application server of digital transformation of data;
4.9 - users enter operation process of the application server over synthesis of strategies; using results of the previous operations, the generated barcodes, they form at each step of the fourth stage of the Way the corresponding compartment of a digital block of strategies, namely: compartment of strategies of transformation of a business environment of the company - at the first step; compartment of development strategies of the company and its product range - at the second step; compartment of strategies of transformation of the commodity nomenclature and assortments - at the third step; compartment of strategies of transformation of the life cycles of the offer of products - at the fourth step; compartment of strategies of transformation of the target function, quality of products - at the fifth step; compartment of strategies of transformation of indicators of the offer of products - at the sixth step of the fourth stage of the Way, as well as create four sections in each compartment of a digital block of strategies, each of sections includes the created files, namely: the files of groups of conditions are included into the first section of each compartment; the files of possible scenarios of development of the company and of the offer of its products - into the second section; the files of groups of restrictions over resources - into the third section; the files of long-term and current development strategies of the company and offer of its products - into the fourth section; users carry out direct transfer of the created files to the file server owing to using by servers of the installed program «FTP Rush» by means of «FXP» session under «FTP» protocol and come out of operating process on the application server over synthesis of strategies;
4.10 - users enter operating process of the file server, register the received files for storage and file operations, send files of four sections of each compartment created at each step of the fourth stage of the Way into storage of the file server and place under their barcodes in structure of the formed digital block of strategies, which is denoted by an integrated barcode and is created over the matrix principle from six vertical compartments and four horizontal sections of each compartment; this block is a result of operating process of performance of all steps of the fourth stage of the Way at all levels of the Fourth of subsystems; users carry out direct transfer of the files of databases from a digital block of databases of the first stage, the files of the object-relational models from a digital block of DBMS of the second stage, the files of forecasted multidimensional temporal rows of data from a digital analytical block of the third stage, and the files of strategies of transformation of data from a digital block of strategies of the fourth stage, namely from blocks of storage of the file server to the application server of the target appointment owing to using by servers of installed program «FTP Rush» by means of «FXP» session under «FTP» protocol, come out of operating process of the file server.

The 1st step - users create the digital sequence of operations and the matrix-digital mechanism of process of synthesis of strategies of transformation of a business environment of the company and strategic zones of positioning of products in the markets.

List of designations of operations of the first step of the fourth stage [Fig.4]:
4.1.1 - users enter operating process of the computing server, assess by means of use of the software of type «IBM SPSS Statistics» all possible internal and external factors influencing change of conditions for transformation of indicators of a business environment of the company, namely they define the motivational conditions, incentives on the basis of the development tasks, the reached actual data of number and the composition of suppliers, buyers, resellers and financial intermediaries, competitors, as well as rhythm of production, the effectiveness of business contacts owing to using of databases of type «MySQL» and «NoSQL» and of the object-relational models for planning a business environment of the company; at the same time, they determine objective conditions on the basis of the forecasted data about change of number and composition of business partners for the long-term period according the forecasted temporal rows of data of development of a business environment; users create a file about groups of conditions and about degree of their constancy for transformation of strategies of development of a business environment of the company during the long-term period; users carry out direct transfer of the created file to the application server over synthesis of strategies owing to using by servers of the installed program «FTP Rush» by means of «FXP» session under «FTP» protocol and come out of operating process of the computing server;
4.2.1 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely: data of the databases of type «MySQL» and «NoSQL» for planning a business environment of the company; data of an object-relational model of DBMS for definition of influence on indicators of a business environment of the company of various factors; multidimensional temporal rows of data of a business environment of the company during the long-term period; on this basis users build graphs, network graphics, a tree of decisions, a block of charts for visual brainstorming by means of use of tools of software of type «SAS^{∗} Visual Analitics» and of interactive displays of type «SMART Board, series 7000Pro», with the software «SMART Meeting Pro» and «SMART ink»; as a result, users define all possible scenarios of transformation of indicators of a business environment of the company during the forecasted long-term period, as well as establish the main indicators and the directions of their transformation for each scenario, create a file about all possible scenarios of transformation of a business environment of the company; users carry out direct file transfer to the computing server owing to using by servers of the installed program «FTP Rush» by means of «FXP» session under «FTP» protocol and come out of operating process on the application server over synthesis of strategies;
4.3.1 - users enter operating process of the computing server, assess potential of resources of the enterprise for implementing the scenarios of development of a business environment of the company, which are reflected on interactive displays, namely of technical base, financial opportunities for change of number and composition of suppliers of resources, of the resellers and financial intermediaries, the expansion of number of the markets and consumers of products, during the forecasted long-term period by means of use of the program of type «IBM SPSS Statistics, predict the volumes of financing at the expense of external and internal sources on the purpose of improvement of business contacts and define restrictions in resources for transformation of a business environment of the company by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of transformation of a business environment of the company according to their feasibility at financial restrictions, eliminate impracticable scenarios, and for all others define the rating of feasibility, define limitations over resources for possible scenarios of development of a business environment of the company and create a file; users send a task for generating the digital codes over communication channels to the application server of digital transformation of data and come out of operating process of the computing server;
4.4.1 - users enter operating process of the application server of digital transformation of data and set digital designations for indicators of a business environment of the company (of suppliers of resources, of the resellers and financial intermediaries, consumers, competitors), for its temporary phases, indicators of planning the resources, generate according the specified parameters by means of use of the program of type «Serial Key Generator» the digital codes for different groups of conditions and restrictions in resources for transformation of a business environment of the company;
4.5.1 - users according the specified parameters and by means of use of the program of type «Serial Key Generator» generate the integrated digital codes for each probable scenario of change of number and the composition of business partners of the company, include into structure of these codes the references not only to digital identifiers of a certain market, a temporal phase, group of the conditions influencing the scenario of a business environment of the company, but also to identifier of type of a business partner and the indicators defining the scenario of a business environment of the company and establish connection of the formed codes with digital codes of temporal rows of data of demand in the corresponding indicators of a business environment forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6.1 - users enter operating process on the application server over synthesis of strategies; on the basis of the obtained digital codes and estimates of the computing server they make changes into files about scenarios of development of a business environment of the company, create files about groups of limitations over resources for each scenario and carry out the matrix-digital mechanism of synthesis of strategies of transformation of a business environment of the company by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of a business environment of the company; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to chosen scenario define the long-term strategy of transformation of a business environment of the company and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of a business environment of the company;
4.7.1 - users synthesize the current strategies of development of business contacts for each phase of the long-term period according to long-term strategies of transformation of a business environment of the company and create a file of strategies of transformation of a business environment of the company, form the first compartment of a digital block of strategies, which includes four sections; users send a task for generating the barcodes over communication channels to the application server of digital transformation of data and come out of operating process of the application server over synthesis of strategies.

For example, the main strategies of transformation of a business environment of the company are the following: 1) strategies relatively of suppliers of technologies, means of labor, material resources, manpower, namely: 1.1) expansion of number of suppliers; 1.2) narrowing number of suppliers;1.3) change of composition of suppliers of various resources; 1.4) change of composition and of number of suppliers; 2) strategies relatively of consumers of products: 2.1) expansion of number of consumers of products owing to increase of a share of coverage of the market and entry into the new markets; 2.2) reduction of number of consumers of products at positioning products in the chosen segments of the market; 2.3) change of composition of buyers and specific structure of buyers owing to change of segments of positioning of products; 2.4) change of both structure and number of consumers; 3) strategies relatively of resellers: 3.1) expansion of channels of sale of products and number of resellers; 3.2) narrowing number of resellers and increase in a share of sales of products without intermediaries; 3.3) change of structure of resellers, as a result, of the choice of more effective and refusal from less effective resellers and the trade points; 4) strategies relatively of financial intermediaries: 4.1) expansion of number of financial intermediaries at decrease of share of participation of each of them; 4.2) preservation or narrowing of number of financial intermediaries, without change of a share of their participation; 4.3) preservation or narrowing of number of financial intermediaries with increase of a share of their participation; 4.4) change of composition of financial intermediaries; 5) strategies relatively of competitors: 5.1) strategies of competitive fight for a market share; 5.2 ) the strategy of competitive fight for composition of buyers, for presence at the prestigious markets; 5.3) strategy of competitive fight for number and composition of suppliers of resources; 5.4 ) strategy of competitive fight for favorable contracts over purchase of resources; 5.5) strategy of competitive fight for number of buyers of products; 5.6) strategy of competitive fight for favorable number and composition of intermediaries;
4.8.1- users enter operating process of the application server of digital transformation of data and according the specified parameters and by means of use of a program of type «ActiveBarcode» generate the barcodes of type «QR» or «Data Matrix» for designation of each long-term and current strategy of transformation of a business environment of the company, include into structure of codes the references to identifiers not only of strategies, but also of the markets, temporal phases, chosen groups of the conditions and restrictions over resources, which influenced the strategies choice of a business environment of the company, as well as create the connected barcodes for the first compartment and four sections that enter this compartment; users transfer digital data to the application server over synthesis of strategies over communication channels by means of the OLE technology, implementing the mechanism of interprocessor interaction based on COM, and come out of operating process of the application server of digital transformation of data;
4.9.1 - users enter operation process of the application server over synthesis of strategies; using results of the previous operations, the generated barcodes, they form the first compartment of a digital block of strategies including into it four sections, each of which contains the created files, namely: a file about group of conditions for change of the suppliers, intermediaries, changes of the number and composition of buyers is included into the first section of the first compartment; a file about possible scenarios of development of a business environment of the company - into the second section of the first compartment; a file about group of limitations over various resources for change of business partners of the company - into the third section of the first compartment; a file about the long-term and current strategies of transformation of a business environment of the company - into the fourth section of the first compartment; users carry out direct transfer of the created files to the file server owing to using by servers of the installed program «FTP Rush» by means of «FXP» session under «FTP» protocol and come out of operating process on the application server over synthesis of strategies;
4.10.1 - users enter operating process of the file server, register the received files of four sections of the first compartment for storage and file operations, send files into storage of the file server and place under their barcodes in structure of the formed digital block of strategies, which is created over the matrix principle from six vertical compartment and four horizontal sections of each compartment; users carry out direct transfer of a file of database for planning a business environment of the company from a digital block of databases of the first stage, a file of the object-relational model for management of data of a business environment of the company from a digital block of DBMS of the second stage, a file of forecasted multidimensional temporal rows of data of a business environment from a digital analytical block of the third stage, and a file of strategies of transformation of a business environment of the company from a digital block of strategies of the fourth stage, namely from blocks of storage of the file server to the application server of the target appointment owing to using by servers of installed program «FTP Rush» by means of «FXP» session under «FTP» protocol and come out of operating process of the file server.

The 2nd step - users create the digital sequence of operations and the matrix-digital mechanism of process of synthesis of strategies of development of the company.

List of designations of operations of the second step of the fourth stage [Fig.4]:
4.1.2 - users enter operating process of the computing server, assess by means of use of the software of type «IBM SPSS Statistics» all possible internal and external factors influencing change of conditions for transformation of development strategies of the company, namely they define the motivational conditions, incentives on the basis of the development tasks, the reached actual data of the offer of products, useful effect from them, profitability of production owing to using of databases of type «MySQL» and «NoSQL» and of the object-relational models of DBMS for planning the development strategies of the company; at the same time, they determine objective conditions on the basis of the forecasted data about change of quantitative and qualitative inquiries of consumers according the forecasted temporal rows of data of demand in consumer effectiveness of products; users create a file about groups of conditions and about degree of their constancy for transformation of strategies of development of the company during the long-term period; users carry out direct transfer of the created file to the application server over synthesis of strategies owing to using by servers of the installed program «FTP Rush» by means of «FXP» session under «FTP» protocol and come out of operating process of the computing server;
4.2.2 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely: data of the databases of type «MySQL» and «NoSQL» for planning development strategies of the company; data of an object-relational model of DBMS for definition of influence on choice of development strategies of the company of various factors; multidimensional temporal rows of data of demand in the consumer effectiveness of products of the company during the long-term period; on this basis users build graphs, network graphics, a tree of decisions, a block of charts for visual brainstorming by means of use of tools of software of type «SAS^{∗} Visual Analitics» and of the interactive displays of type «SMART Board, series 7000Pro», with the software «SMART Meeting Pro» and «SMART ink», as a result, users define all possible scenarios of transformation of indicators of the effectiveness of products of the company during the forecasted long-term period, as well as establish the main indicators and the directions of their transformation for each scenario, create a file about all possible scenarios of transformation of the consumer effectiveness of products of the company; users carry out direct file transfer to the computing server owing to using by servers of the installed program «FTP Rush» by means of «FXP» session under «FTP» protocol and come out of operating process on the application server over synthesis of strategies;
4.3.2 - users enter operating process of the computing server, assess potential of resources of the enterprise for implementing the scenarios of development of the company and its products line, which are reflected on interactive displays, namely of technical base, the labor resources, the reached labor productivity level, capital productivity, material consumption, and the cost of products by means of use of the program of type «IBM SPSS Statistics, predict saving the resources owing to their rational use and introduction of achievements of science and technique, progress of technologies, also volumes of financing at the expense of external investments and internal reserves on the purpose of development of the products line of the company during the forecasted long-term period and define restrictions in resources for development of products of the company by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of development of products of the company according to their feasibility at financial restrictions, eliminate impracticable scenarios, and for all others define the rating of feasibility, define limitations over resources for possible scenarios of development of the company and its products line and create a file; users send a task for generating the digital codes over communication channels to the application server of digital transformation of data and come out of operating process of the computing server;
4.4.2 - users enter operating process of the application server of digital transformation of data and set digital designations for each type of a product, life cycle of the offer, its temporary phases, indicators of planning the resources, indicators of the consumer useful effect and aggregate useful effect of a product, generate according the specified parameters by means of use of the program of type «Serial Key Generator» the digital codes for different groups of conditions and restrictions in resources for development of products line of the company;
4.5.2 - users according the specified parameters and by means of use of the program of type «Serial Key Generator» generate the integrated digital codes for each probable scenario of development of products line of the company, include into structure of these codes the references not only to digital identifiers of a certain market, a temporal phase, group of the conditions influencing the scenario of development of the company and its products, also to identifiers of a product type and indicators defining the scenario and establish connection of the formed codes with digital codes of temporal rows of data of demand in the consumer effectiveness of products, forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6.2 - users enter operating process on the application server over synthesis of strategies; on the basis of the obtained digital codes and the estimates of the computing server they make changes into files about scenarios of development of the company and its line of products, create files about groups of limitations over resources for each scenario and carry out the matrix-digital mechanism of synthesis of strategies of development of the company and its products by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of development of the company and its line of products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to chosen scenario define the long-term strategy of development of the company and its line of products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of development of the company and its line of products;
4.7.2 - users synthesize the current strategies for each phase of the long-term period according to long-term strategies of development of the company and its products and create a file of strategies of development of the company and its line of products, form the second compartment of a digital block of strategies, which includes four sections; users send a task for generating the barcodes over communication channels to the application server of digital transformation of data and come out of operating process of the application server over synthesis of strategies.

For example, the main development strategies of the company are the following: 1) strategies of intensive growth: 1.1) deep penetration into the markets; 1.2) expansion of borders of the markets;1.3) improvement of products; 2) strategies of integration growth: 2.1) regressive integration; 2.2) progressive integration; 2.3) horizontal integration; 3) strategies of diversification growth: 3.1) concentric diversification; 3.2) horizontal diversification; 3.3) conglomerate diversification. The program of strategic development can be based not only on one, but also on various directions of growth, but the producer establishes priority strategy, which will play a major role during a certain period;
4.8.2 - users enter operating process of the application server of digital transformation of data and according the specified parameters and by means of use of a program of type «ActiveBarcode» generate the barcodes of type «QR» or «Data Matrix» for designation of each long-term and current strategy of development of the company and its line of products, include into structure of codes the references to identifiers not only of strategies, but also of the markets, temporal phases, chosen groups of the conditions and restrictions over resources, which influenced the strategies choice of development of the company and its line of products, as well as create the connected barcodes for the second compartment and four sections that enter this compartment; users transfer digital data to the application server over synthesis of strategies over communication channels by means of the OLE technology, implementing the mechanism of interprocessor interaction based on COM, and come out of operating process of the application server of digital transformation of data;
4.9.2 - users enter operation process of the application server over synthesis of strategies; using results of the previous operations, the generated barcodes, they form the second compartment of a digital block of strategies including into it four sections, each of which contains the created files, namely, a file about group of conditions for diversification of activity of the company and differentiation of its product range is included into the first section of the second compartment; a file about possible scenarios of increase of consumer effectiveness of products of the company - into the second section of the second compartment; a file about group of limitations over various resources for expansion of production, creation of the new products and improvement of the known types of products - into the third section of the second compartment; a file about the long-term and current strategies of development of the company and its line of products - into the fourth section of the second compartment; users carry out direct transfer of the created files to the file server owing to using by servers of the installed program «FTP Rush» by means of «FXP» session under «FTP» protocol and come out of operating process on the application server over synthesis of strategies;
4.10.2 - users enter operating process of the file server, register the received files of four sections of the second compartment for storage and file operations, send files into storage of the file server and place under their barcodes in structure of the formed digital block of strategies, which is created over the matrix principle from six vertical compartment and four horizontal sections of each compartment; users carry out direct transfer of a file of database for planning development of the company from a digital block of databases of the first stage, a file of the object-relational model for management of the effectiveness of the line of products of the company from a digital block of DBMS of the second stage, a file of forecasted multidimensional temporal rows of data of demand in the consumer effectiveness of products from a digital analytical block of the third stage, and a file of strategies of development of the company and its line of products from a digital block of strategies of the fourth stage, namely from blocks of storage of the file server to the application server of the target appointment owing to using by servers of installed program «FTP Rush» by means of «FXP» session under «FTP» protocol and come out of operating process of the file server.

The 3rd step - users create the digital sequence of operations and the matrix-digital mechanism of process of synthesis of strategies of transformation of the commodity nomenclature and assortments.

List of designations of operations of the third step of the fourth stage [Fig.4]:
4.1.3 - users enter operating process of the computing server, assess by means of use of the software of type «IBM SPSS Statistics» all possible internal and external factors influencing change of conditions for transformation of indicators of commodity nomenclature and assortments, namely they define the motivational conditions, incentives on the basis of the development tasks, the reached actual data of the width, structure of the commodity nomenclature and width, depth, elasticity, harmony of commodity assortments, useful effect from them owing to using of databases of type «MySQL» and «NoSQL» and of the object-relational models of DBMS for planning the commodity nomenclature and assortments; at the same time, they determine objective conditions on the basis of the forecasted data about change of demand over width, depth, elasticity, harmony, structure of assortments for the long-term period according the forecasted temporal rows of data of demand in commodity assortments; users create a file about groups of conditions and about degree of their constancy for transformation of strategies of development of commodity nomenclature and assortments of the company during the long-term period; users carry out direct transfer of the created file to the application server over synthesis of strategies owing to using by servers of the installed program «FTP Rush» by means of «FXP» session under «FTP» protocol and come out of operating process of the computing server;
4.2.3 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely: data of the databases of type «MySQL» and «NoSQL» for planning the commodity nomenclature and assortments; data of an object-relational model of DBMS for definition of influence on the commodity nomenclature and assortments of various factors; the multidimensional temporal rows of data of demand in the width of the commodity nomenclature and width, depth of commodity assortments during the long-term period; on this basis users build graphs, network graphics, a tree of decisions, a block of charts for visual brainstorming by means of use of tools of software of type «SAS^{∗} Visual Analitics» and of the interactive displays of type «SMART Board, series 7000Pro», with the software «SMART Meeting Pro» and «SMART ink»; as a result, users define all possible scenarios of transformation of indicators of each assortment and the commodity nomenclature in a whole during the forecasted long-term period, as well as establish the main indicators and the directions of their transformation for each scenario, create a file about all possible scenarios of transformation of each assortment and the commodity nomenclature in a whole; users carry out direct file transfer to the computing server owing to using by servers of the installed program «FTP Rush» by means of «FXP» session under «FTP» protocol and come out of operating process on the application server over synthesis of strategies;
4.3.3 - users enter operating process of the computing server, assess potential of resources of the enterprise for implementing the scenarios of development of the commodity assortments, which are reflected on interactive displays, namely of technical base, the labor resources, the reached labor productivity level, capital productivity, the width of the commodity nomenclature and width, depth of commodity assortments by means of use of the program of type «IBM SPSS Statistics, predict saving the resources owing to their rational use and introduction of achievements of science and technique, progress of technologies, also the volumes of financing at the expense to external investments and internal reserves for development of the commodity assortments during the forecasted long-term period and define restrictions in resources for transformation of assortments of the company by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of transformation of the commodity nomenclature and assortments according to their feasibility at financial restrictions, eliminate impracticable scenarios, and for all others define the rating of feasibility, define limitations over resources for possible scenarios of transformation of the commodity nomenclature and assortments and create a file; users send a task for generating the digital codes over communication channels to the application server of digital transformation of data and come out of operating process of the computing server;
4.4.3 - users enter operating process of the application server of digital transformation of data and set digital designations for nomenclature, each assortment, for indicators of offering them, life cycle of the offer, its temporary phases, indicators of planning the resources, indicators of the useful effect of an assortment, generate according the specified parameters by means of use of the program of type «Serial Key Generator» the digital codes for different groups of conditions and restrictions in resources for transformation of the commodity nomenclature and assortments;
4.5.3 - users according the specified parameters and by means of use of the program of type «Serial Key Generator» generate the integrated digital codes for each probable scenario of change of the composition of the commodity nomenclature and assortments, include into structure of these codes the references not only to digital identifiers of a certain market, a temporal phase, group of the conditions influencing the scenario of development of assortments, but also to identifiers of a certain assortment and the indicators defining the scenario of the offer of an assortment, as well as establish connection of the formed codes with digital codes of temporal rows of data of demand in the corresponding indicators of assortments, forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6.3 - users enter operating process on the application server over synthesis of strategies; on the basis of the obtained digital codes and the estimates of the computing server they make changes into files about scenarios of transformation of the commodity assortments, create files about groups of limitations over resources for each scenario and carry out the matrix-digital mechanism of synthesis of strategies of transformation of each assortment by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of a certain assortment; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to chosen scenario define the long-term strategy of transformation of each assortment and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of a certain commodity assortment;
4.7.3 - users synthesize the current strategies over assortments for each phase of the long-term period according to long-term strategies of transformation of the commodity nomenclature and assortments and create a file of strategies of transformation of the commodity nomenclature and assortments, form the third compartment of a digital block of strategies, which includes four sections; users send a task for generating the barcodes over communication channels to the application server of digital transformation of data and come out of operating process of the application server over synthesis of strategies.

For example, the main strategies of transformation of assortments are the following: 1) extension of the commodity nomenclature, assortments by means of entry of the company into the new markets and of positioning of new assortments in the new markets; 2) change of structure of commodity nomenclature and assortments at changing composition of the markets or their segments for positioning products; 3) the narrowing the commodity nomenclature, assortments owing to reduction of number of the markets of positioning products; 4) expansion of assortments and increase of a share of the market, coverage of new segments of the market and new buyers by new products; 5) differentiation of assortments owing to differentiation of inquiries of consumers and increase of various groups of consumers; 6) deepening of assortments by means of increase of number of modifications of already known types of products owing to increase of buyers with the different incomes and qualitative level of needs; 7) narrowing assortments and of zones of positioning products in the chosen segments of the market owing to specific restrictions for composition of buyers; 8) change of structure of commodity assortments by means of emergence of new products, updating of commodity assortments owing to partial change of composition of buyers of products and change of consumer demand; 9) increase in a harmony of commodity assortments for increase in rationality of channels of movement and sale of products; 10) increase in elasticity of commodity assortments for increase in flexibility to changes over the price and quality of separate types of products in composition of the commodity assortment;
4.8.3 - users enter operating process of the application server of digital transformation of data and according the specified parameters and by means of use of a program of type «ActiveBarcode» generate the barcodes of type «QR» or «Data Matrix» for designation of each long-term and current strategy of transformation of the commodity nomenclature and assortments, include into structure of codes the references to identifiers not only of strategies, but also of the markets, temporal phases, chosen groups of the conditions and restrictions over resources, which influenced the strategies choice of transformation of the commodity nomenclature and assortments, as well as create the connected barcodes for the third compartment and four sections that enter this compartment; users transfer digital data to the application server over synthesis of strategies over communication channels by means of the OLE technology, implementing the mechanism of interprocessor interaction based on COM, and come out of operating process of the application server of digital transformation of data;
4.9.3 - users enter operation process of the application server over synthesis of strategies; using results of the previous operations, the generated barcodes, they form the third compartment of a digital block of strategies including into it four sections, each of which contains the created files, namely, a file about group of conditions for change of the structure of the commodity nomenclature and composition of assortments that enter nomenclature is included into the first section of the third compartment; a file about possible scenarios of transformation of the commodity nomenclature and assortments - into the second section of the third compartment; a file about group of limitations of various resources for expansion or narrowing or change of structure of assortments - into the third section of the third compartment; a file about the long-term and current strategies of transformation of the commodity nomenclature and assortments - into the fourth section of the third compartment; users carry out direct transfer of the created files to the file server owing to using by servers of the installed program «FTP Rush» by means of «FXP» session under «FTP» protocol and come out of operating process on the application server over synthesis of strategies;
4.10.3 - users enter operating process of the file server, register the received files of four sections of the third compartment for storage and file operations, send files into storage of the file server and place under their barcodes in structure of the formed digital block of strategies, which is created over the matrix principle from six vertical compartment and four horizontal sections of each compartment; users carry out direct transfer of a file of database for planning the commodity nomenclature and assortments from a digital block of databases of the first stage, a file of the object-relational model for synthesis of data of the offer of the commodity assortments from a digital block of DBMS of the second stage, a file of forecasted multidimensional temporal rows of data of demand in the width of the commodity nomenclature and width, depth of commodity assortments from the digital analytical block of the third stage, and a file of strategies of transformation of indicators of the offer of the commodity nomenclature and assortments from a digital block of strategies of the fourth stage, namely from blocks of storage of the file server to the application server of the target appointment owing to using by servers of installed program «FTP Rush» by means of «FXP» session under «FTP» protocol and come out of operating process of the file server.

The 4th step - users create the digital sequence of operations and the matrix-digital mechanism of process of synthesis of strategies of transformation of the temporal parameters of the offer of products.

List of designations of operations of the fourth step of the fourth stage [Fig.4]:
4.1.4 - users enter operating process of the computing server, assess by means of use of the software of type «IBM SPSS Statistics» all possible internal and external factors influencing change of conditions for transformation of indicators of the life cycles of products, namely they define the motivational conditions, incentives on the basis of the development tasks, the reached actual data of the life cycles of the production, the offer and use of products owing to using of databases of type «MySQL» and «NoSQL» and of the object-relational models of DBMS for planning the life cycles of products; at the same time, they determine objective conditions on the basis of the forecasted trends of change of the life cycles of demand in products during the long-term period according the forecasted temporal rows of data of time of the beginning, duration, termination of stages of life cycles of products; users create a file about groups of conditions and about degree of their constancy for transformation of temporal strategies of the offer of products during the long-term period; users carry out direct transfer of the created file to the application server over synthesis of strategies owing to using by servers of the installed program «FTP Rush» by means of «FXP» session under «FTP» protocol and come out of operating process of the computing server;
4.2.4 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely: data of the databases of type «MySQL» and «NoSQL» for planning the life cycles of products; data of an object-relational model of DBMS for definition of influence on life cycles of products of various factors; the multidimensional temporal rows of data of life cycles of demand in products during the long-term period; on this basis users build graphs, network graphics, a tree of decisions, a block of charts for visual brainstorming by means of use of tools of software of type «SAS^{∗} Visual Analitics» and of interactive displays of type «SMART Board, series 7000Pro», with the software «SMART Meeting Pro» and «SMART ink»; as a result, users define for each group of the similar products all possible scenarios of transformation of indicators of their life cycles during the forecasted long-term period, as well as establish the main indicators and the directions of their transformation for each scenario, create a file about all possible scenarios of transformation of life cycles of different groups of the similar products; users carry out direct file transfer to the computing server owing to using by servers of the installed program «FTP Rush» by means of «FXP» session under «FTP» protocol and come out of operating process on the application server over synthesis of strategies;
4.3.4 - users enter operating process of the computing server, assess potential of resources of the enterprise for implementing the scenarios over life cycles of products, which are reflected on interactive displays, namely of technical base, the labor resources, the reached labor productivity level, capital productivity, rhythms of production, coefficients of temporary stability of the offer of products by means of use of the program of type «IBM SPSS Statistics, predict saving the resources owing to their rational use and introduction of achievements of science and technique, progress of technologies, also the volumes of financing at the expense of external investments and internal reserves for achievement of temporal balance of life cycles of supply and demand during the forecasted long-term period and define restrictions in resources for transformation of the life cycles of the offer of products by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of transformation of the life cycles of production and the offer of products and according to their feasibility at financial restrictions, eliminate impracticable scenarios, and for all others define the rating of feasibility, define limitations over resources for possible scenarios of transformation of the life cycles of products and create a file; users send a task for generating the digital codes over communication channels to the application server of digital transformation of data and come out of operating process of the computing server;
4.4.4 - users enter operating process of the application server of digital transformation of data and set digital designations for each type of a product, temporal parameters of offering a product, life cycle of the offer, its temporary phases, indicators of planning the resources, indicators of the useful effect of a product, generate according the specified parameters by means of use of the program of type «Serial Key Generator» the digital codes for different groups of conditions and restrictions in resources for transformation of the temporal parameters of creation and the offer of various products;
4.5.4 - users according the specified parameters and by means of use of the program of type «Serial Key Generator» generate the integrated digital codes for each probable scenario of temporal parameters of production and the offer of products in the market, include into structure of these codes the references not only to digital identifiers of a certain market, a temporal phase, group of the conditions influencing the scenario of temporal parameters of positioning products in the markets, but also to identifiers of a product type and the temporal parameters defining the scenario, as well as establish connection of the formed codes with digital codes of temporal rows of data of the life cycles of demand in products, forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6.4 - users enter operating process on the application server over synthesis of strategies; on the basis of the obtained digital codes and the estimates of the computing server they make changes into files about scenarios of transformation of the life cycles of the offer of products, create files about groups of restrictions over resources for each scenario and carry out the matrix-digital mechanism of synthesis of strategies of transformation of the life cycles of each group of the similar products by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of restrictions over resources and a vector of the scenario of transformation of life cycles of a certain group of similar products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to chosen scenario define the long-term strategy of transformation of the life cycles of the similar products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of the life cycles of a certain group of the similar products;
4.7.4 - users synthesize the current strategies of temporal balance with current phases of demand in each phase of the long-term period according to long-term strategies of transformation of the life cycles of products and create a file of strategies of transformation of the life cycles of products, form the fourth compartment of a digital block of strategies, which includes four sections; users send a task for generating the barcodes over communication channels to the application server of digital transformation of data and come out of operating process of the application server over synthesis of strategies.

For example, the main strategies of transformation of life cycles of products are the following: 1) change of duration of production of various types of products and temporal parameters of introduction of products in different markets; 2) lengthening the life cycle of the offer of products in the markets; 3) reduction of life cycle of the offer of various types of products in various segments of the market; 4) change of duration of various stages of life cycle of the offer of products in the market; 5) lengthening the temporary stability of parameters of positioning products in the markets (time of an invariance of the price, quality, volume of the offered products); 6) change of temporary stability over separate parameters of the offer of products, for example, change of time of the offer only over the price or only over quality of products;
4.8.4 - users enter operating process of the application server of digital transformation of data and according the specified parameters and by means of use of a program of type «ActiveBarcode» generate the barcodes of type «QR» or «Data Matrix» for designation of each long-term and current strategy of transformation of the life cycles of various groups of the similar products, include into structure of codes the references to identifiers not only of strategies, but also of the markets, temporal phases, chosen groups of the conditions and restrictions over resources, which influenced the strategies choice of transformation of the life cycles of products, as well as create the connected barcodes for the fourth compartment and four sections that enter this compartment; users transfer digital data to the application server over synthesis of strategies over communication channels by means of the OLE technology, implementing the mechanism of interprocessor interaction based on COM, and come out of operating process of the application server of digital transformation of data;
4.9.4 - users enter operation process of the application server over synthesis of strategies; using results of the previous operations, the generated barcodes, they form the fourth compartment of a digital block of strategies including into it four sections, each of which contains the created files, namely, a file about group of conditions for change of time of the beginning, duration and termination of the offer of products is included into the first section of the fourth compartment; a file about possible scenarios of transformation of the temporal parameters of the offer of various products - into the second section of the fourth compartment; a file about group of limitations of various resources for change of duration of life cycles of products and their separate stages and for their synchronization with life cycles of demand - into the third section of the fourth compartment; a file about the long-term and current strategies of transformation of the life cycles of the offer of various products - into the fourth section of the fourth compartment; users carry out direct transfer of the created files to the file server owing to using by servers of the installed program «FTP Rush» by means of «FXP» session under «FTP» protocol and come out of operating process on the application server over synthesis of strategies;
4.10.4 - users enter operating process of the file server, register the received files of four sections of the fourth compartment for storage and file operations, send files into storage of the file server and place under their barcodes in structure of the formed digital block of strategies, which is created over the matrix principle from six vertical compartment and four horizontal sections of each compartment; users carry out direct transfer of a file of database for planning the life cycles of products from a digital block of databases of the first stage, a file of the object-relational model for synthesis of temporal parameters of the offer of products from a digital block of DBMS of the second stage, a file of forecasted multidimensional temporal rows of data of demand in the indicators of the life cycles of products from a digital analytical block of the third stage, and a file of strategies of transformation of the life cycles of the offer of products from a digital block of strategies of the fourth stage, namely from blocks of storage of the file server to the application server of the target appointment owing to using by servers of installed program «FTP Rush» by means of «FXP» session under «FTP» protocol and come out of operating process of the file server.

The 5th step - users create the digital sequence of operations and the matrix-digital mechanism of process of synthesis of strategies of transformation of the target function and quality of products.

List of designations of operations of the fifth step of the fourth stage [Fig.4]:
4.1.5 - users enter operating process of the computing server, assess by means of use of the software of type «IBM SPSS Statistics» all possible internal and external factors influencing change of conditions for transformation of the target function and quality of products, namely they define the motivational conditions, incentives on the basis of the development tasks, the reached actual data of the target function, indicators of quality of products, useful effect from them, profitability of production owing to using of databases of type «MySQL» and «NoSQL» and of the object-relational models of DBMS for planning the target function, quality of products; at the same time, they determine objective conditions on the basis of the forecasted data of change of the target function, indicators of quality of products for the long-term period according the forecasted temporal rows of data of the target function and quality of products; users create a file about groups of conditions and about degree of their constancy for transformation of strategies of development of quality of products during the long-term period; users carry out direct transfer of the created file to the application server over synthesis of strategies owing to using by servers of the installed FTP Rush program by means of FXP session under the FTP protocol and come out of operating process of the computing server;
4.2.5 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely data of the databases of type «MySQL» and «NoSQL» for planning the target function and quality of products; data of an object-relational model of DBMS for definition of influence on indicators of the target function and quality of products of various data; the multidimensional temporal rows of data of demand in the target function and quality of products during the long-term period; on this basis users build graphs, network graphics, a tree of decisions, a block of charts for visual brainstorming by means of use of tools of software of type «SAS ^{∗} Visual Analitics» and of interactive displays of type «SMART Board, series 7000Pro», with the software «SMART Meeting Pro» and «SMART ink», as a result, users define all possible scenarios of transformation of qualitative indicators of products during the forecasted long-term period, as well as establish the main indicators among indicators of quality and the directions of their transformation for each scenario, create a file about all possible scenarios of transformation of target function, quality of the offer of different groups of the similar products; users carry out direct file transfer to the computing server owing to using by servers of the installed program «FTP Rush» by means of «FXP» session under «FTP» protocol and come out of operating process on the application server over synthesis of strategies;
4.3.5 - users enter operating process of the computing server, assess potential of resources of the enterprise for implementing the scenarios of development of quality of products, which are reflected on interactive displays, namely of technical base, the labor resources, the reached labor productivity level, capital productivity, material consumption, and the cost of products by means of use of the program of type «IBM SPSS Statistics, predict saving the resources owing to their rational use and introduction of achievements of science and technique, progress of technologies, the volumes of financing at expense of external investments and internal reserves for improvement of quality of products during the forecasted long-term period and define restrictions in resources for transformation of the target function, quality of products by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of improvement of quality of products according to their feasibility at financial restrictions, eliminate impracticable scenarios, and for all others define the rating of feasibility, define limitations over resources for possible scenarios of transformation of the target function, quality of products and create a file; users send a task for generating the digital codes over communication channels to the application server of digital transformation of data and come out of operating process of the computing server;
4.4.5 - users enter operating process of the application server of digital transformation of data and set digital designations for each type of a product, for indicators of quality and the target function of a product, life cycle of the offer, its temporal phases, indicators of planning the resources, indicators of the useful effect of a product, generate according the specified parameters by means of use of the program of type «Serial Key Generator» the digital codes for different groups of conditions and restrictions in resources for transformation of the target function, quality of various products;
4.5.5 - users according the specified parameters and by means of use of the program of type «Serial Key Generator» generate the integrated digital codes for each probable scenario of change of the qualitative parameters of the offer of products, include into structure of these codes the references not only to digital identifiers of a certain market, a temporal phase, group of the conditions influencing the scenario of change of quality of products, but also to identifiers of a product type and the qualitative indicators defining the scenario, as well as establish connection of the formed codes with digital codes of temporal rows of data of demand in the corresponding indicators of quality of products, forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6.5 - users enter operating process on the application server over synthesis of strategies; on the basis of the obtained digital codes and the estimates of the computing server they make changes into files about scenarios of transformation of the target function and quality of products, create files about groups of limitations over resources for each scenario and carry out the matrix-digital mechanism of synthesis of strategies of transformation of the qualitative parameters of the offer of each group of the similar products by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of quality of a certain group of the similar products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to chosen scenario define the long-term strategy of transformation of the target function and quality of each group of the similar products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of the target function, quality of the offer of a certain group of the similar products;
4.7.5 - users synthesize the current strategies of quality for each phase of the long-term period according to long-term strategies of transformation of the target function and quality of products and create a file of strategies of transformation of the qualitative parameters of products, form the fifth compartment of a digital block of strategies, which includes four sections; users send a task for generating the barcodes over communication channels to the application server of digital transformation of data and come out of operating process of the application server over synthesis of strategies.

For example, the main strategies of transformation of target function and quality of products are the following: 1) improvements of quality of basic types of products; 2) development of novelties of better quality; 3) development of cheap novelties of average quality; 4) decrease of quality of the morally outdated goods that exit from fashion for decrease of the price on them; 5) increase in the effectiveness of target function of a product at decrease in cumulative expenses; 6) increase of the effectiveness of target function at the admissible level of increase of cumulative cost; 7) decrease of the operating cost of a product; 8) invariance or admissible decrease of the effectiveness of target function of a product at decrease of the cumulative cost;
4.8.5 - users enter operating process of the application server of digital transformation of data and according the specified parameters and by means of use of a program of type «ActiveBarcode» generate the barcodes of type «QR» or «Data Matrix» for designation of each long-term and current strategy of transformation of the qualitative parameters of the offer of various groups of the similar products, include into structure of codes the references to identifiers not only of strategies, but also of the markets, temporal phases, chosen groups of the conditions and restrictions over resources, which influenced the strategies choice of transformation of the target function and quality of products, as well as create the connected barcodes for the fifth compartment and four sections that enter this compartment; users transfer digital data to the application server over synthesis of strategies over communication channels by means of the OLE technology, implementing the mechanism of interprocessor interaction based on COM, and come out of operating process of the application server of digital transformation of data;
4.9.5 - users enter operation process of the application server over synthesis of strategies; using results of the previous operations, the generated barcodes, they form the fifth compartment of a digital block of strategies including into it four sections, each of which contains the created files, namely, a file about group of conditions for change of indicators of quality of products is included into the first section of the fifth compartment; a file about possible scenarios of transformation of the target function, qualitative parameters of the offer of various products - into the second section of the fifth compartment; a file about group of limitations over various resources for improvement of indicators of quality and the target function of products - into the third section of the fifth compartment; a file about the long-term and current strategies of transformation of the target function and qualitative parameters of the offer of various products - into the fourth section of the fifth compartment; users carry out direct transfer of the created files to the file server owing to using by servers of the installed program «FTP Rush» by means of «FXP» session under «FTP» protocol and come out of operating process on the application server over synthesis of strategies;
4.10.5 - users enter operating process of the file server, register the received files of four sections of the fifth compartment for storage and file operations, send files into storage of the file server and place under their barcodes in structure of the formed digital block of strategies, which is created over the matrix principle from six vertical compartment and four horizontal sections of each compartment; users carry out direct transfer of a file of database for planning the target function and quality of products from a digital block of databases of the first stage, a file of the object-relational model for synthesis of the qualitative parameters of the offer of products from a digital block of DBMS of the second stage, a file of forecasted multidimensional temporal rows of data of demand in the target function and quality of products from a digital analytical block of the third stage, and a file of strategies of transformation of qualitative parameters of the offer of products from a digital block of strategies of the fourth stage, namely from blocks of storage of the file server to the application server of the target appointment owing to using by servers of installed program «FTP Rush» by means of «FXP» session under «FTP» protocol and come out of operating process of the file server.

The 6th step - users create the digital sequence of operations and the matrix-digital mechanism of process of synthesis of strategies of data transformation of the offer of products in strategic segments of various markets.

List of designations of operations of the sixth step of the fourth stage [Fig.4]:
4.1.6 - users enter operating process of the computing server, assess by means of use of the software of type «IBM SPSS Statistics» all possible internal and external factors influencing change of conditions for transformation of the offer of products, namely they define the motivational conditions, incentives on the basis of the development tasks, the reached actual data of the parameters of effectiveness of target function, volume, price of the offer of products, useful effect from them owing to using of databases of type «MySQL» and «NoSQL» and of the object-relational models of DBMS for planning the indicators of the offer of products; at the same time, they determine objective conditions on the basis of the forecasted trends of change of both quantitative and quality requests of consumers for the long-term period according the forecasted temporal rows of data of demand in the effectiveness of target function, in the volume, price of products; users create a file about groups of conditions and about degree of their constancy for transformation of strategies of development of products of the company during the long-term period; users carry out direct transfer of the created file to the application server over synthesis of strategies owing to using by servers of the installed program «FTP Rush» by means of «FXP» session under «FTP» protocol and come out of operating process of the computing server;
4.2.6 - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including data from blocks, created on the first, second and third stage of the Way on the file server, namely: data of the databases of type «MySQL» and «NoSQL» for planning the indicators of the offer of products; data of an object-relational model of DBMS for definition of influence on each other of various data of indicators of the offer of products; the multidimensional temporal rows of data of demand in the effectiveness of target function, in the volume, price of products during the long-term period; on this basis users build graphs, network graphics, a tree of decisions, a block of charts for visual brainstorming by means of use of tools of software of type «SAS^{∗} Visual Analitics» and of interactive displays of type «SMART Board, series 7000Pro», with the software «SMART Meeting Pro» and «SMART ink»; as a result, users define for each group of the similar products all possible scenarios of transformation of indicators of offering their during the forecasted long-term period, as well as establish among them the main indicators and the directions of their transformation for each scenario, create a file about all possible scenarios of transformation of a plurality of data of the effectiveness of target function, the volume, price of the offer of various groups of the similar products; users carry out direct file transfer to the computing server owing to using by servers of the installed program «FTP Rush» by means of «FXP» session under «FTP» protocol and come out of operating process on the application server over synthesis of strategies;
4.3.6 - users enter operating process of the computing server, assess potential of resources of the enterprise for implementing the scenarios of the offer of products, which are reflected on interactive displays, namely of technical base, the labor resources, the reached labor productivity level, capital productivity, material consumption and the cost of products by means of use of the program of type «IBM SPSS Statistics, predict saving the resources owing to their rational use and introduction of achievements of science and technique, progress of technologies, the volumes of financing at the expense of external investments and internal reserves for improvement of the offered products during the forecasted long-term period and define restrictions in resources for transformation of indicators of the offer of products by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of the offer of products in the markets according to their feasibility at financial restrictions, eliminate impracticable scenarios, and for all others define the rating of feasibility, define limitations over resources for possible scenarios of transformation of indicators of the offer of products and create a file; users send a task for generating the digital codes over communication channels to the application server of digital transformation of data and come out of operating process of the computing server;
4.4.6 - users enter operating process of the application server of digital transformation of data and set digital designations for each type of a products, for indicators of the effectiveness of target function, volume, price of the offer of a product, life cycle of the offer, its temporary phases, indicators of planning the resources, indicators of the useful effect of a product, generate according the specified parameters by means of use of the program of type «Serial Key Generator» the digital codes for different groups of conditions and restrictions in resources for transformation of indicators of the offer of various products;
4.5.6 - users according the specified parameters and by means of use of the program of type «Serial Key Generator» generate the integrated digital codes for each probable scenario of change of the target function, the volume, price of the offer of products, include into structure of these codes the references not only to digital identifiers of a certain market, a temporal phase, group of the conditions influencing the scenario of the offer of products, but also to identifiers of a product type and the indicators defining the scenario of the offer of products, as well as establish connection of the formed codes with digital codes of temporal rows of data of demand in the corresponding indicators of the offer of products, forecasted at the third stage of the Way; users transfer digital data to the application server over synthesis of strategies over communication channels by means of technology OLE, implementing the mechanism of interprocessor interaction based on COM, and come out of operating process of the application server of digital transformation of data;
4.6.6 - users enter operating process on the application server over synthesis of strategies; on the basis of the obtained digital codes and the estimates of the computing server they make changes into files about scenarios of the offer of products, create files about groups of limitations over resources for each scenario and carry out the matrix-digital mechanism of synthesis of strategies of transformation of data of the offer of each group of the similar products by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of data of the offer of a certain group of the similar products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors in relation to axes of coordinates and to each other are reached; according to chosen scenario define the long-term strategy of transformation of data of the offer of each group of the similar products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of data of the offer of a certain group of the similar products;
4.7.6 - users synthesize the current strategies over products for each phase of the long-term period according to long-term strategies of transformation of indicators of the offer of products and create a file of strategies of transformation of data of the offer of products, form the sixth compartment of a digital block of strategies, which includes four sections; users send a task for generating the barcodes over communication channels to the application server of digital transformation of data and come out of operating process of the application server over synthesis of strategies.

For example, the main strategies relatively of products and markets are the following: 1) the differentiated marketing, which consists in increase of sales volumes due to inclusion into composition of assortment of new products, more various over quality and the price, and at the expense of this the broad penetration into the markets; 2) undifferentiated marketing, which consists in the offer of the same types of products in the different markets, and expansion of the markets and sales volumes, it is reached usually by means of decrease of the price on products; 3) the concentrated marketing consists in bigger coverage of former market, on which company has an exit owing to improvement of quality, effectiveness of target function and of optimization of the prices; 4) «successor» in various segments of the market consists in increase in sales volumes by means of increase of a share of coverage of the former market owing to coverage of segments, which competitors left; 5) preservation of positions in the market consists in preservation of sales volumes and of a share of coverage of the market by means of finding of optimum proportions of the price and quality of products for the current level of consumer demand; 6) strategies of the active marketing, of the passive or intensive marketing consist in the advance of sale of goods, but they differ from each other over expenses on publicity and by volumes of sale, and each of them can be combined with success with the different strategies of the offer of products;
4.8.6 - users enter operating process of the application server of digital transformation of data and according the specified parameters and by means of use of a program of type «ActiveBarcode» generate the barcodes of type «QR» or «Data Matrix» for designation of each long-term and current strategy of transformation of data of the offer of various groups of the similar products, include into structure of codes the references to identifiers not only of strategies, but also of the markets, temporal phases, chosen groups of the conditions and restrictions over resources, which influenced the strategies choice of transformation of data of indicators of the offer of products, as well as create the connected barcodes for the sixth compartment and four sections that enter this compartment; users transfer digital data to the application server over synthesis of strategies over communication channels by means of the OLE technology, implementing the mechanism of interprocessor interaction based on COM, and come out of operating process of the application server of digital transformation of data;
4.9.6 - users enter operation process of the application server over synthesis of strategies; using results of the previous operations, the generated barcodes, they form the sixth compartment of a digital block of strategies including into it four sections, each of which contains the created files, namely, a file about group of conditions for transformation of indicators of the offer of products is included into the first section of the sixth compartment; a file about possible scenarios of transformation of indicators of the effectiveness of target function, volume, price of the offer of various products - into the second section of the sixth compartment; a file about group of limitations over various resources for change of indicators of volume and the price of the offer of products of a certain quality and functional appointment - into the third section of the sixth compartment; a file about the long-term and current strategies of transformation of indicators of the offer of various products - into the fourth section of the sixth compartment; users carry out direct transfer of the created files to the file server owing to using by servers of the installed program «FTP Rush» by means of «FXP» session under «FTP» protocol and come out of operating process on the application server over synthesis of strategies;
4.10.6 - users enter operating process of the file server, register the received files of four sections of the sixth compartment for storage and file operations, send files into storage of the file server and place under their barcodes in structure of the formed digital block of strategies, which is created over the matrix principle from six vertical compartment and four horizontal sections of each compartment; users carry out direct transfer of a file of database for planning the indicators of the offer of products from a digital block of databases of the first stage, a file of the object-relational model for synthesis of data in program of the offer of products from a digital block of DBMS of the second stage, a file of forecasted multidimensional temporal rows of data of demand in the effectiveness of target function, in the volume, price of the offer of products from a digital analytical block of the third stage, and a file of strategies of transformation of indicators of the offer of products from a digital block of strategies of the fourth stage, namely from blocks of storage of the file server to the application server of the target appointment owing to using by servers of installed program «FTP Rush» by means of «FXP» session under «FTP» protocol and come out of operating process of the file server.

Upon termination of the tenth operation at all levels of the Fourth subsystem and finishing of all steps of the fourth stage of the Way, users come out of network of the Fourth subsystem.

The system includes network of the Fifth interactive subsystem [Fig.8], into which users make entry for performance of the fifth stage of the Way [Fig. 5].

The network of the Fifth subsystem unites the following interacting elements of the System: the application server of target appointment that uses the software of type «IBM WebSphere Business Modeler», of type «Advanced Grapher», as well as of type «ZWCAD»; the application server of digital transformation of data with the software of type «Serial Key Generator» and of type «ActiveBarcode»; the computing server with the software of type of «IBM SPSS Statistics Standard», «SAS^{∗} Visual Forecasting», «DecideIT»; the file server with the software of type «Windows Server 2012 R2 NTFS»; these servers are connected with each other by communication channels; the application server of target appointment, using program of direct file transfer «FTP Rush» by means of «FXP» session under «FTP» protocol, receives files from blocks of databases and of object-relational models of DBMS, as well as from an analytical block and a block of strategies of storage of the file server. The computing server and the application server of target appointment are equipped by interactive panels of type «SMART Board», series 7000 Pro that work on the basis of the software «SMART Meeting Pro», «SMART ink», as well as these servers interact with other servers of the Fifth subsystem that has four levels connected over communication channels by the general installation, the general process of performance of four steps of the fifth stage of the Way.

Action of servers of the Fifth subsystem is intended for planning and generating a plurality of the output data of the target strategic program of the offer of products in interrelation with temporal and spatial parameters, as well as for formation of a digital block of strategic programs and consists in work of servers of this subsystem over performance of the operating processes consisting in consecutive performance of operations of each step of the fifth stage of the Way, and the communication processes consisting in procedures of an entrance and exit from operating process on each of servers and in their interaction with each other by means of communication channels for transfer of a stream of data received owing to operating process at implementing the following steps of the fifth stage of the Way: 5.1-12.1; 5.1-12.2; 5.1-12.3; 5.1-12.4, respectively at the 1st, 2nd, 3rd, 4th level of the Fifth subsystem.

The list of designations of structural elements of the Fifth subsystem - the 5th fragment of the System [Fig. 8]:
8.0 - System;
8.3 - computing server of the System;
8.5 - server of the application of the System over digital transformation of data;
8.6 - server of the application of the System of the target appointment;
8.7 - file server of the System;
8.033; 8.063 - interactive panels «SMART Board», respectively of the computing server and the server of application of the target appointment;
8.8 - controllers of the System.

At all levels of the Fifth subsystem the following operations are carried out:
5.1 - 5.12 - the operations of the fifth stage of the Way which are carried out on different servers in operating network of the Fifth subsystem.

### List of designations of the 5th stage of the Way [Fig.5].

The 5th stage - the Way of generating a plurality of the output data of the target strategic program of the offer of products in interrelation with temporal and spatial parameters and of formation of a digital block of strategic programs.

[Fig.5] - «The matrix-digital model of process of generating a plurality of data of the target strategic program of the offer of products and of formation of a digital block of strategic programs» is the fifth main model of the Way, which characterizes in a digital form the sequence of steps of the fifth stage and operations of each step, also matrix interrelations between steps and operations of the fifth stage.

List of designations of steps of the fifth stage [Fig.5]:
5.1-12.1 - users create the digital sequence of operations and the matrix-digital mechanism of process of generating a plurality of data of the strategic program of the offer of the commodity nomenclature and assortments;
5.1-12.2 - users create the digital sequence of operations and the matrix-digital mechanism of process of generating a plurality of the temporal parameters of the strategic program of the offer of products;
5.1-12.3 - users create the digital sequence of operations and the matrix-digital mechanism of process of generating a plurality of data of the target function, qualitative parameters of the strategic program of the offer of products;
5.1-12.4 - users create the digital sequence of operations and the matrix-digital mechanism of process of generating a plurality of data of the effectiveness of target function, the volumes, prices of the strategic program of the offer of products.

List of designations of operations of the fifth stage [Fig.5]:
5.1 - users enter operating process of the application server of the target appointment and build in a format 3 D by means of use of the program of type «ZWCAD» (for Windows 10) the multidimensional matrix-digital models at each step of the fifth stage of the Way, which are called subsequently «models», namely: model of assortments is being built at the first step; model of life cycles - at the second step; model of quality - at the third step; model of the offer of products - at the fourth step of the fifth stage of the Way; users reflect various types of products and phases of the life cycles of supply and demand in vertical columns, but which are located in different spatial coordinates of each matrix model, whereas spatial parameters of positioning products in the markets, also indicators of the offer of products in the markets - in horizontal sections of each model, as well as divide each cell in half to place data of indicators of demand in the top part of cells, whereas data of indicators of the offer of products generate in the lower part of cells of each model; users reflect the created models in 3D format on interactive displays of type «SMART Board 7000 Pro» for the coordinated work of developers of the project with models by means of the software «SMART Meeting Pro» and «SMART ink» and for use of the constructed models in a role of the tools of multi-purpose optimization and planning of a plurality of data of the strategic program of the offer of products in conformity with a principle of «set theory» at each step of the fifth stage of the Way;
5.2 - users analyze the data obtained from blocks of the previous stages, input digital designations that are identical to the identifiers of the markets, demand, the offer, types of products, temporal phases, indicators of products, which were established at the previous stages into models, determine in a digital format the fields of matrix-digital models on each step of the fifth stage of the Way;
5.3 - users carry out the automatic input of the forecasted data of demand in products into the top part of cells of each model, the entered data were defined for different markets and phases of the long-term period on the basis of temporal rows of the data of demand, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of data of the offer of products at each step of the fifth stage of the Way;
5.4 - users simulate the potentially possible plurality of data of the offer of each product in various markets during different phases of the long-term period by means of use of the software of type «IBM WebSphere Business Modeler», which allows to form a list of the key indicators of the offer of products, to tie them to business processes, to connect them with indicators of effectiveness and aggregate useful effect of products, calculated over formulas that are denoted «*KPI»*, *«AUE», «AUE*_{∪}», as well as to consider at modeling: the forecasted temporal rows of data of demand in products; the established interrelations between data and indicators of the offer of products; the limitations over various resources for transformation of indicators of the offer of products; the chosen strategies of the offer of products; users load files of these data, received over communication channels, into an imitation model by means of program tools at once, namely: files of a block of object-relational models of the second stage, files of an analytical block of the third stage, files of a block of strategies of the fourth stage, and on the basis of results of all previous stages they simulate combinations of a plurality of data of the offer of products at each step of the fifth stage of the Way; users send tasks for generating the digital codes over communication channels to the application server of digital transformation of data and come out of operating process of the application server of the target appointment;
5.5 - users enter operating process of the application server of digital transformation of data; according the specified parameters and by means of use of the program of type «Serial Key Generator», users generate the integrated digital codes for designation of data of various indicators of both demand and the offer in each cell of a model of assortments, a model of life cycles, a model of quality, a model of the offer of products, respectively, and include into structure of these digital codes the references not only to digital identifiers of a model, a product type, various indicators of demand or the offer but also to identifiers of both a certain market and a certain phase of the long-term period, define common features of the generated codes of indicators of the offer of products with digital codes of indicators of demand that are forecasted for a long-term outlook; on the basis of the generated digital codes for designation of indicators of the offer of products users form the series of intermediate digital codes for designation of data in combinations of a model of each step of the fifth stage of the Way; users transfer digital data to the application server of the target appointment over communication channels by means of OLE technology, implementing a mechanism of interprocessor interaction based on COM, and come out of operating process of the application server of digital transformation of data;
5.6 - users enter operating process of the application server of the target appointment, reflect models of each step of the fifth stage on interactive displays of type «SMART Board», series 7000 Pro, with the software «SMART Meeting Pro» and «SMART ink», as well as create in 3D format on separate displays various combinations of these models owing to consecutive replacement in the lower part of their cells of one combination of a plurality of data of the offer of products and their intermediate codes by another combination, each of which differs not only by data of various indicators of the offer of products, but also by temporal and spatial parameters of their placement in various markets in various phases of the long-term period for the subsequent comparative analysis and assessment of effectiveness of the created combinations of each model, respectively of a model of assortments - at the first step, a model of life cycles - at the second step, a model of quality - at the third step, a model of the offer of products - at the fourth step of the fifth stage of the Way; users carry out a remote connection to the computing server by means of use of the program for remote access of type «SMART TeamWorks» for further work of group of developers with the models that are displayed on interactive displays of the computing server, stop the operating process on the application server of the target appointment, but do not come out of it fully, they do not switch off interactive displays and do not close programs «SMART Meeting Pro» and «SMART ink»,
5.7 - users enter operating process of the computing server and assess the target function, efficiency, profitability of products, coefficient of the effectiveness of a plurality of data of the offer of products owing to use of the program of type «IBM SPSS Statistics», reflect data in interactive displays by means of programs «SMART Meeting Pro» and «SMART ink» and calculate over formulas «AUE», «AUE_{∪}» the potential aggregate useful effect from offering of both each product and all products in different combinations of a model of each step of the fifth stage of the Way, taking into account that all data in them are presented in a matrix form and are connected, impacting on each other, calculate summary indicators of aggregate useful effect, place them by means of the software «SMART Meeting Pro» and «SMART ink in summary cells of combinations of each model; as a result, users obtain data about synergistic effectiveness of both each product and all set of products during full life cycle of their offering in all markets in combinations of a model of each step of the fifth stage of the Way;
5.8 - users carry out in a digital format the comparative assessment of various combinations of a plurality of data of indicators of the offer of products on the basis of the received estimates of their useful effect, and decide the multicriteria tasks on the basis of constructed flowcharts of decision-making owing to use of interactive displays and software of type «DecideIT», reflect results of the multicriteria comparative assessment of effectiveness of various combinations of each model on interactive displays and recommend an optimum combination, respectively for a model of assortments - at the first step; for a model of life cycles - at the second step; for a model of quality - at the third step; for a model of the offer of products - at the fourth step of the fifth stage of the Way; users transfer results of operations of the computing server to the application server of the target appointment by means of a remote session of the program for remote access of type «SMART TeamWork» and come out of operating process of the computing server;
5.9 - users resume the suspended operating process on the application server of the target appointment; on the basis of data of the previous operations they choose from all possible combinations the most productive combination, respectively for a model of assortments, a model of life cycles, a model of quality, a model of the offer of products, in each of which such strategic range of a plurality of data of the offer of products is generated, which provides the highest synergistic effectiveness, namely by means of the full version of each model, aggregated over all products, users determine the most productive combination of a plurality of data of the offer of each product in various markets and phases of its life cycle, which is a part of the offer of all products of the company at optimization of expenses over the offer of products in a whole, as well as users synthesize summary cells of models, change the intermediate digital codes by the constant digital codes at designation of data of the offer of products in the lower half of cells of models and complete formation of files of created models at each step of the fifth stage of the Way; users send tasks for generating the barcodes over communication channels to the application server of digital transformation of data and come out of operating process of the application server of the target appointment;
5.10 - users enter operating process of the application server of digital transformation of data and according the specified parameters, by means of use of the program of type «ActiveBarcode» generate the barcodes of type «QR» or «Data Matrix» for designation of each model, strategic program over assortments, life cycles, the target function and quality, indicators of the offer of products, as well as for designation of the commodity nomenclature, each assortment, each product of the strategic program for the subsequent definition over the barcode of any assortment or product the planned plurality of data of the offer of it in the strategic program during the long-term period; as a result, users form barcodes for the integrated target strategic program and for a block of strategic programs and transfer all created barcodes to the application server of the target appointment over communication channels owing to using OLE technology, implementing the mechanism of interprocessor interaction based on COM, and come out of operation process of the application server of digital transformation of data;
5.11 - users enter operating process of the application server of target appointment; using the system of the generated digital codes and a synergistic plurality of data of models, they create files of final documents of strategic programs, namely of the strategic program over commodity nomenclature and assortments with range of the output data of the width, depth, composition of the offer of each assortment - at the first step, of the strategic program over temporal parameters of the offer of products with range of the output data of time of the beginning, duration and the termination of phases of life cycle of the offer of each product-at the second step, of the strategic program of quality with range of the output data of a plurality of indicators of quality and the target function of each product - at the third step, of the strategic program of the offer of products with range of the output data of a plurality of indicators of the effectiveness of the target function, the volume, price of the offer of each product in various markets during phases of long-term period - at the fourth step of the fifth stage of the Way; users unite all strategic programs, which are connected with each other, one program cannot be performed without each another program, into the target strategic program of the offer of products of the company; users carry out direct transfer of the created files to the file server owing to using by servers of the installed program «FTP Rush» by means of «FXP» session under «FTP» protocol and come out of operation process of the application server of target appointment;
5.12 - users enter operating process of the file server, register the received files of models and strategic programs under their barcodes for storage and file operations, send files into storage of the file server and place into a digital block of strategic programs, which unites all files of the fifth stage; this block is a result of operation process of all steps of the fifth stage of the Way on all levels of the Fifth subsystem; users carry out direct transfer of the files of models and strategic programs of the fifth stage from a block of strategic programs of the storage of the file server to the application server of target appointment owing to using by servers of the installed program «FTP Rush» by means of «FXP» session under «FTP» protocol and come out of operating process of the file server.

The 1st step - users create the digital sequence of operations and the matrix-digital mechanism of process of generating a plurality of data of the strategic program of the offer of the commodity nomenclature and assortments.

List of designations of operations of the first step of the fifth stage [Fig.5]:
5.1.1 - users enter operating process of the application server of the target appointment and build in 3D format a multidimensional matrix-digital model of assortments, which is called subsequently «model of assortments» by means of use of the program of type «ZWCAD» (for Windows 10); users reflect various types of assortments and the phases of the life cycles of supply and demand in vertical columns, but which are located in different spatial coordinates of a matrix model, whereas spatial parameters - strategic zones of the company in the markets, also the composition of modifications of a certain group of products of each assortment - in horizontal sections of a model, as well as divide each cell in half to place data of demand in the composition of a certain assortment in the top part of cells, whereas data of the offered composition of assortment generate in the lower part of cells of a model, reflect the created model of assortments in 3D format on interactive displays of type «SMART Board 7000 Pro» for the coordinated work of developers of the project with a model by means of the software «SMART Meeting Pro» and «SMART ink» and for use of the constructed model of assortments in a role of a tool of multi-purpose optimization and planning of the composition of assortments of the strategic program in conformity with a principle of «set theory»;
5.2.1 - users analyze the data obtained from blocks of the previous stages, input into a model of assortments digital designations that are identical to the identifiers of the markets, demand, the offer, types of assortments, temporal phases and indicators of the width, depth of assortments, which were established at the previous stages, and determine in a digital format the fields of a matrix-digital model of assortments;
5.3.1 - users carry out the automatic input of data of demand in various assortments into the top part of cells of a model of assortments, the entered data were defined for different markets and phases of the long-term period on the basis of temporal rows of the data of demand in the width, depth of various assortments, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of data of the offer of assortments of the company;
5.4.1 - users simulate the potentially possible composition, the width, depth of the offer of each assortment in various markets during different phases of the long-term period by means of use of the software of type «IBM WebSphere Business Modeler», which allows to form a list of the key indicators of the offer of assortments, to tie them to business processes, to connect them with indicators of effectiveness and aggregate useful effect of assortments, calculated over formulas «*AUE»,* « *AUE*_{∪}», as well as to consider at modeling: the forecasted temporal rows of data of demand in assortments; the established interrelations between product groups of assortments; the limitations over various resources for transformation of assortments; the chosen strategies of the offer of assortments; users load files for planning assortments, which are received over communication channels from a digital block of object-relational models, from a digital analytical block, and from a digital block of strategies, respectively of the second, third and fourth stage of the Way, into an imitation model by means of program tools at once, and on the basis of results of all previous stages they simulate combinations of a plurality of data of the offer of assortments; users send a task for generating the digital codes over communication channels to the application server of digital transformation of data and come out of operating process of the application server of the target appointment;
5.5.1 - users enter operating process of the application server of digital transformation of data; according the specified parameters and by means of use of the program of type «Serial Key Generator», users generate the integrated digital codes for designation of data of both demand and the offer of assortments in each cell of a model of assortments and include into structure of these digital codes the references not only to digital identifiers of a model, an assortment type, various indicators of demand or offer but also to identifiers of both a certain market and a certain phase of the long-term period, define common features of the generated codes of indicators of the offer of assortments with digital codes of indicators of demand that are forecasted for a long-term outlook; on the basis of digital codes for designation of data of the offer of assortments for a long-term outlook users form the series of intermediate digital codes for designation of data in combinations of a model of assortments; users transfer digital data to the application server of the target appointment over communication channels by means of OLE technology, implementing a mechanism of interprocessor interaction based on COM, and come out of operating process of the application server of digital transformation of data;
5.6.1 - users enter operating process of the application server of the target appointment, reflect a model of assortments on interactive displays of type «SMART Board», series 7000 Pro, with the software «SMART Meeting Pro» and «SMART ink», as well as create in 3D format on separate displays various combinations of this model owing to consecutive replacement in the lower part of cells of a model of one combination of a plurality of data of the offer of assortments and their intermediate codes by another combination, each of which differs not only by structure and the width of the commodity nomenclature and not only by composition, the width, depth, harmony of each assortment in it, but also by both temporal and spatial parameters of placement of assortments in various markets and temporal phases of the long-term period for the subsequent comparative analysis and assessment of the effectiveness of the created combinations of a model of assortments; users carry out a remote connection to the computing server by means of use of the program for remote access of type «SMART TeamWorks» for further work of group of developers with the combinations of a model of assortments that are displayed on interactive displays of the computing server, stop the operating process on the application server of the target appointment, but do not come out of it fully, they do not switch off interactive displays and do not close programs «SMART Meeting Pro» and «SMART ink».

Example of a matrix-digital way of generating a plurality of data of the strategic program of the offer of the commodity nomenclature and assortments by means of creation of model of assortments.

[Fig.5.1] - «Matrix-digital model of generating a plurality of data of the offer of assortments in interrelation with temporal and spatial parameters».

List of the designations to Fig. 5.1:
5.1 - the process of generating composition of the commodity assortments;
5.1.3 - markets;
5.1.31; 5.1.32; 5.1.33 - the first, second, third market, respectively (it is conditionally accepted that number of the markets, in which the assortments are offered, is three);
5.1.1 - the life cycle of demand in the commodity assortment;
5.1.2 - the life cycle of the offer of the commodity assortment;
5.1.11; 5.1.12; 5.1.13; 5.1.14; 5.1.15 - the first, second, third, fourth, fifth phase of consumer demand in assortment, namely the temporal phases: emergence; acceleration, stabilization, decline, attenuation until disappearance of demand, respectively;
5.1.21; 5.1.22; 5.1.23; 5.1.24; 5.1.25 - the first, second, third, fourth, fifth phase of the commodity offer, namely temporal phases: introduction, growth, maturity, decrease of offering, removal of an assortment from the market, respectively;
5.1.0 - composition of the commodity assortment;
5.1.00 - the commodity nomenclature that includes assortments 01 and 02;
5.1.01 - composition (width) of the commodity assortment 01;
5.1. 02 - composition (width) of the commodity assortment 02;
5.1.01.131; 5.1.01.132; 5.1.01.133 - demand in the composition (at the width) of the commodity assortment 01 during the full life cycle of demand in the first, second, third market, respectively;
5.1.02.131; 5.1.02.132; 5.1.02.133 - demand in the composition (at the width) of the commodity assortment 02 during the full life cycle of demand in the first, second, third market, respectively;
5.1.01.231; 5.1.01.232; 5.1.01.233 - the composition (the width) of the offer of the commodity assortment 01 during the full life cycle in the first, second, third market, respectively;
5.1.02.231; 5.1.02.232; 5.1.02.233 - the composition (the width) of the offer of the commodity assortment 02 during the full life cycle in the first, second, third market, respectively;
5.1.01.13 - cumulative demand of all markets in the composition (at the width) of the commodity assortment 01 during the full life cycle;
5.1.02.13 - cumulative demand of all markets in the composition (at the width) of the commodity assortment 02 during the full life cycle;
5.1.01.23 - the cumulative offer of the composition (of the width) of the commodity assortment 01 during the full life cycle in all markets;
5.1.02.23 - the cumulative offer of the composition (of the width) of the commodity assortment 02 during the full life cycle in all markets;
5.1.011; 5.1.012; 5.1.013; 5.1.014; 5.1.015 - the composition of products kinds in structure of the assortment 01 in the first, second, third, fourth, fifth phase of the life cycle of the assortment 01, respectively;
5.1.021; 5.1.022; 5.1.023; 5.1.024; 5.1.025 - the composition of products kinds in structure of the assortment 02 in the first, second, third, fourth, fifth phase of the life cycle of the assortment 02, respectively;
5.1.0.03 - the cumulative composition of assortments in all markets;
5.1.011.1131; 5.1.012.1231; 5.1.013.1331; 5.1.014.1431; 5.1.015.1531 - demand of the first market (31) in the commodity assortment 01 into the first, second, third, fourth, fifth phase of demand, respectively;
5.1.011.1132; 5.1.012.1232; 5.1.013.1332; 5.1.014.1432; 5.1.015.1532 - demand of the second market (32) in the commodity assortment 01 into the first, second, third, fourth, fifth phase of demand, respectively;
5.1.011.1133; 5.1.012.1233; 5.1.013.1333; 5.1.014.1433; 5.1.015.1533 - demand of the third market (33) in the commodity assortment 01 into the first, second, third, fourth, fifth phase of demand, respectively;
5.1.011.113; 5.1.012.123; 5.1.013.133; 5.1.014.143; 5.1.015.153 - cumulative demand of all markets in the commodity assortment 01 into the first, second, third, fourth, fifth phase of demand, respectively;
5.1.021.1131; 5.1.022.1231; 5.1.023.1331; 5.1.024.1431; 5.1.025.1531 - demand of the first market (31) in the commodity assortment 02 into the first, second, third, fourth, fifth phase of demand, respectively;
5.1.021.1132; 5.1.022.1232; 5.1.023.1332; 5.1.024.1432; 5.1.025.1532 - demand of the second market (32) in the commodity assortment 02 into the first, second, third, fourth, fifth phase of demand, respectively;
5.1.021.1133; 5.1.022.1233; 5.1.023.1333; 5.1.024.1433; 5.1.025.1533 - demand of the third market (33) in the commodity assortment 02 into the first, second, third, fourth, fifth phase of demand, respectively;
5.1.021.113; 5.1.022.123; 5.1.023.133; 5.1.024.143; 5.1.025.153 - cumulative demand of all markets in the commodity assortment 02 into the first, second, third, fourth, fifth phase of demand, respectively;
5.1.011.2131; 5.1.012.2231; 5.1.013.2331; 5.1.014.2431; 5.1.015.2531 - the offer of the commodity assortment 01 in the first market (31) into the first, second, third, fourth, fifth phase, respectively;
5.1.011.2132; 5.1.012.2232; 5.1.013.2332; 5.1.014.2432; 5.1.015.2532 - the offer of the commodity assortment 01 in the second market (32) into the first, second, third, fourth, fifth phase, respectively;
5.1.011.2133; 5.1.012.2233; 5.1.013.2333; 5.1.014.2433; 5.1.015.2533 - the offer of the commodity assortment 01 in the third market (33) into the first, second, third, fourth, fifth phase, respectively;
5.1.011.213; 5.1.012.223; 5.1.013.233; 5.1.014.243; 5.1.015.253 - the cumulative offer of the commodity assortment 01 in all markets into the first, second, third, fourth, fifth phase, respectively;
5.1.021.2131; 5.1.022.2231; 5.1.023.2331; 5.1.024.2431; 5.1.025.2531 - the offer of the commodity assortment 02 in the first market (31) into the first, second, third, fourth, fifth phase, respectively;
5.1.021.2132; 5.1.022.2232; 5.1.023.2332; 5.1.024.2432; 5.1.025.2532 - the offer of the commodity assortment 02 in the second market (32) into the first, second, third, fourth, fifth phase, respectively;
5.1.021.2133; 5.1.022.2233; 5.1.023.2333; 5.1.024.2433; 5.1.025.2533 - the offer of the commodity assortment 02 in the third market (33) into the first, second, third, fourth, fifth phase, respectively;
5.1.021.213; 5.1.022.223; 5.1.023.233; 5.1.024.243; 5.1.025.253 - the cumulative offer of the commodity assortment 02 in all markets into the first, second, third, fourth, fifth phase, respectively;
5.1.4 - the aggregate useful effect of the offered assortment;
5.1.4.011.213; 5.1.4.012.223; 5.1.4.013.233; 5.1.4.014.243; 5.1.4.015.253 - the aggregate useful effect from offering in all markets of the commodity assortment 01 into the first, second, third, fourth, fifth phase, respectively;
5.1.4.021.213; 5.1.4.022.223; 5.1.4.023.233; 5.1.4.024.243; 5.1.4.025.253 - the aggregate useful effect from offering in all markets of the commodity assortment 02 into the first, second, third, fourth, fifth phase, respectively;
5.1.4.01.23 - the aggregate useful effect from offering the commodity assortment 01 during its full life cycle in all markets;
5.1.4.02.23 - the aggregate useful effect from offering the commodity assortment 02 during its full life cycle in all markets;
5.1.4.00 - the aggregate useful effect from offering the commodity nomenclature;
5.1.4.00.231; 5.1.4.00.232; 5.1.4.00.233 - the aggregate useful effect of the commodity nomenclature for the full life cycle of its offering in the first, second, third market, respectively;
5.1.4.01.231; 5.1.4.01.232; 5.1.4.01.233 - the aggregate useful effect of the commodity assortment 01 for the full life cycle of its offering in the first, second, third market, respectively;
5.1.4.02.231; 5.1.4.02.232; 5.1.4.02.233 - the aggregate useful effect of the commodity assortment 02 for the full life cycle of its offering in the first, second, third market, respectively;
5.1.4.00.23 - the aggregate useful effect of the commodity nomenclature for the full life cycle of offering of all its assortments in all markets.

The model of assortments shows the matrix-digital mechanism of generating structure of assortments in the three-dimensional system of coordinates according to data of demand and in interrelation with temporary and spatial parameters [Fig. 5.1]. The model of assortments [Fig.5.1] is constructed on the example of two commodity assortments 01 and 02, each of assortment is offered in various modifications in three markets and in various phases of life cycle; this model is a fragment of full matrix-digital model of assortments, which includes all set of assortments in structure of the commodity nomenclature, also all types of products in composition of each assortment.

Using a model of assortments, users establish the conditional designations for generating the integral digital codes, these codes include the references to other identifiers and are complex codes. For example, each digital code in model is begun with digit 5.1 for definition of belonging of data to the fifth stage, the first matrix-digital model and to process of generating structure of the offer of the commodity assortments. The demand is denoted as 1, the offer - 2, the markets - 3. Therefore, the digital code of temporary phases of demand or the offer in the first part contains a reference to 1 or 2 depending on belonging to demand or the offer, whereas a certain temporal phase is denoted after this. This approach is used for definition of digital codes of various modifications of the assortment. Users set belonging of modification of the assortment to the process, to the commodity assortment, a temporal phase and the market, in which this modification of the assortment is positioned, in order that to generate the digital code of each modification of assortment and to connect different assortments with each other by means of the digital codes.

In matrix-digital model of assortments each cell is divided in two parts [Fig.5.1]; data of the width, depth and composition of each commodity assortment, which are predicted for stages of life cycle of demand, are reflected in the top part of each cell of model, whereas the planned data of these indicators for stages of life cycle of the offer are placed in the lower half of cells. The digital codes of various modifications of the commodity assortment are the reference designations of groups of products entering it. If to assume that each modification of the commodity assortment has relation to various phases of life cycle of demand, then it is necessary to determine the width, depth and composition of the offer of each assortment separately for phases of introduction, growth, a maturity, decrease in the offer and removal from the market. Users plan various commodity assortments included into structure of the commodity nomenclature according to demand, placing them in model under their digital codes. During creation of matrix-digital model of assortments the users consider each product as a component of a whole, in which each element influences at each other and the end result, reflected in cumulative cells of model of assortments.

The model of assortments is a tool by means of which users find such optimum combinations of various types of products as parts of each commodity assortment, as well as composition of assortments in structure of the commodity nomenclature, which lead to the best synergistic result in various markets and temporal phases of demand than all known analogs. The commodity assortment can be offered in various markets in various composition, can also change with change of temporal phases. The model of multi-purpose optimization of the commodity nomenclature and assortments is dynamic, because indicators of the width, depth and structure of the offer of commodity assortments in each temporal phase and in the different markets will constantly change under the influence of change of consumer demand and owing to objective passing by products of the life cycles in various markets.

The model of assortments is intended for planning of movement of products from one group to other consumer group in process of transition to the following phase of their life cycle. Users forecast «migrations» of products groups of each assortment in the markets, taking into account that the width, depth and composition of the offered commodity assortment can change, and it is very important that these changes corresponded to changes of demand, because the expansion or narrowing of the assortment change demand in composition of assortment in a whole. Besides, users optimize not only offer of each separate assortment, but it is as part of the composition of all assortments of the company, therefore any replacements in composition of one of the commodity assortments can cause chain reaction of change of demand in composition of other commodity assortments of the company.

Users consider the financial restrictions of both producers and consumers in course of formation of the strategic program over assortments. For example, if production of one of products grows, then production of another analog often decreases, also the increase of demand volume in one type of products can lead to the reduction of demand or even to total disappearance of demand in other type of products. The changes of volumes and prices of demand in various types of products at expansion of the assortment by new types of products or at its narrowing have to be predicted too, because the competition exists both among producers and among buyers, and also between types of products.

Users define a cumulative plurality of data of demand and supply of each assortment in a certain market during full life cycle in summary vertical cells, respectively in the top part and in the lower part of cells of a model of assortments, whereas they define a cumulative plurality of data of demand and supply of each assortment in all markets but in a certain phase of its life cycle in summary horizontal cells, respectively in the top part and in the lower part of cells of a model of assortments. Users define a cumulative plurality of data of demand and supply of each assortment in all markets during full life cycle respectively in top and lower part of aggregate cell of a model of assortments. The model of assortments is used as basic also for situational transformation of the width and depth of the offer of each assortment at the 6^{th} stage of the Way.

Users find compatibility both between different types of products in composition of each assortment and different assortments in structure of the commodity nomenclature by means of use of full model of assortments. For this purpose, users simulate different combinations of this model and find among them the most productive combination by means of calculation of useful effect in its summary cells. It is a task of the following operation;
5.7.1 - users enter operating process of the computing server and assess the width, depth, harmony of assortments in structure of the nomenclature in each combination of a model of assortments owing to use of the program of type «IBM SPSS Statistics», reflect data in interactive displays by means of programs «SMART Meeting Pro» and «SMART ink» and calculate over formulas *«AUE; AUE*_{∪}» the potential aggregate useful effect from composition of each assortment and all offered assortments in different combinations of a model of assortments, taking into account that all data in them are presented in a matrix form and are connected, impacting on each other, calculate summary indicators of aggregate useful effect from assortments, place them by means of the software «SMART Meeting Pro» and «SMART ink in summary cells of each combination of a model of assortments; as a result, users obtain data about synergistic effectiveness of both each assortment and all set of assortments during full life cycle of their offering in all markets in combinations of a model of assortments.

The indicators that define the compatibility, harmony of various types of products with each other as parts of assortment, also degree of their elasticity (of flexibility) to change of demand have to be calculated for comprehensive assessment of effectiveness of various compositions of the commodity assortment [Merkulova Yu. V. Situational-strategic planning in economy. Volume 1. Methodology of optimization of indicators of supply and demand. The 3rd edition, with additions and changes. - M.: Economy, 2017, p.73,74, 79,80]. These indicators are the basis for more exact definition of reserves of growth of aggregate useful effect from each assortment not only for the producer, but also for consumers.

The aggregate useful effect is the sum of useful effects of the producer and consumers. However, useful effect is calculated also over a plurality of summary parameters, for example, from offering assortment in all markets but in a certain phase of the long-term period and from offering assortment during full life cycle but in a certain market, these data is reflected, respectively in horizontal and vertical final cells of estimate of each combination of a model of assortments, and the aggregate useful effect from offering each assortment in all markets during full life cycle is counted in corresponding cells in each combination of a model. These data of useful effect from offering each assortment in final cells of a model of assortments allow to define contribution of each assortment into aggregate useful effect from offering all commodity nomenclature in a whole.

The aggregate useful effect of the commodity nomenclature is defined as a cumulative plurality from pluralities of aggregate useful effects of different assortments. The calculation of aggregate useful effect from each assortment and the commodity nomenclature is based on use of group of the formulas designated in a short form «*AUE*_{∪}» [Merkulova Yu.V. Situational-strategic planning in economy. Volume 1. Methodology of optimization of indicators of supply and demand. The 3rd edition, with additions and changes. -M.: Economy, 2017, p. 215, 216].

The matrix-digital mechanism of the constructed model of assortments [Fig.5.1] is a tool by means of which users calculate aggregate useful effect from a plurality of data, it allows to find the balanced structure of assortments in a model of assortments, to receive synergistic result owing to increase of the effectiveness, accuracy, reliability of the output data of the assortments program and to reach the higher technical result, than at the known analogs. This feature distinguishes optimization of the data in matrix model from optimization of data without model.

Assessment of useful effect of assortments is a necessary part of process of transformation of compositions of assortments, these estimates are intended for implementing the subsequent operations of consecutive comparison and the choice of optimal solutions, beginning from optimization of local pluralities, for example, of composition of a certain assortment for the selected market segment in a certain phase of demand, and until optimization of a complex plurality, namely, the commodity nomenclature in a whole. It is a task of the following operation;

5.8.1 - users carry out in a digital format the comparative assessment of various combinations of a model of assortments and respectively of various compositions of products in them on the basis of the received estimates of their useful effect, and decide the multicriteria tasks on the basis of constructed flowcharts of decision-making owing to use of interactive displays and software of type «DecideIT», reflect results of the multicriteria comparative assessment of the effectiveness of various combinations of data in interactive displays and recommend an optimum combination of a model of assortments; users transfer results of operations of the computing server to the application server of the target appointment by means of a remote session of the program for remote access of type «SMART TeamWork» and come out of operating process of the computing server.

Example of the flowchart of decision-making over transformation of the strategic program for the offer of assortments.

[Fig. 5.2] - The flowchart of decision-making over transformation of width of the offer of an assortment.

List of the designations to Fig.5.2:
5.2 - process of decision-making over width of a certain assortment;
5.2.1; 5.2.2; 5.2.3 - operations of formation of the first, second, third option of strategic range of values of width of a certain assortment, respectively;
5.2.2.1 - the operation answering a question: «Whether will provide narrowing of a certain assortment over the second option at the specified restrictions and resources opportunities of the second option an increment of aggregate useful effect of an assortment? », if «no», users make transition to assessment of possible expansion of the assortment to an admissible limit of change of data of the second option if «yes», then they carry out the detailing operation;
5.2.2.3 - operation answering a question: «Whether the narrowing of the assortment to the minimum limit of data of the second option is enough by optimal for receiving the maximum increment of aggregate useful effect of an assortment? », if «no», users make transition to assessment of change of assortment over the first variant; if «yes», then the optimal variant is found;
5.2.2.2 - the operation answering a question: «Whether will provide expansion of a certain assortment over the second option at the specified restrictions and resources opportunities of the second option an increment of the aggregate useful effect of an assortment? » (if «no», then users return to search the new variants, if «yes», then they carry out the detailing operation;
5.2.2.4 - operation, answering a question: «Whether expansion of the assortment to the maximum limit of data of the second option is enough by optimal for receiving the maximum increment of the aggregate useful effect of an assortment? », if «no», then users make transition to assessment of changes of assortment over the third option, if «yes», then the optimal variant is found;
5.2.1.1; 5.2.3.1 - the operations answering a question: «Whether will provide narrowing of a certain assortment, respectively over the first or the third variant at the specified restrictions and resources opportunities of the first or the third option, an increment of aggregate useful effect of commodity assortment? », if «no», then users return to search of the new variants, if «yes», then they carry out the detailing operation (for assessment of the first, third variant, respectively);
5.2.1.3; 5.2.3.3 - the operations answering a question: «Whether the narrowing of the assortment to the minimum limit of data, respectively of the first or the third variant, is enough by optimal for receiving an maximum increment of aggregate useful effect?», if «yes», then the optimal variant is found, if «no», then users make transition to assessment of possible expansion of the assortment at the first or third variant, respectively (for assessment of the first, third variant, respectively);
5.2.1.2; 5.2.3.2 - the operations answering a question: «Whether will provide expansion of a certain assortment, respectively over the first or the third variant, at the specified restrictions and resources opportunities of the first or the third option, an increment of aggregate useful effect of an assortment? », if «no», then users return to search of the new variants, if «yes», then they carry out the detailing operation (for assessment of the first, third variant, respectively);
5.2.1.4; 5.2.3.4 - the operations answering a question: «Whether expansion of the assortment to the maximum limit of data, respectively of the first or the third option, is enough by optimal for receiving the maximum increment of aggregate useful effect of an assortment? », if «yes», then the optimal variant is found; if «no», then users return to search of the new options (for assessment of the first, third variant, respectively);
5.2.1.5; 5.2.2.5; 5.2.3.5 - operations of the choice of an optimal variant of expansion or narrowing of the assortment among the first, second or third option;
5.2.4 - operation of return to search of new options of width of a certain assortment.

The process of decision-making over transformation of data of width of the offer of an assortment is demonstrated on the example of the flowchart [Fig. 5.2]. It is conditionally accepted, what three options of transformation of width of the commodity assortment are generated, and users choose that variant for the strategic program, which contains the most productive range of change of width of the assortment.

Range of possible values is established for each variant. The maximum level of data for the first variant of the width of assortment is established to the minimum level of data for the second variant, and the minimum level of data of this indicator for the third variant is established after achievement of the maximum data of the width of assortment at the second variant. Thereby, users establish limit borders of fluctuations: from the minimum level of the width of the offer of assortment over the first variant and to the maximum level over the third variant. Users begin assessment with the second option, i.e. with the average range of data of width of a certain assortment between two extremums.

If the aggregate useful effect can be increased by means of narrowing of the assortment over the second variant, then users begin assessment of the first variant, but if it is possible by means of expansion of the assortment, then they make transition to assessment of the third variant of the strategic program of the offer of this assortment. Users at the same time set restrictions in resources for performance of each variant of the strategic program over assortments. They make the choice of variant of optimization on the basis of analysis of consumer inquiries and the chosen assortment strategy and estimate the chosen variant of optimization of width of the assortment on achievement of goals, taking into account certain restrictions in resources for it.

If users establish that the range of change of the width of assortment of the chosen variant is insufficient for finding of the optimal solution or required width of the assortment cannot be reached at the admissible level of expenses for this variant of optimization, then they begin search of new options of optimization of width of this commodity assortment. If at any of the chosen options the required range of data of width of the assortment is reached with admissible expenses and leads to greatest possible increment of useful effect, then the optimum strategic range of data of width of the offer of a certain assortment is found, and users finish optimization process.

In the reviewed example it is conditionally accepted that there are only three options of solutions, but on practice of variants of solutions can be much bigger, everything depends from the size of range of each of options. Therefore, digital character of the constructed models is very important, because it allows to generate the bigger number of combinations of decisions, to present them in the compact form and to increase the speed of comparison of all possible variants for finding of the most productive solution.

The flowchart of the choice of width of the assortment is a base for creation of an algorithm and can be used as a base of the solution of a task of multicriteria optimization by means of use of tools of program «DecideIT» for comparison over several criteria of different options and the choice of optimum range of data of the width, depth, harmony of assortments; it increases the accuracy and reliability of the output data of the strategic program of the offer of assortments;
5.9.1 - users resume the suspended operating process on the application server of the target appointment; on the basis of data of the previous operations they choose from all possible combinations the most productive combination of a model of assortments, in which such strategic range of a plurality of data of the width and depth of each assortment is generated, which provides the highest synergistic effectiveness, namely by means of the full version of this model, aggregated over all assortments, users determine the most productive combination of the composition of each assortment, which is a part of the commodity nomenclature of the company at optimization of expenses over the commodity nomenclature in a whole, as well as users synthesize summary cells of a model of assortments, change the intermediate digital codes by the constant digital codes at designation of data of the offer of assortments in the lower half of cells of a model and complete formation of a file of the created model of assortments; users send a task for generating the barcodes over communication channels to the application server of digital transformation of data and come out of operating process of the application server of the target appointment;
5.10.1 - users enter operating process of the application server of digital transformation of data and according the specified parameters, by means of use of the program of type «ActiveBarcode» generate the barcodes of type «QR» or «Data Matrix» for designation of a digital model of assortments and the strategic program over assortments, as well as for designation of the commodity nomenclature, each assortment and its groups of products for the subsequent definition over the barcode of any assortment the planned plurality of data of the offer of it in the strategic program during the long-term period; as a result, users transfer all created barcodes to the application server of the target appointment over communication channels owing to using OLE technology, implementing the mechanism of interprocessor interaction based on COM, and come out of operation process of the application server of digital transformation of data;
5.11.1 - users enter operating process of the application server of target appointment; using the received digital codes and data of a model of assortments, they create in a digital format the first section of the target strategic program of the offer of assortments, with range of the output data of width, depth, structure of each assortment; users form a file of the final document of strategic program of assortments, carry out direct transfer of the created files of a model of assortments and the strategic program of the offer of assortments to the file server owing to using by servers of the installed program «FTP Rush» by means of «FXP» session under «FTP» protocol and come out of operation process of the application server of target appointment;
5.12.1 - users enter operating process of the file server, register the received files of a model of assortments and the strategic program of the offer of assortments under their barcodes for storage and file operations, send files into storage of the file server and place into a digital block of strategic programs, which unites all files of the strategic programs and is a result of operation process of all steps of the fifth stage of the Way; users carry out direct transfer of the files of a model of assortments and the strategic program of the offer of assortments from a block of strategic programs of the storage of the file server to the application server of target appointment owing to using by servers of the installed program «FTP Rush» by means of «FXP» session under «FTP» protocol and come out of operating process of the file server.

The 2nd step - users create the digital sequence of operations and the matrix-digital mechanism of process of generating a plurality of the temporal parameters of the strategic program of the offer of products.

List of designations of operations of the second step of the fifth stage [Fig.5]:
5.1.2 - users enter operating process of the application server of the target appointment and build in 3D format a multidimensional matrix-digital model of life cycles, which is called subsequently «model of life cycles» by means of use of the program of type «ZWCAD» for Windows 10; users reflect various types of products and the phases of the life cycles of supply and demand in vertical columns, but which are located in different spatial coordinates of a matrix model, whereas spatial parameters of positioning products in the markets, also the temporal parameters of the beginning, duration and termination of demand and the offer of each product in the markets - in horizontal sections of a model, as well as divide each cell in half to place data of temporal parameters of demand in the top part of cells, whereas temporal parameters of the offer of products generate in the lower part of cells of a model, reflect the created model of life cycles in 3D format on interactive displays of type «SMART Board 7000 Pro» for the coordinated work of developers of the project with a model by means of the software «SMART Meeting Pro» and «SMART ink» and for use of the constructed model of life cycles in a role of a tool of multi-purpose optimization and planning of a plurality of the temporal parameters of the strategic program of the offer of products in conformity with a principle of «set theory»;
5.2.2 - users analyze the data obtained from blocks of the previous stages, input into a model of life cycles digital designations that are identical to the identifiers of the markets, demand, the offer, types of products, temporal phases and to indicators of the beginning, duration, termination of stages of life cycle, which were established at the previous stages, and determine in a digital format the fields of a matrix-digital model of life cycles;
5.3.2 - users carry out the automatic input of the temporal parameters of demand in various products into the top part of cells of a model of life cycles, the entered data were defined for different markets and phases of the long-term period on the basis of temporal rows of the data of demand, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of the temporal parameters of the offer of products;
5.4.2 - users simulate the potentially possible temporal parameters of the offer of each product in various markets during different phases of the long-term period by means of use of the software of type «IBM WebSphere Business Modeler», which allows to form a list of the key indicators of the life cycles of products, to tie them to business processes, to connect them with indicators of effectiveness and aggregate useful effect of products, calculated over formulas «*KPI»*, *«AUE», «AUE*_{∪}», as well as to consider at modeling: the forecasted temporal rows of data of demand in products; the established interrelations between various life cycles of products, resources, supply and demand; the limitations over various resources for transformation of the life cycles of products; the chosen strategies of transformation of the temporal parameters of the offer of products; users load files for planning the life cycles of products, which are received over communication channels from a digital block of object-relational models, from a digital analytical block, and from a digital block of strategies, respectively of the second, third and fourth stage of the Way, into an imitation model by means of program tools at once, and on the basis of results of all previous stages they simulate combinations of a plurality of the temporal parameters of the offer of products; users send a task for generating the digital codes over communication channels to the application server of digital transformation of data and come out of operating process of the application server of the target appointment;
5.5.2 - users enter operating process of the application server of digital transformation of data; according the specified parameters and by means of use of the program of type «Serial Key Generator», users generate the integrated digital codes for designation of the temporal parameters of both demand and the offer in each cell of a model of life cycles and include into structure of these digital codes the references not only to digital identifiers of a model, a product type, various indicators of demand or the offer but also to identifiers of both a certain market and a certain phase of the long-term period, define common features of the generated codes of the temporal parameters of the offer of products with digital codes of the temporal parameters of demand that are forecasted for a long-term outlook; on the basis of digital codes for designation of the temporal parameters of the offer of products for a long-term outlook users form the series of intermediate digital codes for designation of data in combinations of a model of life cycles; users transfer digital data to the application server of the target appointment over communication channels by means of OLE technology, implementing a mechanism of interprocessor interaction based on COM, and come out of operating process of the application server of digital transformation of data;
5.6.2 - users enter operating process of the application server of the target appointment, reflect a model of life cycles on interactive displays of type «SMART Board», series 7000 Pro, with the software «SMART Meeting Pro» and «SMART ink», as well as create in 3D format on separate displays various combinations of this model owing to consecutive replacement in the lower part of cells of a model of one combination of temporal parameters of the offer of products and their intermediate codes by another combination, each of which differs not only by indicators of time of the beginning, duration, termination of various stages of life cycles of the offer of products but also by spatial parameters of their placement in various markets in different phases of the long-term period for the subsequent comparative analysis and assessment of the effectiveness of the created combinations of a model of life cycles; users carry out a remote connection to the computing server by means of use of the program for remote access of type «SMART TeamWorks» for further work of group of developers with the combinations of a model of life cycles that are displayed on interactive displays of the computing server, stop the operating process on the application server of the target appointment, but do not come out of it fully, they do not switch off interactive displays and do not close programs «SMART Meeting Pro» and «SMART ink».

Example of a matrix-digital way of generating a plurality of the temporal parameters of the strategic program of the offer of products by means of creation of «model of the life cycles».

[Fig. 5.3] - «Matrix-digital model of generating a plurality of temporal parameters of the offer of products in interrelation with spatial parameters».

List of the designations to Fig. 5.3:
5.3 - the process of generating the temporal parameters of the offer of products on the example of a certain type of product;
5.3.3 - markets;
5.3.31; 5.3.32 - market 1, 2 respectively (it is conditionally accepted that number of the markets, in which products are offered, is two);
5.3.1 - the life cycle of demand in a product;
5.3.2 - the life cycle of the offer of a product;
5.3.11; 5.3.12; 5.3.13; 5.3.14; 5.3.15 - the first, second, third, fourth, fifth phase of consumer demand in a product, namely temporal phases: emergence; acceleration, stabilization, decline, attenuation until disappearance of demand, respectively;
5.3.21; 5.3.22; 5.3.23; 5.3.24; 5.3.25 -the first, second, third, fourth, fifth phase of the offer of a product, namely temporal phases: introduction, growth, maturity, decrease of offering, removal of a product from the market, respectively;
5.3.00.1 - the temporal parameters of the beginning of the life cycle of a product on the market;
5.3.00.2 - the temporal parameters of the termination of the life cycle of a product in the market;
5.3.00.3 - the duration of the life cycle of a product in a certain market;
5.3.0 - type of a product;
5.3.01 - demand in a product;
5.3.02 - the offer of a product;
5.3.11.1.0131; 5.3.12.1.0131; 5.3.13.1.0131; 5.3.14.1.0131; 5.3.15.1.0131 - the temporal parameters of the beginning of a phase of emergence, acceleration, stabilization, decrease and attenuation of demand in a product in the first market, respectively;
5.3.11.1.0132; 5.3.12.1.0132; 5.3.13.1.0132; 5.3.14.1.0132; 5.3.15.1.0132 - the temporal parameters of the beginning of a phase of emergence, acceleration, stabilization, decrease and attenuation of demand in a product in the second market, respectively;
5.3.21.1.0231; 5.3.22.1.0231; 5.3.23.1.0231;5.3.24.1.0231; 5.3.25.1.0231 - the temporal parameters of the beginning of a phase of introduction, growth, maturity, decrease of offering and removal of a product from the first market;
5.3.21.1.0232; 5.3.22.1.0232; 5.3.23.1.0232; 5.3.24.1.0232; 5.3.25.1.0232 - the temporal parameters of the beginning of a phase of introduction, growth, maturity, decrease of offering and removal of a product from the second market;
5.3.11.2.0131; 5.3.12.2.0131; 5.3.13.2.0131; 5.3.14.2.0131; 5.3.15.2.0131 - the temporal parameters of the termination of a phase of emergence, acceleration, stabilization, decrease and attenuation of demand in a product in the first market;
5.3.11.2.0132; 5.3.12.2.0132; 5.3.13.2.0132; 5.3.14.2.0132; 5.3.15.2.0132 - the temporal parameters of the termination of a phase of emergence, acceleration, stabilization, decrease and attenuation of demand in a product in the second market;
5.3.21.2.0231; 5.3.22.2.0231; 5.3.23.2.0231;5.3.24.2.0231; 5.3.25.2.0231 - the temporal parameters of the termination of a phase of introduction, growth, maturity, decrease of offering and removal of a product from the first market;
5.3.21.2.0232; 5.3.22.2.0232; 5.3.23.2.0232; 5.3.24.2.0232; 5.3.25.2.0232 - temporal parameters of the termination of a phase of introduction, growth, maturity, decrease of offering and removal of a product from the second market;
5.3.11.3.0131; 5.3.12.3.0131; 5.3.13.3.0131; 5.3.14.3.0131; 5.3.15.3.0131 - the temporal parameters of the duration of a phase of emergence, acceleration, stabilization, decrease and attenuation of demand in a product in the first market;
5.3.11.3.0132; 5.3.12.3.0132; 5.3.13.3.0132; 5.3.14.3.0132; 5.3.15.3.0132 - the temporal parameters of the duration of a phase of emergence, acceleration, stabilization, decrease and attenuation of demand in a product in the second market;
5.3.21.3.0231; 5.3.22.3.0231; 5.3.23.3.0231;5.3.24.3.0231; 5.3.25.3.0231 - the temporal parameters of the duration of a phase of introduction, growth, maturity, decrease of offering and removal of a product from the first market;
5.3.21.3.0232; 5.3.22.3.0232; 5.3.23.3.0232; 5.3.24.3.0232; 5.3.25.3.0232 - the temporal parameters of the duration of a phase of introduction, growth, maturity, decrease of offering and removal of a product from the second market;
5.3.1.3.0131; 5.3.1.3.0132 - the temporal parameters of duration of all life cycle of demand in a product in the first, second market, respectively;
5.3.2.3.0231; 5.3.2.3.0232 - the temporal parameters of the duration of all life cycle of the offer of a product in the first, second market, respectively;
5.3.11.3.013; 5.3.12.3.013; 5.3.13.3.013; 5.3.14.3.013; 5.3.15.3.013 - the general duration of demand of all markets in a product into the phases of emergence, acceleration, stabilization, decrease, attenuation of demand, respectively;
5.3.21.3.023; 5.3.22.3.023; 5.3.23.3.023; 5.3.24.3.023; 5.3.25.3.023 - the general duration of the offer of a product in all markets into the phases of introduction, growth, a maturity, decrease and removal of a product from the market, respectively;
5.3.1.3.013 - the general duration of the life cycle of demand in a product in all markets (it is estimated since the earliest time of appearance of demand in a product in one of the markets and terminates with demand disappearance in a product in the last market);
5.3.2.3.023 - the general duration of the life cycle of the offer of a product in all markets (it is estimated since the earliest time of introduction of a product on one of the markets and terminates in time of the removal of a product from the last market);
5.3.4 - the aggregate useful effect of a product of a certain life cycle;
5.3.4.2.0231; 5.3.4.2.0232 - the aggregate useful effect of the offered product owing to synchronization of the life cycle of the offer of a product with demand of the first and the second market, respectively;
5.3.4.21.3.023; 5.3.4.22.3.023; 5.3.4.23.3.023; 5.3.4.24.3.023; 5.3.4.25.3.023 - the aggregate useful effect of a product on each of phases of offering owing to synchronization of the temporal parameters of the first, second, third, fourth, fifth phase of the offer of a product with the temporal parameters of the corresponding phases of demand;
5.3.4.2.023 - the aggregate useful effect from offering a product in all markets owing to synchronization of the full cycle of the offer of a product with the life cycle of demand.

The model of life cycle shows the matrix-digital mechanism of synchronization of temporal parameters of the offer of products with temporal parameters of demand in products in the three-dimensional system of coordinates [Fig. 5.3]. The model is constructed on the example of one product that is offered in two markets and on all phases of the life cycle of demand, and this model is a fragment of full matrix-digital model of the life cycles, which includes all plurality of products of the strategic program of the company. During drawing up the strategic program of the offer of various types of products the users plan the range of the temporal parameters, namely: range of data of the general duration of life cycles, duration of each phase, of time of the beginning and time of end of phases of life cycle of each product that is offered in a certain market. Temporal parameters of the offer of products depend from choice of the market. Temporal parameters influence other data of the offer of products also. For example, the balance of duration of temporal phases of supply and demand influences not only volumes but also the prices of sales. Duration of life cycle of the offer of one product in the markets influences temporal parameters of demand in other products. Therefore, users optimize temporal parameters of the offer of each product as parts of a uniform plurality of the commodity offer of the company by means of the matrix-digital mechanism of a model of the life cycles.

Using a model of the life cycles, users establish the conditional designations for generating the integral digital codes, which contain references to other identifiers. For example, each code in a matrix model begins with digit 5.3, this code defines belonging of data to the fifth stage of the Way, the third matrix-digital model and reflects that all data of model are connected with process of generating the temporal parameters of the offer of a product owing to synchronization of time of the beginning, duration, and the termination of the offer of a product in each market with the corresponding parameters of demand. The demand is denoted as 1, the offer - 2. Therefore, the demand in a product is denoted as 01, the offer of a product - 02. All markets are denoted as 3, therefore, the first market is denoted 31, the second market - 32. The digital code of temporary phases of demand or the offer in the first part contains a reference 1 or 2 depending on belonging to demand or the offer, whereas a certain temporal phase is denoted after this. For example: designation 11 - the first phase of emergence of demand in a product, whereas 21 - the first phase of introduction of a product in the market.

All digital codes are formed as the integrated codes containing references to components of other codes. Detailing the temporal parameters of demand and supply of a product in each market is designated by digital codes also, namely, temporal parameters of the beginning, termination and duration are defined as 00.1; 00.2; 00.3, users set parameters of generating codes of the temporal parameters both for demand and for the offer of a product in each market. In matrix-digital model of the life cycles each cell is divided in two parts. The forecasted parameters of the beginning, termination and duration of each phase of demand in a product are placed in the top part of each cell of a model, whereas the planned corresponding temporal parameters of the offer are reflected in the lower part of each cell of a model. Duration of each phase of demand and supply of a product in all markets is defined, respectively in the top part and lower part of horizontal summary cells of a model of the life cycles, whereas duration of demand and supply of a product during its full life cycle in each market is defined, respectively in the top part and lower part of vertical summary cells of this model. The full duration of life cycle of a product in all markets is determined in a final cell of a model of life cycles, namely, it is the period, which begins with the earliest time of introduction of a product in the first market and proceeds until removal of a product from the last market.

Users simulate several combinations of model of the life cycles for choice of the most balanced temporary parameters of the offer of products among all possible. For this purpose, users define the strategic range of temporal parameters of the offer of products in each combination of this model for subsequent choice of the most productive combination of model of the life cycles. The matrix-digital mechanism of full model of the life cycles allows to find synergic interaction between temporal parameters of the offer of various products and to define the best option of their synchronization with life cycles of demand, it increases the accuracy and speed of optimization of life cycles of products. Model of the life cycles is intended not only for strategic planning but also for situational updating the temporal parameters of the offered products, and it is used as the based model at the sixth stage of the Way.

The matrix-digital model of the life cycles has a dual action, as it is intended not only for balance of temporal parameters of demand and supply of products but also and for calculation of useful effect in summary cells of this model and for definition on this basis of the most productive combination of data, it is a task of the following operation;
5.7.2 - users enter operating process of the computing server and assess coefficients of stability and synchronization of temporal parameters of life cycles of products in each combination of a model of the life cycles owing to use of the program of type «IBM SPSS Statistics», reflect data in interactive displays by means of programs «SMART Meeting Pro» and «SMART ink» and calculate over formulas «AUE; AUE_{∪}» the potential aggregate useful effect from offering of both each product of a certain life cycle and of all offered products in different combinations of a model of life cycles, taking into account that all data in them are presented in a matrix form and are connected, impacting on each other, calculate summary indicators of aggregate useful effect, place them by means of the software «SMART Meeting Pro» and «SMART ink in summary cells of each combination of a model of life cycles; as a result, users obtain data about synergistic effectiveness of both each product and all set of products during full life cycle of their offering in all markets in combinations of a model of life cycles.

Users define contribution from offering each product of a certain life cycle into aggregate useful effect from offering all products of the company during full life cycle them by means of matrix-digital mechanism of optimization. For this purpose, users calculate indicators of synchronization of temporal parameters of the offer of each product with parameters of life cycle of demand in products, using coefficients of stability of temporary parameters of demand and the offer, coefficients of synchronization of full life cycles and parameters of the beginning, duration and the termination of various phases of demand and supply of each product in various markets [Merkulova Yu.V. Situational-strategic planning in economy. Vol. 2. Modeling of optimum strategies and programs. The 3rd edition, with additions and changes. - M.: Economy, 2017, p.327, 328].

Users define compatibility of temporal parameters of the offer in the same markets of various products from the commodity offer of the company, in order that to estimate possibility them of synergistic interaction. Calculation of these indicators allows to optimize not only temporal parameters but also and spatial parameters of placement of various products in the markets and to estimate useful effect with a bigger accuracy not only for producers but also and for consumers. At calculation of aggregate useful effect from each type of a product with various life cycle users use group of the formulas denoted in a short form «*AUE»* [Merkulova Yu. V. Situational-strategic planning in economy. Volume 1. Methodology of optimization of indicators of supply and demand. The 3rd edition, with additions and changes. -M.: Economy, 2017, p. 206 -213].

The aggregate useful effect from offering a product during full life cycle in a certain market is calculated in final vertical cells of a model of life cycles, whereas the aggregate useful effect from offering a product in all markets during a certain phase of life cycle is defined in final horizontal cells. The represented model of life cycles has final cell of estimate of useful effect, in which aggregate useful effect of a product is defined for its full life cycle in all markets. The full model of the life cycles allows to determine an optimum plurality of temporal parameters of the offer of various products, taking into account their influence at each other, and contains a cumulative final cell, in which users define the aggregate useful effect from the cumulative offering all products in all markets during the long-term period. The received estimates of useful effect of products with various life cycle are the base for the subsequent operation of consecutive comparison and the choice of optimum temporal parameters of the offer of products. It is a task of the following operation;
5.8.2 - users carry out in a digital format the comparative assessment of various combinations of a model of life cycles and respectively of various combinations of the temporal parameters of the offer of products on the basis of the received estimates of their useful effect, and decide the multicriteria tasks on the basis of constructed flowcharts of decision-making owing to use of interactive displays and software of type «DecideIT», reflect results of the multicriteria comparative assessment of the effectiveness of various combinations of data in interactive displays and recommend an optimum combination of a model of life cycles; users transfer results of operations of the computing server to the application server of the target appointment by means of a remote session of the program for remote access of type «SMART TeamWork» and come out of operating process of the computing server.

Example of the flowchart of decision-making on transformation of data of the strategic program over temporal parameters of the offer of a product.

[Fig. 5.4] - «The flowchart of decision-making over transformation of temporal parameters of the offer of a product».

List of the designations to Fig.5.4:
5.4 - process of decision-making over temporal parameters of the life cycle of a product;
5.4.1; 5.4.2; 5.4.3 - operations of formation of the first, second, third option of temporal parameters of the life cycle of the offer of a product, respectively;
5.4.2.1 - the operation answering a question: «Whether will provide shortening of temporal parameters of the offer of a product over the second variant at the specified restrictions and resources opportunities of the second option an increment of aggregate useful effect of a product?», if «no», then users make transition to assessment of lengthening of life cycle, if «yes», then they carry out the detailing operation;
5.4.2.3 - the operation answering a question: «Whether reduction of duration of life cycle of a product to the minimum limit of data of the second option is enough by optimal for synchronization with demand and receiving the maximum increment of aggregate useful effect of a product?», if «yes», then the optimal variant is found, if «no», then users make transition to assessment of duration changes of the life cycle of a product at the first variant;
5.4.2.2 - the operation answering a question: «Whether will provide lengthening of temporal parameters of the offer of a product over the second variant at the specified restrictions and resources opportunities of the second option an increment of aggregate useful effect of a product?», if «no», then users return to search of the new variants; if «yes», then they carry out the detailing operation;
5.4.2.4 - the operation answering a question: «Whether increase of duration of life cycle of a product to the maximum limit of data of the second option is enough by optimal for synchronization with demand and receiving the maximum increment of aggregate useful effect of a product?», if «yes», then the optimal variant is found; if «no», then users make transition to assessment of duration changes of life cycle of a product at the third variant;
5.4.1.1; 5.4.3.1 - the operations answering a question: Whether will provide shortening of temporal parameters of the offer of a product, respectively at the first or third variant, at the specified restrictions and resources opportunities of the first or third variant an increment of aggregate useful effect of a product?, if« no», then users make transition to assessment of lengthening of life cycle of a product at these variants, if «yes», then they carry out the detailing operation (for assessment of the first, third option, respectively);
5.4.1.3; 5.4.3.3 - the operations answering a question: «Whether reduction of duration of life cycle of a product to the minimum limit of data, respectively at the first or third variant, is enough by optimal for synchronization with demand and receiving the maximum increment of aggregate useful effect of a product? », if «yes», then the optimal variant is found, if «no», then users return to search of the new variants (for assessment of the first, third option, respectively);
5.4.1.2; 5.4.3.2 - the operations answering a question: «Whether will provide lengthening of temporal parameters of the offer of a product, respectively at the first or third variant, at the specified restrictions and resources opportunities of the first or third variant an increment of aggregate useful effect of a product? », if «no», then users return to search of the new variants; if «yes», then they carry out the detailing operation (for assessment of the first, third variant, respectively);
5.4.1.4; 5.4.3.4 - the operations answering a question: «Whether increase of duration of life cycle of a product to the maximum limit of data, respectively at the first or third variant, is enough by optimal for synchronization with demand and receiving the maximum increment of aggregate useful effect of a product? », if «yes», the optimal variant is found, if «no», then users return to search of new variants (for assessment of the first, third variant, respectively);
5.4.1.5; 5.4.2.5; 5.4.3.5 - operations of the choice of the most productive variant of lengthening, or shortening of duration of life cycle of a product among the first, second or third option of duration of life cycle of the offer of a product;
5.4.4 - operation of return to search of new options of duration of life cycle of the offer of a product.

The process of decision-making over transformation of temporal parameters of the offer of a product in the market is demonstrated on example of flowchart [Fig. 5.4].

It is conditionally accepted, what three options of transformation of the temporal parameters of the offer of a product in local market are generated and choose variant, which contains the most productive range of time of the beginning, duration of various stages and of the termination of the life cycle of a product. Range of possible temporal parameters is established for each variant. It is conditionally accepted that average duration of life cycle of a product is characteristic for the second option, whereas users establish shorter duration and longer duration of life cycle of the offer of a product for the first and third option, respectively. At the same time, users establish the range of fluctuations of time of the beginning and finishing of life cycle for each variant, namely the minimum and maximum level of duration of the offer of a product for the first, second, third variant. Besides, each of life cycles has five phases, and temporal transition from a phase to a phase has the range of fluctuations too. Users begin assessment with the second option, namely with the average range of data of duration of life cycle of the offer of a product between two extremums.

If the useful effect can be increased by reduction of duration of life cycle of a product below the minimum values of the second option, then users begin assessment of the first variant, which establishes shorter life cycle of a product, but if it is possible by means of increase of duration of life cycle of a product above the maximum values of the second variant, then they make transition to assessment of the third version of the strategic program with the longest life cycle of a product.

If the useful effect can be increased by means of reduction or lengthening of life cycle of a product, respectively at the first and third version of the strategic program, as well as in a result of change of duration of separate stages of each of versions of the program, then search of new options of duration and structure of life cycle of a product has to be continued. If the necessary aggregate useful effect is reached at any of variants of the temporal parameters, the optimal variant is found.

At the same time, users set restrictions in resources for exercise of each of options of temporal parameters of the offer of products in the markets. Temporal phases of the offer of each product depend on time of its production, labor productivity of workers, the speed of technological process and rhythm of providing by resources, duration of uninterrupted operations of production. These factors influence both time of the beginning of the offer of a product in the market and duration of its life cycle in the market. Users choose variant of transformation of the temporal parameters of the offer of a product on the basis of forecast of the life cycle of demand in a product, the chosen temporal strategy of the offer of a product in the markets, taking into account temporal opportunities, limitations in resources for its implementation.

If users establish that the range of change of the temporal parameters of the chosen variant is insufficient for finding of the optimal solution or the required temporal parameters of the offer of a product cannot be reached at the admissible level of expenses and in limits of time for its production, then they begin search of new options of temporal parameters of the offer of this product.

If the optimal parameters of the life cycle of a product are defined at admissible cost and provide the greatest possible increment of aggregate useful effect of a product, then the optimal variant is found, and users are finishing process of search of the decision. The flowchart for the choice of variant of transforming the temporal parameters of the offer of a product is represented in the digital format on the basis of the digital codes of a model of the life cycles; it increases the productivity and speed of process of decision-making.

Flowchart [Fig.5.4] is a base for creation of an algorithm, it can be used as a base of the solution of a task of multicriteria optimization by means of tools of the DecideIT program for comparison over several criteria of different options of temporal parameters of the offer of products and for finding the optimal structure and duration of the life cycle of each type of a product, it increases the accuracy and reliability of temporal parameters of the strategic program of the offer of products;
5.9.2 - users resume the suspended operating process on the application server of the target appointment; on the basis of data of the previous operations they choose from all possible combinations the most productive combination of a model of the life cycles, in which such strategic range of a plurality of data of time of the beginning, duration, and termination of phases of the life cycle of each product is generated, which provides the highest synergistic effectiveness, namely by means of the full version of this model, aggregated over all products, users determine the most productive combination of a plurality of temporal parameters of the offer of each product, which is a part of structure of life cycles of all composition of products of the company at optimization of expenses for temporal synchronization of supply and demand over the offer of products in a whole, as well as users synthesize summary cells of a model of the life cycles, change the intermediate digital codes by the constant digital codes at designation of the temporal parameters of the offer of products in the lower half of cells of a model and complete formation of a file of the created model of the life cycles; users send a task for generating the barcodes over communication channels to the application server of digital transformation of data and come out of operating process of the application server of the target appointment;
5.10.2 - users enter operating process of the application server of digital transformation of data and according the specified parameters, by means of use of the program of type «ActiveBarcode» generate the barcodes of type «QR» or «Data Matrix» for designation of a digital model of life cycles and the strategic program of temporal parameters of the offer of products, as well as for designation of each product with the planned range of output data of the life cycle of its offering in the strategic program; as a result, users transfer all created barcodes to the application server of the target appointment over communication channels owing to using OLE technology, implementing the mechanism of interprocessor interaction based on COM, and come out of operation process of the application server of digital transformation of data;
5.11.2 - users enter operating process of the application server of target appointment; using the received digital codes and data of a model of life cycles, they create in a digital format the second section of the target strategic program of life cycles of the offer of products, with range of the output data of time of the beginning, duration, termination of phases of life cycle of the offer of each product; users form a file of the final document of strategic program of life cycles of the offer of products, carry out direct transfer of the created files of a model of life cycles and the strategic program of the temporal parameters of the offer of products to the file server owing to using by servers of the installed program «FTP Rush» by means of «FXP» session under «FTP» protocol and come out of operation process of the application server of target appointment;
5.12.2 - users enter operating process of the file server, register the received files of a model of life cycles and the strategic program of the temporal parameters of the offer of products under their barcodes for storage and file operations, send files into storage of the file server and place into a digital block of strategic programs, which unites all files of the strategic programs and is a result of operation process of all steps of the fifth stage of the Way; users carry out direct transfer of the files of a model of life cycles and the strategic program of the temporal parameters of the offer of products from a block of strategic programs of the storage of the file server to the application server of target appointment owing to using by servers of the installed program «FTP Rush» by means of «FXP» session under «FTP» protocol and come out of operating process of the file server.

The 3rd step - users create the digital sequence of operations and the matrix-digital mechanism of process of generating a plurality of data of the target function, qualitative parameters of the strategic program of the offer of products.

List of designations of operations of the third step of the fifth stage [Fig.5]:
5.1.3 - users enter operating process of the application server of the target appointment and build in 3D format a multidimensional matrix-digital model of quality, which is called subsequently «model of quality» by means of use of the program of type «ZWCAD» for Windows 10; users reflect various types of products and the phases of the life cycles of supply and demand in vertical columns, but which are located in different spatial coordinates of a matrix model, whereas spatial parameters of positioning products in the markets, also the indicators of quality, namely indicators of the target function, its effectiveness and cumulative consumer expenses consisting from the operational costs and the price of acquisition of a product by the consumer - in horizontal sections of a model, as well as divide each cell in half to place data of demand in the target function and in its parameters in the top part of cells, whereas data of these qualitative indicators of the offer of products generate in the lower part of cells of a model, reflect the created model of quality in 3D format on interactive displays of type «SMART Board 7000 Pro» for the coordinated work of developers of the project with a model by means of the software «SMART Meeting Pro» and «SMART ink» and for use of the constructed model of quality in a role of a tool of multi-purpose optimization and planning of a plurality of the qualitative parameters of the strategic program of the offer of products in conformity with a principle of «set theory»;
5.2.3 - users analyze the data obtained from blocks of the previous stages, input into a model of quality digital designations that are identical to the identifiers of the markets, demand, the offer, types of products, temporal phases and to indicators of quality, the target function of products, which were established at the previous stages, and determine in a digital format the fields of a matrix-digital model of quality;
5.3.3 - users carry out the automatic input of data of demand in the target function and quality of various products into the top part of cells of a model of quality, the entered data were defined for different markets and phases of the long-term period on the basis of temporal rows of the data of demand, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of the target function and quality of the offer of various products;
5.4.3 - users simulate the potentially possible qualitative parameters of the offer of each product in various markets during different phases of the long-term period by means of use of the software of type «IBM WebSphere Business Modeler», which allows to form a list of the key qualitative indicators of the offer of products, to tie them to business processes, to connect them with indicators of effectiveness and aggregate useful effect of products, calculated over formulas «*KPI»*, *«AUE», « AUE*_{∪}», as well as to consider at modeling: the forecasted temporal rows of data of demand in the target function, quality of products; the established interrelations between various qualitative indicators of products; the limitations over various resources for transformation of the target function and quality of products; the chosen strategies of transformation of the target function, qualitative parameters of the offer of products; users load files for planning the target function and quality of products, which are received over communication channels from a digital block of object-relational models, from a digital analytical block, and from a digital block of strategies, respectively of the second, third and fourth stage of the Way, into an imitation model by means of program tools at once, and on the basis of results of all previous stages they simulate combinations of a plurality of data of the target function and quality of the offer of products; users send a task for generating the digital codes over communication channels to the application server of digital transformation of data and come out of operating process of the application server of the target appointment;
5.5.3 - users enter operating process of the application server of digital transformation of data; according the specified parameters and by means of use of the program of type «Serial Key Generator», users generate the integrated digital codes for designation of qualitative parameters of both demand and the offer in each cell of a model of quality and include into structure of these digital codes the references not only to digital identifiers of model, a product type, various quality indicators of demand or the offer but also to identifiers of both a certain market and a certain phase of the long-term period, define common features of the generated codes of the qualitative parameters of the offer of products with digital codes of the qualitative parameters of demand that are forecasted for a long-term outlook; on the basis of digital codes for designation of the qualitative parameters of the offer of products for a long-term outlook users form the series of intermediate digital codes for designation of data in combinations of a model of quality; users transfer digital data to the application server of the target appointment over communication channels by means of OLE technology, implementing a mechanism of interprocessor interaction based on COM, and come out of operating process of the application server of digital transformation of data;
5.6.3 - users enter operating process of the application server of the target appointment, reflect a model of quality on interactive displays of type «SMART Board», series 7000 Pro, with the software «SMART Meeting Pro» and «SMART ink», as well as create in 3D format on separate displays various combinations of this model owing to consecutive replacement in the lower part of cells of a model of one combination of the qualitative parameters of the offer of products and their intermediate codes by another combination, each of which differs not only by indicators of target function, quality of the offer of products but also by temporal and spatial parameters of their placement in various markets in different phases of the long-term period for the subsequent comparative analysis and assessment of the effectiveness of the created combinations of a model of quality; users carry out a remote connection to the computing server by means of use of the program for remote access of type «SMART TeamWorks» for further work of group of developers with the combinations of a model of quality that are displayed on interactive displays of the computing server, stop the operating process on the application server of the target appointment, but do not come out of it fully, they do not switch off interactive displays and do not close programs «SMART Meeting Pro» and «SMART ink».

Example of a matrix-digital way of generating a plurality of data of the strategic program over target function and quality of the offer of products of the company by means of creation of «model of quality».

[Fig. 5.5] - «Matrix-digital model of generating a plurality of data of target function and quality of the offer of products in interrelation with temporal and spatial parameters».

List of the designations to Fig. 5.5:
5.5 - the process of the matrix-digital generating a plurality of data of the target function and quality of products on the example of a certain type of product;
5.5.1 - the life cycle of demand in a product;
5.5.2 - the life cycle of the offer of a product;
5.5.11; 5.5.12; 5.5.13; 5.5.14; 5.5.15 - the first, second, third, fourth, fifth phase of consumer demand in a product, namely temporal phases: emergence; acceleration, stabilization, decline, attenuation until disappearance of demand, respectively;
5.5.21; 5.5.22; 5.5.23; 5.5.24; 5.5.25 - the first, second, third, fourth, fifth phase of the offer of a product, namely temporal phases: introduction, growth, maturity, decrease of offering, removal of a product from the market, respectively;
5.5.3 - markets;
5.5.31; 5.5.32 - the first, second market, respectively (it is conditionally accepted that number of the markets, in which products are offered, is two);
5.5.0 - type of a product; 5.5.01 - demand in a product; 5.5.02 - the offer of a product;
5.5.0.1 - indicator of the effectiveness of the target function of a product;
5.5.0.2 - indicator of the cumulative expenses of the consumer of a product;
5.5.0.3 - the target function of a product;
5.5.01.1.1131; 5.5.01.1.1231; 5.5.01.1.1331; 5.5.01.1.1431; 5.5.01.1.1531 - demand of consumers of the first market in the effectiveness of the target function of a certain type of product into the first, second, third, fourth, fifth phase of the life cycle of demand, respectively;
5.5.02.1.2131; 5.5.02.1.2231; 5.5.02.1.2331; 5.5.02.1.2431; 5.5.02.1.2531- the effectiveness of the target function of a certain type of product offered in the first market into the first, second, third, fourth, fifth phase of its life cycle, respectively;
5.5.01.1.1132; 5.5.01.1.1232; 5.5.01.1.1332; 5.5.01.1.1432; 5.5.01.1.1532 - demand of consumers of the second market in the effectiveness of the target function of a certain type of product into the first, second, third, fourth, fifth phase of the life cycle of demand, respectively;
5.5.02.1.2132; 5.5.02.1.2232; 5.5.02.1.2332; 5.5.02.1.2432; 5.5.02.1.2532 - the effectiveness of the target function of a certain type of product offered in the second market into the first, second, third, fourth, fifth phase of its life cycle, respectively;
5.5.01.2.1131; 5.5.01.2.1231; 5.5.01.2.1331; 5.5.01.2.1431; 5.5.01.2.1531 - demand of consumers of the first market in the cumulative admissible expenses on a product (over the price and operational cost of a certain type of product) into the first, second, third, fourth, fifth phase of the life cycle of demand, respectively;
5.5.02.2.2131; 5.5.02.2.2231; 5.5.02.2.2331; 5.5.02.2.2431; 5.5.02.2.2531 - the consumer cost of a certain type of product (the price and operational expenses) that is offered in the first market into the first, second, third, fourth, fifth phase of its life cycle, respectively;
5.5.01.2.1132; 5.5.01.2.1232; 5.5.01.2.1332; 5.5.01.2.1432; 5.5.01.2.1532 - demand of consumers of the second market in the cumulative admissible expenses on a certain type of product (over the price and operational cost of product) into the first, second, third, fourth, fifth phase of the life cycle of demand, respectively;
5.5.02.2.2132; 5.5.02.2.2232; 5.5.02.2.2332; 5.5.02.2.2432; 5.5.02.2.2532 - the consumer cost of a certain type of product (the price and operational expenses) that is offered in the second market into the first, second, third, fourth, fifth phase of its life cycle, respectively;
5.5.01.3.1131; 5.5.01.3.1231; 5.5.01.3.1331; 5.5.01.3.1431; 5.5.01.3.1531 - demand of consumers of the first market in the target function of a certain type of product into the first, second, third, fourth, fifth phase of the life cycle of demand, respectively;
5.5.02.3.2131; 5.5.02.3.2231; 5.5.02.3.2331; 5.5.02.3.2431; 5.5.02.3.2531 - the target function of a certain type of product offered in the first market into the first, second, third, fourth, fifth phase of its life cycle, respectively;
5.5.01.3.1132; 5.5.01.3.1232; 5.5.01.3.1332; 5.5.01.3.1432; 5.5.01.3.1532 - demand of consumers of the second market in the target function of a certain type of product into the first, second, third, fourth, fifth phase of the life cycle of demand, respectively;
5.5.02.3.2132; 5.5.02.3.2232; 5.5.02.3.2332; 5.5.02.3.2432; 5.5.02.3.2532 - the target function of a certain type of product offered in the second market into the first, second, third, fourth, fifth phase of its life cycle, respectively;
5.5.01.0.113; 5.5.01.0.123; 5.5.01.0.133; 5.5.01.0.143; 5.5.01.0.153 - demand of all markets in a product with a certain target function and its parameters of the effectiveness and cumulative consumer expenses into the first, second, third, fourth, fifth phase of the life cycle of demand, respectively;
5.5.02.0.213; 5.5.02.0.223; 5.5.02.0.233; 5.5.02.0.243; 5.5.02.0.253 - a plurality of data of the offer of a product with a certain target function and its parameters of the effectiveness and cumulative consumer cost in all markets into the first, second, third, fourth, fifth stage of its life cycle, respectively;
5.5.01.0.131; 5.5.01.0.132 - demand in a product with a certain target function and its parameters of the effectiveness and cumulative consumer expenses during the full life cycle in the first and second market, respectively;
5.5.02.0.231; 5.5.02.0.232 - a plurality of data of the offer of a product with a certain target function, its parameters of the effectiveness and cumulative consumer expenses (the price and operational costs) during full life cycle of a product in the first and second market, respectively;
5.5.01.0.13 - demand of all markets in a product with a certain target function and its parameters of the effectiveness of the target function and the cumulative consumer expenses during the full life cycle of demand;
5.5.02.0.23 - a plurality of data of the offer of a product with a certain target function, its parameters of the effectiveness and cumulative consumer expenses (the price and operational costs) in all markets during full life cycle of a product;
5.5.4 - the aggregate useful effect of a product of a certain quality and target function;
5.5.4.02.213; 5.5.4.02.223; 5.5.4.02.233; 5.5.4.02.243; 5.5.4.02.253 - the aggregate useful effect of a product of a certain target function, which is offered in all markets into the first, second, third, fourth, fifth phase of its life cycle, respectively;
5.5.4.02.231; 5.5.4.02.232 - the aggregate useful effect from offering a product of a certain target function during the full life cycle in the first and second market, respectively;
5.5.4.02.23 - the aggregate useful effect of the offered product of a certain target function in all markets during its full life cycle.

The model of quality shows the matrix-digital mechanism of generating a plurality of data of target function and quality of the offer of products in the three-dimensional system of coordinates according to data of demand and in interrelation with temporal and spatial parameters [Fig. 5.5]. The model of quality is constructed on the example of one product that is offered in two markets and on all phases of the life cycle of demand, and this model is a fragment of full matrix-digital model of quality, which includes all plurality of products of the strategic program of the company. Demand in parameters of target function of each product changes not only from a stage to a stage of life cycle, but also with change of market, under the influence of different factors. The model of quality allows to consider a plurality of criteria at planning data and proportions of parameters of the target function of a product.

Using a model of quality, users establish conditional designations for generating the aggregate digital codes, which contain references to other identifiers. For example, each code in model begins with digit 5.5, this code defines belonging of data to the fifth stage of the Way, the fifth matrix-digital model and reflects that all data of model are connected with process of generating the qualitative parameters and the target function of the offer of a product.

The demand is denoted as 1, the offer - 2. Therefore, the demand in a product is denoted as 01, the offer of a product - 02. All markets are denoted as 3, therefore, the first market is denoted 31, the second market - 32. The digital code of temporary phases of demand or the offer in the first part contains a reference 1 or 2 depending on belonging to demand or the offer, whereas a certain temporal phase is denoted after this. For example: designation 12 - the second phase of acceleration of demand in a product, whereas 22 - the second growth phase of the offer of a product in the market. Qualitative parameters are denoted by digital codes also, namely, indicators of effectiveness of target function of a product, cumulative expenses of the consumer of a product and the target function of a product are denoted: 0.1; 0.2; 0.3, and these codes are denoted for each market, as well as both for demand and for supply of a product. For example, for definition of demand these codes are denoted as 01.1, 01.2, 01.3, respectively, whereas for definition of the offer of a product, these codes are denoted as 02.1, 02.2, 02.3, respectively. Each modification of a product can have difference in qualitative parameters and in the target function in the different markets and temporal phases of the offer. Therefore, each modification of a product with distinctive target function has various code designations.

The digital code illustrates belonging of each modification of a product to process of optimization of the target function and quality of a certain type of a product to a temporary phase of demand or the offer and to the code of the market, in which this modification of a product is placed. Each cell of a model of quality is divided in two parts. The predicted parameters of demand in the target function and quality of a product are placed in the top part of each cell, whereas the planned data of the corresponding parameters of the target function and quality of the offer of a product are generated in the lower half of cells of a model of quality.

Using the full model of quality, users find not only synergistic interrelations between various qualitative parameters of one product, but they establish interrelations between products of distinctive quality and the target function, namely, interrelations between data of all cells of a model, it allows to analyze their influence at each other and on data in summary cells of a model of quality and to optimize data of the target function and quality of the offer of products in various markets and temporary phases not separately from each other but in the integrated system as a plurality of data. It is necessary to consider that improvement of quality of some products can change demand not only in them, but also to influence qualitative inquiries of consumers in other products. Besides, trends of increase or decline in quality of products influence volumes and the prices of demand, and therefore, these trends can increase or lower useful effect of products. Therefore, using mechanism of a model of quality, users establish the balance between qualitative parameters of various modifications and types of products. It is important for the subsequent assessment of their compatibility in the cumulative commodity offer of the company.

Matrix-digital model - a tool for generating a plurality of data of the target function, quality of the offer of various types of products, their modifications and their balance in the strategic program. Users establish the strategic range of data of the target function, its parameters, proportions between them according to dynamics of demand of the markets, on which the company has or wants to receive an access during the planned long-term period. Besides, this model of quality allows to create options of the temporal and spatial positioning of products of various qualitative level, to generate a plurality of data of the target function, quality of the offer, counterbalanced not only over various products, but also over various markets and temporal phases of the offer of products, it provides much higher synergistic result, than from the known ways of optimization of data.

Users define a cumulative plurality of data of the target function of demand and supply of each product in a certain market during full life cycle in summary vertical cells, respectively in the top part and in the lower part of cells of a model of quality, whereas they define a cumulative plurality of data of the target function of demand and supply of each product in all markets but in a certain phase of its life cycle in summary horizontal cells, respectively in the top part and in the lower part of cells of a model of quality. Users define a plurality of data of the target function, parameters of quality of the offer of each product in all markets during full life cycle in lower part of aggregate summary cells of a model of quality. The model of quality is a base for the current transformation of parameters of the target function and quality of products at 6^{th} stage of the Way also. The matrix-digital model of quality is a tool for generating different combinations of the decision. For this purpose, users simulate different combinations of a model of quality and find the most productive combination among them by means of calculation of the useful effect in summary cells of each combination of a model. It is a task of the following operation;

5.7.3 - users enter operating process of the computing server and assess the target function, qualitative parameters in each combination of a model of quality owing to use of the program of type «IBM SPSS Statistics», reflect data in interactive displays by means of programs «SMART Meeting Pro» and «SMART ink» and calculate over formulas «AUE; AUE_{∪}» the potential aggregate useful effect from offering of both each product and all products in different combinations of a model of quality, taking into account that all data in them are presented in a matrix form and are connected, impacting on each other, calculate summary indicators of aggregate useful effect, place them by means of the software «SMART Meeting Pro» and «SMART ink in summary cells of each combination of a model of quality; as a result, users obtain data about synergistic effectiveness of both each product and all set of products during full life cycle of their offering in all markets in combinations of a model of quality.

Users estimate the consumer parameters, quality of any product by means of calculation of the target function, its effectiveness and cumulative cost for consumer, their influence on data of the useful effect from a product [Merkulova Yu. V. Situational and strategic planning in economy. Volume 1. Methodology of optimization of indicators of supply and demand. The 3rd edition, with additions and changes. - M.: Economy, 2017, p.120-123]. The effectiveness of target function of any product is based on optimization of functions of this product, including its effect for consumers. Therefore, calculation of this indicator allows to judge about the consumer efficiency of a product, it is very important for the subsequent more exact assessment of aggregate useful effect of a product. At calculation of useful effect both for consumers and for producer of a product users use group of the formulas denoted in a short form *UEₘ ; UE_{c}* [Merkulova Yu.V. Situational and strategic planning in economy. Volume 1. Methodology of optimization of indicators of supply and demand. The 3rd edition, with additions and changes. - M.: Economy, 2017, p.207-209, 211]. The aggregate useful effect from a product consists of useful effect of a product for the consumers and for the producer during full life cycle of its acquisition in all markets, the formula for definition of this indicator is denoted further «*AUE*» [Merkulova Yu.V. Situational and strategic planning in economy. Volume 1. Methodology of optimization of indicators of supply and demand. The 3rd edition, with additions and changes. - M.: Economy, 2017, p.212,213]. All useful effects of products calculate in matrix model of quality [Fig. 5.5], into which qualitative indicators of the offer of products influence at each other, and all together influence the end result, at the expense of this approach the synergistic interaction of all data in a model of quality is reached.

Users calculate the potential aggregate useful effect from offering each product with a certain target function during full life cycle in all markets and reflect data in corresponding final cells of a model of quality for estimate of a certain product, also they define the aggregate useful effect from a plurality of all types of products with different target functions and qualitative parameters, offered in the different markets during the planning long-term period in final cell of full model of quality. Thus, the created model of quality is a tool not only for optimization of quality indicators of each product, but for finding the best compatibility of products with different target function, quality indicators of the offer of products; transformation of qualitative parameters of various products in a model of quality provides the big accuracy of planned data and achievement of synergistic effect. The received estimates of the useful effect are intended for consecutive comparison and the choice of optimum target function and qualitative parameters of the offer of products. It is a task of the following operation;

5.8.3 - users carry out in a digital format the comparative assessment of various combinations of a model of quality and respectively of various combinations of the qualitative parameters of the offer of products on the basis of the received estimates of their useful effect, and decide the multicriteria tasks on the basis of constructed flowcharts of decision-making owing to use of interactive displays and software of type «DecideIT», reflect results of the multicriteria comparative assessment of the effectiveness of various combinations of data in interactive displays and recommend an optimum combination of a model of quality; users transfer results of operations of the computing server to the application server of the target appointment by means of a remote session of the program for remote access of type «SMART TeamWork» and come out of operating process of the computing server.

Example of the flowchart of decision-making over transformation of data of target function and quality of the strategic program of the offer of products.

[Fig.5.6] - «The flowchart of decision-making over transformation of effectiveness and cumulative cost of target function of a product».

List of the designations to Fig.5.6:
5.6 - process of decision-making of target function of a product and its parameters of effectiveness and cumulative cost in interrelation with each other;
5.6.1; 5.6.2; 5.6.3 - operations of formation of the first, second, third variant of strategic range of data of effectiveness and cumulative cost of target function of a product, respectively;
5.6.2.1 - the operation characterizes the first combination of data of the second variant and answers a question: « Whether the combination of data over reduction of cost owing to admissible decrease of effectiveness of target function of a product in limits of the opportunities, restrictions over resources and within the data range of the second option is enough by optimal combination for receiving the maximal increment of aggregate useful effect from a product? », if «yes», then the optimal variant is found, if «no», then users carry out the detailing operation;
5.6.2.1.1 - the operation answering a question: «Whether data range of cost and of effectiveness of target function of a product for exercise of the first combination of their data is required below than it is admissible at the second option? », if «yes», then users make transition to assessment of combinations of data of the first variant; if «no», then users carry out the detailing operation;
5.6.2.1.2 - the operation answering a question: «Whether data range of cost and of effectiveness of target function of a product for exercise of the first combination of their data is required above than it is admissible at the second option? », if «yes», then users make transition to assessment of combinations of data of the third variant; if «no», then users make transition to assessment of the second combination of data of the second variant;
5.6.2.2 - the operation characterizes the second combination of data of the second variant and answers a question: « Whether the combination of data over increase of effectiveness of target function owing to improvement of quality of a product but at admissible increase of cost of a product in limits of the opportunities, restrictions over resources and within the data range of the second option is enough by optimal combination for receiving the maximal increment of aggregate useful effect from a product ?», if «yes», then the optimal variant is found, if «no», then users carry out the detailing operation;
5.6.2.2.1 - the operation answering a question: «Whether data range of cost and of effectiveness of target function of a product for exercise of the second combination of their data is required below than it is admissible at the second option? », if «yes», then users make transition to assessment of combinations of data of the first variant; if «no», then users carry out the detailing operation;
5.6.2.2.2 - the operation answering a question: «Whether data range of cost and of effectiveness of target function of a product for exercise of the second combination of their data is required above than it is admissible at the second option? », if «yes», then users make transition to assessment of combination of data of the third variant; if «no», then users make transition to assessment of the third combination of data of the second variant;
5.6.2.3 - the operation characterizes the third combination of data of the second variant and answers a question: «Whether the combination of data over increase of cost of a product but at insignificant reduction of its quality, effectiveness of target function of a product in limits of the opportunities, restrictions over resources and within the data range of the second option is enough by optimal combination for receiving the maximal increment of aggregate useful effect from a product ?», if «yes», then the optimal variant is found, if «no», then users carry out the detailing operation;
5.6.2.3.1 - the operation answering a question: «Whether data range of cost and of effectiveness of target function of a product for exercise of the third combination of their data is required below than it is admissible at the second option? », if «yes», then users make transition to assessment of combinations of data of the first variant; if «no», then users carry out the detailing operation;
5.6.2.3.2 - the operation answering a question: «Whether data range of cost and of effectiveness of target function of a product for exercise of the third combination of their data is required above than it is admissible at the second option? », if «yes», then users make transition to assessment of combinations of data of the third variant; if «no», then users make transition to assessment of fourth combination of data of the second variant;
5.6.2.4 - the operation characterizes the fourth combination of data of the second variant and answers a question: «Whether the combination of data over increase of effectiveness of target function of a product and at simultaneous reduction of its cost in limits of the opportunities, resources restrictions and within the data range of the second option is enough by optimal combination for receiving the maximal increment of aggregate useful effect from a product? », if «yes», then the optimal variant is found, if «no», then users carry out the detailing operation;
5.6.2.4.1 - the operation answering a question: «Whether data range of cost and of effectiveness of target function of a product for exercise of the fourth combination of their data is required below than it is admissible at the second option? », if «yes», then users make transition to assessment of combinations of data of the first variant; if «no», then users carry out the detailing operation;
5.6.2.4.2 - the operation answering a question: «Whether data range of cost and of effectiveness of target function of a product for exercise of the fourth combination of their data is required above than it is admissible at the second option? », if «yes», then users make transition to assessment of combinations of data of the third variant; if «no», then users return to search of the new variants;
5.6.1.5; 5.6.2.5; 5.6.3.5 - operations of the choice of the optimal variant among the first, second or third option of target function of a product, as well as proportions between data of cumulative cost and effectiveness of target function of a product;
5.6.4 - operation of return to search of new variants of data of effectiveness and cost of target function of a product;
5.6.1.1 ; 5.6.3.1 - the operations characterize the first combination of data, respectively of the first or third variant and answer a question: «Whether the combination of data over reduction of cost of a product at admissible decrease of quality and effectiveness of target function of a product in limits of the opportunities, resources restrictions and within the range of the middle level of data, respectively of the first or third variant is enough by optimal combination for receiving the maximal increment of aggregate useful effect from a product ?», if «yes», then the optimal variant is found; if «no», then users carry out the detailing operations;
5.6.1.1.1; 5.6.3.1.1 - the operations answering a question: «Whether will allow to increase aggregate useful effect to the maximal level the first combination of data owing to establishment of cost and of effectiveness of target function of a product in the range from the middle level to the maximal level of data, according restrictions of the first or the third option, respectively, if «yes», then the optimal variant is found; if «no», then users carry out the detailing operations;
5.6.1.1.2; 5.6.3.1.2 - the operations answering a question: «Whether will allow to increase aggregate useful effect to the maximal level the first combination of data owing to establishment of cost and of effectiveness of target function of a product in the range from the middle level to the minimal level of data, according restrictions of the first or the third option, respectively, if «yes», then the optimal variant is found; if «no», then users make transition to assessment of second combination of data of the first or third variant, respectively;
5.6.1.2 ; 5.6.3.2 - the operations characterize the second combination of data, respectively of the first or third variant and answer a question: «Whether the combination of data over increase of effectiveness of target function owing to improvement of quality of a product at admissible increase of cost of a product in limits of the opportunities, resources restrictions and within the range of the middle level of data, respectively of the first or third variant is enough by optimal combination for receiving the maximal increment of aggregate useful effect from a product ?», if «yes», then the optimal variant is found; if «no», then users carry out the detailing operations;
5.6.1.2.1; 5.6.3.2.1 - the operations answering a question: «Whether will allow to increase aggregate useful effect to the maximal level the second combination of data owing to establishment of cost and of effectiveness of target function of a product in the range from the middle level to the maximal level of data, according restrictions of the first or the third option, respectively, if «yes», then the optimal variant is found; if «no», then users carry out the detailing operations;
5.6.1.2.2; 5.6.3.2.2 - the operations answering a question: «Whether will allow to increase aggregate useful effect to the maximal level the second combination of data owing to establishment of cost and of effectiveness of target function of a product in the range from the middle level to the minimal level of data, according restrictions of the first or the third option, respectively, if «yes», then the optimal variant is found; if «no», then users make transition to assessment of third combination of data of the first or third variant, respectively;
5.6.1.3 ; 5.6.3.3 - the operations characterize the third combination of data, respectively of the first or third variant and answer a question: «Whether the combination of data over increase of cost of a product at admissible insignificant reduction of its quality, effectiveness of target function of a product in limits of the opportunities, resources restrictions and within the range of the middle level of data, respectively of the first or third variant is enough by optimal combination for receiving the maximal increment of aggregate useful effect from a product ?», if «yes», then the optimal variant is found; if «no», then users carry out the detailing operations;
5.6.1.3.1; 5.6.3.3.1 - the operations answering a question: «Whether will allow to increase aggregate useful effect to the maximal level the third combination of data owing to establishment of cost and of effectiveness of target function of a product in the range from the middle level to the maximal level of data, according restrictions of the first or the third option, respectively, if «yes», then the optimal variant is found; if «no», then users carry out the detailing operations;
5.6.1.3.2; 5.6.3.3.2 - the operations answering a question: «Whether will allow to increase aggregate useful effect to the maximal level the third combination of data owing to establishment of cost and of effectiveness of target function of a product in the range from the middle level to the minimal level of data, according restrictions of the first or the third option, respectively, if «yes», then the optimal variant is found; if «no», then users make transition to assessment of fourth combination of data of the first or third variant, respectively;
5.6.1.4 ; 5.6.3.4 - the operations characterize the fourth combination of data, respectively of the first or third variant and answer a question: «Whether the combination of data over increase in effectiveness of target function of a product at admissible decrease of its cost in limits of the opportunities, resources restrictions and within the range of the middle level of data, respectively of the first or third variant is enough by optimal combination for receiving the maximal increment of aggregate useful effect from a product ?», if «yes», then the optimal variant is found; if «no», then users carry out the detailing operations;
5.6.1.4.1; 5.6.3.4.1 - the operations answering a question: «Whether will allow to increase aggregate useful effect to the maximal level the fourth combination of data owing to establishment of cost and of effectiveness of target function of a product in the range from the middle level to the maximal level of data, according restrictions of the first or the third option, respectively, if «yes», then the optimal variant is found, if «no», then users carry out the detailing operations;
5.6.1.4.2; 5.6.3.4.2 - the operations answering a question: «Whether will allow to increase aggregate useful effect to the maximal level the fourth combination of data owing to establishment of cost and of effectiveness of target function of a product in the range from the middle level to the minimal level of data, according restrictions of the first or the third option, respectively, if «yes», then the optimal variant is found, if «no», then all chain of optimization of the first and third option did not result in optimum aggregate useful effect; users come back to search of the new variants.

The process of decision-making over transformation of indicators of effectiveness and cumulative cost of target function of a product, which are two parts of a whole, is demonstrated on example of flowchart [Fig.5.6]. The target function of a product is relation of the effectiveness of target function to cumulative consumer expenses for its embodiment.

Users choose the optimal variant of the strategic range of data of the target function of a product by means of consecutive assessment of combinations of data. As an example, it is conditionally accepted that users generate three versions of the strategic program over data of target function of a product, namely on the basis of the ratio of data of effectiveness to cumulative cost of target function of a certain type of a product. Users establish the minimum and maximum level of these indicators, also range of their fluctuations for each variant, which is defined by admissible proportions of change of these indicators relatively to each other.

The maximum level of data of effectiveness and cumulative cost of target function of a product over the first option is established to the minimum level of its values over the second option, and the minimum level of these indicators over the third option begins after achievement of the maximum values of these parameters over the second option. The task consists in choosing data, which are the most optimum at the existing restrictions in resources, or to find new variants of decisions. Users begin assessment with the second option, which is characterized by average values of target function of a product and data of effectiveness and cumulative cost of a product between two extremums.

Users at first analyze possibilities of optimization of data at the second option, namely establish whether it is possible to raise target function to optimum level by change of proportions between effectiveness of target function and cumulative expenses within those their minimum and maximum values, which are established for the second option. Among such possible combinations of optimization over the second option they consider admissible increase or decrease in effectiveness of target function at admissible increase or decrease of cumulative expenses at the second option and generate possible combinations of optimization at the second option, which estimate, taking into account the forecasted data of demand, strategic objectives of development of quality of products, also set of restrictions over resources for implementing the second option.

If users do not find the optimal solution among possible combinations of data of target function at the second option, but the useful effect can be increased by reduction of both effectiveness and cumulative cost of target function of a product below the minimum level of data over the second option, then they begin similar assessment of combinations of data of target function over the first variant, but if it is possible by means of increase of data of these indicators above the maximum level of their values over the second option, then users make transition to assessment of the combinations of data optimization of target function over the third option.

If at any of the chosen options users find an optimum proportion of data between effectiveness of target function and cumulative expenses, which leads to the optimal data of the useful effect, then the optimal variant is found, and users finish the process of optimization of target function of a certain type of a product, otherwise, when demand exist in absolutely other proportions between parameters of target function of a product, which do not correspond to the range of fluctuations of data of any of possible options, users begin search of new options of optimization of target function of a product.

Users establish the range of data of target function separately for each type of a product and for each temporal stage of its offering in a certain market. The flowchart for the choice of the optimal target function of a certain product is represented in the digital format on the basis of the digital codes of a model of quality; it increases the productivity and speed of process of decision-making and choice of the optimal decision among all possible.

Flowchart [Fig.5.4] is a base for creation of an algorithm, it can be used as a base of the solution of a task of multicriteria optimization by means of tools of the DecideIT program for comparison over several criteria of different options of qualitative parameters of the offer of products and finding the optimal target function of each type of a product, it increases accuracy, reliability of the output data of the strategic program over quality of products;
5.9.3 - users resume the suspended operating process on the application server of the target appointment; on the basis of data of the previous operations they choose from all possible combinations the most productive combination of a model of quality, in which such strategic range of data of the target function and indicators of quality of the offer of each product is generated, which provides the highest synergistic effectiveness, namely by means of the full version of this model, aggregated over all products, users determine the most productive combination of a plurality of the qualitative parameters of the offer of each product, which is a part of all composition of products with various target function at optimization of expenses for improvement of qualitative level of the offer of products in a whole, as well as users synthesize summary cells of a model of quality, change the intermediate digital codes by the constant digital codes at designation of the qualitative parameters of the offer of products in the lower half of cells of a model and complete formation of a file of the created model of quality; users send a task for generating the barcodes over communication channels to the application server of digital transformation of data and come out of operating process of the application server of the target appointment;
5.10.3 - users enter operating process of the application server of digital transformation of data and according the specified parameters, by means of use of the program of type «ActiveBarcode» generate the barcodes of type «QR» or «Data Matrix» for designation of a digital model of quality and the strategic program over target function and qualitative indicators of the offer of products, as well as for designation of each product with the planned range of its output data of the target function and quality of the offer in strategic program; as a result, users transfer all created barcodes to the application server of the target appointment over communication channels owing to using OLE technology, implementing the mechanism of interprocessor interaction based on COM, and come out of operation process of the application server of digital transformation of data;
5.11.3 - users enter operating process of the application server of target appointment; using the received digital codes and data of a model of quality, they create in a digital format the third section of the target strategic program of quality of the offer of products, with range of the output data of the target function, the main indicators of quality of the offer of each product; users form a file of the final document of strategic program over quality of products, carry out direct transfer of the created files of a model of quality and the strategic program over quality and the target function of the offer of products to the file server owing to using by servers of the installed program «FTP Rush» by means of «FXP» session under «FTP» protocol and come out of operation process of the application server of target appointment;
5.12.3 - users enter operating process of the file server, register the received files of a model of quality and the strategic program over the target function and quality of the offer of products under their barcodes for storage and file operations, send files into storage of the file server and place into a digital block of strategic programs, which unites all files of the strategic programs and is a result of operation process of all steps of the fifth stage of the Way; users carry out direct transfer of the files of a model of quality and the strategic program over the target function and quality of the offer of products from a block of strategic programs of the storage of the file server to the application server of target appointment owing to using by servers of the installed program «FTP Rush» by means of «FXP» session under «FTP» protocol and come out of operating process of the file server.

The 4th step - users create the digital sequence of operations and the matrix-digital mechanism of process of generating a plurality of data of the effectiveness of target function, the volumes, prices of the strategic program of the offer of products.

List of designations of operations of the fourth step of the fifth stage [Fig.5]:
5.1.4 - users enter operating process of the application server of the target appointment and build in 3D format a multidimensional matrix-digital model of the offer of products, which is called subsequently «model of the offer of products» by means of use of the program of type «ZWCAD» for Windows 10; users reflect various types of products and the phases of the life cycles of supply and demand in vertical columns, but which are located in different spatial coordinates of a matrix model, whereas spatial parameters of positioning products in the markets, also the indicators of positioning products in the markets, namely: the volume, price, the effectiveness of the target function of products - in horizontal sections of a model, as well as divide each cell in half to place data of demand in the effectiveness of target function, in the volume, price of products in the top part of cells, whereas data of these indicators of the offer of products generate in the lower part of cells of a model, reflect the created model of the offer of products in 3D format on interactive displays of type «SMART Board 7000 Pro» for the coordinated work of developers of the project with a model by means of the software «SMART Meeting Pro» and «SMART ink» and for use of the constructed model of the offer of products in a role of a tool of multi-purpose optimization and planning of a plurality of data of the strategic program of the offer of products in conformity with a principle of «set theory»;
5.2.4 - users analyze the data obtained from blocks of the previous stages, input into a model of the offer of products digital designations that are identical to the identifiers of the markets, demand, the offer, types of products, temporal phases and to indicators of the effectiveness of the target function, volume, price of products, which were established at the previous stages, and determine in a digital format the fields of a matrix-digital model of the offer of products;
5.3.4 - users carry out the automatic input of data of demand in the effectiveness of target function, in the volume, price of various products into the top part of cells of a model of the offer of products, the entered data were defined for different markets and phases of the long-term period on the basis of temporal rows of the data of demand, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of the effectiveness of target function, volume, price of the offer of various products;
5.4.4 - users simulate the potentially possible plurality of data of the effectiveness of target function, volume, price of the offer of each product in various markets during different phases of the long-term period by means of use of the software of type «IBM WebSphere Business Modeler», which allows to form a list of the key indicators of the offer of products, to tie them to business processes, to connect them with indicators of effectiveness and aggregate useful effect of products, calculated over formulas «*KPI»*, *«AUE»*, *« AUE*_{∪}», as well as to consider at modeling: the forecasted temporal rows of data of demand in various indicators of products; the established interrelations between various indicators of products; the limitations over various resources for transformation of indicators of the offer of products; the chosen strategies of the offer of products; users load files for planning indicators of the offer of products, which are received over communication channels from a digital block of object-relational models, from a digital analytical block, and from a digital block of strategies, respectively of the second, third and fourth stage of the Way, into an imitation model by means of program tools at once, and on the basis of results of all previous stages they simulate combinations of a plurality of data of the offer of products; users send a task for generating the digital codes over communication channels to the application server of digital transformation of data and come out of operating process of the application server of the target appointment;
5.5.4 - users enter operating process of the application server of digital transformation of data; according the specified parameters and by means of use of the program of type «Serial Key Generator», users generate the integrated digital codes for designation of various indicators of both demand and the offer in each cell of a model of the offer of products and include into structure of these digital codes the references not only to digital identifiers of a model, a product type, various indicators of demand or the offer but also to identifiers of both a certain market and a certain phase of the long-term period, define common features of the generated codes of indicators of the offer of products with digital codes of indicators of demand that are forecasted for a long-term outlook; on the basis of digital codes for designation of indicators of the offer of products for a long-term outlook users form the series of intermediate digital codes for designation of data in combinations of a model of the offer of products; users transfer digital data to the application server of the target appointment over communication channels by means of OLE technology, implementing a mechanism of interprocessor interaction based on COM, and come out of operating process of the application server of digital transformation of data;
5.6.4 - users enter operating process of the application server of the target appointment, reflect a model of the offer of products on interactive displays of type «SMART Board», series 7000 Pro, with the software «SMART Meeting Pro» and «SMART ink», as well as create in 3D format on separate displays various combinations of this model owing to consecutive replacement in the lower part of cells of a model of one combination of a plurality of data of the offer of products and their intermediate codes by another combination, each of which differs not only by a plurality of data of the effectiveness of the target function, volume, price of the offer of products but also by temporal and spatial parameters of their placement in various markets in different phases of the long-term period for the subsequent comparative analysis and assessment of the effectiveness of the created combinations of a model of the offer of products; users carry out a remote connection to the computing server by means of use of the program for remote access of type «SMART TeamWorks» for further work of group of developers with the combinations of a model of the offer of products that are displayed on interactive displays of the computing server, stop the operating process on the application server of the target appointment, but do not come out of it fully, they do not switch off interactive displays and do not close programs «SMART Meeting Pro» and «SMART ink».

Example of a matrix-digital way of generating a plurality of data of the strategic program of the offer of products of the company by means of creation of «model of the offer of products».

[Fig. 5.7] - «Matrix-digital model of generating a plurality of data of effectiveness of target function, the volumes and prices of the offer of products in interrelation with temporal and spatial parameters».

List of the designations to Fig. 5.7:
5.7 - the process of the matrix-digital generating a plurality of data of the effectiveness of the target function, volume, price of the offer of products on the example of a certain type of product;
5.7.3 - all markets;
5.7.31; 5.7.32 - the first, second market, respectively (it is conditionally accepted that number of the markets, in which products are offered, is two);
5.7.1 - life cycle of demand in a product;
5.7.2 - life cycle of the offer of a product;
5.7.11; 5.7.12; 5.7.13; 5.7.14; 5.7.15 - the first, second, third, fourth, fifth phase of consumer demand in a product, namely temporal phases: emergence; acceleration, stabilization, decline, attenuation until disappearance of demand, respectively;
5.7.21; 5.7.22; 5.7.23; 5.7.24; 5.7.25 - the first, second, third, fourth, fifth phase of the offer of a product, namely temporal phases: introduction, growth, maturity, decrease of offering, removal of a product from the market, respectively;
5.7.0 - type of a product;
5.7.01 - demand in a product;
5.7.02 - the offer of a product;
5.7.0.1 - indicator of the effectiveness of the target function of a certain type of product;
5.7.0.2 - indicator of volume of a certain type of product;
5.7.0.3 - indicator of the price of a certain type of product;
5.7.01.1.1131; 5.7.01.1.1231; 5.7.01.1.1331; 5.7.01.1.1431; 5.7.01.1.1531 - demand of consumers of the first market in the effectiveness of the target function of a certain type of product into the first, second, third, fourth, fifth phase of the life cycle of demand, respectively;
5.7.02.1.2131; 5.7.02.1.2231; 5.7.02.1.2331; 5.7.02.1.2431; 5.7.02.1.2531 - the offered effectiveness of the target function of a certain type of product in the first market into the first, second, third, fourth, fifth phase of its life cycle, respectively;
5.7.01.1.1132; 5.7.01.1.1232; 5.7.01.1.1332; 5.7.01.1.1432; 5.7.01.1.1532 - demand of consumers of the second market in the effectiveness of the target function of a certain type of product into the first, second, third, fourth, fifth phase of the life cycle of demand, respectively;
5.7.02.1.2132; 5.7.02.1.2232; 5.7.02.1.2332; 5.7.02.1.2432; 5.7.02.1.2532 - the offered effectiveness of the target function of a certain type of product in the second market into the first, second, third, fourth, fifth phase of its life cycle, respectively;
5.7.01.2.1131; 5.7.01.2.1231; 5.7.01.2.1331; 5.7.01.2.1431; 5.7.01.2.1531 - demand of consumers of the first market in the volume of a certain type of product into the first, second, third, fourth, fifth phase of the life cycle of demand, respectively;
5.7.02.2.2131; 5.7.02.2.2231; 5.7.02.2.2331; 5.7.02.2.2431; 5.7.02.2.2531- the offered volume of a certain type of product in the first market into the first, second, third, fourth, fifth phase of its life cycle, respectively;
5.7.01.2.1132; 5.7.01.2.1232; 5.7.01.2.1332; 5.7.01.2.1432; 5.7.01.2.1532 - demand of consumers of the second market in the volume of a certain type of product into the first, second, third, fourth, fifth phase of the life cycle of demand, respectively;
5.7.02.2.2132; 5.7.02.2.2232; 5.7.02.2.2332; 5.7.02.2.2432; 5.7.02.2.2532 - the offered volume of a certain type of product in the second market into the first, second, third, fourth, fifth phase of its life cycle, respectively;
5.7.01.3.1131; 5.7.01.3.1231; 5.7.01.3.1331; 5.7.01.3.1431; 5.7.01.3.1531 - demand of consumers of the first market in the price of a certain type of product into the first, second, third, fourth, fifth phase of the life cycle of demand, respectively;
5.7.02.3.2131; 5.7.02.3.2231; 5.7.02.3.2331; 5.7.02.3.2431; 5.7.02.3.2531- the offered price of a certain type of product in the first market into the first, second, third, fourth, fifth phase of its life cycle, respectively;
5.7.01.3.1132; 5.7.01.3.1232; 5.7.01.3.1332; 5.7.01.3.1432; 5.7.01.3.1532 - demand of consumers of the second market in the price of a certain type of product into the first, second, third, fourth, fifth phase of the life cycle of demand, respectively;
5.7.02.3.2132; 5.7.02.3.2232; 5.7.02.3.2332; 5.7.02.3.2432; 5.7.02.3.2532 - the offered price of a certain type of product in the second market into the first, second, third, fourth, fifth phase of its life cycle, respectively;
5.7.01.0.113; 5.7.01.0.123; 5.7.01.0.133; 5.7.01.0.143; 5.7.01.0.153 - demand of all markets in a plurality the of data of the effectiveness of the target function, volume, price of a certain type of product into the first, second, third, fourth, fifth phase of life cycle of demand, respectively;
5.7.02.0.213; 5.7.02.0.223; 5.7.02.0.233; 5.7.02.0.243; 5.7.02.0.253 - a plurality of data of the effectiveness of the target function, volume, price of the offer of a certain type of product in all markets into the first, second, third, fourth, fifth phase of its life cycle, respectively;
5.7.01.0.131; 5.7.01.0.132 - demand in a plurality the of data of the effectiveness of the target function, volume, price of a certain type of product during the full life cycle of demand in the first, second market, respectively;
5.7.02.0.231; 5.7.02.0.232 - a plurality of data of the effectiveness of the target function, volume, price of the offer of a certain type of product during the full life cycle in the first, second market, respectively;
5.7.01.0.13 - demand of all markets in a plurality the of data of the effectiveness of the target function, volume, price of a certain type of product during the full life cycle of demand;
5.7.02.0.23 - a plurality of data of the effectiveness of the target function, volume, price of the offer of a certain type of product during the full life cycle in all markets;
5.7.4 - the aggregate useful effect of a certain type of product;
5.7.4.02.213; 5.7.4.02.223; 5.7.4.02.233; 5.7.4.02.243; 5.7.4.02.253 - the aggregate useful effect from offering a product in all markets into the first, second, third, fourth, fifth phase of its life cycle, respectively;
5.7.4.02.231; 5.7.4.02.232 - the aggregate useful effect from offering a product during its full life cycle in the first and second market, respectively;
5.7.4.02.23 - the aggregate useful effect from offering a product in all markets during its full life cycle.

The model of the offer of products shows the matrix-digital mechanism of generating a plurality of data of the effectiveness of target function, the volume, price of the offer of products in the three-dimensional system of coordinates according to data of demand and in interrelation with temporary and spatial parameters [Fig. 5.7]. The model of the offer of products [Fig. 5.7] is constructed on the example of one type of a product that is offered in two markets and on all phases of life cycle of demand; this model is a fragment of full matrix-digital model of the offer of products, which includes all plurality of data of the offer of all products of strategic program in all markets during their full life cycle. Users generate data of the effectiveness of target function, the volume, price of the offer of a product according to parameters of demand and each market, and each stage of life cycle.

Using a model of the offer of products, users establish conditional designations for generating the aggregate digital codes, which contain references to other identifiers. For example, each code in this model begins with digit 5.7, this code defines belonging of data to the fifth stage of the Way, of the seventh matrix-digital model, also demonstrates that all its data are connected with process of generating a plurality of data of the effectiveness of target function, the volume, price of the offer of products.

The demand is denoted as 1, the offer - 2. Therefore, the demand in a product is denoted as 01, the offer of a product - 02. All markets are denoted as 3, therefore, the first market is denoted 31, the second market - 32. The digital code of temporary phases of demand or the offer in the first part contains a reference 1 or 2 depending on belonging to demand or the offer, whereas a certain temporal phase is denoted after this. For example: designation 13- the third phase of stabilization of demand in a product, whereas 23 - the third maturity phase of the offer of a product in the market. The main indicators are denoted by digital codes also, namely, indicators of effectiveness of target function of a product, the volume and the price of a product are denoted: 0.1; 0.2; 0.3, and these codes are denoted for each market, as well as both for demand and for supply of a product. For example, for definition of demand these codes are denoted as 01.1, 01.2, 01.3, respectively, whereas for definition of the offer of a product, these codes are denoted as 02.1, 02.2, 02.3, respectively.

The offer of a product in various markets and phases of life cycle can differ not only over volume but also over quality and the price. Therefore, each modification of the offer of a product is denoted by the unique digital code. The digital code of each modification of the offer of a product reflects belonging of modification to process of generating data of the effectiveness of target function or the volume, or the price, to a certain type of a product, to a temporary phase of demand or the offer, and to code of the market, where this modification of a product is placed. Each cell of model of the offer of products is divided in two its part. The predicted parameters of demand in the effectiveness of target function, in volume and price of a product are placed in the top part of each cell, whereas the planned data of the corresponding indicators of the offer of a product are generated in the lower half of cells of a model of the offer of products.

Users study the wide range of potentially possible data of the offer of a product by drawing up various combinations of model of the offer of products. Combinations of model of the offer of products differ not only over a plurality of data of indicators of the effectiveness of target function, the volume, price of the offer of products, which can change, impacting at each other, but also by temporal and spatial parameters, which influence aggregate useful effect also, because various combinations of placement even of one and that product in various markets and temporal phases can lead to change of parameters of its offering and to various useful effect. Users choose the most productive combination of a model of the offer of products among all possible on the basis of all plurality of data, it increases effectiveness of process of planning and allows to generate the more reliable and exact output data of the offer of products.

Users define a cumulative plurality of data of the effectiveness of target function, the volume, price of demand and supply of each product in a certain market during full life cycle in summary vertical cells, respectively in the top part and in the lower part of cells of a model of the offer of products, whereas they define a cumulative plurality of data of these indicators of demand and supply of each product in all markets but in a certain phase of its life cycle in summary horizontal cells, respectively in the top part and in the lower part of cells of a model of the offer of products. Users define a cumulative plurality of data of the effectiveness of the target function, the volume, price of demand and supply of each product in all markets during full life cycle in aggregate summary cell of a model of the offer of products the similarly. The model of the offer of products is base for the current transformation of parameters of effectiveness of the target function, the volume, price of the offer of products at the 6^{th} stage of the Way also.

The full matrix-digital model of the offer of products is intended for generating various combinations from a plurality of data of effectiveness of target function, the volume, price of the offer of various products in different markets during their life cycle and choice of the optimal variant among all possible variants by means of calculation of useful effect from them. Thus, the created model of the offer of products has a double mechanism of action, because users not only simulate various combinations of a plurality of data of indicators of the offer of products by means of this model, but they estimate useful effect of products in final cells of this model. It is a task of the following operation;

5.7.4 - users enter operating process of the computing server and assess the coefficients of efficiency of a plurality of data of the offer of products owing to use of the program of type «IBM SPSS Statistics», reflect data in interactive displays by means of programs «SMART Meeting Pro» and «SMART ink» and calculate over formulas «*AUE; AUE*_{∪}» the potential aggregate useful effect from the offer of both each product and all products in different combinations of a model of the offer of products, taking into account that all data in them are presented in a matrix form and are connected, impacting on each other, calculate summary indicators of aggregate useful effect of products, place them by means of the software «SMART Meeting Pro» and «SMART ink in summary cells of each combination of a model of the offer of products; as a result, users obtain data about synergistic effectiveness of both each product and all set of products during full life cycle of their offering in all markets in combinations of a model of the offer of products.

Using matrix-digital mechanism of optimization of data, users carry out comprehensive estimate of effectiveness of each product and its contribution into effectiveness of the commodity offer in a whole. For this purpose, users calculate coefficient of effectiveness of the offer of a product for all participants of process: production, sale, consumption, namely, for the producer, resellers, financial intermediaries, consumers and for the national economy in a whole [Merkulova Yu.V. Situational-strategic planning in economy. Volume 1. Methodology of optimization of indicators of supply and demand. The 3rd edition, with additions and changes. - M.: Economy, 2017, p.183-187; 191-194; 197]. Calculation of these indicators allows not only to optimize the effectiveness of target function, the volume, price of the offer of each product according to demand, but also to define the best compatibility of data of these indicators of the offer of a product and with each other, and with a plurality of data of the offer of other products and at the best spatial and temporary placement of various products in the markets and temporary phases of the long-term period. Coefficients of the effectiveness of a product are inseparably linked with an indicator of its useful effect, and they supplement it, allow to estimate aggregate useful effect with a bigger accuracy not only for producer, but also for consumers of a product. Users use group of the formulas for calculation for each type of a product of aggregate useful effect that is denoted further «AUE», and of aggregate useful effect from cumulative offering of a plurality of various products, which is designated further AUE_{∪}» [ Merkulova Yu.V. Situational-strategic planning in economy. Vol. 1. Methodology of optimization of indicators of supply and demand. The 3rd edition, with additions and changes. - M.: Economy, 2017, p.206-209; 210- 213].

The aggregate useful effect from each product is the basis for assessment of productivity of indicators of the offer of this product in various markets and phases of life cycle, also for definition of contribution of each offered product into aggregate useful effect from offering all products of the company. However, the aggregate useful effect of the commodity offer in a whole is not equal to the sum of useful effects of each product, if these data are planned not in matrix model, and separately each other. The matrix mechanism of model only allows to estimate aggregate useful effect from a plurality of data the most precisely, because all data of the offer of product in matrix model are generated as a plurality, in which one indicator influences another.

Users define the aggregate useful effect, which is gained from the planned a plurality of compatible parameters of the effectiveness of target function, the volume and price of the offer of each product in a certain market during its full life cycle, and they place it in vertical final cells of a model of the offer of products, whereas users define the aggregate useful effect from the planned plurality of data of the effectiveness of target function, the volume, price of the offer of each product in all markets, but at each temporary phase of its life cycle, and place it in horizontal final cells of this model. The aggregate useful effect from realization of each product in all markets during its full life cycle is defined in corresponding final cell for each product of this model.

Models for strategic planning, which are depicted on drawings [Fig. 5.1; 5.3; 5.5;5.7], are fragments of full models, but these examples show action of matrix-digital mechanism of process of generating a variable plurality of data of indicators of the offer of each product or assortment, respectively in models of assortments, life cycles, quality and the offer of products. On the basis of fragments users form full matrix models of assortments, life cycles, quality and the offer of products, which allow to establish influence of indicators of positioning various products at each other and to define the best synergetic interaction them, calculate aggregate useful effect from both the offer of each product in various markets during phases of demand and the cumulative offer of all products in all markets during full life cycle; as a result, users choose the optimal combinations of matrix models of assortments, life cycles, quality, the offer of products.

Each cell in all created models has digital designations in the form of digital codes that are generated by users according specified parameters. Data of useful effect are designated by digital codes too. The matrix-digital technology allows to establish connection between data by means of digital codes. Users establish chains of the connected digital codes of data and connect them with digital codes of the aggregate useful effect in summary cells of models, it provides a basis for the subsequent machine processing of data, for increase in quantity of combinations of decisions, for receiving more exact and productive plurality of data of the offer of products and higher technical result in comparison with the known technical solutions. Received estimates of the aggregate useful effect in a model of the offer of products, users use for performance of operation of consecutive comparison and the choice of the optimal parameters of the effectiveness of target function, the volume, price of the offer of products. It is a task of the following operations;

5.8.4 - users carry out in a digital format the comparative assessment of various combinations of a model of the offer of products and respectively of various combinations of a plurality of data of indicators of the offer of products on the basis of the received estimates of their useful effect, and decide the multicriteria tasks on the basis of constructed flowcharts of decision-making owing to use of interactive displays and software of type «DecideIT», reflect results of the multicriteria comparative assessment of the effectiveness of various combinations of data in interactive displays and recommend an optimum combination of a model of the offer of products; users transfer results of operations of the computing server to the application server of the target appointment by means of a remote session of the program for remote access of type «SMART TeamWork» and come out of operating process of the computing server.

Example of the flowchart of decision-making over transformation of data of the strategic program of the offer of products.

[Fig.5.8] - «The flowchart of decision-making over transformation of the price and volume of the offer of a product».

List of the designations to Fig.5.8:
5.8 - process of decision-making over transformation of a plurality of data of the price and volume of the offer of a product in interrelation with each other;
5.8.1; 5.8.2; 5.8.3 - operations of formation of the first, second, third option of strategic range of data of the price and volume of the offer of a product, respectively;
5.8.2.1 - the operation characterizes the first combination of a plurality of data of the second variant and answers a question: «Whether the combination of data over reduction of the price and fall of production volumes and offering a product in limits of the opportunities, resources restrictions and within the data range of the second variant is enough by optimal combination for receiving the maximal increment of aggregate useful effect from a product? », if «yes», then an optimum variant is found, if «no», then users carry out detailing operations;
5.8.2.1.1 - the operation answering a question: «Whether range of data of the price and volume of the offer of a product for exercise of the first combination of data is required below than it is admissible over the second option? », if «yes», then users make transition to assessment of combinations of data of the first variant, if «no», then they carry out detailing operation;
5.8.2.1.2 - the operation answering a question: «Whether range of data of the price and volume of the offer of a product for exercise of the first combination of data is required above than it is admissible over the second option? », if «yes», then users make transition to assessment of combinations of data of the third variant, if «no», then they make transition to estimate of the second combination of data of the second variant;
5.8.2.2 - the operation characterizes the second combination of a plurality of data of the second variant and answers a question: «Whether the combination of data over growth of the price and volume of the offer of a product in limits of the opportunities, resources restrictions and within the data range of the second variant is enough by optimal combination for receiving the maximal increment of aggregate useful effect from a product? », if «yes», then an optimum variant is found, if «no», then users carry out detailing operations;
5.8.2.2.1 - the operation answering a question: «Whether range of data of the price and volume of the offer of a product for exercise of the second combination of data is required below than it is admissible over the second variant? », if «yes», then users make transition to assessment of combinations of data of the first variant, if «no», then they carry out detailing operation;
5.8.2.2.2 - the operation answering a question: «Whether range of data of the price and volume of the offer of a product for exercise of the second combination of data is required above than it is admissible over the second variant? », if «yes», then users make transition to assessment of combinations of data of the third variant, if «no», then they make transition to estimate of the third combination of data of the second variant;
5.8.2.3 - the operation characterizes the third combination of a plurality of data of the second variant and answers a question: «Whether the combination of data over growth of the price and at admissible decrease of volume of the offer of a product in limits of the opportunities, resources restrictions and within the data range of the second variant is enough by optimal combination for receiving the maximal increment of aggregate useful effect from a product? », if «yes», then an optimum variant is found, if «no», then users carry out detailing operations;
5.8.2.3.1 - the operation answering a question: «Whether range of data of the price and volume of the offer of a product for exercise of the third combination of data is required below than it is admissible over the second variant? », if «yes», then users make transition to assessment of combinations of data of the first variant, if «no», then they carry out detailing operation;
5.8.2.3.2 - the operation answering a question: «Whether range of data of the price and volume of the offer of a product for exercise of the third combination of data is required above than it is admissible over the second variant? », if «yes», then users make transition to assessment of combinations of data of the third variant, if «no», then they make transition to estimate of the fourth combination of data of the second variant;
5.8.2.4 - the operation characterizes the fourth combination of a plurality of data of the second variant and answers a question: «Whether the combination of data over growth of production volume and at decrease of the price of the offer of a product in limits of the opportunities, resources restrictions and within the data range of the second variant is enough by optimal combination for receiving the maximal increment of aggregate useful effect from a product ?», if «yes», then an optimum variant is found, if «no», then users carry out detailing operations;
5.8.2.4.1 - the operation answering a question: «Whether range of data of the price and volume of the offer of a product for exercise of the fourth combination of data is required below than it is admissible over the second variant? », if «yes», then users make transition to assessment of combinations of data of the first variant, if «no», then they carry out detailing operation;
5.8.2.4.2 - the operation answering a question: «Whether range of data of the price and volume of the offer of a product for exercise of the fourth combination of data is required above than it is admissible over the second variant? », if «yes», then users make transition to assessment of combinations of data of the third variant, if «no», then they return to search of the new variants;
5.8.1.5; 5.8.2.5; 5.8.3.5 - operations of the choice of the most productive variant among the first, second or third option of transformation of the price and volume of the offer of a product;
5.8.4 - operation of return to search of new variants of data of the price and volume of the offer of a product;
5.8.1.1 ; 5.8.3.1 - the operations characterize the first combination of data, respectively of the first or third variant and answer a question: «Whether the combination of data over reduction of the price and volume of the offer of a product in limits of the opportunities, resources restrictions and within the range of the middle level of data, respectively of the first or third variant is enough by optimal combination for receiving the maximal increment of aggregate useful effect from a product ?», if «yes», then an optimum variant is found, if «no», then users carry out detailing operations;
5.8.1.1.1; 5.8.3.1.1 - the operations answering a question: «Whether will allow to increase aggregate useful effect to the maximum level the first combination of data owing to establishment of the price and volume of the offer of a product in the range from the middle level to the maximal level of data, respectively of the first or third variant? », if «yes», then an optimum variant is found, if «no», then users carry out detailing operations;
5.8.1.1.2; 5.8.3.1.2 - the operations answering a question: «Whether will allow to increase aggregate useful effect to the maximal level the first combination of data owing to establishment of the price and volume of the offer of a product in the range from the middle level to the minimum admissible level of data, respectively of the first or third variant? », if «yes», then an optimal variant is found, if «no», then users make transition to assessment of the second combination of data, respectively of the first or third variant;
5.8.1.2 ; 5.8.3.2 - the operations characterize the second combination of data, respectively of the first or third variant and answer a question: «Whether the combination of data over growth of the price and volume of the offer of a product in limits of the opportunities, resources restrictions and within the range of the middle level of data, respectively of the first or third variant is enough by optimal combination for receiving the maximal increment of aggregate useful effect from a product ?», if «yes», then an optimum variant is found, if «no», then users carry out detailing operations;
5.8.1.2.1; 5.8.3.2.1 - the operations answering a question: «Whether will allow to increase aggregate useful effect to the maximal level the second combination of data owing to establishment of the price and volume of the offer of a product in the range from the middle level to the maximal level of data, respectively of the first or third variant? », if «yes», then an optimum variant is found, if «no», then users carry out detailing operations;
5.8.1.2.2; 5.8.3.2.2 - the operations answering a question: «Whether will allow to increase aggregate useful effect to the maximal level the second combination of data owing to establishment of the price and volume of the offer of a product in the range from the middle level to the minimal admissible level of data, respectively of the first or third variant? », if «yes», then an optimum variant is found, if «no», then users make transition to assessment of the third combination of data, respectively of the first or third variant;
5.8.1.3 ; 5.8.3.3 - the operations characterize the third combination of data, respectively of the first or third variant and answer a question: «Whether the combination of data over growth of the price and at admissible decrease of volume of the offer of a product in limits of the opportunities, resources restrictions and within the range of the middle level of data, respectively of the first or third variant is enough by optimal combination for receiving the maximal increment of aggregate useful effect from a product ?», if «yes», then an optimum variant is found, if «no», then users carry out detailing operations;
5.8.1.3.1; 5.8.3.3.1 - the operations answering a question: «Whether will allow to increase aggregate useful effect to the maximal level the third combination of data owing to establishment of the price and volume of the offer of a product in the range from the middle level to the maximal level of data, respectively of the first or third variant? », if «yes», then an optimum variant is found, if «no», then users carry out detailing operations;
5.8.1.3.2; 5.8.3.3.2 - the operations answering a question: «Whether will allow to increase aggregate useful effect to the maximal level the third combination of data owing to establishment of the price and volume of the offer of a product in the range from the middle level to the minimal admissible level of data, respectively of the first or third variant? », if «yes», then an optimum variant is found, if «no», then users make transition to assessment of the fourth combination of data, respectively of the first or third variant;
5.8.1.4 ; 5.8.3.4 - the operations characterize the fourth combination of data, respectively of the first or third variant and answer a question: «Whether the combination of data over growth of volumes of production and offering a product and at decrease of the price of the offer of a product in limits of the opportunities, resources restrictions and within the range of the middle level of data, respectively of the first or third variant is enough by optimal combination for receiving the maximal increment of aggregate useful effect from a product ?», if «yes», then an optimum variant is found, if «no», then users carry out detailing operations;
5.8.1.4.1; 5.8.3.4.1 - the operations answering a question: «Whether will allow to increase aggregate useful effect to the maximal level the fourth combination of data owing to establishment of the price and volume of the offer of a product in the range from the middle level to the maximal level of data, respectively of the first or third variant? », if «yes», then an optimum variant is found, if «no», then users carry out detailing operations;
5.8.1.4.2; 5.8.3.4.2 - the operations answering a question: «Whether will allow to increase aggregate useful effect to the maximal level the fourth combination of data owing to establishment of the price and volume of the offer of a product in the range from the middle level to the minimal admissible level of data, respectively of the first or third variant? », if «yes», then an optimum variant is found, if «no», then all chain of optimization, according to the first or the third option did not result in optimal aggregate useful effect; users return to search of the new variants.

The process of decision-making over transformation of the price and volume of the offer of a product in the market which are two inseparable parts of the strategic program of the offer of a product is demonstrated on example of flowchart [Fig. 5.8].

As an example, it is accepted that users generate three variants of the strategic program over indicators of volume and the price of the offer of a product, they choose variant, which is the most optimum among all possible. Users establish minimum and maximum level of these indicators and range of their fluctuations for each variant, which is defined by admissible proportions of change of these indicators over the relation to each other. The maximum level of data of the price and volume of the offer of a product over the first variant is established to the minimum level of its values over the second option, and the minimum level of these indicators over the third option begins after achievement of the maximum values of these parameters over the second option. Users begin assessment with the second option, which is characterized by average values of the price and volume of the offer of a product between two extremums.

Users at first analyze possibilities of optimization of data of the price and volume of the offer of a product at the second option by means of finding the optimal proportions of change of data of these indicators in range them of the maximum and minimum values established for the second option. Among possible combinations of optimization of data over the second variant, users analyze admissible increase or decrease of both indicators of the price and volume of the offer of a product, also variants of admissible growth of one at decrease of other indicator of the offer of products, and in different proportions to each other.

Users estimate the combinations of optimization of data of the price and volume of the offer of products over the second option, taking into account not only the product-markets strategies of the company, forecasted data of demand and restrictions in resources for exercise of the second variant, but they use law of growth of volumes of supply and demand until a limit point of falling of the price, also law of the limit point of growth of the price, after which volumes of demand are inelastic to growth of quality and begin to fall sharply.

If users do not find the optimal solution among possible combinations of data of the price and volume of the offer of a product at the second variant, but the useful effect can be increased by means of reduction of the price and of volume of the offer of a product is lower than the minimum level of these data over the second option, then they begin similar assessment of combinations of data of the price and volume of the offer of a product over the first variant, but if it is possible by means of increase of data of these indicators above the maximum level of their values over the second option, then users make transition to assessment of the combinations of data optimization of the price and volume over the third option.

If at any of the chosen options, users find an optimum proportion between the price and volume of the offer of a product, which leads to the optimal increment of the useful effect, then the optimal variant is found, and users finish the process of transformation of indicators of the offer of a product, otherwise, users begin search of new variants of optimization of the price and volume of the offer of a product.

The flowchart of multicriteria comparative assessment of various options of change of indicators of the price and volume of the offer of a product allows to find optimum proportions between them and to optimize their data not separately but as a plurality. The flowchart for the choice of the optimal plurality of data of a certain type of product is represented in the digital format on the basis of the digital codes of a model of the offer of products; it increases the productivity and speed of process of choice of the optimal decision.

Flowchart [Fig. 5.8] is a base for creation of an algorithm, it can also be used as a base of the solution of a task of multicriteria optimization by means of tools of the DecideIT program for comparison over several criteria of different options of a plurality of data of the volume and price of the offer of products and finding the optimal data of these indicators not separately, and as their a plurality, in dependence from each other, it increases the accuracy and reliability of these output data of the strategic program of the offer of products;
5.9.4 - users resume the suspended operating process on the application server of the target appointment; on the basis of data of the previous operations they choose from all possible combinations the most productive combination of a model of the offer of products, in which such strategic range of data of the effectiveness of target function, volume and price of the offer of each product is generated, which provides the highest synergistic effectiveness, namely by means of the full version of this model, aggregated over all products, users determine the most productive combination of a plurality of data of the offer of each product in various markets and phases of its life cycle, which is a part of the offer of all products of the company at optimization of expenses over the offer of products in a whole, as well as users synthesize summary cells of a model of the offer of products, change the intermediate digital codes by the constant digital codes at designation of data of the offer of products in the lower half of cells of a model and complete formation of a file of the created model of the offer of products; users send a task for generating the barcodes over communication channels to the application server of digital transformation of data and come out of operating process of the application server of the target appointment;
5.10.4 - users enter operating process of the application server of digital transformation of data and according the specified parameters, by means of use of the program of type «ActiveBarcode» generate the barcodes of type «QR» or «Data Matrix» for designation of a digital model of the offer of products and the strategic program of the offer of products, as well as for designation of each product with the planned range of its output data of the offer in the strategic program; as a result, users transfer all created barcodes to the application server of the target appointment over communication channels owing to using OLE technology, implementing the mechanism of interprocessor interaction based on COM, and come out of operation process of the application server of digital transformation of data;
5.11.4 - users enter operating process of the application server of target appointment; using the received digital codes and data of a model of the offer of products, they create in a digital format the fourth section of the target strategic program of the offer of products, with range of the output data of the effectiveness of target function, the volume, price of the offer of each product; users form a file of the final document of strategic program of the offer of products, carry out direct transfer of the created files of a model and the strategic program of the offer of products to the file server owing to using by servers of the installed program «FTP Rush» by means of «FXP» session under «FTP» protocol and come out of operation process of the application server of target appointment;
5.12.4 - users enter operating process of the file server, register the received files of a model and the strategic program of the offer of products under their barcodes for storage and file operations, send files into storage of the file server and place into a digital block of strategic programs, which unites all files of the strategic programs and is a result of operation process of all steps of the fifth stage of the Way; users carry out direct transfer of the files of a model and the strategic program of the offer of products from a block of strategic programs of the storage of the file server to the application server of target appointment owing to using by servers of the installed program «FTP Rush» by means of «FXP» session under «FTP» protocol and come out of operating process of the file server.

Upon termination of the twelfth operation at all levels of the Fifth subsystem and finishing of all steps of the fifth stage of the Way, users come out of network of the Fifth subsystem.

The System includes network of the Sixth interactive subsystem [Figs. 8], into which users make entry for performance of the sixth stage of the Way [Fig.6].

The network of the Sixth subsystem unites the following interacting elements of the System: the application server of target appointment that uses the software of type «IBM WebSphere Business Modeler», of the type «Advanced Grapher», as well as of type «ZWCAD»; the application server of digital transformation of data with the software of type «Serial Key Generator» and of type «ActiveBarcode»; the computing server with the software of type «IBM SPSS Statistics Standard» and of type «SAS^{∗} Visual Forecasting», as well as of type «DecideIT»; the file server with the software of type Windows Server 2012 R2 NTFS; these servers are connected with each other by communication channels. The application server of target appointment, using the program of direct file transfer «FTP Rush» by means of «FXP» session under «FTP» protocol, receives files from the block of the strategic programs of storage of the file server. The computing server and the application server of target appointment are equipped by interactive displays of type «SMART Board», series 7000 Pro, which work on the basis of the software «SMART Meeting Pro», «SMART ink», as well as they interact with other servers of the Sixth subsystem, which has four levels connected over communication channels by the general installation, the general process of performance of four steps of the sixth stage of the Way.

Action of servers of the Sixth subsystem is intended for situational transformation of a plurality of the output data of the current programs of the offer of products, formation of a digital block of the situational-strategic program of the offer of products and consists in work of servers of this subsystem over performance of the operating processes consisting in consecutive performance of operations of each step of the sixth stage of the Way, and the communication processes consisting in procedures of an entrance and exit from operating process on each of servers and in their interaction with each other by means of communication channels for transfer of a stream of data received owing to operating process at implementing the following steps of the sixth stage of the Way: 6.1-14.1; 6.1-14.2; 6.1-14.3; 6.1-14.4, respectively at the 1st, 2nd, 3rd, 4th level of the Sixth subsystem.

The list of designations of structural elements of the sixth subsystem - the 6th fragment of the System [Fig. 8]:
8.0 - System;
8.3 - computing server of the System;
8.5 - server of the application of the System over digital transformation of data;
8.6 - server of the application of the System of the target appointment;
8.7 - file server of the System;
8.033; 8.063 - interactive panels «SMART Board», respectively of the computing server and the server of application of the target appointment;
8.8 - controllers of the System.

At all levels of the Sixth subsystem the following operations are carried out:
6.1-6.14 - the operations of the sixth stage of the Way, which are carried out on different servers in operating network of the Sixth subsystem.

### List of designations of the 6th stage of the Way [Fig.6].

The 6th stage - the Way of situational transformation of a plurality of data of the current programs of the offer of products and formation of a digital block of the situational-strategic program over products.

[Fig. 6] - «The matrix-digital model of process of situational transformation of a plurality of data of the current program of the offer of products and formation of the digital block of the situational-strategic program of the offer of products» is the sixth the main model of the Way, which characterizes in a digital form the sequence of steps of the sixth stage and operations of each stage, also matrix interrelations between steps and operations of the sixth stage.

List of designations of steps of the sixth stage [Fig.6]:
6.1-14.1 - users create the digital sequence of operations and the matrix-digital mechanism of process of situational transformation of a plurality of data of the width, depth and structure of the offer of commodity assortments for updating the current program of assortments;
6.1-14.2 - users create the digital sequence of operations and the matrix-digital mechanism of process of situational transformation of a plurality of temporal parameters of the offer of products for updating the current program of life cycles of products;
6.1-14.3 - users create the digital sequence of operations and the matrix-digital mechanism of process of situational transformation of a plurality of data of the target function, quality of the offer of products for updating the current program of quality of products;
6.1-14.4 - users create the digital sequence of operations and the matrix-digital mechanism of process of situational transformation of a plurality of data of the effectiveness of target function, the volumes, prices of the offer of products for updating the current program of the offer of products.

List of designations of operations of the sixth stage [Fig. 6]:
6.1 - users enter operating process of the application server of the target appointment, establish connection with matrix-digital models of the fifth stage, on their basis and by means of use of the program of type «ZWCAD» build in 3D format the situational matrix-digital models, called hereinafter in the reduced form «situational models», which are tools for multi-purpose optimization and situational transformation of data in real time according current need, namely: «situational model of assortments» is being built at the first step; «situational model of life cycles» - at the second step; «situational model of quality» - at the third step; «situational model of the offer of products» - at the fourth step of the sixth stage of the Way;
6.2 - users use the Scheduler of tasks, which is a part of the software «FTR Ruch», to fill situational models by data of the target strategic program in the automatic mode, namely users fill situational models by the forecasted data of demand and planned data of the offer of products during the current period, as well as denote fields of situational models by digital codes, which are identical with codes of fields of models of the fifth stage of the Way but contain in composition the index indicating their current appointment in role of situational models for updating the data of the current program of the offer of products, it allows to reach the best commonality of lines and columns and the best comparability of data of strategic and situational models at each step of the sixth stage of the Way;
6.3 - users reflect the situational models, which are created in the 3D format, on interactive displays of type «SMART Board», series 7000 Pro for the coordinated correction by developers of the project of data of these models by means of use of the software «SMART Meeting Pro» and «SMART ink»; users monitor change of the current demand, update in real time in the top part of cells of each situational model the forecasted data by current data of demand of the markets in various products by means of use of interactive displays at each step of the sixth stage of the Way;
6.4 - users, using the visual image on interactive displays, define such cells in situational models, in which the current actual data of demand do not correspond to the planned data of the offer of these products in various markets during current period and define the direction of discrepancies at performance of each step of the sixth stage of the Way, namely: in a situational model of assortments - at the first step; in a situational model of life cycles - at the second step; in a situational model of quality - at the third step; in a situational model of the offer of products - at the fourth step of the sixth stage of the Way;
6.5 - users simulate various combinations of transformation of a plurality of data of the offer of products in conformity with data of demand of various markets during the current period by means of use of the software of type «IBM WebSphere Business Modeler» that allows to carry out not only strategic modeling at the fifth stage, but also situational transformation of data of these indicators of the offer of products in limits of resources opportunities and in borders of range of the data defined in the target strategic program of the enterprise for ensuring unity and balance of the current and strategic programs, including performance of multidimensional graphic modeling of data at once over several parameters by use of the program of type «Advanced Grapher», which is compatible to the software «IBM WebSphere Business Modeler», and it is applicable as an additional graphic tool of optimization, namely users define on a vertical axis of coordinates the data of a main indicator according to the chosen strategy and in the range of the restrictions that were set by the strategic program, whereas on horizontal axes of coordinates at the left and on the right they define data of two other indicators in dependence from a main indicator and owing to crossing of curves functions of supply and demand at realization of the chosen strategy of positioning products in the markets during the current period; as a result, users generate the potentially possible plurality of the current data of the key indicators of the offer of products at each step of the sixth stage of the Way; users send tasks for generating the digital codes over communication channels to the application server of digital transformation of data and come out of operating process of the application server of the target appointment;
6.6 - users enter operating process of the application server of digital transformation of data and generate the integrated digital codes for designation of indicators of both demand and the offer of products in situational models on each step of the sixth stage of the Way according the specified parameters, by means of use of the program of type «Serial Key Generator»; users include into structure of these digital codes the references not only to digital identifiers of situational models, types of products, various indicators of demand or offer but also to identifiers of both a certain market and a certain phase of the current period, define common features of the generated codes of indicators of the current offer of each product with digital codes of indicators of current demand and with the corresponding digital codes of the strategic program of the offer of each product in a long-term perspective for establishment of communication between these data with the help of digital codes; on the basis of digital codes for designation of the current data of the offer of products users form series of intermediate digital codes for designation of data in various combinations of a situational model of each step of the sixth stage of the Way; users transfer digital data to the application server of the target appointment over communication channels by means of the OLE technology, implementing the mechanism of interprocessor interaction based on COM, and come out of operating process of the application server of digital transformation of data;
6.7 - users enter operating process of the application server of the target appointment and reflect a situational model of each step of the sixth stage of the Way on different interactive displays for simultaneous work of group of developers by means of the software «SMART Meeting Pro» and «SMART ink» for creation of models combinations; users create various combinations of each model by consecutive replacement in the lower part of its cells of one combination of data of indicators of the current offer of products and their intermediate codes by another combination of data and their digital codes, which are different not only over a plurality of data of the offer of products, but also over spatial parameters of placement of products in various markets in different phases of the current period, and reflect the created various combinations of each situational model on separate interactive displays in 3D format and in a digital format for the subsequent comparison of the productivity of combinations of each of models in a digital format; users carry out remote connection to the computing server by means of use of the program for remote access of type «SMART TeamWorks» for further work of group of developers on interactive displays of the computing server with the combinations of situational models of each step of the sixth stage of the Way, suspend operating process on the application server of the target appointment, but do not come out of it fully, they do not switch off interactive displays and do not close programs «SMART Meeting Pro» and «SMART ink»;
6.8 - users enter operating process of the computing server, compare various combinations of each situational model among themselves over degree of correspondence of the transformed data with the planned relevant data of the strategic program and with data of the current consumer demand of the markets by means of use of the program of type «IBM SPSS Statistics»; as a result, users assess, select and reject over the majority of key parameters the least possible combinations of a situational model of assortments, life cycles, quality and the offer of products, respectively at each step of the sixth stage of the Way;
6.9 - users carry out comparative assessment of the selected combinations of each situational model owing to the solution of tasks of multicriteria optimization of data on the basis of drawing up of the flowcharts of decision-making in a digital format, their of realization by means of the program of type «DecideIT» and of the calculation of increment of aggregate useful effect from all transformed plurality of data of each combination of the situational models over comparison with the planned aggregate useful effect for the current period in the corresponding strategic program; for this purpose users calculate over formulas « *AUE; AUE*_{∪}» aggregate useful effect in total cells of various combinations of each situational model and obtain data about synergistic effectiveness of both each type of a product and all set of products during the current period of their offer in all markets; users display on interactive displays by means of programs «SMART Meeting Pro» and «SMART ink» results of the multicriteria assessment of productivity of various combinations, respectively of a situational model of assortments - at the first step, of a situational model of life cycles - at the second step, of a situational model of quality - at the third step, of a situational model of the offer of products - at the fourth step of the sixth stage of the Way; users transfer results of operations of the computing server to the application server of the target appointment by means of a remote session of the program for remote access of type «SMART TeamWorks» and come out of operating process of the computing server;
6.10 - users resume the suspended operating process on the application server of the target appointment; on the basis of the data, obtained from the computing server, users choose the most productive combination from all possible combinations, respectively for a situational model of assortments, for a situational model of life cycles, for a situational model of quality, for a situational model of the offer of products, in each of which such plurality of data of the offer of each product during the current period is generated, which provides the highest synergistic effectiveness of the updated current program in a whole, also users synthesize summary cells of situational models and change the intermediate digital codes by the constant digital codes for designation of data of the offer of products in the lower half of cells of models, complete formation of files of created situational models of assortments, life cycles, quality and the offer of products at each step of the sixth stage of the Way; users send tasks for generating the barcodes over communication channels to the application server of digital transformation of data and come out of operating process of the application server of the target appointment;
6.11 - users enter operating process of the application server of digital transformation of data and according the specified parameters, by means of use of the program of type «ActiveBarcode» generate the barcodes of type «QR» or «Data Matrix» for designation of each created situational model and the current program over assortments, temporary parameters, quality, indicators of the offer of products, as well as for designation of the commodity nomenclature, each assortment, each product of the current program for the subsequent definition over the their barcode of the range of the planned plurality of data of the offer of a certain assortment or a product in the program for the current period; as a result, users generate barcodes for the integrated current program and the integrated situational-strategic program and their blocks; users transfer digital data to the application server of the target appointment over communication channels by means of OLE technology, implementing the mechanism of interprocessor interaction based on COM, and come out of operating process of the application server of digital transformation of data;
6.12 - users enter operating process of the application server of the target appointment and create files of the current programs on the basis of situational models and the received barcodes, namely files of the current program of the offer of assortments - at the first step, of the current program of the temporal parameters of the offer of products - at the second step, of the current program of the target function, quality of the offer of products - at the third step, of the current program of the effectiveness of the target function, the volume, price of the offer of products - at the fourth step of the sixth stage of the Way, as well as generate a plurality of the output data of the integrated current program of the offer of products; users carry out direct transfer of the created files of models and the current programs to the file server owing to use by servers of the installed program «FTP Rush» by means of «FXP» session under «FTP» protocol and come out of operating process of the application server of the target appointment;
6.13 - users enter operating process of the file server, register the received files of situational models and the current programs under their barcodes for storage and file operations, send files into storage of the file server and place into a digital block of the current programs, where all current programs under their barcodes are united into the united current program, which is denoted by an integrated barcode;
6.14 - users enter digital blocks of strategic and current programs, which there are in storage of the file server, and users do copies of files of strategic and current programs, place these copies in the new folder and create an integrated block of the situational-strategic program of the offer of products under a separate barcode; it is a result of operating process of all levels of the Sixth subsystem at performance of all steps of the sixth stage of the Way, as well as it is a result of functioning of all subsystems and of the System in a whole owing to implementing all stages of the Way; users send from the file server via web-server of the System to web-server of the enterprise the created files and the information that all blocks are formed, all files of the situational-strategic program are created and sent, action of the System is finished; users come out of operating process of the file server, of network of the Sixth subsystem and the System in a whole.

The 1st step - users create the digital sequence of operations and the matrix-digital mechanism of process of situational transformation of a plurality of data of width, depth and structure of the offer of commodity assortments for updating the current program of assortments.

List of designations of operations of the first step of the sixth stage [Fig.6]:
6.1.1 - users enter operating process of the application server of the target appointment, establish connection with a matrix-digital model of assortments of the fifth stage, on this basis and by means of use of the program of type «ZWCAD» build in 3D format a situational matrix-digital model of assortments, which is called hereinafter in the reduced form «situational model of assortments», this model is a tool for multi-purpose optimization and situational transformation of composition of assortments in real time according change of current demand;
6.2.1 - users use the Scheduler of tasks, which is a part of the software «FTR Ruch», to fill a situational model of assortments by data of the strategic program of assortments in the automatic mode, namely users fill a situational model of assortments by the forecasted data of demand and planned data of the offer of assortments during the current period, as well as denote fields of a situational model of assortments by digital codes, which are identical with codes of fields of a model of assortments of the fifth stage of the Way but contain in composition the index indicating current appointment of a model in role of a situational model for updating the composition of assortments of the current program; it allows to reach the best commonality of lines and columns and the best comparability of data of strategic and situational models of assortments;
6.3.1 - users reflect a situational model of assortments, which is created in the 3D format, on interactive displays of type «SMART Board», series 7000 Pro for the coordinated correction by developers of the project of data of this model by means of use of the software «SMART Meeting Pro» and «SMART ink»; users monitor change of the current demand in composition of assortments, update in real time in the top part of cells of situational model of assortments the forecasted data by current data of demand of the markets in the width, depth, composition of various assortments by means of use of interactive displays;
6.4.1 - users, using the visual image on interactive displays, define such cells in a situational model of assortments, in which the current actual data of demand in assortments do not correspond to the planned data of the offer of these assortments in various markets during current period and define the direction of discrepancy;
6.5.1 - users simulate various combinations of transformation of composition of the offered assortments in conformity with data of demand of various markets in assortments during the current period by means of use of the software of type «IBM WebSphere Business Modeler» that allows to carry out not only strategic modeling at the fifth stage, but also situational transformation of the width, depth, composition of the offered assortments in limits of opportunity of resources and in borders of range of the data defined in the target strategic program of the enterprise for ensuring unity and balance of the current and strategic programs of the offer of assortments, including performance of multidimensional graphic modeling of each assortment at once over several parameters by use of the program of type «Advanced Grapher», which is compatible to the software «IBM WebSphere Business Modeler», and it is applicable as an additional graphic tool of optimization; users define on a vertical axis of coordinates the data of a main indicator according to the chosen strategy, for example, of the width of the commodity assortment, which is chosen at the strategy of expansion and differentiation of the commodity assortment and in the range of the restrictions that were set by the strategic program, whereas on horizontal axes of coordinates at the left and on the right they defined the data of indicators of the depth and harmony in dependence from a main indicator and owing to crossing of curves functions of supply and demand at realization of the chosen strategy of positioning of assortments in the markets, as a result, users generate a potentially possible plurality of the key indicators of the offer of each assortment during the current period; users send a task for generating the barcodes over communication channels to the application server of digital transformation of data and come out of operating process of the application server of the target appointment;
6.6.1 - users enter operating process of the application server of digital transformation of data and generate the integrated digital codes for designation of indicators of both demand and the offer of products in a situational model of assortments according the specified parameters, by use of the program of type «Serial Key Generator»; users include into structure of these digital codes the references not only to digital identifiers of a situational model of assortments, various assortments, various indicators of demand or offer but also to identifiers of both a certain market and a certain phase of the current period, define common features of the generated codes of indicators of the current offer of each assortment with digital codes of indicators of current demand and with the corresponding digital codes of the strategic program of the offer of each assortment in a long-term perspective for establishment of communication between these data with the help of digital codes; on the basis of digital codes for designation of the current data of the offer of assortments users form series of intermediate digital codes for designation of data in various combinations of a situational model of assortments; users transfer digital data to the application server of the target appointment over communication channels by means of the OLE technology, implementing the mechanism of interprocessor interaction based on COM, and come out of operating process of the application server of digital transformation of data;
6.7.1 - users enter operating process of the application server of the target appointment and reflect a situational model of assortments on different interactive displays for simultaneous work of group of developers by means of use of the software «SMART Meeting Pro» and «SMART ink» for creation of combinations of a model of assortments; users create various combinations of a model of assortments by consecutive replacement in the lower part of its cells of one combination of the current offer of different groups of products in composition of each assortments and of their intermediate codes by another combination of composition of products groups and their digital codes, which are different not only over composition of products groups, over the width, depth of the offer of the commodity assortments but also over spatial parameters of placement of assortments in various markets in different phases of the current period, and reflect the created various combinations of a situational model of assortments on separate interactive displays in 3D format and in a digital format for the subsequent comparison of the productivity of different combinations of a model of assortments in a digital format; users carry out remote connection to the computing server by means of use of the program for remote access of type «SMART TeamWorks» for further work of group of developers on interactive displays of the computing server with the combinations of a situational model of assortments, suspend operating process on the application server of the target appointment, but do not come out of it fully, they do not switch off interactive displays and do not close programs «SMART Meeting Pro» and «SMART ink»;
6.8.1 - users enter operating process of the computing server, compare various combinations of a situational model of assortments among themselves over degree of correspondence of the transformed compositions of products groups in assortments with the planned composition of assortments of the strategic program and with data of the current consumer demand in assortments by means of use of the program of type «IBM SPSS Statistics»; as a result, users assess, select and reject over the majority of key parameters the least possible combinations of a situational model of assortments;
6.9.1 - users carry out comparative assessment of the selected combinations of a situational model of assortments owing to the solution of tasks of multicriteria optimization of data on the basis of drawing up of the flowcharts of decision-making in a digital format, their of realization by means of the program of type «DecideIT» and of the calculation of increment of aggregate useful effect from transformed composition of assortments in each combination of a situational model of assortments over comparison with the planned aggregate useful effect for the current period in the corresponding strategic program of the offer of assortments; for this purpose users calculate over formulas *« AUE; AUE*_{∪}*»* aggregate useful effect in total cells of various combinations of a situational model of assortments and obtain data about synergistic effectiveness from updated composition of both each assortment and all set of assortments during the current period of their offer in all markets; users display results of the multicriteria assessment of productivity of various combinations of a situational model of assortments on interactive displays by means of programs «SMART Meeting Pro» and «SMART ink»; users transfer results of operations of the computing server to the application server of the target appointment by means of a remote session of the program for remote access of type «SMART TeamWorks» and come out of operating process of the computing server;
6.10.1 - users resume the suspended operating process on the application server of the target appointment; on the basis of the data, obtained from the computing server, users choose the most productive combination of a situational model of assortments from all possible combinations, namely it is a combination, in which such plurality of data of the offer of each assortment during the current period is generated, which provides the highest synergistic effectiveness of the updated current program of assortments in a whole, also users synthesize summary cells of a situational model of assortments and change the intermediate digital codes by the constant digital codes for designation of products groups of the offered assortments in the lower half of cells of a model, complete formation of a file of the created situational model of assortments; users send a task for generating the barcodes over communication channels to the application server of digital transformation of data and come out of operating process of the application server of the target appointment;
6.11.1 - users enter operating process of the application server of digital transformation of data and according the specified parameters, by means of use of the program of type «ActiveBarcode» generate the barcodes of type «QR» or «Data Matrix» for designation of the created situational model of assortments and the current program of the offer of assortments, as well as for designation of the commodity nomenclature, each assortment with the output data of its offer in the current program of assortments; users transfer digital data to the application server of the target appointment over communication channels by means of OLE technology, implementing the mechanism of interprocessor interaction based on COM, and come out of operating process of the application server of digital transformation of data;
6.12.1 - users enter operating process of the application server of the target appointment and create a file of the current program of the offer of assortments on the basis of a situational model of assortments and the received barcodes, as well as generate a plurality of the output data of the width, depth, composition of the offer of each assortment; users carry out direct transfer of the created files of a model and the current program of the offer of assortments to the file server owing to use by servers of the installed program «FTP Rush» by means of «FXP» session under «FTP» protocol and come out of operating process of the application server of the target appointment;
6.13.1 - users enter operating process of the file server, register the received files of a situational model of assortments and of the current program of the offer of assortments under their barcodes for storage and file operations, send files into storage of the file server and place into a digital block of the current programs, where the current program of the offer of assortments under its barcode is united with other current programs into the united current program, which is denoted by an integrated barcode;
6.14.1 - users enter digital blocks of strategic and current programs, which there are in storage of the file server, and users do copies of files of strategic program and current program of assortments, place these copies under their barcodes into an integrated digital block of the situational-strategic program of the offer of products; users are finishing the first step of the sixth stage of the Way and come out of operating process of the file server.

The 2nd step - users create the digital sequence of operations and the matrix-digital mechanism of process of situational transformation of a plurality of temporal parameters of the offer of products for updating the current program of life cycles of products.

List of designations of operations of the second step of the sixth stage [Fig.6]:
6.1.2 - users enter operating process of the application server of the target appointment, establish connection with a matrix-digital model of life cycles of the fifth stage, on this basis and by means of use of the program of type ZWCAD build in 3D format a situational matrix-digital model of life cycles, which is called hereinafter in the reduced form «situational model of life cycles», this model is a tool for multi-purpose optimization and situational transformation of duration of phases of the offer of products in real time according temporal parameters of current demand;
6.2.2 - users use the Scheduler of tasks, which is a part of the software «FTR Ruch», to fill a situational model of the life cycles by data of the strategic program of the life cycles in the automatic mode, namely users fill a situational model of the life cycles by the forecasted temporal parameters of demand and the planned data of life cycle of the offer of products during the current period, as well as denote fields of a situational model of the life cycles by digital codes, which are identical with codes of fields of a model of the life cycles of the fifth stage of the Way but contain in composition the index indicating current appointment of a model in role of a situational model for updating the temporal parameters of the current program of the offer of products, it allows to reach the best commonality of lines and columns and the best comparability of data of strategic and situational models of the life cycles;
6.3.2 - users reflect a situational model of the life cycles, which is created in the 3D format, on interactive displays of type «SMART Board», series 7000 Pro for the coordinated correction by developers of the project of data of this model by means of use of the software «SMART Meeting Pro» and «SMART ink»; users monitor change of the temporal parameters of the current demand, update in real time in the top part of cells of situational model of the life cycles the forecasted temporal parameters by current data of life cycles of demand of the markets in various products by means of use of interactive displays;
6.4.2 - users, using the visual image on interactive displays, define such cells in a situational model of life cycles, in which the current actual temporal parameters of demand do not correspond to the planned temporal parameters of the offer of products in various markets during current period and define the direction of discrepancy;
6.5.2 - users simulate various combinations of transformation of temporal parameters of the offer of products in conformity with parameters of the life cycles of demand of various markets during the current period by means of use of the software of type «IBM WebSphere Business Modeler» that allows to carry out not only strategic modeling at the fifth stage, but also situational transformation of the temporal parameters of the offer of products in limits of resources opportunities and in borders of range of the data defined in the target strategic program for ensuring unity and balance of the current and strategic programs over temporal parameters of the offer of products, including performance of multidimensional graphic modeling of the temporal parameters of life cycles of supply and demand at once over several parameters by use of the program of type «Advanced Grapher», which is compatible to the software «IBM WebSphere Business Modeler», and it is applicable as an additional graphic tool of optimization; users define on a vertical axis of coordinates the data of a main indicator according to the chosen strategy, for example, of the temporal stability over the volume of the offer of a product, which is chosen at the strategy of preservation of positions in the market, and in the range of the restrictions that were set by the strategic program, whereas on horizontal axes of coordinates at the left and on the right they define the data of indicators of the temporal stability over quality and the price in dependence from a main indicator and owing to crossing of curves functions of supply and demand at realization of the chosen strategy of positioning of products in the markets; as a result, users generate a potentially possible plurality of the temporal parameters of the offer of each product during the current period; users send a task for generating the barcodes over communication channels to the application server of digital transformation of data and come out of operating process of the application server of the target appointment;
6.6.2 - users enter operating process of the application server of digital transformation of data and generate the integrated digital codes for designation of indicators of both demand and the offer of products in a situational model of the life cycles according the specified parameters, by use of the program of type «Serial Key Generator»; users include into structure of these digital codes the references not only to digital identifiers of a situational model of life cycles, various types of products, various phases of demand or offer but also to identifiers of both a certain market and a certain phase of the current period, define common features of the generated codes of the temporal parameters of the current offer of each product with digital codes of phases of current demand and with the corresponding digital codes of the temporal parameters of the strategic program of the offer of each product in a long-term perspective for establishment of communication between these data with the help of digital codes; on the basis of digital codes for designation of the temporal parameters of the offer of products during the current period users form series of intermediate digital codes for designation of data in various combinations of a situational model of life cycles; users transfer digital data to the application server of the target appointment over communication channels by means of the OLE technology, implementing the mechanism of interprocessor interaction based on COM, and come out of operating process of the application server of digital transformation of data;
6.7.2 - users enter operating process of the application server of the target appointment and reflect a situational model of life cycles on different interactive displays for simultaneous work of group of developers by means of use of the software «SMART Meeting Pro» and «SMART ink» for creation of combinations of a model of life cycles; users create various combinations of a model of life cycles by consecutive replacement in the lower part of its cells of one combination of the temporal parameters of the current offer of products and of their intermediate codes by another combination them, which are different not only over temporal parameters but also over spatial parameters of placement of products in various markets in different phases of the current period, and reflect the created various combinations of a situational model of life cycles on separate interactive displays in 3D format and in a digital format for the subsequent comparison of the productivity of different combinations of a model of life cycles in a digital format; users carry out remote connection to the computing server by means of use of the program for remote access of type «SMART TeamWorks» for further work of group of developers on interactive displays of the computing server with the combinations of a situational model of life cycles, suspend operating process on the application server of the target appointment, but do not come out of it fully, they do not switch off interactive displays and do not close programs «SMART Meeting Pro» and «SMART ink»;
6.8.2 - users enter operating process of the computing server, compare various combinations of a situational model of the live cycles among themselves over degree of correspondence of the transformed temporal parameters with the planned parameters of life cycles of the offer of products in the strategic program and with phases of the life cycles of the current consumer demand in products by means of use of the program of type «IBM SPSS Statistics»; as a result, users assess, select and reject over the majority of key parameters the least possible combinations of a situational model of life cycles;
6.9.2 - users carry out comparative assessment of the selected combinations of a situational model of life cycles owing to the solution of tasks of multicriteria optimization of data on the basis of drawing up of the flowcharts of decision-making in a digital format, their of realization by means of the program of type «DecideIT» and of the calculation of increment of aggregate useful effect from transformed temporal parameters in each combination of a situational model of life cycles over comparison with the planned aggregate useful effect for the current period in the corresponding strategic program of life cycles of the offer of products; for this purpose users calculate over formulas *« AUE; AUE*_{∪}» aggregate useful effect in total cells of various combinations of a situational model of life cycles and obtain data about synergistic effectiveness from updated temporal parameters of the offer in all markets of both each product and all set of products during the current period; users display results of the multicriteria assessment of effectiveness of various combinations of a situational model of life cycles on interactive displays by means of programs «SMART Meeting Pro» and «SMART ink»; users transfer results of operations of the computing server to the application server of the target appointment by means of a remote session of the program for remote access of type «SMART TeamWorks» and come out of operating process of the computing server;
6.10.2 - users resume the suspended operating process on the application server of the target appointment; on the basis of the data, obtained from the computing server, users choose the most productive combination of a situational model of life cycles from all possible combinations, namely it is a combination, in which such plurality of the temporal parameters of the offer of each product during the current period is generated, which provides the highest synergistic effectiveness of the current program updated over temporal parameters of the offer of products in a whole, also users synthesize summary cells of a situational model of life cycles and change the intermediate digital codes by the constant digital codes for designation of temporal parameters of the offer of products in the lower half of cells of a model, complete formation of a file of the created situational model of life cycles; users send a task for generating the barcodes over communication channels to the application server of digital transformation of data and come out of operating process of the application server of the target appointment;
6.11.2 - users enter operating process of the application server of digital transformation of data and according the specified parameters, by means of use of the program of type «ActiveBarcode» generate the barcodes of type «QR» or «Data Matrix» for designation of the created situational model of life cycles and the current program of the temporal parameters of the offer of products, as well as for designation of each product with the output data of its temporal parameters in the current program of life cycles of the offer of products; users transfer digital data to the application server of the target appointment over communication channels by means of OLE technology, implementing the mechanism of interprocessor interaction based on COM, and come out of operating process of the application server of digital transformation of data;
6.12.2 - users enter operating process of the application server of the target appointment and create a file of the current program of life cycles of the offer of products on the basis of a situational model of life cycles and the received barcodes, as well as generate a plurality of the output data of the time of the beginning, duration, termination of the offer of each product; users carry out direct transfer of the created files of a model and the current program of life cycles of the offer of products to the file server owing to use by servers of the installed program «FTP Rush» by means of «FXP» session under «FTP» protocol and come out of operating process of the application server of the target appointment;
6.13.2 - users enter operating process of the file server, register the received files of a situational model of life cycles and of the current program of life cycles of the offer of products under their barcodes for storage and file operations, send files into storage of the file server and place into a digital block of the current programs, where the current program of life cycles of the offer of products under its barcode is united with other current programs into the united current program, which is denoted by an integrated barcode;
6.14.2 - users enter digital blocks of strategic and current programs, which there are in storage of the file server, and users do copies of files of strategic program and current program of life cycles of the offer of products, place these copies under their barcodes into an integrated digital block of the situational-strategic program of the offer of products; users are finishing the second step of the sixth stage of the Way and come out of operating process of the file server.

The 3rd step - users create the digital sequence of operations and the matrix-digital mechanism of process of situational transformation of a plurality of data of the target function, quality of the offer of products for updating the current program of quality of products.

List of designations of operations of the third step of the sixth stage [Fig.6]:
6.1.3 - users enter operating process of the application server of the target appointment, establish connection with a matrix-digital model of quality of the fifth stage, on this basis and by means of use of the program of type ZWCAD build in 3D format a situational matrix-digital model of quality, which is called hereinafter in the reduced form «situational model of quality», this model is a tool for multi-purpose optimization and situational transformation of the qualitative parameters of products in real time according current need in quality of products;
6.2.3 - users use the Scheduler of tasks, which is a part of the software «FTR Ruch», to fill a situational model of quality by data of the strategic program of the target function and quality of products in the automatic mode, namely users fill a situational model of quality by the forecasted qualitative parameters of demand and the planned data of the target function, quality of the offer of products during the current period, as well as denote fields of a situational model of quality by digital codes, which are identical with codes of fields of a model of quality of the fifth stage of the Way but contain in composition the index indicating current appointment of a model in role of a situational model of quality for updating the target function, qualitative parameters of the current program of the offer of products, it allows to reach the best commonality of lines and columns and the best comparability of data of strategic and situational models of quality;
6.3.3 - users reflect a situational model of quality, which is created in the 3D format, on interactive displays of type «SMART Board», series 7000 Pro for the coordinated correction by developers of the project of data of this model by means of use of the software «SMART Meeting Pro» and «SMART ink»; users monitor change of the current demand in the qualitative parameters of products, update in real time in the top part of cells of situational model of quality the forecasted qualitative parameters by current data of demand of the markets in the target function and quality of various products by means of use of interactive displays;
6.4.3 - users, using the visual image on interactive displays, define such cells in a situational model of quality, in which the current actual qualitative parameters of demand do not correspond to the planned qualitative parameters of the offer of products in various markets during current period and define the direction of discrepancy;
6.5.3 - users simulate various combinations of transformation of qualitative parameters of the offer of products in conformity with qualitative parameters of demand of various markets during the current period by means of use of the software of type «IBM WebSphere Business Modeler» that allows to carry out not only strategic modeling at the fifth stage, but also situational transformation of the qualitative parameters of the offer of products in limits of resources opportunities and in borders of range of the data defined in the target strategic program of the enterprise for ensuring unity and balance of the current and strategic programs over quality of the offer of products, including performance of multidimensional graphic modeling of the qualitative parameters at once over several parameters by use of the program of type «Advanced Grapher», which is compatible to the software «IBM WebSphere Business Modeler», and it is applicable as an additional graphic tool of optimization; users define on a vertical axis of coordinates the data of a main indicator according to the chosen strategy, for example, of the effectiveness of target function of a product, which is chosen at the strategy of improvement of a product and in the range of the restrictions that were set by the strategic program, whereas on horizontal axes of coordinates at the left and on the right they define the data of indicators of the price of a product and its operational cost in dependence from a main indicator and owing to crossing of curves functions of supply and demand at realization of the chosen current strategy of positioning of products in the markets; as a result, users generate a potentially possible plurality of the qualitative parameters of the offer of each product during the current period; users send a task for generating the barcodes over communication channels to the application server of digital transformation of data and come out of operating process of the application server of the target appointment;
6.6.3 - users enter operating process of the application server of digital transformation of data and generate the integrated digital codes for designation of indicators of both demand and the offer of products in a situational model of quality according the specified parameters, by use of the program of type «Serial Key Generator»; users include into structure of these digital codes the references not only to digital identifiers of a situational model of quality, various types of products, various indicators of quality of demand or offer but also to identifiers of both a certain market and a certain phase of the current period, define common features of the generated codes of the quality indicators of the current offer of each product with digital codes of qualitative parameters of current demand and with the corresponding digital codes of the quality indicators of the strategic program of the offer of each product in a long-term perspective for establishment of communication between these data with the help of digital codes; on the basis of digital codes for designation of the qualitative parameters of the offer of products during the current period users form series of intermediate digital codes for designation of data in various combinations of a situational model of quality; users transfer digital data to the application server of the target appointment over communication channels by means of the OLE technology, implementing the mechanism of interprocessor interaction based on COM, and come out of operating process of the application server of digital transformation of data;
6.7.3 - users enter operating process of the application server of the target appointment and reflect a situational model of quality on different interactive displays for simultaneous work of group of developers by means of use of the software «SMART Meeting Pro» and «SMART ink» for creation of combinations of a model of quality; users create various combinations of a model of quality by consecutive replacement in the lower part of its cells of one combination of the qualitative parameters of the current offer of products and of their intermediate codes by another combination them, which are different not only over qualitative parameters but also over spatial parameters of placement of products in various markets in different phases of the current period, and reflect the created various combinations of a situational model of quality on separate interactive displays in 3D format and in a digital format for the subsequent comparison of the productivity of different combinations of a model of quality in a digital format; users carry out remote connection to the computing server by means of use of the program for remote access of type «SMART TeamWorks» for further work of group of developers on interactive displays of the computing server with the combinations of a situational model of quality, suspend operating process on the application server of the target appointment, but do not come out of it fully, they do not switch off interactive displays and do not close programs «SMART Meeting Pro» and «SMART ink»;
6.8.3 - users enter operating process of the computing server, compare various combinations of a situational model of quality among themselves over degree of correspondence of the transformed qualitative parameters with the planned parameters of the target function and quality of the offer of products in the strategic program and with data of the current consumer demand in quality of products by means of use of the program of type «IBM SPSS Statistics»; as a result, users assess, select and reject over the majority of key parameters the least possible combinations of a situational model of quality;
6.9.3 - users carry out comparative assessment of the selected combinations of a situational model of quality owing to the solution of tasks of multicriteria optimization of data on the basis of drawing up of the flowcharts of decision-making in a digital format, their of realization by means of the program of type «DecideIT» and of the calculation of increment of aggregate useful effect from transformed qualitative parameters in each combination of a situational model of quality over comparison with the planned aggregate useful effect for the current period in the corresponding strategic program of quality of the offer of products; for this purpose users calculate over formulas « *AUE*; *AUE*_{∪}» aggregate useful effect in total cells of various combinations of a situational model of quality and obtain data about synergistic effectiveness from updated qualitative parameters of the offer in all markets of both each product and all set of products during the current period; users display results of the multicriteria assessment of productivity of various combinations of a situational model of quality on interactive displays by means of programs «SMART Meeting Pro» and «SMART ink»; users transfer results of operations of the computing server to the application server of the target appointment by means of a remote session of the program for remote access of type «SMART TeamWorks» and come out of operating process of the computing server;
6.10.3 - users resume the suspended operating process on the application server of the target appointment; on the basis of the data, obtained from the computing server, users choose the most productive combination of a situational model of quality from all possible combinations, namely it is a combination, in which such plurality of the qualitative indicators of the offer of each product during the current period is generated, which provides the highest synergistic effectiveness of the current program updated over qualitative indicators of the offer of products in a whole, also users synthesize summary cells of a situational model of quality and change the intermediate digital codes by the constant digital codes for designation of qualitative parameters of the offer of products in the lower half of cells of a model, complete formation of a file of the created situational model of quality; users send a task for generating the barcodes over communication channels to the application server of digital transformation of data and come out of operating process of the application server of the target appointment;
6.11.3 - users enter operating process of the application server of digital transformation of data and according the specified parameters, by means of use of the program of type «ActiveBarcode» generate the barcodes of type «QR» or «Data Matrix» for designation of the created situational model of quality and the current program over quality of the offer of products, as well as for designation of each product with the output data of its target function, qualitative parameters in the current program of quality of the offer of products; users transfer digital data to the application server of the target appointment over communication channels by means of OLE technology, implementing the mechanism of interprocessor interaction based on COM, and come out of operating process of the application server of digital transformation of data;
6.12.3 - users enter operating process of the application server of the target appointment and create a file of the current program of quality of the offer of products on the basis of a situational model of quality and the received barcodes, as well as generate a plurality of the output data of the target function and qualitative parameters of the offer of each product; users carry out direct transfer of the created files of a model and the current program of quality of the offer of products to the file server owing to use by servers of the installed program «FTP Rush» by means of «FXP» session under «FTP» protocol and come out of operating process of the application server of the target appointment;
6.13.3 - users enter operating process of the file server, register the received files of a situational model of quality and of the current program of quality of the offer of products under their barcodes for storage and file operations, send files into storage of the file server and place into a digital block of the current programs, where the current program of quality of products under its barcode is united with other current programs into the united current program, which is denoted by an integrated barcode;
6.14.3 - users enter digital blocks of strategic and current programs, which there are in storage of the file server, and users do copies of files of strategic program and current program of quality of the offer of products, place these copies under their barcodes into an integrated digital block of the situational-strategic program of the offer of products; users are finishing the third step of the sixth stage of the Way and come out of operating process of the file server.

The 4th step - users create the digital sequence of operations and the matrix-digital mechanism of process of situational transformation of a plurality of data of the effectiveness of target function, the volumes, prices of the offer of products for updating the current program of the offer of products.

List of designations of operations of the fourth step of the sixth stage [Fig. 6]:
6.1.4 - users enter operating process of the application server of the target appointment, establish connection with matrix-digital model of the offer of products of the fifth stage, on this basis and by means of use of the program of type ZWCAD build in 3D format a situational matrix-digital model of the offer of products, which is called hereinafter in the reduced form «situational model of the offer of products», this model is a tool for multi-purpose optimization and situational transformation of data of the offer of products in real time according current need;
6.2.4 - users use the Scheduler of tasks, which is a part of the software «FTR Ruch», to fill a situational model of the offer of products by data of the strategic program of the offer of products in the automatic mode, namely users fill a situational model of the offer of products by the forecasted data of demand and the planned data of indicators of the offer of products during the current period, as well as denote fields of a situational model of the offer of products by digital codes, which are identical with codes of fields of a model of the offer of products of the fifth stage of the Way but contain in composition the index indicating current appointment of a model in role of situational model for updating data of the current program of the offer of products, it allows to reach the best commonality of lines and columns and the best comparability of data of strategic and situational models of the offer of products;
6.3.4 - users reflect a situational model of the offer of products, which is created in the 3D format, on interactive displays of type «SMART Board», series 7000 Pro for the coordinated correction by developers of the project of data of this model by means of use of the software «SMART Meeting Pro» and «SMART ink»; users monitor change of various indicators of the current demand, update in real time in the top part of cells of situational model of the offer of products the forecasted data by current data of demand of the markets in the effectiveness of target function, in volume, price of various products by means of use of interactive displays;
6.4.4 - users, using the visual image on interactive displays, define such cells in a situational model of the offer of products, in which the current actual data of demand do not correspond to the planned data of the offer of products in various markets during current period and define the direction of discrepancy;
6.5.4 - users simulate various combinations of transformation of data of the offer of products in conformity with data of demand of various markets during the current period by means of use of the software of type «IBM WebSphere Business Modeler» that allows to carry out not only strategic modeling at the fifth stage, but also situational transformation of data of indicators of the offer of products in limits of resources opportunities and in borders of range of the data defined in the target strategic program of the enterprise for ensuring unity and balance of the current and strategic programs of the offer of products, including performance of multidimensional graphic modeling of the indicators of the offer of products at once over several parameters by use of the program of type «Advanced Grapher», which is compatible to the software «IBM WebSphere Business Modeler», and it is applicable as an additional graphic tool of optimization; users define on a vertical axis of coordinates the data of a main indicator according to the chosen strategy, for example, of the volume of the offer of a product, which is chosen at the strategy of the wide penetration in the markets and in the range of the restrictions that were set by the strategic program, whereas on horizontal axes of coordinates at the left and on the right they define the data of indicators of the effectiveness of target function and of the price of a product in dependence from a main indicator and owing to crossing of curves functions of supply and demand at realization of the chosen current strategy of positioning of products in the markets; as a result, users generate a potentially possible plurality of data of the offer of each product during the current period; users send a task for generating the barcodes over communication channels to the application server of digital transformation of data and come out of operating process of the application server of the target appointment.

The way of graphic multidimensional modeling of data to a large extent is suitable for transformation of data of the current program, because the strategies of positioning of products in various markets, also tendencies of change of functions of different indicators of supply and demand in dependence from each other can define most precisely on the current period only. Besides, this way consists in choice of a main indicator on a vertical axis of coordinates in range of data of its change depending on the strategic program and the chosen strategies of the offer of products;
6.6.4 - users enter operating process of the application server of digital transformation of data and generate the integrated digital codes for designation of indicators of both demand and the offer of products in situational model of the offer of products according the specified parameters, by use of the program of type «Serial Key Generator»; users include into structure of these digital codes the references not only to digital identifiers of situational model of the offer of products, various types of products, various indicators of demand or offer but also to identifiers of both a certain market and a certain phase of the current period, define common features of the generated codes of data of the current offer of each product with digital codes of data of the current demand and with the corresponding digital codes of data of the strategic program of the offer of each product in a long-term perspective for establishment of communication between these data with the help of digital codes; on the basis of digital codes for designation of the current data of the offer of products users form series of intermediate digital codes for designation of data in various combinations of a situational model of the offer of products; users transfer digital data to the application server of the target appointment over communication channels by means of the OLE technology, implementing the mechanism of interprocessor interaction based on COM, and come out of operating process of the application server of digital transformation of data;
6.7.4 - users enter operating process of the application server of the target appointment and reflect a situational model of the offer of products on different interactive displays for simultaneous work of group of developers by means of use of the software «SMART Meeting Pro» and «SMART ink» for creation of combinations of a model of the offer of products; users create various combinations of a model of the offer of products by consecutive replacement in the lower part of its cells of one combination of data of the indicators of the current offer of products and of their intermediate codes by another combination them, which are different not only over a plurality of data of indicators of the offer of products but also by spatial parameters of placement of products in various markets in different phases of the current period, and reflect the created various combinations of a situational model of the offer of products on separate interactive displays in 3D format and in a digital format for the subsequent comparison of the productivity of different combinations of a model of the offer of products in a digital format; users carry out remote connection to the computing server by means of use of the program for remote access of type «SMART TeamWorks» for further work of group of developers on interactive displays of the computing server with the combinations of a situational model of the offer of products, suspend operating process on the application server of the target appointment, but do not come out of it fully, they do not switch off interactive displays and do not close programs «SMART Meeting Pro» and «SMART ink»;
6.8.4 - users enter operating process of the computing server, compare various combinations of a situational model of the offer of products among themselves over degree of correspondence of the transformed data of the offer of products with the planned data of indicators of the offer of products in the strategic program and with data of the current consumer demand in products by means of use of the program of type «IBM SPSS Statistics»; as a result, users assess, select and reject over the majority of key parameters the least possible combinations of a situational model of the offer of products;
6.9.4 - users carry out comparative assessment of the selected combinations of a situational model of the offer of products owing to the solution of tasks of multicriteria optimization of data on the basis of drawing up of the flowcharts of decision-making in a digital format, their of realization by means of the program of type «DecideIT» and of the calculation of increment of aggregate useful effect from transformed plurality of data in each combination of a situational model of the offer of products over comparison with the planned aggregate useful effect for the current period in the corresponding strategic program of the offer of products; for this purpose users calculate over formulas « *AUE; AUE*_{∪}» aggregate useful effect in total cells of various combinations of a situational model of the offer of products and obtain data about synergistic effectiveness from updated plurality of data of the offer in all markets of both each product and all set of products during the current period; users display results of the multicriteria assessment of productivity of various combinations of a situational model of the offer of products on interactive displays by means of programs «SMART Meeting Pro» and «SMART ink»; users transfer results of operations of the computing server to the application server of the target appointment by means of a remote session of the program for remote access of type «SMART TeamWorks» and come out of operating process of the computing server;
6.10.4 - users resume the suspended operating process on the application server of the target appointment; on the basis of the data, obtained from the computing server, users choose the most productive combination of a situational model of the offer of products from all possible combinations, namely it is a combination, in which such plurality of data of indicators of the effectiveness of target function, the volume and price of the offer of each product during the current period is generated, which provides the highest synergistic effectiveness of the current program updated over data plurality of indicators of the offer of products in a whole, also users synthesize summary cells of a situational model of the offer of products and change the intermediate digital codes by the constant digital codes for designation of data of the offer of products in the lower half of cells of a model, complete formation of a file of the created situational model of the offer of products; users send a task for generating the barcodes over communication channels to the application server of digital transformation of data and come out of operating process of the application server of the target appointment;
6.11.4 - users enter operating process of the application server of digital transformation of data and according the specified parameters, by means of use of the program of type «ActiveBarcode» generate the barcodes of type «QR» or «Data Matrix» for designation of the created situational model of the offer of products and the current program of the offer of products, as well as for designation of each product with the output data of its offering in various markets in the current program of the offer of products; users generate barcodes for designation of the integrated current program and of the integrated situational-strategic program and their blocks in completing of all steps of the sixth stage; users transfer digital data to the application server of the target appointment over communication channels by means of OLE technology, implementing the mechanism of interprocessor interaction based on COM, and come out of operating process of the application server of digital transformation of data;
6.12.4 - users enter operating process of the application server of the target appointment and create a file of the current program of the offer of products on the basis of a situational model of the offer of products and the received barcodes, as well as generate a plurality of the output data of the effectiveness of the target function, the volume, price of the offer of each product; users carry out direct transfer of the created files of a model and the current program of the offer of products to the file server owing to use by servers of the installed program «FTP Rush» by means of «FXP» session under «FTP» protocol and come out of operating process of the application server of the target appointment;
6.13.4 - users enter operating process of the file server, register the received files of a situational model of the offer of products and of the current program of the offer of products under their barcodes for storage and file operations, send files into storage of the file server and place into a digital block of the current programs, where the current program of the offer of products under its barcode is united with other current programs into the united current program, which is denoted by an integrated barcode;
6.14.4 - users enter digital blocks of strategic and current programs, which there are in storage of the file server, and users do copies of files of strategic program and current program of the offer of products, place these copies under their barcodes into an integrated digital block of the situational-strategic program of the offer of products; users are finishing formation of an united digital block of the situational-strategic program, which is denoted by an integrated barcode, and it is a result of operating process of all levels of the Sixth subsystem at performance of all steps of the sixth stage of the Way, as well as it is a result of functioning of all subsystems and of the System in a whole owing to implementing all stages of the Way; users send from the file server via web-server of the System to web-server of the enterprise the created files and the information that all blocks are formed, all files of the situational-strategic program are created and sent, action of the System is finished; users come out of operating process of the file server, of network of the Sixth subsystem and the System in a whole.

### List of designations [Fig.7].

[Fig. 7] - «Aggregate matrix-digital model of a way of transformation of a variable plurality of data of the consumer indicators of products in interrelation with temporal and spatial parameters» - final model of the declared Way, which in the form of a chain of the connected digital codes characterizes not only the sequence of stages, steps, operations of all process of actions with data, but their unity and the matrix-digital mechanism of transformation of a variable plurality of data in the course of generating the programs of the offer of products in interrelation with temporal and spatial parameters.

The list of designations of stages of the declared Way [Fig.7]:
1 - the first stage «Way of creation of the analog-digital databases and a digital block of databases for formation of the information basis of programs of the offer of products» [Fig. 1];
2 - the second stage «Way of formation of the object-relational models of DBMS and a digital block of models for synthesis of data in programs of the offer of products» [Fig. 2];
3 - the third stage «Way of generating of the temporal rows of forecasted data and of formation of a digital analytical block for creation of the programs of the offer of products» [Fig.3];
4 - the fourth stage «Way of synthesis of strategies and formation of a digital block of strategies for creation of the programs of the offer of products» [Fig.4];
5 - the fifth stage «Way of generating a plurality of the output data of the target strategic program of the offer of products in interrelation with temporal and spatial parameters and of formation of a digital block of strategic programs» [Fig.5];
6 - the sixth stage «Way of situational transformation of a plurality of data of the current programs of the offer of products and formation of a digital block of the situational-strategic program over products» [Fig.6].

List of designations of steps of the 1^{st} stage [Fig. 7]:
1.1-9.1 - the first step of the first stage, at which the digital sequence of operations and the matrix-digital mechanism of process of generating an analog-digital database for planning a business environment of the company are created; the step includes nine operations [1-9] (pages 24 - 25);
1.1-9.2 - the second step of the first stage, at which the digital sequence of operations and the matrix-digital mechanism of process of generating an analog-digital database for planning development strategies of the company are created; the step includes nine operations [1-9] (pages 25 -27);
1.1-9.3 - the third step of the first stage, at which the digital sequence of operations and the matrix-digital mechanism of process of generating an analog-digital database for creation of programs over the commodity nomenclature and assortments are created; step includes nine operations [1-9] (pages 27 - 28);
1.1-9.4 - the fourth step of the first stage, at which the digital sequence of operations and the matrix-digital mechanism of process of generating an analog-digital database for creation of programs of cumulative life cycles of products are created; step includes nine operations [1-9] (pages 28 -29);
1.1-9.5 - the fifth step of the first stage, at which the digital sequence of operations and the matrix-digital mechanism of process of generating an analog-digital database for creation of programs over target function and quality of products are created; step includes nine operations [1-9] (pages 29 - 30);
1.1-9.6 - the sixth step of the first stage, at which the digital sequence of operations and the matrix-digital mechanism of process of generating an analog-digital database for creation of programs of the offer of products are created; step includes nine operations [1-9] (pages 30 - 31).

List of designations of steps of the 2^{nd} stage [Fig.7]:
2.1-5.1 - the first step of the second stage, at which the digital sequence of operations and the matrix-digital mechanism of process of creation of an object-relational model of DBMS for synthesis of development strategies of a business environment of the company are created; the step includes five operations [1-5] (page 34);
2.1-5.2 - the second step of the second stage, at which the digital sequence of operations and the matrix-digital mechanism of process of creation of an object-relational model of DBMS for synthesis of development strategies of the company and its products are created; the step includes five operations [1-5] (pages 34- 35);
2.1-5.3 - the third step of the second stage, at which the digital sequence of operations and the matrix-digital mechanism of process of creation of an object-relational model of DBMS for synthesis of data in programs over the commodity nomenclature and assortments are created; the step includes five operations [1-5] (pages 35- 36);
2.1-5.4 - the fourth step of the second stage, at which the digital sequence of operations and the matrix-digital mechanism of process of creation of an object-relational model of DBMS for synthesis of data in programs of life cycles of products are created; the step includes five operations [1-5] (pages 36 -37);
2.1-5.5 - the fifth step of the second stage, at which the digital sequence of operations and the matrix-digital mechanism of process of creation of an object-relational model of DBMS for synthesis of data in programs over target function and quality of products are created; the step includes five operations [1-5] (pages 37 - 38);
2.1-5.6 - the sixth step of the second stage, at which the digital sequence of operations and the matrix-digital mechanism of process of creation of an object-relational model of DBMS for synthesis of data in programs of the offer of products in interrelation with temporary and spatial parameters are created; the step includes five operations [1-5] (pages 38 -39).

List of designations of steps of the 3^{rd} stage [Fig. 7]:
3.1-9.1 - the first step of the third stage, at which the digital sequence of operations and the matrix-digital mechanism of process of generating the temporal rows of forecasted data of the markets and a business environment of the company are created; the step includes nine operations [1-9] (pages 42 - 44);
3.1-9.2 - the second step of the third stage, at which the digital sequence of operations and the matrix-digital mechanism of process of generating the temporal rows of forecasted data of demand in consumer effectiveness of products of the company are created; the step includes nine operations [1-9] (pages 44 -46);
3.1-9.3 - the third step of the third stage, at which the digital sequence of operations and the matrix-digital mechanism of process of generating the temporal rows of forecasted data of demand in commodity assortments are created; the step includes nine operations [1-9] (pages 46 - 48);
3.1-9.4 - the fourth step of the third stage, at which the digital sequence of operations and the matrix-digital mechanism of process of generating the temporal rows of forecasted data of life cycles of demand in products are created; the step includes nine operations [1-9] (pages 48 - 50);
3.1-9.5 - the fifth step of the third stage, at which the digital sequence of operations and the matrix-digital mechanism of process of generating the temporal rows of forecasted data of demand in the target function and quality of products are created; the step includes nine operations [1-9] (pages 50 - 52);
3.1-9.6 - the sixth step of the third stage, at which the digital sequence of operations and the matrix-digital mechanism of process of generating the temporal rows of forecasted data of demand in effectiveness of target function, in volume and price of products are created; the step includes nine operations [1-9] (pages 52 - 54).

List of designations of steps of the 4^{th} stage [Fig.7]:
4.1-10.1 - the first step of the fourth stage, at which the digital sequence of operations and the matrix-digital mechanism of process of synthesis of strategies of transformation of a business environment of the company and strategic zones of positioning of products in the markets are created; the step includes ten operations [1-10] (pages 58 - 61);
4.1-10.2 - the second step of the fourth stage, at which the digital sequence of operations and the matrix-digital mechanism of process of synthesis of strategies of development of the company and its products are created; the step includes ten operations [1-10] (pages 61 - 63);
4.1-10.3 - the third step of the fourth stage, at which the digital sequence of operations and the matrix-digital mechanism of process of synthesis of strategies of transformation of the commodity nomenclature and assortments are created; the step includes ten operations [1-10] (pages 63 - 66);
4.1-10.4 - the fourth step of the fourth stage, at which the digital sequence of operations and the matrix-digital mechanism of process of synthesis of strategies of transformation of life cycles of products are created; the step includes ten operations [1-10] (pages 66- 69);
4.1-10.5 - the fifth step of the fourth stage, at which the digital sequence of operations and the matrix-digital mechanism of process of synthesis of strategies of transformation of the target function and quality of products are created; the step includes ten operations [1-10] (pages 69 - 71);
4.1-10.6 - the sixth step of the fourth stage, at which the digital sequence of operations and the matrix-digital mechanism of process of synthesis of strategies of data transformation of the offer of products in strategic segments of the markets are created; the step includes ten operations [1-10] (pages 71 - 74).

List of designations of steps of the 5^{th} stage [Fig.7]:
5.1-12.1 - the first step of the fifth stage, at which the digital sequence of operations and the matrix-digital mechanism of process of generating a plurality of data of the strategic program of the offer of the commodity nomenclature and assortments are created; the step includes twelve operations [1-12] (pages 78 - 79, 82, 83, 85);
5.1-12.2 - the second step of the fifth stage, at which the digital sequence of operations and the matrix-digital mechanism of process of generating a plurality of the temporal parameters of the strategic program of the offer of products are created; the step includes twelve operations [1-12] (pages 86 - 87, 89, 90, 92 - 93);
5.1-12.3 - the third step of the fifth stage, at which the digital sequence of operations and the matrix-digital mechanism of process of generating a plurality of data of target function and qualitative parameters of the strategic program of the offer of products are created; the step includes twelve operations [1-12] (pages 93 -94, 97, 98 , 102);
5.1-12.4 - the fourth step of the fifth stage, at which the digital sequence of operations and the matrix-digital mechanism of process of generating a plurality of data of the effectiveness of target function, the volumes and prices of the strategic program of the offer of products are created; the step includes twelve operations [1-12] (pages 102 - 104, 106, 107, 111 -112).

List of designations of steps of the 6^{th} stage [Fig.7]:
6.1-14.1 - the first step of the sixth stage, at which the digital sequence of operations and the matrix-digital mechanism of process of situational transformation of a plurality of data of width, depth and composition of the offer of commodity assortments for updating of the current program of assortments are created; the step includes fourteen operations [1-14] (pages 116 - 118);
6.1-14.2 - the second step of the sixth stage, at which the digital sequence of operations and the matrix-digital mechanism of process of situational transformation of a plurality of the temporal parameters of the offer of products for updating the current program of the life cycles of products are created; the step includes fourteen operations [1-14] (pages 118 - 121);
6.1-14.3 - the third step of the sixth stage, at which the digital sequence of operations and the matrix-digital mechanism of process of situational transformation of a plurality of data of the target function and quality of the offer of products for updating the current program of quality of products are created; the step includes fourteen operations [1-14] (pages 121 -123);
6.1-14.4 - the fourth step of the sixth stage, at which the digital sequence of operations and the matrix-digital mechanism of process of situational transformation of a plurality of data of the effectiveness of target function, the volumes and prices of the offer of products for updating the current program of the offer of products are created; the step includes fourteen operations [1-14] (pages 123 - 126).

## Claims

1. System of exercise of a way of matrix-digital transformation of a variable data plurality, it is named further the System, it has constructive similarity with a prototype, what is limited to existence among its structural elements of the server of databases and forming the interconnected data blocks for reflection and display of data, blocks of development of recommendations, comparison and the choice of solutions variants, but System differs from a prototype and the known technical solutions by a set of essential technical features: by constructive device, software, the interactive principle of action, as well as communication channels, interaction of elements, and also distinctive feature consists in the fact that System is inseparably linked with a way of matrix-digital transformation of a variable data plurality, and they together form unity and integrity, namely System differs by existence of external and internal spheres and by constructive device containing the following interconnected structural elements: the web-server, proxy-server, server of databases - «Data Server»; «MySQL Server»; the computing server; the application server over synthesis of strategies; the application server of digital transformation of data; the application server of the target appointment; the file server; the controller of the domain; interactive panels; these servers are connected by communication channels and interaction with each other concerning data transmission from the server to the server in the course of exercise of various operations of the Way; each of servers is equipped with the operating system of family «Windows NT», of the type Windows 10, what provides their compatibility and community, as well as each server has software that is known from level of technique and is compatible to the used version of the operating system, with the software of other servers, and it is the functioning mechanism by means of which the server carries out the functional appointment, but at the same time, this its software, being used in a certain sequence and together with the software of other servers, is a necessary element of the technical mechanism of the created System, what defines its technical characteristics, namely servers are equipped by the following software: server of databases - «Data Server» is intended for collecting, systematization and storage of constant data and carries out the target appointment on the basis of software of type «Microsoft Excel», what allows to form the own matrix structure of databases in the format allowing to export the created database to a format «MySQL Workbench», «MySQL» or their analogs; server «MySQL» is intended for management by databases and carries out the target appointment on the basis of the software of type «MySQL» and «MySQL Workbench» basing on the structured language of inquiries; computing server is intended for processing of the arriving variable analytical data, for creation of analytical, commercial databases, as well as for estimating, computing, comparative operations, operations over forecast of data, and computing server carries out the target appointment on the basis of software over creation of unstructured databases of type «NoSQL», of software of type «DecideIT» for comparison of all combinations of data and the choice on the basis of the multicriteria analysis of an optimal solution, as well as the software of type «IBM SPSS Statistics Standard» and of type «SAS^{∗} Visual Forecasting», which are compatible with each other, allow to import and export data to «Microsoft Excel», to save files in the compatible «sav» format, and which are used for providing the widest range of computing, analytical operations and operations of the forecast of data both for long-term and the current period; the application server of digital transformation of data is intended for generating the digital codes, including digital indexes, digital keys and barcodes of data, and works on the basis of software of type «Serial Key Generator» and of type «ActiveBarcode», these programs are used for creation of the adjustable digital codes and barcodes according the specified parameters, and programs are capable to export generated codes to any program through the cloudy clipboard, over communication channels by means of technology «OLE» through the mechanism of interprocessor interaction based on «COM»; the application server over synthesis of strategies is intended for synthesis of the interconnected long-term and current development strategies of the company and its products and carries out the target appointment on the basis of software of type «SAS^{∗} Visual Analitics», this software allows to implement comprehensive analysis of the big array of the structured and unstructured data, including graphical analysis of development trends, testing of possible scenarios for synthesis of the long-term and current strategies of the offer of various products in various markets during the different temporal periods; the application server of the target appointment for creation of the situational-strategic program works on the basis of the programs of type «IBM WebSphere Business Modeler» and of type «Advanced Grapher» for generating of various combinations of the planned data at the specified restrictions, and also on the basis of the program of type «ZWCAD» for creation in 3D format of matrix-digital models that are tools for exercise of mechanism of optimal planning a plurality of output data of the situational-strategic program over products; the file server is intended for storage and the file operations of any type of data and is equipped by the file system of new technology «NTFS» on the basis of the software of type «Windows Server 2012 R2 NTFS», of family of operating systems «Windows NT»; the file server and other servers, participating in process of performance of operations of the Way and in the course of data transmission from the server to the server, work with the help of the installed program of type «FTP Rush» - FTP - client», this program has the Scheduler of tasks and provides direct files transfer from the server to the server under the protocol «FTP» by means of session «FXP» (File exchange Protocol); all servers are connected over communication channels with each other through controller of the domain of type «DPT RAID», which supports the operating system «Windows NT», and it acts on the basis of software of the fifth generation «Smart RAID V.», of series «Millennium» that is controller for servers of the enterprise scale; the System includes visual displays of type of interactive panels «SMART Board», series 7000 Pro c IQ for Windows 10, which work on the basis of the software «SMART Meeting Pro» and «SMART ink» and are joined by means of a cable «HDMI» to computers of the computing server, the application server over synthesis of strategies and the application server of the target appointment for data visualization that is required at performing by these servers of operations of the Way, as well as for providing of simultaneous work on different blocks of the distributed data of the project of several people that can work, using not only one interactive display or displays installing in one room and connected with one computer but and the different displays connected with different computers by means of the program for remote access of type «SMART TeamWorks»; interactive displays «SMART Board», which are used in invented System not only on the basis them of the software, but and together with the software of other servers of the System, as well as for implementing operations of the Way, become necessary element of multi-function device of the System, their functions expand, because they use already not only for input, exit and reflection of data at the screens, but also for the analysis, the forecast, synthesis of strategies, for modeling data, generating of strategic programs, monitoring of demand, situational updating of the current programs in real time, it is sign that influences also technical characteristics of the System, the technical result of it; the System has the external environment and interacts with external servers: web-server of System, receiving request from the external web-server of the enterprise on exercise of the Way, forms inquiries via the System proxy-server and directs them to web- servers of archival and library resources, sales markets of products, suppliers of material resources, suppliers of technologies and means of labor, suppliers of work force, resellers, financial intermediaries, buyers for obtaining the information and analytical data necessary for performance of operations of the Way; the answers from external servers are arriving on the proxy-server of the System over neural network, it allows to find out data in the automatic mode; the sorted constant and variable data come in different folders of the intermediate buffer for temporal storage of data of proxy-server and from it go to different servers of the internal environment of the System in dependence from appointment, namely users send constant data to the server of databases, whereas analytical data - to the computing server; essential distinctive sign of the System consists in the interactive principle of its action, namely in creation of six nonstructural and not hierarchical interactive subsystems for exercise of six stages of the Way, which are designated as the First subsystem, Second subsystem, Third subsystem, Fourth subsystem, Fifth subsystem, Sixth subsystem, each of subsystems has several levels, at which different steps of a certain stage of the Way are performed; all subsystems are connected with each other by communication channels in uniform network of the System, but each subsystem includes as identical servers of the System for performance of typical operations of general appointment, so and the individual main server having general functional purpose with a certain subsystem only, also each subsystem has different nature of communications and interaction between elements, because each subsystem is characterized absolutely by different system of entrances and exits of data, the operating processes, communication interrelations, channels of the movement of the data established for exercise of the purposes of a certain stage of the Way, it forms network of each of subsystems of the System, namely:
the network of the First subsystem unites the following interacting elements of the System: the server of databases with the software of type «Microsoft Excel», the application server of digital transformation of data with the software of type «Serial Key Generator» and of type «ActiveBarcode»; the file server with the software of type «Windows Server 2012 R2 NTFS»; these servers are connected with each other by communication channels; the server of databases receives over communication channels from the proxy-server constant data for formation of databases and interacts with other servers of the First subsystem that has six levels connected over communication channels by the general installation, the general process of exercise of six steps of the first stage of the Way, and it is intended for generating the analog-digital databases and formation of a digital block of databases, namely: at the first level of the First subsystem - of an analog-digital database for planning of a business environment of the company owing to performance of the first step of the first stage of the Way; at the second level of the First subsystem - of an analog-digital database for planning of development strategies of the company owing to performance of the second step of the first stage of the Way; at the third level of the First subsystem - of an analog-digital database for creation of programs over commodity nomenclature and assortments owing to performance of the third step of the first stage of the Way; at the fourth level of the First subsystem - of an analog-digital database for creation of programs over cumulative life cycle of products owing to performance of the fourth step of the first stage of the Way; at the fifth level of the First subsystem - of an analog-digital database for creation of programs over target function and quality of products owing to performance of the fifth step of the first stage of the Way; at the sixth level of the First subsystem - of an analog-digital database for creation of programs of the offer of products owing to performance of the sixth step of the first stage of the Way; action of network of the First subsystem consists in work of servers of this subsystem over performance of the operating processes consisting in consecutive performance of operations of each step of the first stage of the Way, and the communication processes consisting in procedures of an entrance and exit from operating process on each of servers and in their interaction with each other by means of communication channels for transfer of a data flow that are received as a result of their operating process at performance of steps of the first stage of the Way at each level of the First subsystem; upon termination of all operations at all levels of the First subsystem and finishing of the first stage of the Way by formation of a digital block of databases, which is a result of work of servers of the First subsystem, interaction of structural elements of the System in network of the First subsystem comes to an end;
the network of the Second subsystem unites the following interacting elements of the System: «MySQL Server» over management by databases with the installed program of type «MySQL», as well as the compatible program «MySQL Workbench» that is a tool for the visual and integrated designing and modeling of databases into uniform seamless space owing to establishment of interrelations between them in the system of databases «MySQL»; the application server of digital transformation of data with the software of type «Serial Key Generator» and of type «ActiveBarcode»; the file server with the software of type «Windows Server 2012 R2 NTFS»; these servers are connected with each other by communication channels; server «MySQL», using the program of direct file transfer «FTP Rush» by means of a session «FXP» over the protocol «FTP», receives *«csv»* files from a block of databases of storage of the file server, and users of the server «MySQL» carry out import their into the installed program «MySQL Workbench» for implementation of the databases management System by means of creation of object-relational models and interact with other servers of the Second subsystem that has six levels connected over communication channels by the general installation, the general process of exercise of six steps of the second stage of the Way, and it is intended for creation of object-relational digital models of the databases management System (DBMS) and for formation of a digital block of the object-relational models of DBMS, namely: at the first level of the Second subsystem - of an object-relational model of DBMS for synthesis of strategies of development of a business environment of the company owing to performance of the first step of the second stage of the Way; at the second level of the Second subsystem - of an object-relational model of DBMS for synthesis of strategies of development of the company and its products owing to performance of the second step of the second stage of the Way; at the third level of the Second subsystem - of an object-relational model of DBMS for synthesis of data in programs over commodity nomenclature and assortments owing to performance of the third step of the second stage of the Way; at the fourth level of the Second subsystem - of an object-relational model of DBMS for synthesis of data in programs of the life cycles of products owing to performance of the fourth step of the second stage of the Way; at the fifth level of the Second subsystem - of an object-relational model of DBMS for synthesis of data in programs over target function, quality of products owing to performance of the fifth step of the second stage of the Way; at the sixth level of the Second subsystem - of an object-relational model of DBMS for synthesis of data in programs of the offer of products in interrelation with temporal and spatial parameters owing to performance of the sixth step of the second stage of the Way; action of network of the Second subsystem consists in work of servers of this subsystem over performance of the operating processes consisting in consecutive performance of operations of each step of the second stage of the Way, and the communication processes consisting in procedures of an entrance and exit from operating process on each of servers and in their interaction with each other by means of communication channels for transfer of a data flow that are received owing to their operating process at performance of steps of the second stage of the Way at each level of the Second subsystem; upon termination of all operations at all levels of the Second subsystem and finishing of the second stage of the Way by formation of a digital block of the object-relational models of DBMS, which is a result of work of servers of the Second subsystem, interaction of structural elements of the System in network of the Second subsystem comes to an end;
the network of the Third subsystem unites the following interacting elements of the System: the computing server with the software of type «NoSQL», as well as of type «IBM SPSS Statistics Standard» and «SAS^{∗} Visual Forecasting»; the application server of digital transformation of data with the software of type «Serial Key Generator» and of type «ActiveBarcode»; the file server with the software of type «Windows Server 2012 R2 NTFS»; these servers are connected with each other by communication channels; the computing server receives over neural communication channels through proxy-server the variable data of analytical character and receives files from block of databases and from block of the object-relational models of DBMS of the file server, using the program of direct file transfer «FTP Rush» by means of a session of «FXP» over the protocol of «FTP»; the computing server is equipped by interactive displays of type «SMART Board», of the series 7000 Pro, which work on basis of software «SMART Meeting Pro» and «SMART ink», and interacts with other servers of the Third subsystem that has six levels connected over communication channels by the general installation, the general process of performance of six steps of the third stage of the Way, and it is intended for creation of temporal rows of forecasted data of demand and for formation of an analytical block of data, namely: at the first level of the Third subsystem - of the temporal rows of forecasted data of the markets and a business environment of the company owing to performance of the first step of the third stage of the Way; at the second level of the Third subsystem - of the temporal rows of forecasted data of demand in consumer effectiveness of products of the company owing to performance of the second step of the third stage of the Way; at the third level of the Third subsystem - of the temporal rows of the forecasted data of demand in commodity nomenclature and assortments owing to performance of the third step of the third stage of the Way; at the fourth level of the Third subsystem - of the temporal rows of the forecasted data of life cycles of demand in products owing to performance of the fourth step of the third stage of the Way; at the fifth level of the Third subsystem - of the temporal rows of the forecasted data of demand in target function and quality of products owing to performance of the fifth step of the third stage of the Way; at the sixth level of the Third subsystem - of the temporal rows of the forecasted data of demand in the effectiveness of target function, in volume, price of products owing to performance of the sixth step of the third stage of the Way; action of network of the Third subsystem consists in work of servers of this subsystem over performance of the operating processes consisting in consecutive performance of operations of each step of the third stage of the Way, and the communication processes consisting in procedures of an entrance and exit from operating process on each of servers and in their interaction with each other by means of communication channels for transfer of a data flow that are received as a result of their operating process at performance of steps of the third stage of the Way at each level of the Third subsystem; upon termination of all operations at all levels of the Third subsystem and finishing of the third stage of the Way by formation of a digital analytical block, which is a result of work of servers of the Third subsystem, interaction of structural elements of the System in network of the Third subsystem comes to an end;
the network of the Fourth subsystem unites the following interacting elements of the System: the computing server with the software of type «IBM SPSS Statistics Standard» and of type «SAS^{∗} Visual Forecasting»; the application server over synthesis of strategies with the software of type «SAS^{∗} Visual Analitics»; the application server of digital transformation of data with the software of type «Serial Key Generator» and of type «ActiveBarcode»; the file server with the software of type «Windows Server 2012 R2 NTFS»; these servers are connected with each other by communication channels; the computing server and the application server over synthesis of strategies, using the program of direct file transfer «FTP Rush» by means of a session «FXP» over protocol «FTP», receive files from blocks of storage of the file server: from blocks of databases and object-relational models of DBMS, as well as from an analytical block; the computing server and the application server over synthesis of strategies are connected with each other and are equipped by interactive displays of type «SMART Board», of series 7000 Pro, which work on the basis of the software «SMART Meeting Pro», «SMART ink» and «SMART TeamWorks»; these servers interact with other servers of the Fourth subsystem that has six levels connected over communication channels by the general installation, the general process of performance of six steps of the fourth stage of the Way, and it is intended for synthesis of strategies and formation of a digital block of strategies, namely: at the first level of the Fourth subsystem - of the strategies of transformation of the business environment of the company and strategic zones of positioning of products in the markets owing to performance of the first step of the fourth stage of the Way; at the second level of the Fourth subsystem - of the development strategies of the company and its products owing to performance of the second step of the fourth stage of the Way; at the third level of the Fourth subsystem - of the strategies of transformation of the commodity nomenclature and assortments owing to performance of the third step of the fourth stage of the Way; at the fourth level of the Fourth subsystem - of the strategies of transformation of life cycles of the products owing to performance of the fourth step of the fourth stage of the Way; at the fifth level of the Fourth subsystem - of the strategies of transformation of target function, quality of the products owing to performance of the fifth step of the fourth stage of the Way; at the sixth level of the Fourth subsystem - of the strategies of transformation of the indicators of offering products in strategic segments of various markets owing to performance of the sixth step of the fourth stage of the Way; action of network of the Fourth subsystem consists in work of servers of this subsystem over performance of the operating processes consisting in consecutive performance of operations of each step of the fourth stage of the Way, and the communication processes consisting in procedures of an entrance and exit from operating process on each of servers and in their interaction with each other by means of communication channels for transfer of a data flow that are received as a result of their operating process at performance of steps of the fourth stage of the Way at each level of the Fourth subsystem; upon termination of all operations at all levels of the Fourth subsystem and finishing of the fourth stage of the Way by formation of a digital block of strategies, which is a result of work of servers of the Fourth subsystem, interaction of structural elements of the System in network of the Fourth subsystem comes to an end;
the network of the Fifth subsystem unites the following interacting elements of the System: the application server of target appointment that uses the programs of type «IBM WebSphere Business Modeler» and of type «Advanced Grapher», as well as of type «ZWCAD»; the application server of digital transformation of data with the software of type «Serial Key Generator» and of type «ActiveBarcode»; the computing server with the software of type of «IBM SPSS Statistics Standard» and of type «SAS^{∗} Visual Forecasting», as well as of type «DecideIT»; the file server with the software of type «Windows Server 2012 R2 NTFS»; these servers are connected with each other by communication channels; the application server of target appointment, using program of direct file transfer «FTP Rush» by means of session «FXP» over protocol of «FTP», receives files from blocks of databases and of object-relational models of DBMS, as well as from an analytical block and a block of strategies of storage of the file server; the computing server and the application server of target appointment are equipped by interactive panels, of type «SMART Board», series 7000 Pro that work on the basis of the software «SMART Meeting Pro», «SMART ink» and «SMART TeamWorks», these servers interact with each other and with other servers of the Fifth subsystem that has four levels connected over communication channels by the general installation, the general process of performance of four steps of the fifth stage of the Way, also it is intended for planning and generating a plurality of the output data of the target strategic program of the offer of products in interrelation with temporal and spatial parameters and for formation of a digital block of strategic programs, namely: at the first level of the Fifth subsystem - generating a plurality of data of the strategic program of the offer of the commodity nomenclature and assortments owing to performance of the first step of the fifth stage of the Way; at the second level of the Fifth subsystem - generating a plurality of temporal parameters of the strategic program of the offer of products owing to performance of the second step of the fifth stage of the Way; at the third level of the Fifth subsystem - generating a plurality of data of the strategic program over target function, qualitative parameters of the offer of products owing to performance of the third step of the fifth stage of the Way; at the fourth level of the Fifth subsystem - generating a plurality of data of effectiveness of target function, volumes, the prices of the strategic program of the offer of products owing to performance of the fourth step of the fifth stage of the Way; action of network of the Fifth subsystem consists in work of servers of this subsystem over performance of the operating processes consisting in consecutive performance of operations of each step of the fifth stage of the Way, and the communication processes consisting in procedures of an entrance and exit from operating process on each of servers and in their interaction with each other by means of communication channels for transfer of a data flow that are received as a result of their operating process at performance of steps of the fifth stage of the Way at each level of the Fifth subsystem; upon termination of all operations at all levels of the Fifth subsystem and finishing of the fifth stage of the Way by formation of a digital block of strategic programs, which is a result of work of servers of the Fifth subsystem, interaction of structural elements of the System in network of the Fifth subsystem comes to an end;
the network of the Sixth subsystem unites the following interacting elements of the System: the application server of target appointment that uses the programs of type «IBM WebSphere Business Modeler» and of type «Advanced Grapher», as well as of type «ZWCAD»; the application server of digital transformation of data with the software of type «Serial Key Generator» and of type «ActiveBarcode»; the computing server with the software of type «IBM SPSS Statistics Standard» and of type «SAS^{∗} Visual Forecasting», as well as of type «DecideIT»; the file server with the software of type Windows Server 2012 R2 NTFS; these servers are connected with each other by communication channels; the application server of target appointment, using the program of direct file transfer «FTP Rush» by means of a session «FXP» over the protocol «FTP», receives files from a block of the strategic programs of storage of the file server; the computing server and the application server of target appointment are equipped by interactive displays of type «SMART Board», series 7000 Pro, which work on the basis of the software «SMART Meeting Pro», «SMART ink» and «SMART TeamWorks», they interact with each other and with other servers of the Sixth subsystem, which has four levels connected over communication channels by the general installation, the general process of performance of four steps of the sixth stage of the Way, and it is intended for situational transformation of a plurality of the output data of the current programs of the offer of products and formation of a digital block of the situational-strategic program, namely: at the first level of the Sixth subsystem - situational transformation of a plurality of data of width, depth and structure of the offer of commodity assortments for updating of the current program of assortments owing to performance of the first step of the sixth stage of the Way; at the second level of the Sixth subsystem - situational transformation of a plurality of temporal parameters of the offer of products for updating of the current program of life cycles of products owing to performance of the second step of the sixth stage of the Way; at the third level of the Sixth subsystem - situational transformation of a plurality of data of target function, quality of the offer of products for updating of the current program of quality of products owing to performance of the third step of the sixth stage of the Way; at the fourth level of the Sixth subsystem - situational transformation of a plurality of data of effectiveness of target function, volume, the price of the offer of products for updating of the current program of the offer of products owing to performance of the fourth step of the sixth stage of the Way; action of network of the Sixth subsystem consists in work of servers of this subsystem over performance of the operating processes consisting in consecutive performance of operations of each step of the sixth stage of the Way, and the communication processes consisting in procedures of an entrance and exit from operating process on each of servers and in their interaction with each other by means of communication channels for transfer of a data flow that are received as a result of their operating process at performance of steps of the sixth stage of the Way at each level of the Sixth subsystem; upon termination of all operations at all levels of the Sixth subsystem and finishing the sixth stage of the Way by formation of a digital block of the situational-strategic program, which is a result of work of servers not only of the Sixth subsystem but System in a whole, interaction of structural elements in network of the Sixth subsystem comes to an end; users send from the file server via web-server of the System to web-server of the enterprise the created files and the information that all blocks are formed, all files of the situational-strategic program are created and sent, action of the System is finished.

2. Way of matrix-digital transformation of a variable plurality of data for generating the situational-strategic program of the offer of products, it is named further the Way, has similarity to a prototype, it is limited to use of similar tools of analysis and transformation of data in the form of databases, the multidimensional matrix tool for management of transformation of data, but the Way differs from a prototype and the known technical solutions by the essential technical features which consist in creation in a digital form of a list of the sequences from six stages, their steps, consecutive operations of each stage and matrix interrelations between them in the form of a chain of the connected matrix-digital models of each stage, these models are connected with each other by the general process and purpose of the Way, they are united into a common matrix-digital model of the Way and embody the matrix-digital mechanism of operating processes of the Way, which at each stage is expressed, firstly, in digital transformation of data, when digital codes, keys of data, barcodes are generated according established parameters for forming interrelations between data in the form of the connected digital codes, keys for automation of various operations over transformation of data with the help of use of an arsenal of the modern technical means, computer programs, which are specified at the description of the System; secondly, in use of matrix mechanisms of the operating processes indissolubly with digital transformation of data; these signs the following ways embody: a way of formation of databases over the matrix principle and creation of analog-digital databases for data storage in both a matrix form and digital form; a way of formation of the object-relational models of DBMS for establishment of matrix-digital interrelations between various type of data; a way of mutually agreed synthesis of the long-term and current strategies of transformation of data in a system of the coordinates of the time and space by means of using a computer program of the vector analysis; a way of the forecast of multidimensional temporal rows of data of demand on the basis of programs of the spectral analysis; ways of strategic planning and situational transformation of any type of data as plurality and in the uniform system of coordinates of time and space by means of creation in 3D format of the matrix-digital models and in their using on interactive displays in role of tools for multi-purpose optimization of data, which on the basis of software of the System allow modeling different combinations of data, to carry out their comparison and to generate the output data of the situational-strategic program of the offer of products in form of synergistic plurality; essential distinctive sign of the Way is that process of exercise of each its stage consists in actions over creation of the corresponding digital block, and in fact it characterizes a way of formation of digital blocks, namely: at the first stage - of a block of databases; at the second stage - of a block of the object-relational models of the DBMS; at the third stage - of an analytical block; at the fourth stage - of a block of strategies; at the fifth stage - of a block of strategic programs; at the sixth stage - of a block of the current programs; digital blocks of each stage are logically connected with each other, as data of one digital block are base for formation of subsequent blocks, and all digital blocks participate in formation of an integrated digital block of the situational-strategic program of the offer of products, which is formed at the sixth stage, but is a result of exercise of all stages of the Way; all created digital blocks are a product not only of exercise of the Way, but also action of the System, as they characterize productivity and speed not only of the Way, but also of the System in a whole; the Way forms a whole with the System and cannot be carried out without it, because all operations of the Way are carried out on various servers of the System and by means of the software of these servers, namely the Way consists in performance of a set of the following consecutive actions:
users enter into network of the First subsystem and perform the first stage of the Way, which includes a set of actions for generating the analog-digital databases and formation of a digital block of databases for creation of information basis of programs of the offer of products, implementing the six steps of the first stage, on each step create the digital sequence of operations and the matrix-digital mechanism of process of generating the analog-digital databases, namely: at the first step - of an analog-digital database for planning of a business environment of the company; at the second step - of an analog-digital database for planning of development strategies of the company; at the third step - of an analog-digital database for creation of programs over commodity nomenclature and assortments; at the fourth step - of an analog-digital database for creation of programs over cumulative life cycle of products; at the fifth step - of an analog-digital database for creation of programs over target function, quality of products; at the sixth step - of an analog-digital database for creation of programs of the offer of products; for implementing each step of the first stage the users use servers and their software of the First of subsystems of the System and carry out nine consecutive operations that are typical for all steps of the first stage of the Way, namely: *the first operation* - users enter operating process of the server of databases, obtain over neural networks through the proxy-server the data of constant character, sort them over key indicators for the subsequent storage by means of use of the program of type «Microsoft Excel», namely constant data necessary for the subsequent analysis, assessment, forecasting, planning, including a formulas for assessment, respectively of the competition, of a business environment of the company, efficiency, profitability of the company and its products, width, saturation of nomenclature, width, depth, elasticity, harmony of assortments, life cycles of resources and the released products, of the target function, quality of products, indicators of useful effect of products for producer and consumers, aggregate useful effect of products for the subsequent creation of the corresponding databases in process of steps of the first stage of the Way; *the second operation* - users classify and systematize data, using the program of type «Microsoft Excel», build classification models of structure of data for creation of a database at each step of the first stage of the Way; *the third operation* - users define structure and fields in an analog-digital format of each database, send tasks for generating the digital codes, keys over communication channels to the application server of digital transformation of data and come out of operating process of the server of databases; *the fourth operation* - users enter operating process of the application server of digital transformation of data, generate the integrated digital codes for each cell of a certain database by use of the program of type «Serial Key Generator» and according the specified parameters of indexes of lines and columns of a database created on each of steps of the first stage of the Way; *the fifth operation* - users generate the internal and external keys for each table in a database formed at each step of the first stage of the Way according the specified parameters by means of program of type «Serial Key Generator»; users transfer digital data to the server of databases over communication channels by means of OLE DB technology, implementing the mechanism of interprocessor interaction based on COM, and come out of operating process of the application server of digital transformation of data; *the sixth operation* - users enter operating process of the server of databases and on the basis of the received digital codes carry out the matrix-digital mechanism of formation of databases by use of the program of type Microsoft Excel that allows to form a matrix structure of each database over any parameters, according this mechanism all data are grouped in an analog-digital format over the matrix principle, i.e. not only horizontally but also over vertically for specification of each group of data by plurality of parameters; as a result, users create analog-digital databases at each step of the first stage of the Way; users send tasks for generating the barcodes over communication channels to the application server of digital transformation of data and come out of operating process of the server of databases; *the seventh operation* - users enter operating process of the application server of digital transformation of data and according the specified parameters by means of use of the software of type «ActiveBarcode» generate the barcodes of type «QR» or «Data Matrix» for designation not only of each created database, but also for designation of each table in it for the subsequent automatic input and identification of an analog-digital database created on each of steps of the first stage of the Way; as a result, users form the barcode for designation of an integrated block of all databases created at the first stage of the Way; users transfer digital data to the server of databases over communication channels by means of OLE DB technology, implementing the mechanism of interprocessor interaction based on COM, and come out of operating process of the application server of digital transformation of data; *the eighth operation* - users enter operating process of the server of databases and denote by the received barcodes the databases and tables in them, preserve in a form of «csv» file the analog-digital databases, created at each step of the first stage of the Way and intended for the subsequent planning a business environment of the company and strategic zones of its managing, development strategies of the company, the commodity nomenclature and assortments, life cycles of products, the target function and quality of products, indicators of the offer of products; users carry out direct transfer of the created files to the file server owing to using by servers of the installed «FTP Rush» program by means of «FXP» session under «FTP» protocol and come out of operating process of the server of databases; *the ninth operation* - users enter operating process of the file server, register the received files of analog-digital databases for their storage and file operations, send the files of analog-digital databases, created at each step of the first stage of the Way, into storage of the file server and place under their barcodes in the formed digital block of databases, which is denoted by an integrated barcode; this block is a result of operating process of all steps of the first stage of the Way at all levels of the First subsystem; users carry out direct transfer of databases files from a digital block of databases of storage of the file server to the MySQL Server owing to using by servers of installed «FTP Rush» program by means of «FXP» session under «FTP» protocol and come out of operating process of the file server; upon termination of the ninth operation at all levels of the First subsystem and finishing of all steps of the first stage of the Way, users come out of network of the First subsystem;
users enter into network of the Second subsystem and carry out the second stage of the Way, which includes a set of actions for formation of the object-relational models of the DBMS and of a digital block of models of the System of the Databases management for synthesis of data in programs of the offer of products, implementing the six steps entering the second stage, on each step create the digital sequence of operations and the matrix-digital mechanism of process of creation of an object-relational model of the DBMS, namely: at the first step - of an object-relational model of the DBMS for synthesis of strategies of development of a business environment of the company; at the second step - of an object-relational model of the DBMS for synthesis of strategies of development of the company and its products; at the third step - of an object-relational model of the DBMS for synthesis of data in programs over commodity nomenclature and assortments; at the fourth step - of an object-relational model of the DBMS for synthesis of data in programs of life cycles of products; at the fifth step - of an object-relational model of the DBMS for synthesis of data in programs over target function, quality of products; at the sixth step - of an object-relational model of the DBMS for synthesis of data in programs of the offer of products in interrelation with temporal and spatial parameters; for implementing each step of the second stage the users use servers and their software of the Second of subsystems of the System and carry out five consecutive operations that are typical for all steps of the second stage of the Way, namely: *the first operation* - users enter operating process of the server «MySQL», carry out import of arrived «csv» files of the databases, created at the previous stage, into the installed program of type «MySQL Workbench» by means of using the tools of the program, and in the section «Physical Schemas» they form a list of databases of project and a list of tables for each database, separately denoting each object of the loaded database, choose the system of storage for all tables by default «InnoDB», load internal keys and digital codes into the section «Indexes» and establish matrix-digital interrelations between data in each table, namely in both vertical and horizontal position, also the connected digital codes of data in tables of each database for formation of DBMS in the process of performance of steps of the second stage of the Way; *the second operation* - users install owing to use of such tools of the program «MySQL Workbench», as «Models», «+Add Diagram», «Column», «Referenced Column», parental and affiliated tables in each database for determination of nature of communications between their data; users, using the digital codes of data, defined on the first stage of the Way, edit external digital keys in column «Foreign Keys» according to their multipurpose appointment, build EER chart - «essence - relation» for establishment of matrix interrelations and of the connected digital codes of data, on the one hand, vertically between data of tables of one appointment, but these tables have various hierarchy and level of detailing data and are a part of a certain database, and on the other hand, horizontally between data of tables of each certain database and data of the tables, which are a part of other databases of the block of the first stage, in order that to establish influence of various factors and data types at each other for forming DBMS in a result of steps of the second stage of the Way; users send tasks for generating the barcodes over communication channels to the application server of digital transformation of data and come out of operating process of the server «MySQL»; *the third operation* - users enter operating process of the application server of digital transformation of data and according the specified parameters by means of use of the program of type «ActiveBarcode» generate the barcodes of type «QR» or «Data Matrix» for designation of each database and its objects, namely of the tables, EER charts, object-relational model of the System of management by each database, also for designation of the System of management by all databases that enter a block of the first stage and of an integrated digital block of the object-relational models of the second stage; users transfer digital data to the server «MySQL» over communication channels by means of OLE DB technology, implementing the mechanism of interprocessor interaction based on COM, and come out of operating process of the application server of digital transformation of data; *the fourth operation* - users enter operating process of the server «MySQL », create in a digital format object-relational models of the DBMS by means of use of tools of the program of «MySQL Workbench» and on the basis of the connected digital codes of data and the constructed EER charts at each step of the second stage of the Way; users unite all objects, namely: EER charts, tables, object-relational models, which are created in each database under their barcodes, into the uniform seamless management system by databases, keep all objects of DBMS in one general script by means of a tool of «Export to Self-Contained File» of the program «MySQL Workbench», carry out export of the backup copy into a file in the *«sql»* format, available for editing in the program «MySQL»; users export by means of use of tools of the program of «MySQL Workbench» the created files of object-relational models into the «*pdf»* format on each step of the second stage of the Way, namely: the file of an object-relational model of the DBMS for synthesis of development strategies of a business environment of the company - on the first step; the file of an object-relational model of the DBMS for synthesis of the strategies of development of the company and its products - on the second step; the file of an object-relational model of the DBMS for synthesis of data in programs over commodity nomenclature and assortments - on the third step; the file of an object-relational model of the DBMS for synthesis of data in programs of the life cycles of products - on the fourth step; the file of an object-relational model of the DBMS for synthesis of data in programs over target function and quality of products - on the fifth step; the file of an object-relational model of the DBMS for synthesis of data in programs of the offer of products in interrelation with temporal and spatial parameters - on the sixth step of the second stage of the Way; users carry out direct transfer of the created files to the file server owing to using by servers of the installed «FTP Rush» program by means of «FXP» session under «FTP» protocol and come out of operating process of the server «MySQL»; *the fifth operation* - users enter operating process of the file server, register the received files for their storage and file operations, direct the file in a format «*sql*» of the System of management by databases, also the «*pdf*» files of the object-relational models of the DBMS, which are created in process of steps of the second stage of the Way, into storage of the file server for placement of all files under their barcodes in a digital block of the object-relational models of the DBMS, this block is denoted by an integrated barcode, and it is a result of operating process of performance of all steps of the second stage of the Way at all levels of the Second subsystem; users carry out direct transfer of files from a digital block of databases of the first stage and the files of the object-relational models of the DBMS from a digital block of the DBMS of the second stage, namely from blocks of storage of the file server to the computing server owing to using by servers of installed program of the «FTP Rush» by means of «FXP» session under «FTP» protocol, come out of operating process of the file server; upon termination of the fifth operation at all levels of the Second subsystem and finishing of all steps of the second stage of the Way, users come out of network of the Second subsystem;
users enter into network of the Third subsystem and perform the third stage of the Way, which includes a set of actions for generating the temporal rows of forecasted data and formation of a digital analytical block for creation of the programs of the offer of products, implementing the six steps entering the third stage, on each step create the digital sequence of operations and the matrix-digital mechanism of process of creation of the temporal rows of the forecasted data, namely: on the first step - of the temporal rows of forecasted data of the markets and a business environment of the company; on the second step - of the temporal rows of forecasted data of demand in consumer effectiveness of products of the company; on the third step - of the temporal rows of forecasted data of demand in assortments; on the fourth step - of the temporal rows of forecasted data of life cycles of demand in products; on the fifth step - of the temporal rows of forecasted data of demand in target function and quality of products; on the sixth step - of the temporal rows of forecasted data of demand in the effectiveness of the target function, in volume, price of products; for implementing each step of the third stage the users use servers and their software of the Third of subsystems of the System and carry out nine consecutive operations, which are typical for all steps of the third stage of the Way, namely: *the first operation* - users enter operating process of the computing server and collect the analytical variable data arriving over communication channels from the proxy-server to the computing server, carry out their selection, analyze the obtained basic data of the markets, demand, consider the data structure, which is defined in relational databases of the first stage, and interrelations between data, which are defined by object-relational models of the second stage, investigate trend of change of the markets, demand in various types of products on the basis of the multifactorial analysis of influence of the various factors (of the scientific and technical, economic, social, political, demographic, geographical, ethnic factors) on dynamics of change of the markets, demand in different types of products by means of use of the program of type «IBM SPSS Statistics»; users systematize analytical data over clusters, on the basis of which create and preserve microservices into files, each of which has an identification key and is a component of the not relational database of type «NoSQL» with the corresponding software «NoSQL» for control and storage of unstructured data, including commercial, analytical data and for formation of a control system of them on the basis of the flexible model of data supporting the microservices created for different groups of data at each step of the third stage of the Way; *the second operation -* users carry out the multidimensional forecast of trends of change of demand, taking into account weak signals, and carry out the singular spectral analysis «SSA», which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of various data of demand in products in the form of a matrix with the subsequent application to a temporal row of a method of the main components and determine amplitude of each temporal row, i.e. a deviation of its maximum and minimum values from average values; taking into account these amplitudes, users generate all possible options of change of the markets and demand during the predicted long-term period, namely: options of dynamics of number of competitors, buyers, suppliers, resellers and financial intermediaries - at the first step; options of dynamics of consumer demand in effectiveness of various products - at the second step; options of dynamics of indicators of demand in assortments - at the third step; options of dynamics of parameters of temporal phases of demand in various products - at the fourth step; options of dynamics of demand in the target function, quality of various products - at the fifth step; options of dynamics of demand in the effectiveness of the target function, the price, volume of various products - at the sixth step of the third stage of the Way; users keep versions of the forecast in files at performance of each step of the third stage of the Way; *the third operation* - users estimate space of conditions of the dynamic variables influencing demand by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; the level of inflation and solvency of buyers; growth rates of the prices, tariffs; rates of updating of technologies and a product range; the level of intensity of the competition, also users determine by a method of the main components those factors of influence on consumer demand, which are insignificant, and they can be neglected; as a result, users establish the direction for adjustment of the forecasted range of data owing to suppression of high-frequency or low-frequency components of multidimensional temporal rows of forecasted data of the markets and demand in products for the long-term period, define probability degree of each version of the forecast of a plurality of data; users send tasks for generating the digital codes over communication channels to the application server of digital transformation of data and come out of operating process of the computing server; *the fourth operation* - users enter operating process of the application server of digital transformation of data, set digital designations for each market, a temporal phase of demand, a product, for each factor that influences demand, for each indicator of consumer demand, and owing to use of the program of type of «Serial Key Generator» generate digital codes for each group of conditions and each variant of possible dynamics of demand, also define a digital key for each microservice of the database «NoSQL» at each step of the third stage of the Way; *the fifth operation* - users generate the integrated digital codes for the temporal rows of data according the specified parameters and by means of use of the program of type «Serial Key Generator»; the integrated digital codes contain the references both to identifier of each forecasted indicator and identifiers of group of conditions and factors, which have the greatest impact on dynamics of this indicator, its fluctuation over different types of products and the markets during the forecasted long-term period; users transfer digital codes for forecasting of temporal rows at each step of the third stage of the Way to the computing server over communication channels by means of the OLE technology, implementing the mechanism of interprocessor interaction based on COM, and come out of operating process of the application server of digital transformation of data; *the sixth operation* - users enter operating process of the computing server and carry out with use of the created digital codes the space-time forecast of dynamics of various indicators of the markets and demand in each product by means of use of the software of type «SAS Visual Forecasting», use graphic tools of the program and visual display units, of type of interactive panels «SMART Board, series 7000Pro», with the software of type «SMART Meeting Pro» and «SMART ink» for collaboration of a group of developers of the project for finishing of the forecast on the basis of the spectral analysis, and they model multidimensional temporal rows of data of demand in products in the graphic system of coordinates of time and space in 3D format on the basis of the directions of smoothing of amplitudes of forecasted temporal rows of data, defined at the third operation; as a result, users generate in a digital format the multidimensional temporal rows of data of demand in products during the forecasted long-term period and create their files at each step of the third stage of the Way; users form the structure of a digital analytical block consisting of three sections, everyone of sections include six compartments forming on each of steps of the third stage of the Way; users send tasks for generating the barcodes over communication channels to the application server of digital transformation of data and come out of operating process of the computing server; *the seventh operation* - users enter operating process of the application server of digital transformation of data, according the specified parameters and by means of use of the program of type «ActiveBarcode» generate the barcodes of type «QR» or «Data Matrix» for designation of multidimensional temporal rows of data of demand in each product during the forecasted long-term period, as well as for the designation of each section and each compartment, which are formed at a certain step of the third stage of the Way; as a result, they form an integrated barcode for designation of an analytical block of the third stage of the Way; users transfer barcodes to the computing server over communication channels by means of the OLE technology, implementing the mechanism of interprocessor interaction based on COM, and come out of operating process of the application server of digital transformation of data; *the eighth operation* - users enter operating process of the computing server; using results of the previous operations and the generated barcodes, they form the corresponding compartment of a digital analytical block at each step of the third stage of the Way, namely: compartment of the forecast of the business environment - at the first step; compartment of the forecast of demand in effectiveness of products - at the second step; compartment of the forecast of demand in commodity nomenclature and assortments - at the third step; compartment of the forecast of life cycles of demand in products - at the fourth step; compartment of the forecast of demand in the target function, quality of products - at the fifth step; compartment of the forecast of a plurality of data of demand in the effectiveness of target function, in the volume, price of products - at the sixth step, as well as users create three sections in each compartment of an analytical block including the files that are created in process of each step of the third stage of the Way on the computing server, namely: the files of microservices of the database of type «NoSQL», about actual data of demand indicators, about the factors influencing them are included in the first section; the files of all possible options of dynamics of various indicators of demand in products are included in the second section; the files of the forecasted multidimensional temporal rows of data of demand in products are included in third section; users carry out direct transfer of the created files to the file server owing to using by servers of the installed «FTP Rush» program by means of «FXP» session under «FTP» protocol and come out of operating process of the computing server; *the ninth operation* - users enter operating process of the file server, register the received files for storage and file operations, send files of three sections of each compartment created at each step of the third stage of the Way into storage of the file server and place under their barcodes in structure of the formed digital analytical block, which is denoted by an integrated barcode and is created over the matrix principle from six vertical compartments and three horizontal sections of each compartment; this block is a result of operating process of performance of all steps of the third stage of the Way at all levels of the Third subsystem; users carry out direct transfer of files of databases from a digital block of databases of the first stage, the files of the object-relational models from a digital block of the DBMS of the second stage, as well as the files of forecasted multidimensional temporal rows of data from a digital analytical block of the third stage of the Way, namely from blocks of storage of the file server to the computing server and to the application server over synthesis of strategies owing to using by servers of installed program «FTP Rush» by means of «FXP» session under »FTP» protocol and come out of operating process of the file server; upon termination of the ninth operation at all levels of the Third subsystem and finishing of all steps of the third stage of the Way, users come out of network of the Third subsystem;
users enter into network of the Fourth subsystem and perform the fourth stage of the Way, which includes a set of actions for synthesis of strategies and formation of a digital block of strategies in order that to generate programs of the offer of products, implementing the six steps entering the fourth stage, on each step create the digital sequence of operations and the matrix-digital mechanism of process of synthesis of strategies, namely: at the first step - of synthesis of strategies of transformation of a business environment of the company and strategic zones of positioning of products in the markets; at the second step - of synthesis of development strategies of the company, its products; at the third step - of synthesis of strategies of transformation of the commodity nomenclature and assortments; at the fourth step - of synthesis of strategies of transformation of the life cycles of products; at the fifth step - of synthesis of strategies of transformation of the target function, quality of products; at the sixth step - of synthesis of strategies of transformation of the offer of products in strategic segments of various markets; for implementing each step of the fourth stage the users use servers and their software of the Fourth of subsystems of the System and carry out ten consecutive operations, which are typical for all steps of the fourth stage of the Way, namely: *the first operation* - users enter operating process of the computing server, assess by means of use of the software of type «IBM SPSS Statistics» all possible internal and external factors influencing change of conditions for transformation of strategies of the company, namely they define the motivational conditions, incentives on the basis of the development tasks, the reached data of the offer of products, reserves of the resources, growth rates of volumes of the offer of products, profitability, useful effect of products, share of coverage of the market by products of the company owing to using of databases of type «MySQL» and «NoSQL» and of the object-relational models; at the same time, they determine objective conditions on the basis of the forecasted data of dynamics of level of expenses and the prices, rates of updating of a product range under the influence of scientific and technical progress, of the scale of expansion of sales markets, also of indicators of a business environment, level of the competition, quantitative inquiries of consumers and differentiation of their inquiries according the forecasted temporal rows of data of demand; users select and systematize all possible options of change of development conditions of the markets, products, production, consumer requirements and create files about groups of conditions and about degrees of their constancy for transformation of development strategies of the company and of the offer of products during the long-term period, respectively at each step of the fourth stage of the Way; users carry out direct transfer of the created files to the application server over synthesis of strategies owing to using by servers of the installed program «FTP Rush» by means of «FXP» session under «FTP» protocol and come out of operating process of the computing server; *the second operation* - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including from various blocks created on the first, second and third stage of the Way on the file server, namely: from a block of databases of type «MySQL» and «NoSQL»; from a block of the object-relational models of DBMS for definition of the essential communications between data; from an analytical block of multidimensional temporal rows of data of demand in different types of the products during the long-term period, on this basis users build graphs, network graphics, a tree of decisions, a block of charts for visual brainstorming by means of use of tools of software of type «SAS^{∗} Visual Analitics» and of interactive displays of type «SMART Board, series 7000Pro», with the software «SMART Meeting Pro» and «SMART ink»; as a result, users define for each group of the similar products all possible scenarios of transformation of indicators of their offer in a certain market during the forecasted long-term period, as well as all possible scenarios of development of the company and establish the main indicators and the directions of their transformation for each scenario of the proposal of different groups of the similar products, create files about all possible scenarios of development of the company and of the offer of products, namely: a file about scenarios of transformation of a business environment of the company - at the first step; a file about scenarios of development of the company and its product range - at the second step; a file about scenarios of transformation of the commodity nomenclature, assortments of the company - at the third step; a file about scenarios of life cycles of the offer of products - at the fourth step; a file about scenarios of transformation of target function, quality of the offer of products - at the fifth step; a file about scenarios of transformation of a plurality of data of the effectiveness of target function, the volume, price of the offer of products - at the sixth step of the fourth stage of the Way; users carry out direct file transfer to the computing server owing to using by servers of the installed program «FTP Rush» by means of «FXP» session under «FTP» protocol and come out of operating process on the application server over synthesis of strategies; *the third operation* - users enter operating process of the computing server and assess potential of resources of the enterprise for implementing scenarios of development of the company and its products, which are reflected on interactive displays, namely of technical base, the labor resources, the reached labor productivity level, capital productivity, rhythms of production, material consumption, and the cost of products by use of the program of type «IBM SPSS Statistics, predict saving of resources owing to their rational use and introduction of achievements of science and technique, progress of technologies, also the volumes of financing at the expense of external investments and internal reserves on the purpose of development of the offered products during the forecasted long-term period and define restrictions in resources for transformation of data of various indicators of the offer of products by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of data transformation of the offer of products and for definition of their feasibility at a certain volume of financing, eliminate impracticable scenarios, and for all others define the rating of feasibility; as a result, users define a group of restrictions over resources for possible scenarios of transformation on corresponding step of the Fourth stage of the Way of data of a business environment of the company, its product range, the commodity nomenclature and assortments, the life cycles of products, the target function and quality of products, indicators of the offer of products in the markets; users send tasks for generating the digital codes over communication channels to the application server of digital transformation of data and come out of operating process of the computing server; *the fourth operation* - users enter operating process of the application server of digital transformation of data and set digital designations for each type of a product, indicators of the offer and useful effect of a product, life cycle of the offer, its temporal phases, indicators of planning of resources, generate according the specified parameters by means of using of the program of type «Serial Key Generator» the digital codes for different groups of conditions and restrictions in resources at creation of various products at each step of the fourth stage of the Way; *the fifth operation* - users according the specified parameters and by means of use of the program of type «Serial Key Generator» generate the integrated digital codes for each scenario of transformation of indicators of development of the company and the offer of its products, include into structure of these codes the references not only to digital identifiers of a certain market, a temporal phase, group of the conditions influencing the scenario, but also to identifiers of type of a product or an assortment and to the indicators defining the scenario of products development and establish connection of the formed codes with digital codes of temporal rows of data of demand in the corresponding indicators of the products forecasted at the third stage of the Way; users transfer digital data to the application server over synthesis of strategies over communication channels by means of technology OLE, implementing the mechanism of interprocessor interaction based on COM, and come out of operating process of the application server of digital transformation of data; *the sixth operation* - users enter operating process on the application server over synthesis of strategies; on the basis of the obtained digital codes and estimates of the computing server they make changes into files about scenarios of transformation of data at each step of the fourth stage of the Way, create files about groups of limitations over resources for each scenario and carry out the matrix-digital mechanism of synthesis of strategies of the proposal of each group of the similar products of the company by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of a certain group of similar products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors over relation to axes of coordinates and to each other are reached; according to each chosen scenario define the long-term strategy of transformation of data of the offer of each group of similar products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of data of the offer of a certain group of similar products; as a result, users define long-term development strategies of the company and the offer of its products at the corresponding steps of the fourth stage of the Way; *the seventh operation* - users synthesize the current strategies over products for each phase of the long-term period according to long-term strategies and create files of development strategies of the company and the offer of its products at each step of the fourth stage of the Way, form the structure of a digital block of strategies that consists from six compartments, each of which is created at the corresponding step of the fourth stage of the Way and includes four sections; users send tasks for generating the barcodes over communication channels to the application server of digital transformation of data and come out of operating process of the application server over synthesis of strategies; *the eighth operation* - users enter operating process of the application server of digital transformation of data and according the specified parameters and by means of use of a program of type «ActiveBarcode» generate the barcodes of type «QR» or «Data Matrix for designation of each long-term and current strategy of transformation of the offer of both each assortment and each group of similar products and for designation of development strategies of the company in a whole, include into structure of codes the references to identifiers not only of strategies, but also of the markets, temporal phases, chosen groups of the conditions and restrictions over resources, which influence the strategies choice, as well as create the connected barcodes for each from six compartment and for each of four sections that enter into each compartment, form an integrated barcode for designation of a block of strategies, which unites all sections and compartments of the fourth stage of the Way; users transfer digital data to the application server over synthesis of strategies over communication channels by means of the OLE technology, implementing the mechanism of interprocessor interaction based on COM, and come out of operating process of the application server of digital transformation of data; *the ninth operation* - users enter operation process of the application server over synthesis of strategies; using results of the previous operations, the generated barcodes, they form at each step of the fourth stage of the Way the corresponding compartment of a digital block of strategies, namely: compartment of strategies of transformation of a business environment of the company - at the first step; compartment of development strategies of the company and its product range - at the second step; compartment of strategies of transformation of the commodity nomenclature and assortments - at the third step; compartment of strategies of transformation of the life cycles of the offer of products - at the fourth step; compartment of strategies of transformation of the target function, quality of products - at the fifth step; compartment of strategies of transformation of indicators of the offer of products - at the sixth step of the fourth stage of the Way, as well as create four sections in each compartment of a digital block of strategies, each of sections includes the created files, namely: the files of groups of conditions are included into the first section of each compartment; the files of possible scenarios of development of the company and of the offer of its products - into the second section; the files of groups of restrictions over resources - into the third section; the files of long-term and current development strategies of the company and offer of its products - into the fourth section; users carry out direct transfer of the created files to the file server owing to using by servers of the installed «FTP Rush» program by means of «FXP» session under «FTP» protocol and come out of operating process on the application server over synthesis of strategies; *the tenth operation* - users enter operating process of the file server, register the received files for storage and file operations, send files of four sections of each compartment created at each step of the fourth stage of the Way into storage of the file server and place under their barcodes in structure of the formed digital block of strategies, which is denoted by an integrated barcode and is created over the matrix principle from six vertical compartments and four horizontal sections of each compartment; this block is a result of operating process of performance of all steps of the fourth stage of the Way at all levels of the Fourth subsystem; users carry out direct transfer of the files of databases from a digital block of databases of the first stage, the files of the object-relational models from a digital block of DBMS of the second stage, the files of forecasted multidimensional temporal rows of data from a digital analytical block of the third stage, and the files of strategies of transformation of data from a digital block of strategies of the fourth stage, namely from blocks of storage of the file server to the application server of the target appointment owing to using by servers of installed program «FTP Rush» by means of «FXP» session under «FTP» protocol, come out of operating process of the file server; upon termination of the tenth operation at all levels of the Fourth subsystem and finishing of all steps of the fourth stage of the Way, users come out of network of the Fourth subsystem;
users enter into network of the Fifth subsystem and perform the fifth stage of the Way, which includes a set of actions over matrix-digital generating a plurality of the output data of the target strategic program of the offer of products in interrelation with temporal and spatial parameters and over formation of a digital block of strategic programs, for this purpose users carry out four step entering the fifth stage, on each step create the digital sequence of operations and the matrix-digital mechanism of process of generating a plurality of data of the strategic program of the offer of products, namely: at the first step - generating a plurality of data of the strategic program of the offer of the commodity nomenclature and assortments; at the second step - generating a plurality of temporal parameters of the strategic program of the offer of products; at the third step - generating a plurality of data of target function, qualitative parameters of the strategic program of the offer of products; at the fourth step - generating a plurality of data of the effectiveness of target function, the volumes, prices of the strategic program of the offer of products; for implementing each step of the fifth stage the users use servers and their software of the Fifth of subsystems of the System and carry out twelve consecutive operations, which are typical for all steps of the fifth stage of the Way, namely: *the first operation* - users enter operating process of the application server of the target appointment and build in 3D format by means of use of the program of type ZWCAD for Windows 10 the multidimensional matrix-digital models at each step of the fifth stage of the Way, which are called subsequently «models», namely: the model of assortments is being built at the first step; model of life cycles - at the second step; model of quality - at the third step; model of the offer of products - at the fourth step of the fifth stage of the Way; users reflect various types of products and phases of the life cycles of supply and demand in vertical columns, but which are located in different spatial coordinates of each matrix model, whereas spatial parameters of positioning products in the markets, also indicators of the offer of products in the markets - in horizontal sections of each model, as well as divide each cell in half to place data of indicators of demand in the top part of cells, whereas data of indicators of the offer of products generate in the lower part of cells of each model; users reflect the created models in 3D format on interactive displays of type «SMART Board 7000 Pro» for the coordinated work of developers of the project with models by means of the software «SMART Meeting Pro» and «SMART ink» and for use of the constructed models in a role of the tools of multi-purpose optimization and planning of a plurality of data of the strategic program of the offer of products in conformity with a principle of «set theory» at each step of the fifth stage of the Way; *the second operation* - users analyze the data obtained from blocks of the previous stages, input digital designations that are identical to the identifiers of the markets, demand, the offer, types of products, temporal phases, indicators of products, which were established at the previous stages, into models, determine in a digital format the fields of matrix-digital models on each step of the fifth stage of the Way; *the third operation* - users carry out the automatic input of the forecasted data of demand in products into the top part of cells of each model, the entered data were defined for different markets and phases of the long-term period on the basis of temporal rows of the data of demand, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of data of the offer of products at each step of the fifth stage of the Way; *the fourth operation* - users simulate the potentially possible plurality of data of the offer of each product in various markets during different phases of the long-term period by means of use of the software of type «IBM WebSphere Business Modeler», which allows to form a list of the key indicators of the offer of products, to tie them to business processes, to connect them with indicators of the effectiveness and aggregate useful effect of products, calculated over formulas that are denoted «*KPI», «AUE», «AUE*_{∪}», as well as to consider at modelling: the forecasted temporal rows of data of demand in products; the established interrelations between data and indicators of the offer of products; the limitations over various resources for transformation of indicators of the offer of products; the chosen strategies of the offer of products; users load files, received over communication channels, into an imitation model by means of program tools at once, namely: files of a block of object-relational models of the second stage, files of an analytical block of the third stage, files of a block of strategies of the fourth stage, and on the basis of results of all previous stages they simulate combinations of a plurality of data of the offer of products at each step of the fifth stage of the Way; users send tasks for generating the digital codes over communication channels to the application server of digital transformation of data and come out of operating process of the application server of the target appointment; *the fifth operation* - users enter operating process of the application server of digital transformation of data; according the specified parameters and by means of use of the program of type «Serial Key Generator», users generate the integrated digital codes for designation of data of various indicators of both demand and the offer in each cell of a model of assortments, a model of life cycles, a model of quality, a model of the offer of products, respectively, and include into structure of these digital codes the references not only to digital identifiers of a model, a product type, various indicators of demand or the offer but also to identifiers of both a certain market and a certain phase of the long-term period, define common features of the generated codes of indicators of the offer of products with digital codes of indicators of demand that are forecasted for a long-term outlook; on the basis of the generated digital codes for designation of indicators of the offer of products users form the series of intermediate digital codes for designation of data in combinations of a model of each step of the fifth stage of the Way; users transfer digital data to the application server of the target appointment over communication channels by means of OLE technology, implementing a mechanism of interprocessor interaction based on COM, and come out of operating process of the application server of digital transformation of data; *the sixth operation* - users enter operating process of the application server of the target appointment, reflect models of each step of the fifth stage on interactive displays of type «SMART Board», series 7000 Pro, with the software «SMART Meeting Pro» and «SMART ink», as well as create in 3D format on separate displays various combinations of these models owing to consecutive replacement in the lower part of cells of one combination of a plurality of data of the offer of products and their intermediate codes by another combination, each of which differs not only by data of various indicators of the offer of products, but also by temporal and spatial parameters of their placement in various markets in various phases of the long-term period for the subsequent comparative analysis and assessment of the effectiveness of the created combinations of each model, respectively of a model of assortments - at the first step, a model of life cycles - at the second step, a model of quality - at the third step, a model of the offer of products - at the fourth step of the fifth stage of the Way; users carry out a remote connection to the computing server by means of use of the program for remote access of type «SMART TeamWorks» for further work of group of developers with the models that are displayed on interactive displays of the computing server, stop the operating process on the application server of the target appointment, but do not come out of it fully, they do not switch off interactive displays and do not close programs «SMART Meeting Pro» and «SMART ink»; *the seventh operation* - users enter operating process of the computing server and assess the target function, efficiency, profitability of products, coefficient of the effectiveness of a plurality of data of the offer of products owing to use of the program of type «IBM SPSS Statistics», as well as reflect data in interactive displays by means of programs «SMART Meeting Pro» and «SMART ink» and calculate over formulas *«AUE; AUE*_{∪}» the potential aggregate useful effect from offering of both each product and all products in different combinations of a model of each step of the fifth stage of the Way, taking into account that all data in them are presented in a matrix form and are connected, impacting at each other, calculate summary indicators of aggregate useful effect, place them by means of the software «SMART Meeting Pro» and «SMART ink in summary cells of combinations of each model; as a result, users obtain data about synergistic effectiveness of both each product and all set of products during full life cycle of their offering in all markets in combinations of a model of each step of the fifth stage of the Way; *the eighth operation* - users carry out in a digital format the comparative assessment of various combinations of a plurality of data of indicators of the offer of products on the basis of the received estimates of their useful effect, and decide the multicriteria tasks on the basis of constructed flowcharts of decision-making owing to use of interactive displays and software of type «DecideIT», reflect results of the multicriteria comparative assessment of effectiveness of various combinations of each model on interactive displays and recommend an optimum combination: for a model of assortments - at the first step; for a model of life cycles - at the second step; for a model of quality - at the third step; for a model of the offer of products - at the fourth step of the fifth stage of the Way; users transfer results of operations of the computing server to the application server of the target appointment by means of a remote session of the program for remote access of type «SMART TeamWork» and come out of operating process of the computing server; *the ninth operation* - users resume the suspended operating process on the application server of the target appointment; on the basis of data of the previous operations they choose from all possible combinations the most productive combination, respectively for a model of assortments, a model of life cycles, a model of quality, a model of the offer of products, in each of which such strategic range of a plurality of data of the offer of products is generated, which provides the highest synergistic effectiveness, namely by means of the full version of each model, aggregated over all products, users determine the most productive combination of a plurality of data of the offer of each product in various markets and phases of its life cycle, which is a part of the offer of all products of the company at optimization of expenses over the offer of products in a whole, as well as users synthesize summary cells of models, change the intermediate digital codes by the constant digital codes at designation of data of the offer of products in the lower half of cells of models and complete formation of files of created models at each step of the fifth stage of the Way; users send tasks for generating the barcodes over communication channels to the application server of digital transformation of data and come out of operating process of the application server of the target appointment; *the tenth operation* - users enter operating process of the application server of digital transformation of data and according the specified parameters, by means of use of the program of type «ActiveBarcode» generate the barcodes of type «QR» or «Data Matrix for designation of each model, strategic program over assortments, life cycles, the target function and quality, indicators of the offer of products, as well as for designation of the commodity nomenclature, each assortment, each product of the strategic program for the subsequent definition over the barcode of any assortment or product the planned plurality of data of the offer of it in the strategic program during the long-term period; as a result, users form barcodes for the integrated target strategic program and for a block of strategic programs and transfer all created barcodes to the application server of the target appointment over communication channels owing to using OLE technology, implementing the mechanism of interprocessor interaction based on COM, and come out of operation process on the application server of digital transformation of data; *the eleventh operation* - users enter operating process of the application server of target appointment; using the system of the generated digital codes and a synergetic plurality of data of models, they create files of final documents of strategic programs, namely, of the strategic program over commodity nomenclature and assortments with range of the output data of the width, depth, composition of the offer of each assortment - at the first step, of the strategic program over temporal parameters of the offer of products with range of the output data of time of the beginning, duration and the termination of phases of life cycle of the offer of each product - at the second step, of the strategic program of quality with range of the output data of a plurality of indicators of quality and the target function of each product - at the third step, of the strategic program of the offer of products with range of the output data of a plurality of indicators of the effectiveness of the target function, the volume, price of the offer of each product in various markets during phases of long-term period - at the fourth step of the fifth stage of the Way; users unite all strategic programs, which are connected with each other, one program cannot be performed without each another program, into the target strategic program of the offer of products of the company; users carry out direct transfer of the created files to the file server owing to using by servers of the installed program «FTP Rush» by means of a session «FXP» under «FTP» protocol and come out of operation process of the application server of target appointment; *the twelfth operation* - users enter operating process of the file server, register the received files of models and strategic programs under their barcodes for storage and file operations, send files into storage of the file server and place into a digital block of strategic programs, which unites all files of the fifth stage; this block is a result of operation process of all steps of the fifth stage of the Way on all levels of the Fifth subsystem; users carry out direct transfer of the files of the models and strategic programs of the fifth stage from a block of strategic programs of the storage of the file server to the application server of target appointment owing to using by servers of the installed program «FTP Rush» by means of «FXP» session under «FTP» protocol and come out of operating process of the file server; upon termination of the twelfth operation at all levels of the Fifth subsystem and finishing of all steps of the fifth stage of the Way, users come out of network of the Fifth subsystem;
users enter into network of the Sixth subsystem and perform the sixth stage of the Way, which includes a set of actions over situational transformation of a plurality of data of the current programs of the offer of products and over formation of a digital block of the situational-strategic program; for this purpose users carry out four step entering in the sixth stage, on each step create the digital sequence of operations and the matrix-digital mechanism of process of situational transformation of a plurality of data, namely: at the first step - of the situational transformation of a plurality of data of width, depth and composition of the offer of commodity assortments for updating of the current program over assortments; at the second step - of the situational transformation of a plurality of temporal parameters of the offer of products for updating of the current program of life cycles of products; at the third step - of the situational transformation of a plurality of data of the target function, quality of the offer of products for updating of the current program of quality of products; at the fourth step - of the situational transformation of a plurality of data of the effectiveness of the target function, the volumes, prices of the offer of products for updating of the current program of the offer of products; for implementing each step of the sixth stage the users use servers and their software of the Sixth of subsystems of the System and carry out fourteen consecutive operations, which are typical for all steps of the sixth stage of the Way, namely: *the first operation* - users enter operating process of the application server of the target appointment, establish connection with matrix-digital models of the fifth stage, on their basis and by means of use of the program of type ZWCAD build in 3D format the situational matrix-digital models, called hereinafter in the reduced form «situational models», which are tools for multi-purpose optimization and situational transformation of data in real time according current need, namely: «situational model of assortments» is being built at the first step; «situational model of life cycles» - at the second step; «situational model of quality» - at the third step; «situational model of the offer of products» - at the fourth step of the sixth stage of the Way; *the second operation* - users use the Scheduler of tasks, which is a part of the software «FTR Ruch», to fill situational models by data of the target strategic program in the automatic mode, namely users fill situational models by the forecasted data of demand and planned data of the offer of products during the current period, as well as denote fields of situational models by digital codes, which are identical with codes of fields of models of the fifth stage of the Way but contain in composition the index indicating their current appointment in role of situational models for updating the data of the current program of the offer of products, it allows to reach the best commonality of lines and columns and the best comparability of data of strategic and situational models at each step of the sixth stage of the Way; *the third operation* - users reflect the situational models, which are created in 3D format, on interactive displays of type «SMART Board», series 7000 Pro for the coordinated correction by developers of the project of data of these models by means of use of the software «SMART Meeting Pro» and «SMART ink»; users monitor change of the current demand, update in real time in the top part of cells of each situational model the forecasted data by current data of demand of the markets in various products by means of use of interactive displays at each step of the sixth stage of the Way; *the fourth operation* - users, using the visual image on interactive displays, define such cells in situational models, in which the current actual data of demand do not correspond to the planned data of the offer of these products in various markets during current period and define the direction of discrepancies at performance of each step of the sixth stage of the Way, namely: in a situational model of assortments - at the first step; in a situational model of life cycles - at the second step; in a situational model of quality - at the third step; in a situational model of the offer of products - at the fourth step of the sixth stage of the Way; *the fifth operation* - users simulate various combinations of transformation of a plurality of data of the offer of products in conformity with data of demand of various markets during the current period by means of use of the software of type «IBM WebSphere Business Modeler» that allows to carry out not only strategic modeling at the fifth stage, but it intended also for situational transformation of data of these indicators of the offer of products in limits of resources opportunities and in borders of range of the data defined in the target strategic program of the enterprise for ensuring unity and balance of the current and strategic programs, including performance of multidimensional graphic modeling of data at once over several parameters by use of the program of type «Advanced Grapher», which is compatible to the software «IBM WebSphere Business Modeler», and it is applicable as an additional graphic tool of optimization, namely users define on a vertical axis of coordinates the data of a main indicator according to the chosen strategy and in the range of the restrictions that were set by the strategic program, whereas on the horizontal axes of coordinates at the left and on the right they define data of two other indicators in dependence from a main indicator and owing to crossing of curves functions of supply and demand at realization of the chosen strategy of positioning products in the markets during the current period; as a result, users generate a potentially possible plurality of the current data of the key indicators of the offer of products at each step of the sixth stage of the Way, namely: in a situational model of assortments - at the first step; in a situational model of life cycles - at the second step; in a situational model of quality - at the third step; in a situational model of the offer of products - at the fourth step of the sixth stage of the Way; users send tasks for generating the digital codes over communication channels to the application server of digital transformation of data and come out of operating process of the application server of the target appointment; *the sixth operation* - users enter operating process of the application server of digital transformation of data and generate the integrated digital codes for designation of indicators of both demand and the offer of products in situational models on each step of the sixth stage of the Way according the specified parameters, by use of the program of type «Serial Key Generator»; users include into structure of these digital codes the references not only to digital identifiers of situational models, types of products, various indicators of demand or offer but also to identifiers of both a certain market and a certain phase of the current period, define common features of the generated codes of indicators of the current offer of each product with digital codes of indicators of current demand and with the corresponding digital codes of the strategic program of the offer of each product in a long-term perspective for establishment of communication between these data with the help of digital codes; on the basis of digital codes for designation of the current data of the offer of products users form series of intermediate digital codes for designation of data in various combinations of a situational model of each step of the sixth stage of the Way; users transfer digital data to the application server of the target appointment over communication channels by means of the OLE technology, implementing the mechanism of interprocessor interaction based on COM, and come out of operating process of the application server of digital transformation of data; *the seventh operation* - users enter operating process of the application server of the target appointment and reflect a situational model of each step of the sixth stage of the Way on different interactive displays for simultaneous work of group of developers by means of the software «SMART Meeting Pro» and «SMART ink» for creation of models combinations; users create various combinations of each model by consecutive replacement in the lower part of its cells of one combination of data of indicators of the current offer of products and their intermediate codes by another combination of data and their digital codes, which are different not only over a plurality of data of the offer of products, but also over spatial parameters of placement of products in various markets in different phases of the current period, and reflect the created various combinations of each situational model on separate interactive displays in 3D format and in a digital format for the subsequent comparison of productivity of combinations of each of models in a digital format; users carry out remote connection to the computing server by means of use of the program for remote access of type «SMART TeamWorks» for further work of group of developers on interactive displays of the computing server with the combinations of situational models of each step of the sixth stage of the Way, suspend operating process on the application server of the target appointment, but do not come out of it fully, they do not switch off interactive displays and do not close programs «SMART Meeting Pro» and «SMART ink»; *the eighth operation* - users enter operating process of the computing server, compare various combinations of each situational model among themselves over degree of correspondence of the transformed data with the planned relevant data of the strategic program and with data of the current consumer demand of the markets by means of use of the program of type «IBM SPSS Statistics»; as a result, users assess, select and reject over the majority of key parameters the least possible combinations of a situational model of assortments, life cycles, quality and the offer of products, respectively at each step of the sixth stage of the Way; *the ninth operation* - users carry out comparative assessment of the selected combinations of each situational model owing to the solution of tasks of multicriteria optimization of data on the basis of drawing up of the flowcharts of decision-making in a digital format, their of realization by means of the program of type «DecideIT» and of the calculation of increment of aggregate useful effect from all transformed plurality of data of each combination of the situational models over comparison with the planned aggregate useful effect for the current period in the corresponding strategic program; for this purpose users calculate over formulas *«AUE», «AUE*_{∪}» aggregate useful effect in total cells of various combinations of each situational model and obtain data about synergistic effectiveness of both each type of a product and all set of products during the current period of their offer in all markets; users display on interactive displays by means of programs «SMART Meeting Pro» and «SMART ink» results of the multicriteria assessment of productivity of various combinations, respectively of a situational model of assortments - at the first step, of a situational model of life cycles - at the second step, of a situational model of quality - at the third step, of a situational model of the offer of products - at the fourth step of the sixth stage of the Way; users transfer results of operations of the computing server to the application server of the target appointment by means of a remote session of the program for remote access of type «SMART TeamWorks» and come out of operating process of the computing server; *the tenth operation* - users resume the suspended operating process on the application server of the target appointment; on the basis of the data, obtained from the computing server, users choose the most productive combination from all possible combinations, respectively for a situational model of assortments, for a situational model of life cycles, for a situational model of quality, for a situational model of the offer of products, in each of which such plurality of data of the offer of each product during the current period is generated, which provides the highest synergistic effectiveness of the updated current program in a whole, also users synthesize summary cells of situational models and change the intermediate digital codes by the constant digital codes for designation of data of the offer of products in the lower half of cells of models, complete formation of the files of created situational models of assortments, life cycles, quality and the offer of products at each step of the sixth stage of the Way; users send tasks for generating the barcodes over communication channels to the application server of digital transformation of data and come out of operating process of the application server of the target appointment; *the eleventh operation* - users enter operating process of the application server of digital transformation of data and according the specified parameters, by means of use of the program of type «ActiveBarcode» generate the barcodes of type «QR» or «Data Matrix for designation of each created situational model and the current program over assortments, temporary parameters, quality, indicators of the offer of products, as well as for designation of the commodity nomenclature, each assortment, each product of the current program for the subsequent definition over the their barcode of the range of the planned plurality of data of the offer of a certain assortment or a product in the program for the current period; as a result, users generate barcodes for the integrated current program and the integrated situational-strategic program and their blocks; users transfer digital data to the application server of the target appointment over communication channels by means of OLE technology, implementing the mechanism of interprocessor interaction based on COM, and come out of operating process of the application server of digital transformation of data; *the twelfth operation* - users enter operating process of the application server of the target appointment and create files of the current programs on the basis of situational models and the received barcodes, namely files of the current program of the offer of assortments - at the first step, of the current program of the temporal parameters of the offer of products - at the second step, of the current program of the target function, quality of the offer of products - at the third step, of the current program of effectiveness of the target function, the volume, price of the offer of products - at the fourth step of the sixth stage of the Way, as well as generate a plurality of the output data of the integrated current program of the offer of products; users carry out direct transfer of the created files of models and the current programs to the file server owing to use by servers of the installed program «FTP Rush» by means of sessions «FXP» under «FTP» protocol and come out of operating process on the application server of the target appointment; *the thirteenth operation* - users enter operating process of the file server, register the received files of situational models and the current programs under their barcodes for storage and file operations, send files into storage of the file server and place into a digital block of the current programs, where all current programs under their barcodes are united into the united current program, which is denoted by an integrated barcode; *the fourteenth operation* - users enter digital blocks of strategic and current programs, which there are in storage of the file server, and users do copies of files of strategic and current programs, place these copies in the new folder and create an integrated block of the situational-strategic program of the offer of products under a separate barcode; it is a result of operating process of all levels of the Sixth subsystem at performance of all steps of the sixth stage of the Way, as well as it is a result of functioning of all subsystems and of the System in a whole owing to implementing all stages of the Way; users send from the file server via web-server of the System to web-server of the enterprise the created files and the information that all blocks are formed, all files of the situational-strategic program are created and sent, action of the System is finished; users come out of operating process of the file server, of network of the Sixth subsystem and the System in a whole.

## Amended claims

### Amended claims under Art. 19.1 PCT

1. System of exercise of a way of matrix-digital transformation of a variable data plurality, it is named further the System, it has constructive similarity with a prototype, what is limited to existence among its structural elements of the server of databases and forming the interconnected data blocks for reflection and display of data, blocks of development of recommendations, comparison and the choice of solutions variants, but System differs from a prototype and the known technical solutions by a set of essential technical features: by constructive device, software, the interactive principle of action, as well as communication channels, interaction of elements, and also distinctive feature consists in the fact that System is inseparably linked with a way of matrix-digital transformation of a variable data plurality, and they together form unity and integrity, namely System differs by existence of external and internal spheres and by constructive device containing the following interconnected structural elements: the web-server, proxy-server, server of databases - «Data Server»; «MySQL Server»; the computing server; the application server over synthesis of strategies; the application server of digital transformation of data; the application server of the target appointment; the file server; the controller of the domain; interactive panels; these servers are connected by communication channels and interaction with each other concerning data transmission from the server to the server in the course of exercise of various operations of the Way; each of servers is equipped with the operating system of family «Windows NT», of the type Windows 10, what provides their compatibility and community, as well as each server has software that is known from level of technique and is compatible to the used version of the operating system, with the software of other servers, and it is the functioning mechanism by means of which the server carries out the functional appointment, but at the same time, this its software, being used in a certain sequence and together with the software of other servers, is a necessary element of the technical mechanism of the created System, what defines its technical characteristics, namely servers are equipped by the following software: server of databases - «Data Server» is intended for collecting, systematization and storage of constant data and carries out the target appointment on the basis of software of type «Microsoft Excel», what allows to form the own matrix structure of databases in the format allowing to export the created database to a format «MySQL Workbench», «MySQL» or their analogs; server «MySQL» is intended for management by databases and carries out the target appointment on the basis of the software of type «MySQL» and «MySQL Workbench» basing on the structured language of inquiries; computing server is intended for processing of the arriving variable analytical data, for creation of analytical, commercial databases, as well as for estimating, computing, comparative operations, operations over forecast of data, and computing server carries out the target appointment on the basis of software over creation of unstructured databases of type «NoSQL», of software of type «DecideIT» for comparison of all combinations of data and the choice on the basis of the multicriteria analysis of an optimal solution, as well as the software of type «IBM SPSS Statistics Standard» and of type «SAS^{∗} Visual Forecasting», which are compatible with each other, allow to import and export data to «Microsoft Excel», to save files in the compatible «sav» format, and which are used for providing the widest range of computing, analytical operations and operations of the forecast of data both for long-term and the current period; the application server of digital transformation of data is intended for generating the digital codes, including digital indexes, digital keys and barcodes of data, and works on the basis of software of type «Serial Key Generator» and of type «ActiveBarcode», these programs are used for creation of the adjustable digital codes and barcodes according the specified parameters, and programs are capable to export generated codes to any program through the cloudy clipboard, over communication channels by means of technology «OLE» through the mechanism of interprocessor interaction based on «COM»; the application server over synthesis of strategies is intended for synthesis of the interconnected long-term and current development strategies of the company and its products and carries out the target appointment on the basis of software of type «SAS^{∗} Visual Analitics», this software allows to implement comprehensive analysis of the big array of the structured and unstructured data, including graphical analysis of development trends, testing of possible scenarios for synthesis of the long-term and current strategies of the offer of various products in various markets during the different temporal periods; the application server of the target appointment for creation of the situational-strategic program works on the basis of the programs of type «IBM WebSphere Business Modeler» and of type «Advanced Grapher» for generating of various combinations of the planned data at the specified restrictions, and also on the basis of the program of type «ZWCAD» for creation in 3D format of matrix-digital models that are tools for exercise of mechanism of optimal planning a plurality of output data of the situational-strategic program over products; the file server is intended for storage and the file operations of any type of data and is equipped by the file system of new technology «NTFS» on the basis of the software of type «Windows Server 2012 R2 NTFS», of family of operating systems «Windows NT»; the file server and other servers, participating in process of performance of operations of the Way and in the course of data transmission from the server to the server, work with the help of the installed program of type «FTP Rush» - FTP - client», this program has the Scheduler of tasks and provides direct files transfer from the server to the server under the protocol «FTP» by means of session «FXP» (File exchange Protocol); all servers are connected over communication channels with each other through controller of the domain of type «DPT RAID», which supports the operating system «Windows NT», and it acts on the basis of software of the fifth generation «Smart RAID V.», of series «Millennium» that is controller for servers of the enterprise scale; the System includes visual displays of type of interactive panels «SMART Board», series 7000 Pro c IQ for Windows 10, which work on the basis of the software «SMART Meeting Pro» and «SMART ink» and are joined by means of a cable «HDMI» to computers of the computing server, the application server over synthesis of strategies and the application server of the target appointment for data visualization that is required at performing by these servers of operations of the Way, as well as for providing of simultaneous work on different blocks of the distributed data of the project of several people that can work, using not only one interactive display or displays installing in one room and connected with one computer but and the different displays connected with different computers by means of the program for remote access of type «SMART TeamWorks»; interactive displays «SMART Board», which are used in invented System not only on the basis them of the software, but and together with the software of other servers of the System, as well as for implementing operations of the Way, become necessary element of multi-function device of the System, their functions expand, because they use already not only for input, exit and reflection of data at the screens, but also for the analysis, the forecast, synthesis of strategies, for modeling data, generating of strategic programs, monitoring of demand, situational updating of the current programs in real time, it is sign that influences also technical characteristics of the System, the technical result of it; the System has the external environment and interacts with external servers: web-server of System, receiving request from the external web-server of the enterprise on exercise of the Way, forms inquiries via the System proxy-server and directs them to web- servers of archival and library resources, sales markets of products, suppliers of material resources, suppliers of technologies and means of labor, suppliers of work force, resellers, financial intermediaries, buyers for obtaining the information and analytical data necessary for performance of operations of the Way; the answers from external servers are arriving on the proxy-server of the System over neural network, it allows to find out data in the automatic mode; the sorted constant and variable data come in different folders of the intermediate buffer for temporal storage of data of proxy-server and from it go to different servers of the internal environment of the System in dependence from appointment, namely users send constant data to the server of databases, whereas analytical data - to the computing server; essential distinctive sign of the System consists in the interactive principle of its action, namely in creation of six nonstructural and not hierarchical interactive subsystems for exercise of six stages of the Way, which are designated as the First subsystem, Second subsystem, Third subsystem, Fourth subsystem, Fifth subsystem, Sixth subsystem, each of subsystems has several levels, at which different steps of a certain stage of the Way are performed; all subsystems are connected with each other by communication channels in uniform network of the System, but each subsystem includes as identical servers of the System for performance of typical operations of general appointment, so and the individual main server having general functional purpose with a certain subsystem only, also each subsystem has different nature of communications and interaction between elements, because each subsystem is characterized absolutely by different system of entrances and exits of data, the operating processes, communication interrelations, channels of the movement of the data established for exercise of the purposes of a certain stage of the Way, it forms network of each of subsystems of the System, namely:
the network of the First subsystem unites the following interacting elements of the System: the server of databases with the software of type «Microsoft Excel», the application server of digital transformation of data with the software of type «Serial Key Generator» and of type «ActiveBarcode»; the file server with the software of type «Windows Server 2012 R2 NTFS»; these servers are connected with each other by communication channels; the server of databases receives over communication channels from the proxy-server constant data for formation of databases and interacts with other servers of the First subsystem that has six levels connected over communication channels by the general installation, the general process of exercise of six steps of the first stage of the Way, and it is intended for generating the analog-digital databases and formation of a digital block of databases, namely: at the first level of the First subsystem - of an analog-digital database for planning of a business environment of the company owing to performance of the first step of the first stage of the Way; at the second level of the First subsystem - of an analog-digital database for planning of development strategies of the company owing to performance of the second step of the first stage of the Way; at the third level of the First subsystem - of an analog-digital database for creation of programs over commodity nomenclature and assortments owing to performance of the third step of the first stage of the Way; at the fourth level of the First subsystem - of an analog-digital database for creation of programs over cumulative life cycle of products owing to performance of the fourth step of the first stage of the Way; at the fifth level of the First subsystem - of an analog-digital database for creation of programs over target function and quality of products owing to performance of the fifth step of the first stage of the Way; at the sixth level of the First subsystem - of an analog-digital database for creation of programs of the offer of products owing to performance of the sixth step of the first stage of the Way; action of network of the First subsystem consists in work of servers of this subsystem over performance of the operating processes consisting in consecutive performance of operations of each step of the first stage of the Way, and the communication processes consisting in procedures of an entrance and exit from operating process on each of servers and in their interaction with each other by means of communication channels for transfer of a data flow that are received as a result of their operating process at performance of steps of the first stage of the Way at each level of the First subsystem; upon termination of all operations at all levels of the First subsystem and finishing of the first stage of the Way by formation of a digital block of databases, which is a result of work of servers of the First subsystem, interaction of structural elements of the System in network of the First subsystem comes to an end;
the network of the Second subsystem unites the following interacting elements of the System: «MySQL Server» over management by databases with the installed program of type «MySQL», as well as the compatible program «MySQL Workbench» that is a tool for the visual and integrated designing and modeling of databases into uniform seamless space owing to establishment of interrelations between them in the system of databases «MySQL»; the application server of digital transformation of data with the software of type «Serial Key Generator» and of type «ActiveBarcode»; the file server with the software of type «Windows Server 2012 R2 NTFS»; these servers are connected with each other by communication channels; server «MySQL», using the program of direct file transfer «FTP Rush» by means of a session «FXP» over the protocol «FTP», receives *«csv»* files from a block of databases of storage of the file server, and users of the server «MySQL» carry out import their into the installed program «MySQL Workbench» for implementation of the databases management System by means of creation of object-relational models and interact with other servers of the Second subsystem that has six levels connected over communication channels by the general installation, the general process of exercise of six steps of the second stage of the Way, and it is intended for creation of object-relational digital models of the databases management System (DBMS) and for formation of a digital block of the object-relational models of DBMS, namely: at the first level of the Second subsystem - of an object-relational model of DBMS for synthesis of strategies of development of a business environment of the company owing to performance of the first step of the second stage of the Way; at the second level of the Second subsystem - of an object-relational model of DBMS for synthesis of strategies of development of the company and its products owing to performance of the second step of the second stage of the Way; at the third level of the Second subsystem - of an object-relational model of DBMS for synthesis of data in programs over commodity nomenclature and assortments owing to performance of the third step of the second stage of the Way; at the fourth level of the Second subsystem - of an object-relational model of DBMS for synthesis of data in programs of the life cycles of products owing to performance of the fourth step of the second stage of the Way; at the fifth level of the Second subsystem - of an object-relational model of DBMS for synthesis of data in programs over target function, quality of products owing to performance of the fifth step of the second stage of the Way; at the sixth level of the Second subsystem - of an object-relational model of DBMS for synthesis of data in programs of the offer of products in interrelation with temporal and spatial parameters owing to performance of the sixth step of the second stage of the Way; action of network of the Second subsystem consists in work of servers of this subsystem over performance of the operating processes consisting in consecutive performance of operations of each step of the second stage of the Way, and the communication processes consisting in procedures of an entrance and exit from operating process on each of servers and in their interaction with each other by means of communication channels for transfer of a data flow that are received owing to their operating process at performance of steps of the second stage of the Way at each level of the Second subsystem; upon termination of all operations at all levels of the Second subsystem and finishing of the second stage of the Way by formation of a digital block of the object-relational models of DBMS, which is a result of work of servers of the Second subsystem, interaction of structural elements of the System in network of the Second subsystem comes to an end;
the network of the Third subsystem unites the following interacting elements of the System: the computing server with the software of type «NoSQL», as well as of type «IBM SPSS Statistics Standard» and «SAS^{∗} Visual Forecasting»; the application server of digital transformation of data with the software of type «Serial Key Generator» and of type «ActiveBarcode»; the file server with the software of type «Windows Server 2012 R2 NTFS»; these servers are connected with each other by communication channels; the computing server receives over neural communication channels through proxy-server the variable data of analytical character and receives files from block of databases and from block of the object-relational models of DBMS of the file server, using the program of direct file transfer «FTP Rush» by means of a session of «FXP» over the protocol of «FTP»; the computing server is equipped by interactive displays of type «SMART Board», of the series 7000 Pro, which work on basis of software «SMART Meeting Pro» and «SMART ink», and interacts with other servers of the Third subsystem that has six levels connected over communication channels by the general installation, the general process of performance of six steps of the third stage of the Way, and it is intended for creation of temporal rows of forecasted data of demand and for formation of an analytical block of data, namely: at the first level of the Third subsystem - of the temporal rows of forecasted data of the markets and a business environment of the company owing to performance of the first step of the third stage of the Way; at the second level of the Third subsystem - of the temporal rows of forecasted data of demand in consumer effectiveness of products of the company owing to performance of the second step of the third stage of the Way; at the third level of the Third subsystem - of the temporal rows of the forecasted data of demand in commodity nomenclature and assortments owing to performance of the third step of the third stage of the Way; at the fourth level of the Third subsystem - of the temporal rows of the forecasted data of life cycles of demand in products owing to performance of the fourth step of the third stage of the Way; at the fifth level of the Third subsystem - of the temporal rows of the forecasted data of demand in target function and quality of products owing to performance of the fifth step of the third stage of the Way; at the sixth level of the Third subsystem - of the temporal rows of the forecasted data of demand in the effectiveness of target function, in volume, price of products owing to performance of the sixth step of the third stage of the Way; action of network of the Third subsystem consists in work of servers of this subsystem over performance of the operating processes consisting in consecutive performance of operations of each step of the third stage of the Way, and the communication processes consisting in procedures of an entrance and exit from operating process on each of servers and in their interaction with each other by means of communication channels for transfer of a data flow that are received as a result of their operating process at performance of steps of the third stage of the Way at each level of the Third subsystem; upon termination of all operations at all levels of the Third subsystem and finishing of the third stage of the Way by formation of a digital analytical block, which is a result of work of servers of the Third subsystem, interaction of structural elements of the System in network of the Third subsystem comes to an end;
the network of the Fourth subsystem unites the following interacting elements of the System: the computing server with the software of type «IBM SPSS Statistics Standard» and of type «SAS^{∗} Visual Forecasting»; the application server over synthesis of strategies with the software of type «SAS^{∗} Visual Analitics»; the application server of digital transformation of data with the software of type «Serial Key Generator» and of type «ActiveBarcode»; the file server with the software of type «Windows Server 2012 R2 NTFS»; these servers are connected with each other by communication channels; the computing server and the application server over synthesis of strategies, using the program of direct file transfer «FTP Rush» by means of a session «FXP» over protocol «FTP», receive files from blocks of storage of the file server: from blocks of databases and object-relational models of DBMS, as well as from an analytical block; the computing server and the application server over synthesis of strategies are connected with each other and are equipped by interactive displays of type «SMART Board», of series 7000 Pro, which work on the basis of the software «SMART Meeting Pro», «SMART ink» and «SMART TeamWorks»; these servers interact with other servers of the Fourth subsystem that has six levels connected over communication channels by the general installation, the general process of performance of six steps of the fourth stage of the Way, and it is intended for synthesis of strategies and formation of a digital block of strategies, namely: at the first level of the Fourth subsystem - of the strategies of transformation of the business environment of the company and strategic zones of positioning of products in the markets owing to performance of the first step of the fourth stage of the Way; at the second level of the Fourth subsystem - of the development strategies of the company and its products owing to performance of the second step of the fourth stage of the Way; at the third level of the Fourth subsystem - of the strategies of transformation of the commodity nomenclature and assortments owing to performance of the third step of the fourth stage of the Way; at the fourth level of the Fourth subsystem - of the strategies of transformation of life cycles of the products owing to performance of the fourth step of the fourth stage of the Way; at the fifth level of the Fourth subsystem - of the strategies of transformation of target function, quality of the products owing to performance of the fifth step of the fourth stage of the Way; at the sixth level of the Fourth subsystem - of the strategies of transformation of the indicators of offering products in strategic segments of various markets owing to performance of the sixth step of the fourth stage of the Way; action of network of the Fourth subsystem consists in work of servers of this subsystem over performance of the operating processes consisting in consecutive performance of operations of each step of the fourth stage of the Way, and the communication processes consisting in procedures of an entrance and exit from operating process on each of servers and in their interaction with each other by means of communication channels for transfer of a data flow that are received as a result of their operating process at performance of steps of the fourth stage of the Way at each level of the Fourth subsystem; upon termination of all operations at all levels of the Fourth subsystem and finishing of the fourth stage of the Way by formation of a digital block of strategies, which is a result of work of servers of the Fourth subsystem, interaction of structural elements of the System in network of the Fourth subsystem comes to an end;
the network of the Fifth subsystem unites the following interacting elements of the System: the application server of target appointment that uses the programs of type «IBM WebSphere Business Modeler» and of type «Advanced Grapher», as well as of type «ZWCAD»; the application server of digital transformation of data with the software of type «Serial Key Generator» and of type «ActiveBarcode»; the computing server with the software of type of «IBM SPSS Statistics Standard» and of type «SAS^{∗} Visual Forecasting», as well as of type «DecideIT»; the file server with the software of type «Windows Server 2012 R2 NTFS»; these servers are connected with each other by communication channels; the application server of target appointment, using program of direct file transfer «FTP Rush» by means of session «FXP» over protocol of «FTP», receives files from blocks of databases and of object-relational models of DBMS, as well as from an analytical block and a block of strategies of storage of the file server; the computing server and the application server of target appointment are equipped by interactive panels, of type «SMART Board», series 7000 Pro that work on the basis of the software «SMART Meeting Pro», «SMART ink» and «SMART TeamWorks», these servers interact with each other and with other servers of the Fifth subsystem that has four levels connected over communication channels by the general installation, the general process of performance of four steps of the fifth stage of the Way, also it is intended for planning and generating a plurality of the output data of the target strategic program of the offer of products in interrelation with temporal and spatial parameters and for formation of a digital block of strategic programs, namely: at the first level of the Fifth subsystem - generating a plurality of data of the strategic program of the offer of the commodity nomenclature and assortments owing to performance of the first step of the fifth stage of the Way; at the second level of the Fifth subsystem - generating a plurality of temporal parameters of the strategic program of the offer of products owing to performance of the second step of the fifth stage of the Way; at the third level of the Fifth subsystem - generating a plurality of data of the strategic program over target function, qualitative parameters of the offer of products owing to performance of the third step of the fifth stage of the Way; at the fourth level of the Fifth subsystem - generating a plurality of data of effectiveness of target function, volumes, the prices of the strategic program of the offer of products owing to performance of the fourth step of the fifth stage of the Way; action of network of the Fifth subsystem consists in work of servers of this subsystem over performance of the operating processes consisting in consecutive performance of operations of each step of the fifth stage of the Way, and the communication processes consisting in procedures of an entrance and exit from operating process on each of servers and in their interaction with each other by means of communication channels for transfer of a data flow that are received as a result of their operating process at performance of steps of the fifth stage of the Way at each level of the Fifth subsystem; upon termination of all operations at all levels of the Fifth subsystem and finishing of the fifth stage of the Way by formation of a digital block of strategic programs, which is a result of work of servers of the Fifth subsystem, interaction of structural elements of the System in network of the Fifth subsystem comes to an end;
the network of the Sixth subsystem unites the following interacting elements of the System: the application server of target appointment that uses the programs of type «IBM WebSphere Business Modeler» and of type «Advanced Grapher», as well as of type «ZWCAD»; the application server of digital transformation of data with the software of type «Serial Key Generator» and of type «ActiveBarcode»; the computing server with the software of type «IBM SPSS Statistics Standard» and of type «SAS^{∗} Visual Forecasting», as well as of type «DecideIT»; the file server with the software of type Windows Server 2012 R2 NTFS; these servers are connected with each other by communication channels; the application server of target appointment, using the program of direct file transfer «FTP Rush» by means of a session «FXP» over the protocol «FTP», receives files from a block of the strategic programs of storage of the file server; the computing server and the application server of target appointment are equipped by interactive displays of type «SMART Board», series 7000 Pro, which work on the basis of the software «SMART Meeting Pro», «SMART ink» and «SMART TeamWorks», they interact with each other and with other servers of the Sixth subsystem, which has four levels connected over communication channels by the general installation, the general process of performance of four steps of the sixth stage of the Way, and it is intended for situational transformation of a plurality of the output data of the current programs of the offer of products and formation of a digital block of the situational-strategic program, namely: at the first level of the Sixth subsystem - situational transformation of a plurality of data of width, depth and structure of the offer of commodity assortments for updating of the current program of assortments owing to performance of the first step of the sixth stage of the Way; at the second level of the Sixth subsystem - situational transformation of a plurality of temporal parameters of the offer of products for updating of the current program of life cycles of products owing to performance of the second step of the sixth stage of the Way; at the third level of the Sixth subsystem - situational transformation of a plurality of data of target function, quality of the offer of products for updating of the current program of quality of products owing to performance of the third step of the sixth stage of the Way; at the fourth level of the Sixth subsystem - situational transformation of a plurality of data of effectiveness of target function, volume, the price of the offer of products for updating of the current program of the offer of products owing to performance of the fourth step of the sixth stage of the Way; action of network of the Sixth subsystem consists in work of servers of this subsystem over performance of the operating processes consisting in consecutive performance of operations of each step of the sixth stage of the Way, and the communication processes consisting in procedures of an entrance and exit from operating process on each of servers and in their interaction with each other by means of communication channels for transfer of a data flow that are received as a result of their operating process at performance of steps of the sixth stage of the Way at each level of the Sixth subsystem; upon termination of all operations at all levels of the Sixth subsystem and finishing the sixth stage of the Way by formation of a digital block of the situational-strategic program, which is a result of work of servers not only of the Sixth subsystem but System in a whole, interaction of structural elements in network of the Sixth subsystem comes to an end; users send from the file server via web-server of the System to web-server of the enterprise the created files and the information that all blocks are formed, all files of the situational-strategic program are created and sent, action of the System is finished.

2. Way of matrix-digital transformation of a variable plurality of data for generating the situational-strategic program of the offer of products, it is named further the Way, has similarity to a prototype, it is limited to use of similar tools of analysis and transformation of data in the form of databases, the multidimensional matrix tool for management of transformation of data, but the Way differs from a prototype and the known technical solutions by the essential technical features which consist in creation in a digital form of a list of the sequences from six stages, their steps, consecutive operations of each stage and matrix interrelations between them in the form of a chain of the connected matrix-digital models of each stage, these models are connected with each other by the general process and purpose of the Way, they are united into a common matrix-digital model of the Way and embody the matrix-digital mechanism of operating processes of the Way, which at each stage is expressed, firstly, in digital transformation of data, when digital codes, keys of data, barcodes are generated according established parameters for forming interrelations between data in the form of the connected digital codes, keys for automation of various operations over transformation of data with the help of use of an arsenal of the modern technical means, computer programs, which are specified at the description of the System; secondly, in use of matrix mechanisms of the operating processes indissolubly with digital transformation of data; these signs the following ways embody: a way of formation of databases over the matrix principle and creation of analog-digital databases for data storage in both a matrix form and digital form; a way of formation of the object-relational models of DBMS for establishment of matrix-digital interrelations between various type of data; a way of mutually agreed synthesis of the long-term and current strategies of transformation of data in a system of the coordinates of the time and space by means of using a computer program of the vector analysis; a way of the forecast of multidimensional temporal rows of data of demand on the basis of programs of the spectral analysis; ways of strategic planning and situational transformation of any type of data as plurality and in the uniform system of coordinates of time and space by means of creation in 3D format of the matrix-digital models and in their using on interactive displays in role of tools for multi-purpose optimization of data, which on the basis of software of the System allow modeling different combinations of data, to carry out their comparison and to generate the output data of the situational-strategic program of the offer of products in form of synergistic plurality; essential distinctive sign of the Way is that process of exercise of each its stage consists in actions over creation of the corresponding digital block, and in fact it characterizes a way of formation of digital blocks, namely: at the first stage - of a block of databases; at the second stage - of a block of the object-relational models of the DBMS; at the third stage - of an analytical block; at the fourth stage - of a block of strategies; at the fifth stage - of a block of strategic programs; at the sixth stage - of a block of the current programs; digital blocks of each stage are logically connected with each other, as data of one digital block are base for formation of subsequent blocks, and all digital blocks participate in formation of an integrated digital block of the situational-strategic program of the offer of products, which is formed at the sixth stage, but is a result of exercise of all stages of the Way; all created digital blocks are a product not only of exercise of the Way, but also action of the System, as they characterize productivity and speed not only of the Way, but also of the System in a whole; the Way forms a whole with the System and cannot be carried out without it, because all operations of the Way are carried out on various servers of the System and by means of the software of these servers, namely the Way consists in performance of a set of the following consecutive actions:
users enter into network of the First subsystem and perform the first stage of the Way, which includes a set of actions for generating the analog-digital databases and formation of a digital block of databases for creation of information basis of programs of the offer of products, implementing the six steps of the first stage, on each step create the digital sequence of operations and the matrix-digital mechanism of process of generating the analog-digital databases, namely: at the first step - of an analog-digital database for planning of a business environment of the company; at the second step - of an analog-digital database for planning of development strategies of the company; at the third step - of an analog-digital database for creation of programs over commodity nomenclature and assortments; at the fourth step - of an analog-digital database for creation of programs over cumulative life cycle of products; at the fifth step - of an analog-digital database for creation of programs over target function, quality of products; at the sixth step - of an analog-digital database for creation of programs of the offer of products; for implementing each step of the first stage the users use servers and their software of the First of subsystems of the System and carry out nine consecutive operations that are typical for all steps of the first stage of the Way, namely: *the first operation* - users enter operating process of the server of databases, obtain over neural networks through the proxy-server the data of constant character, sort them over key indicators for the subsequent storage by means of use of the program of type «Microsoft Excel», namely constant data necessary for the subsequent analysis, assessment, forecasting, planning, including a formulas for assessment, respectively of the competition, of a business environment of the company, efficiency, profitability of the company and its products, width, saturation of nomenclature, width, depth, elasticity, harmony of assortments, life cycles of resources and the released products, of the target function, quality of products, indicators of useful effect of products for producer and consumers, aggregate useful effect of products for the subsequent creation of the corresponding databases in process of steps of the first stage of the Way; *the second operation* - users classify and systematize data, using the program of type «Microsoft Excel», build classification models of structure of data for creation of a database at each step of the first stage of the Way; *the third operation* - users define structure and fields in an analog-digital format of each database, send tasks for generating the digital codes, keys over communication channels to the application server of digital transformation of data and come out of operating process of the server of databases; *the fourth operation* - users enter operating process of the application server of digital transformation of data, generate the integrated digital codes for each cell of a certain database by use of the program of type «Serial Key Generator» and according the specified parameters of indexes of lines and columns of a database created on each of steps of the first stage of the Way; *the fifth operation* - users generate the internal and external keys for each table in a database formed at each step of the first stage of the Way according the specified parameters by means of program of type «Serial Key Generator»; users transfer digital data to the server of databases over communication channels by means of OLE DB technology, implementing the mechanism of interprocessor interaction based on COM, and come out of operating process of the application server of digital transformation of data; *the sixth operation* - users enter operating process of the server of databases and on the basis of the received digital codes carry out the matrix-digital mechanism of formation of databases by use of the program of type Microsoft Excel that allows to form a matrix structure of each database over any parameters, according this mechanism all data are grouped in an analog-digital format over the matrix principle, i.e. not only horizontally over subject but also over vertically for detailing each group of data by plurality of parameters; as a result, users create analog-digital databases at each step of the first stage of the Way; users send tasks for generating the barcodes over communication channels to the application server of digital transformation of data and come out of operating process of the server of databases; *the seventh operation* - users enter operating process of the application server of digital transformation of data and according the specified parameters by means of use of the software of type «ActiveBarcode» generate the barcodes of type «QR» or «Data Matrix» for designation not only of each created database, but also for designation of each table in it for the subsequent automatic input and identification of an analog-digital database created on each of steps of the first stage of the Way; as a result, users form the barcode for designation of an integrated block of all databases created at the first stage of the Way; users transfer digital data to the server of databases over communication channels by means of OLE DB technology, implementing the mechanism of interprocessor interaction based on COM, and come out of operating process of the application server of digital transformation of data; *the eighth operation* - users enter operating process of the server of databases and denote by the received barcodes the databases and tables in them, preserve in a form of «csv» file the analog-digital databases, created at each step of the first stage of the Way and intended for the subsequent planning a business environment of the company and strategic zones of its managing, development strategies of the company, the commodity nomenclature and assortments, life cycles of products, the target function and quality of products, indicators of the offer of products; users carry out direct transfer of the created files to the file server owing to using by servers of the installed «FTP Rush» program by means of «FXP» session under «FTP» protocol and come out of operating process of the server of databases; *the ninth operation* - users enter operating process of the file server, register the received files of analog-digital databases for their storage and file operations, send the files of analog-digital databases, created at each step of the first stage of the Way, into storage of the file server and place under their barcodes in the formed digital block of databases, which is denoted by an integrated barcode; this block is a result of operating process of all steps of the first stage of the Way at all levels of the First subsystem; users carry out direct transfer of databases files from a digital block of databases of storage of the file server to the MySQL Server owing to using by servers of installed «FTP Rush» program by means of «FXP» session under «FTP» protocol and come out of operating process of the file server; upon termination of the ninth operation at all levels of the First subsystem and finishing of all steps of the first stage of the Way, users come out of network of the First subsystem;
users enter into network of the Second subsystem and carry out the second stage of the Way, which includes a set of actions for formation of the object-relational models of the DBMS and of a digital block of models of the System of the Databases management for synthesis of data in programs of the offer of products, implementing the six steps entering the second stage, on each step create the digital sequence of operations and the matrix-digital mechanism of process of creation of an object-relational model of the DBMS, namely: at the first step - of an object-relational model of the DBMS for synthesis of strategies of development of a business environment of the company; at the second step - of an object-relational model of the DBMS for synthesis of strategies of development of the company and its products; at the third step - of an object-relational model of the DBMS for synthesis of data in programs over commodity nomenclature and assortments; at the fourth step - of an object-relational model of the DBMS for synthesis of data in programs of life cycles of products; at the fifth step - of an object-relational model of the DBMS for synthesis of data in programs over target function, quality of products; at the sixth step - of an object-relational model of the DBMS for synthesis of data in programs of the offer of products in interrelation with temporal and spatial parameters; for implementing each step of the second stage the users use servers and their software of the Second of subsystems of the System and carry out five consecutive operations that are typical for all steps of the second stage of the Way, namely: *the first operation* - users enter operating process of the server «MySQL», carry out import of arrived «csv» files of the databases, created at the previous stage, into the installed program of type «MySQL Workbench» by means of using the tools of the program, and in the section «*Physical Schemas*» they form a list of databases of project and a list of tables for each database, separately denoting each object of the loaded database, choose the system of storage for all tables by default «*InnoDB*», load internal keys and digital codes into the section *«Indexes»* and establish matrix-digital interrelations between data in each table, namely in both vertical and horizontal position, also the connected digital codes of data in tables of each database for formation of DBMS in the process of performance of steps of the second stage of the Way; *the second operation* - users install owing to use of such tools of the program «MySQL Workbench», as «*Models*», *«*+*Add Diagram»,* «*Column»*, «*Referenced Column»,* parental and affiliated tables in each database for determination of nature of communications between their data; users, using the digital codes of data, defined on the first stage of the Way, edit external digital keys in column *«Foreign Keys»* according to their multipurpose appointment, build EER chart - «essence - relation» for establishment of matrix interrelations and of the connected digital codes of data, on the one hand, vertically between data of tables of one appointment, but these tables have various hierarchy and level of detailing data and are a part of a certain database, and on the other hand, horizontally between data of tables of each certain database and data of the tables, which are a part of other databases of the block of the first stage, in order that to establish influence of various factors and data types at each other for forming DBMS in a result of steps of the second stage of the Way; users send tasks for generating the barcodes over communication channels to the application server of digital transformation of data and come out of operating process of the server «MySQL»; *the third operation* - users enter operating process of the application server of digital transformation of data and according the specified parameters by means of use of the program of type «ActiveBarcode» generate the barcodes of type «QR» or «Data Matrix» for designation of each database and its objects, namely of the tables, EER charts, object-relational model of the System of management by each database, also for designation of the System of management by all databases that enter a block of the first stage and of an integrated digital block of the object-relational models of the second stage; users transfer digital data to the server «MySQL» over communication channels by means of OLE DB technology, implementing the mechanism of interprocessor interaction based on COM, and come out of operating process of the application server of digital transformation of data; *the fourth operation* - users enter operating process of the server «MySQL », create in a digital format object-relational models of the DBMS by means of use of tools of the program of «MySQL Workbench» and on the basis of the connected digital codes of data and the constructed EER charts at each step of the second stage of the Way; users unite all objects, namely: EER charts, tables, object-relational models, which are created in each database under their barcodes, into the uniform seamless management system by databases, keep all objects of DBMS in one general script by means of a tool of «Export to Self-Contained File» of the program «MySQL Workbench», carry out export of the backup copy into a file in the «*sql»* format, available for editing in the program «MySQL»; users export by means of use of tools of the program of «MySQL Workbench» the created files of object-relational models into the «*pdf»* format on each step of the second stage of the Way, namely: the file of an object-relational model of the DBMS for synthesis of development strategies of a business environment of the company - on the first step; the file of an object-relational model of the DBMS for synthesis of the strategies of development of the company and its products - on the second step; the file of an object-relational model of the DBMS for synthesis of data in programs over commodity nomenclature and assortments - on the third step; the file of an object-relational model of the DBMS for synthesis of data in programs of the life cycles of products - on the fourth step; the file of an object-relational model of the DBMS for synthesis of data in programs over target function and quality of products - on the fifth step; the file of an object-relational model of the DBMS for synthesis of data in programs of the offer of products in interrelation with temporal and spatial parameters - on the sixth step of the second stage of the Way; users carry out direct transfer of the created files to the file server owing to using by servers of the installed «FTP Rush» program by means of «FXP» session under «FTP» protocol and come out of operating process of the server «MySQL»; *the fifth operation* - users enter operating process of the file server, register the received files for their storage and file operations, direct the file in a format «*sql*» of the System of management by databases, also the «*pdf»* files of the object-relational models of the DBMS, which are created in process of steps of the second stage of the Way, into storage of the file server for placement of all files under their barcodes in a digital block of the object-relational models of the DBMS, this block is denoted by an integrated barcode, and it is a result of operating process of performance of all steps of the second stage of the Way at all levels of the Second subsystem; users carry out direct transfer of files from a digital block of databases of the first stage and the files of the object-relational models of the DBMS from a digital block of the DBMS of the second stage, namely from blocks of storage of the file server to the computing server owing to using by servers of installed program of the «FTP Rush» by means of «FXP» session under «FTP» protocol, come out of operating process of the file server; upon termination of the fifth operation at all levels of the Second subsystem and finishing of all steps of the second stage of the Way, users come out of network of the Second subsystem;
users enter into network of the Third subsystem and perform the third stage of the Way, which includes a set of actions for generating the temporal rows of forecasted data and formation of a digital analytical block for creation of the programs of the offer of products, implementing the six steps entering the third stage, on each step create the digital sequence of operations and the matrix-digital mechanism of process of creation of the temporal rows of the forecasted data, namely: on the first step - of the temporal rows of forecasted data of the markets and a business environment of the company; on the second step - of the temporal rows of forecasted data of demand in consumer effectiveness of products of the company; on the third step - of the temporal rows of forecasted data of demand in assortments; on the fourth step - of the temporal rows of forecasted data of life cycles of demand in products; on the fifth step - of the temporal rows of forecasted data of demand in target function and quality of products; on the sixth step - of the temporal rows of forecasted data of demand in the effectiveness of the target function, in volume, price of products; for implementing each step of the third stage the users use servers and their software of the Third of subsystems of the System and carry out nine consecutive operations, which are typical for all steps of the third stage of the Way, namely: *the first operation* - users enter operating process of the computing server and collect the analytical variable data arriving over communication channels from the proxy-server to the computing server, carry out their selection, analyze the obtained basic data of the markets, demand, consider the data structure, which is defined in relational databases of the first stage, and interrelations between data, which are defined by object-relational models of the second stage, investigate trend of change of the markets, demand in various types of products on the basis of the multifactorial analysis of influence of the various factors (of the scientific and technical, economic, social, political, demographic, geographical, ethnic factors) on dynamics of change of the markets, demand in different types of products by means of use of the program of type «IBM SPSS Statistics»; users systematize analytical data over clusters, on the basis of which create and preserve microservices into files, each of which has an identification key and is a component of the not relational database of type «NoSQL» with the corresponding software «NoSQL» for control and storage of unstructured data, including commercial, analytical data and for formation of a control system of them on the basis of the flexible model of data supporting the microservices created for different groups of data at each step of the third stage of the Way; *the second operation -* users carry out the multidimensional forecast of trends of change of demand, taking into account weak signals, and carry out the singular spectral analysis «SSA», which combines elements of the classical spectral analysis of the temporal rows, defined by Fourier method, of multidimensional statistics, multidimensional geometry of processing of signals and dynamic systems by use of the program of type «SAS Visual Forecasting»; users begin the forecast of multidimensional temporal rows of various data of demand in products in the form of a matrix with the subsequent application to a temporal row of a method of the main components and determine amplitude of each temporal row, i.e. a deviation of its maximum and minimum values from average values; taking into account these amplitudes, users generate all possible options of change of the markets and demand during the predicted long-term period, namely: options of dynamics of number of competitors, buyers, suppliers, resellers and financial intermediaries - at the first step; options of dynamics of consumer demand in effectiveness of various products - at the second step; options of dynamics of indicators of demand in assortments - at the third step; options of dynamics of parameters of temporal phases of demand in various products - at the fourth step; options of dynamics of demand in the target function, quality of various products - at the fifth step; options of dynamics of demand in the effectiveness of the target function, the price, volume of various products - at the sixth step of the third stage of the Way; users keep versions of the forecast in files at performance of each step of the third stage of the Way; *the third operation* - users estimate space of conditions of the dynamic variables influencing demand by means of use of tools of the software of type «SAS Visual Forecasting», as well as with help of visual display units, of type of interactive panels «SMART Board, series 7000 Pro», with the software «SMART Meeting Pro» and «SMART ink», which are used for brain storms and the collective analysis of various factors, among which there are rates of scientific and technical progress; the level of inflation and solvency of buyers; growth rates of the prices, tariffs; rates of updating of technologies and a product range; the level of intensity of the competition, also users determine by a method of the main components those factors of influence on consumer demand, which are insignificant, and they can be neglected; as a result, users establish the direction for adjustment of the forecasted range of data owing to suppression of high-frequency or low-frequency components of multidimensional temporal rows of forecasted data of the markets and demand in products for the long-term period, define probability degree of each version of the forecast of a plurality of data; users send tasks for generating the digital codes over communication channels to the application server of digital transformation of data and come out of operating process of the computing server; *the fourth operation* - users enter operating process of the application server of digital transformation of data, set digital designations for each market, a temporal phase of demand, a product, for each factor that influences demand, for each indicator of consumer demand, and owing to use of the program of type of «Serial Key Generator» generate digital codes for each group of conditions and each variant of possible dynamics of demand, also define a digital key for each microservice of the database «NoSQL» at each step of the third stage of the Way; *the fifth operation* - users generate the integrated digital codes for the temporal rows of data according the specified parameters and by means of use of the program of type «Serial Key Generator»; the integrated digital codes contain the references both to identifier of each forecasted indicator and identifiers of group of conditions and factors, which have the greatest impact on dynamics of this indicator, its fluctuation over different types of products and the markets during the forecasted long-term period; users transfer digital codes for forecasting of temporal rows at each step of the third stage of the Way to the computing server over communication channels by means of the OLE technology, implementing the mechanism of interprocessor interaction based on COM, and come out of operating process of the application server of digital transformation of data; *the sixth operation* - users enter operating process of the computing server and carry out with use of the created digital codes the space-time forecast of dynamics of various indicators of the markets and demand in each product by means of use of the software of type «SAS Visual Forecasting», use graphic tools of the program and visual display units, of type of interactive panels «SMART Board, series 7000Pro», with the software of type «SMART Meeting Pro» and «SMART ink» for collaboration of a group of developers of the project for finishing of the forecast on the basis of the spectral analysis, and they model multidimensional temporal rows of data of demand in products in the graphic system of coordinates of time and space in 3D format on the basis of the directions of smoothing of amplitudes of forecasted temporal rows of data, defined at the third operation; as a result, users generate in a digital format the multidimensional temporal rows of data of demand in products during the forecasted long-term period and create their files at each step of the third stage of the Way; users form the structure of a digital analytical block consisting of three sections, everyone of sections include six compartments forming on each of steps of the third stage of the Way; users send tasks for generating the barcodes over communication channels to the application server of digital transformation of data and come out of operating process of the computing server; *the seventh operation* - users enter operating process of the application server of digital transformation of data, according the specified parameters and by means of use of the program of type «ActiveBarcode» generate the barcodes of type «QR» or «Data Matrix» for designation of multidimensional temporal rows of data of demand in each product during the forecasted long-term period, as well as for the designation of each section and each compartment, which are formed at a certain step of the third stage of the Way; as a result, they form an integrated barcode for designation of an analytical block of the third stage of the Way; users transfer barcodes to the computing server over communication channels by means of the OLE technology, implementing the mechanism of interprocessor interaction based on COM, and come out of operating process of the application server of digital transformation of data; *the eighth operation* - users enter operating process of the computing server; using results of the previous operations and the generated barcodes, they form the corresponding compartment of a digital analytical block at each step of the third stage of the Way, namely: compartment of the forecast of the business environment - at the first step; compartment of the forecast of demand in effectiveness of products - at the second step; compartment of the forecast of demand in commodity nomenclature and assortments - at the third step; compartment of the forecast of life cycles of demand in products - at the fourth step; compartment of the forecast of demand in the target function, quality of products - at the fifth step; compartment of the forecast of a plurality of data of demand in the effectiveness of target function, in the volume, price of products - at the sixth step, as well as users create three sections in each compartment of an analytical block including the files that are created in process of each step of the third stage of the Way on the computing server, namely: the files of microservices of the database of type «NoSQL», about actual data of demand indicators, about the factors influencing them are included in the first section; the files of all possible options of dynamics of various indicators of demand in products are included in the second section; the files of the forecasted multidimensional temporal rows of data of demand in products are included in third section; users carry out direct transfer of the created files to the file server owing to using by servers of the installed «FTP Rush» program by means of «FXP» session under «FTP» protocol and come out of operating process of the computing server; *the ninth operation* - users enter operating process of the file server, register the received files for storage and file operations, send files of three sections of each compartment created at each step of the third stage of the Way into storage of the file server and place under their barcodes in structure of the formed digital analytical block, which is denoted by an integrated barcode and is created over the matrix principle from six vertical compartments and three horizontal sections of each compartment; this block is a result of operating process of performance of all steps of the third stage of the Way at all levels of the Third subsystem; users carry out direct transfer of files of databases from a digital block of databases of the first stage, the files of the object-relational models from a digital block of the DBMS of the second stage, as well as the files of forecasted multidimensional temporal rows of data from a digital analytical block of the third stage of the Way, namely from blocks of storage of the file server to the computing server and to the application server over synthesis of strategies owing to using by servers of installed program «FTP Rush» by means of «FXP» session under »FTP» protocol and come out of operating process of the file server; upon termination of the ninth operation at all levels of the Third subsystem and finishing of all steps of the third stage of the Way, users come out of network of the Third subsystem;
users enter into network of the Fourth subsystem and perform the fourth stage of the Way, which includes a set of actions for synthesis of strategies and formation of a digital block of strategies in order that to generate programs of the offer of products, implementing the six steps entering the fourth stage, on each step create the digital sequence of operations and the matrix-digital mechanism of process of synthesis of strategies, namely: at the first step - of synthesis of strategies of transformation of a business environment of the company and strategic zones of positioning of products in the markets; at the second step - of synthesis of development strategies of the company, its products; at the third step - of synthesis of strategies of transformation of the commodity nomenclature and assortments; at the fourth step - of synthesis of strategies of transformation of the life cycles of products; at the fifth step - of synthesis of strategies of transformation of the target function, quality of products; at the sixth step - of synthesis of strategies of transformation of the offer of products in strategic segments of various markets; for implementing each step of the fourth stage the users use servers and their software of the Fourth of subsystems of the System and carry out ten consecutive operations, which are typical for all steps of the fourth stage of the Way, namely: *the first operation* - users enter operating process of the computing server, assess by means of use of the software of type «IBM SPSS Statistics» all possible internal and external factors influencing change of conditions for transformation of strategies of the company, namely they define the motivational conditions, incentives on the basis of the development tasks, the reached data of the offer of products, reserves of the resources, growth rates of volumes of the offer of products, profitability, useful effect of products, share of coverage of the market by products of the company owing to using of databases of type «MySQL» and «NoSQL» and of the object-relational models; at the same time, they determine objective conditions on the basis of the forecasted data of dynamics of level of expenses and the prices, rates of updating of a product range under the influence of scientific and technical progress, of the scale of expansion of sales markets, also of indicators of a business environment, level of the competition, quantitative inquiries of consumers and differentiation of their inquiries according the forecasted temporal rows of data of demand; users select and systematize all possible options of change of development conditions of the markets, products, production, consumer requirements and create files about groups of conditions and about degrees of their constancy for transformation of development strategies of the company and of the offer of products during the long-term period, respectively at each step of the fourth stage of the Way; users carry out direct transfer of the created files to the application server over synthesis of strategies owing to using by servers of the installed program «FTP Rush» by means of «FXP» session under «FTP» protocol and come out of operating process of the computing server; *the second operation* - users enter operating process of the application server over synthesis of strategies, choose from all possible the most probable variants of change of development conditions with a high class of constancy during the long-term period as reference points and carry out the comprehensive analysis of both the structured data and of the unstructured data, obtained from various sources, including from various blocks created on the first, second and third stage of the Way on the file server, namely: from a block of databases of type «MySQL» and «NoSQL»; from a block of the object-relational models of DBMS for definition of the essential communications between data; from an analytical block of multidimensional temporal rows of data of demand in different types of the products during the long-term period, on this basis users build graphs, network graphics, a tree of decisions, a block of charts for visual brainstorming by means of use of tools of software of type «SAS^{∗} Visual Analitics» and of interactive displays of type «SMART Board, series 7000Pro», with the software «SMART Meeting Pro» and «SMART ink»; as a result, users define for each group of the similar products all possible scenarios of transformation of indicators of their offer in a certain market during the forecasted long-term period, as well as all possible scenarios of development of the company and establish the main indicators and the directions of their transformation for each scenario of the proposal of different groups of the similar products, create files about all possible scenarios of development of the company and of the offer of products, namely: a file about scenarios of transformation of a business environment of the company - at the first step; a file about scenarios of development of the company and its product range - at the second step; a file about scenarios of transformation of the commodity nomenclature, assortments of the company - at the third step; a file about scenarios of life cycles of the offer of products - at the fourth step; a file about scenarios of transformation of target function, quality of the offer of products - at the fifth step; a file about scenarios of transformation of a plurality of data of the effectiveness of target function, the volume, price of the offer of products - at the sixth step of the fourth stage of the Way; ; users carry out remote connection to the computing server by use of the program for remote access of type «SMART TeamWorks» for further work of group of developers on the computing server with the scenarios of synthesis of strategies that are reflected on the interactive displays; users stop operating process on the application server over synthesis of strategies, but they do not come out of it fully, as well as do not switch off interactive displays and do not close programs «SMART Meeting Pro» and «SMART ink»; *the third operation* - users enter operating process of the computing server and assess potential of resources of the enterprise for implementing scenarios of development of the company and its products, which are reflected on interactive displays, namely of technical base, the labor resources, the reached labor productivity level, capital productivity, rhythms of production, material consumption, and the cost of products by use of the program of type «IBM SPSS Statistics, predict saving of resources owing to their rational use and introduction of achievements of science and technique, progress of technologies, also the volumes of financing at the expense of external investments and internal reserves on the purpose of development of the offered products during the forecasted long-term period and define restrictions in resources for transformation of data of various indicators of the offer of products by means of use of the software of type «SAS Visual Forecasting»; users use interactive displays of type «SMART Board», series 7000Pro, with the software «SMART Meeting Pro» and «SMART ink» for visual dynamic comparison of cost of various scenarios of data transformation of the offer of products and for definition of their feasibility at a certain volume of financing, eliminate impracticable scenarios, and for all others define the rating of feasibility; as a result, users define a group of restrictions over resources for possible scenarios of transformation on corresponding step of the Fourth stage of the Way of data of a business environment of the company, its product range, the commodity nomenclature and assortments, the life cycles of products, the target function and quality of products, indicators of the offer of products in the markets; users carry out the remote connection to the application server over synthesis of strategies, using the program of type «SMART TeamWorks», and they transfer results of the operation process of the computing server to it by means of a remote session for forming together with the application server over synthesis of strategies of tasks over generating the digital codes of data for purposes of the application server over synthesis of strategies, send these tasks over communication channels to the application server of digital transformation of data and come out of operating process of the computing server; *the fourth operation* - users enter operating process of the application server of digital transformation of data and set digital designations for each type of a product, indicators of the offer and useful effect of a product, life cycle of the offer, its temporal phases, indicators of planning of resources, generate according the specified parameters by means of using of the program of type «Serial Key Generator» the digital codes for different groups of conditions and restrictions in resources at creation of various products at each step of the fourth stage of the Way; *the fifth operation* - users according the specified parameters and by means of use of the program of type «Serial Key Generator» generate the integrated digital codes for each scenario of transformation of indicators of development of the company and the offer of its products, include into structure of these codes the references not only to digital identifiers of a certain market, a temporal phase, group of the conditions influencing the scenario, but also to identifiers of type of a product or an assortment and to the indicators defining the scenario of products development and establish connection of the formed codes with digital codes of temporal rows of data of demand in the corresponding indicators of the products forecasted at the third stage of the Way; users transfer digital data to the application server over synthesis of strategies over communication channels by means of technology OLE, implementing the mechanism of interprocessor interaction based on COM, and come out of operating process of the application server of digital transformation of data; *the sixth operation* -- users resume the suspended operating process on the application server over synthesis of strategies; on the basis of the obtained digital codes and estimates of the computing server they make changes into files about scenarios of transformation of data at each step of the fourth stage of the Way, create files about groups of limitations over resources for each scenario and carry out the matrix-digital mechanism of synthesis of strategies of the proposal of each group of the similar products of the company by means of use of mathematical and graphic tools of the program of type «SAS^{∗} Visual Analitics», namely users carry out the vector analysis in 3D models for establishment in the system of coordinates of time and space of orientation and collinearity of the nonzero vectors lying in the various spheres of multidimensional coordinates, characterizing respectively a vector of the chosen group of conditions, a vector of group of limitations over resources and a vector of the scenario of transformation of a certain group of similar products; users reflect schedules on interactive displays of type «SMART Board, series 7000Pro», which work on the basis of the software «SMART Meeting Pro» and «SMART ink», for comparison of different variants and choose from all possible a vector of the scenario, at which collinearity and parallelism of all three vectors over relation to axes of coordinates and to each other are reached; according to each chosen scenario define the long-term strategy of transformation of data of the offer of each group of similar products and represent it in a digital format in the form of full graph - of polyhedron, in which, on the one hand, all tops of vectors of the temporal, spatial parameters, data of conditions and opportunities are connected among themselves by both direct arcs and return arcs, but on the other hand, all arcs by tops enter into the focused top - into the chosen long-term strategy of transformation of data of the offer of a certain group of similar products; as a result, users define long-term development strategies of the company and the offer of its products at the corresponding steps of the fourth stage of the Way; *the seventh operation* - users synthesize the current strategies over products for each phase of the long-term period according to long-term strategies and create files of development strategies of the company and the offer of its products at each step of the fourth stage of the Way, form the structure of a digital block of strategies that consists from six compartments, each of which is created at the corresponding step of the fourth stage of the Way and includes four sections; users send tasks for generating the barcodes over communication channels to the application server of digital transformation of data and come out of operating process of the application server over synthesis of strategies; *the eighth operation* - users enter operating process of the application server of digital transformation of data and according the specified parameters and by means of use of a program of type «ActiveBarcode» generate the barcodes of type «QR» or «Data Matrix for designation of each long-term and current strategy of transformation of the offer of both each assortment and each group of similar products and for designation of development strategies of the company in a whole, include into structure of codes the references to identifiers not only of strategies, but also of the markets, temporal phases, chosen groups of the conditions and restrictions over resources, which influence the strategies choice, as well as create the connected barcodes for each from six compartment and for each of four sections that enter into each compartment, form an integrated barcode for designation of a block of strategies, which unites all sections and compartments of the fourth stage of the Way; users transfer digital data to the application server over synthesis of strategies over communication channels by means of the OLE technology, implementing the mechanism of interprocessor interaction based on COM, and come out of operating process of the application server of digital transformation of data; *the ninth operation* - users enter operation process of the application server over synthesis of strategies; using results of the previous operations, the generated barcodes, they form at each step of the fourth stage of the Way the corresponding compartment of a digital block of strategies, namely: compartment of strategies of transformation of a business environment of the company - at the first step; compartment of development strategies of the company and its product range - at the second step; compartment of strategies of transformation of the commodity nomenclature and assortments - at the third step; compartment of strategies of transformation of the life cycles of the offer of products - at the fourth step; compartment of strategies of transformation of the target function, quality of products - at the fifth step; compartment of strategies of transformation of indicators of the offer of products - at the sixth step of the fourth stage of the Way, as well as create four sections in each compartment of a digital block of strategies, each of sections includes the created files, namely: the files of groups of conditions are included into the first section of each compartment; the files of possible scenarios of development of the company and of the offer of its products - into the second section; the files of groups of restrictions over resources - into the third section; the files of long-term and current development strategies of the company and offer of its products - into the fourth section; users carry out direct transfer of the created files to the file server owing to using by servers of the installed «FTP Rush» program by means of «FXP» session under «FTP» protocol and come out of operating process on the application server over synthesis of strategies; *the tenth operation* - users enter operating process of the file server, register the received files for storage and file operations, send files of four sections of each compartment created at each step of the fourth stage of the Way into storage of the file server and place under their barcodes in structure of the formed digital block of strategies, which is denoted by an integrated barcode and is created over the matrix principle from six vertical compartments and four horizontal sections of each compartment; this block is a result of operating process of performance of all steps of the fourth stage of the Way at all levels of the Fourth subsystem; users carry out direct transfer of the files of databases from a digital block of databases of the first stage, the files of the object-relational models from a digital block of DBMS of the second stage, the files of forecasted multidimensional temporal rows of data from a digital analytical block of the third stage, and the files of strategies of transformation of data from a digital block of strategies of the fourth stage, namely from blocks of storage of the file server to the application server of the target appointment owing to using by servers of installed program «FTP Rush» by means of «FXP» session under «FTP» protocol, come out of operating process of the file server; upon termination of the tenth operation at all levels of the Fourth subsystem and finishing of all steps of the fourth stage of the Way, users come out of network of the Fourth subsystem;
users enter into network of the Fifth subsystem and perform the fifth stage of the Way, which includes a set of actions over matrix-digital generating a plurality of the output data of the target strategic program of the offer of products in interrelation with temporal and spatial parameters and over formation of a digital block of strategic programs, for this purpose users carry out four step entering the fifth stage, on each step create the digital sequence of operations and the matrix-digital mechanism of process of generating a plurality of data of the strategic program of the offer of products, namely: at the first step - generating a plurality of data of the strategic program of the offer of the commodity nomenclature and assortments; at the second step - generating a plurality of temporal parameters of the strategic program of the offer of products; at the third step - generating a plurality of data of target function, qualitative parameters of the strategic program of the offer of products; at the fourth step - generating a plurality of data of the effectiveness of target function, the volumes, prices of the strategic program of the offer of products; for implementing each step of the fifth stage the users use servers and their software of the Fifth of subsystems of the System and carry out twelve consecutive operations, which are typical for all steps of the fifth stage of the Way, namely: *the first operation* - users enter operating process of the application server of the target appointment and build in 3D format by means of use of the program of type ZWCAD for Windows 10 the multidimensional matrix-digital models at each step of the fifth stage of the Way, which are called subsequently «models», namely: the model of assortments is being built at the first step; model of life cycles - at the second step; model of quality - at the third step; model of the offer of products - at the fourth step of the fifth stage of the Way; users reflect various types of products and phases of the life cycles of supply and demand in vertical columns, but which are located in different spatial coordinates of each matrix model, whereas spatial parameters of positioning products in the markets, also indicators of the offer of products in the markets - in horizontal sections of each model, as well as divide each cell in half to place data of indicators of demand in the top part of cells, whereas data of indicators of the offer of products generate in the lower part of cells of each model; users reflect the created models in 3D format on interactive displays of type «SMART Board 7000 Pro» for the coordinated work of developers of the project with models by means of the software «SMART Meeting Pro» and «SMART ink» and for use of the constructed models in a role of the tools of multi-purpose optimization and planning of a plurality of data of the strategic program of the offer of products in conformity with a principle of «set theory» at each step of the fifth stage of the Way; *the second operation* - users analyze the data obtained from blocks of the previous stages, input digital designations that are identical to the identifiers of the markets, demand, the offer, types of products, temporal phases, indicators of products, which were established at the previous stages, into models, determine in a digital format the fields of matrix-digital models on each step of the fifth stage of the Way; *the third operation* - users carry out the automatic input of the forecasted data of demand in products into the top part of cells of each model, the entered data were defined for different markets and phases of the long-term period on the basis of temporal rows of the data of demand, which were forecasted at the third stage of the Way and received by the application server of the target appointment from the file server by means of use of the Scheduler of tasks, which is a part of the program «FTP Ruch» and allows to carry out operation of data input in the automatic mode; as a result, users define recommended data for strategic planning of data of the offer of products at each step of the fifth stage of the Way; *the fourth operation* - users simulate the potentially possible plurality of data of the offer of each product in various markets during different phases of the long-term period by means of use of the software of type «IBM WebSphere Business Modeler», which allows to form a list of the key indicators of the offer of products, to tie them to business processes, to connect them with indicators of the effectiveness and aggregate useful effect of products, calculated over formulas that are denoted «*KPI», «AUE», «AUE*_{U}», as well as to consider at modelling: the forecasted temporal rows of data of demand in products; the established interrelations between data and indicators of the offer of products; the limitations over various resources for transformation of indicators of the offer of products; the chosen strategies of the offer of products; users load files, received over communication channels, into an imitation model by means of program tools at once, namely: files of a block of object-relational models of the second stage, files of an analytical block of the third stage, files of a block of strategies of the fourth stage, and on the basis of results of all previous stages they simulate combinations of a plurality of data of the offer of products at each step of the fifth stage of the Way; users send tasks for generating the digital codes over communication channels to the application server of digital transformation of data and come out of operating process of the application server of the target appointment; *the fifth operation* - users enter operating process of the application server of digital transformation of data; according the specified parameters and by means of use of the program of type «Serial Key Generator», users generate the integrated digital codes for designation of data of various indicators of both demand and the offer in each cell of a model of assortments, a model of life cycles, a model of quality, a model of the offer of products, respectively, and include into structure of these digital codes the references not only to digital identifiers of a model, a product type, various indicators of demand or the offer but also to identifiers of both a certain market and a certain phase of the long-term period, define common features of the generated codes of indicators of the offer of products with digital codes of indicators of demand that are forecasted for a long-term outlook; on the basis of the generated digital codes for designation of indicators of the offer of products users form the series of intermediate digital codes for designation of data in combinations of a model of each step of the fifth stage of the Way; users transfer digital data to the application server of the target appointment over communication channels by means of OLE technology, implementing a mechanism of interprocessor interaction based on COM, and come out of operating process of the application server of digital transformation of data; *the sixth operation* - users enter operating process of the application server of the target appointment, reflect models of each step of the fifth stage on interactive displays of type «SMART Board», series 7000 Pro, with the software «SMART Meeting Pro» and «SMART ink», as well as create in 3D format on separate displays various combinations of these models owing to consecutive replacement in the lower part of cells of one combination of a plurality of data of the offer of products and their intermediate codes by another combination, each of which differs not only by data of various indicators of the offer of products, but also by temporal and spatial parameters of their placement in various markets in various phases of the long-term period for the subsequent comparative analysis and assessment of the effectiveness of the created combinations of each model, respectively of a model of assortments - at the first step, a model of life cycles - at the second step, a model of quality - at the third step, a model of the offer of products - at the fourth step of the fifth stage of the Way; users carry out a remote connection to the computing server by means of use of the program for remote access of type «SMART TeamWorks» for further work of group of developers with the models that are displayed on interactive displays of the computing server, stop the operating process on the application server of the target appointment, but do not come out of it fully, they do not switch off interactive displays and do not close programs «SMART Meeting Pro» and «SMART ink»; *the seventh operation* - users enter operating process of the computing server and assess the target function, efficiency, profitability of products, coefficient of the effectiveness of a plurality of data of the offer of products owing to use of the program of type «IBM SPSS Statistics», as well as reflect data in interactive displays by means of programs «SMART Meeting Pro» and «SMART ink» and calculate over formulas «*AUE; AUE*_{U}» the potential aggregate useful effect from offering of both each product and all products in different combinations of a model of each step of the fifth stage of the Way, taking into account that all data in them are presented in a matrix form and are connected, impacting at each other, calculate summary indicators of aggregate useful effect, place them by means of the software «SMART Meeting Pro» and «SMART ink in summary cells of combinations of each model; as a result, users obtain data about synergistic effectiveness of both each product and all set of products during full life cycle of their offering in all markets in combinations of a model of each step of the fifth stage of the Way; *the eighth operation* - users carry out in a digital format the comparative assessment of various combinations of a plurality of data of indicators of the offer of products on the basis of the received estimates of their useful effect, and decide the multicriteria tasks on the basis of constructed flowcharts of decision-making owing to use of interactive displays and software of type «DecideIT», reflect results of the multicriteria comparative assessment of effectiveness of various combinations of each model on interactive displays and recommend an optimum combination: for a model of assortments - at the first step; for a model of life cycles - at the second step; for a model of quality - at the third step; for a model of the offer of products - at the fourth step of the fifth stage of the Way; users transfer results of operations of the computing server to the application server of the target appointment by means of a remote session of the program for remote access of type «SMART TeamWork» and come out of operating process of the computing server; *the ninth operation* - users resume the suspended operating process on the application server of the target appointment; on the basis of data of the previous operations they choose from all possible combinations the most productive combination, respectively for a model of assortments, a model of life cycles, a model of quality, a model of the offer of products, in each of which such strategic range of a plurality of data of the offer of products is generated, which provides the highest synergistic effectiveness, namely by means of the full version of each model, aggregated over all products, users determine the most productive combination of a plurality of data of the offer of each product in various markets and phases of its life cycle, which is a part of the offer of all products of the company at optimization of expenses over the offer of products in a whole, as well as users synthesize summary cells of models, change the intermediate digital codes by the constant digital codes at designation of data of the offer of products in the lower half of cells of models and complete formation of files of created models at each step of the fifth stage of the Way; users send tasks for generating the barcodes over communication channels to the application server of digital transformation of data and come out of operating process of the application server of the target appointment; *the tenth operation* - users enter operating process of the application server of digital transformation of data and according the specified parameters, by means of use of the program of type «ActiveBarcode» generate the barcodes of type «QR» or «Data Matrix for designation of each model, strategic program over assortments, life cycles, the target function and quality, indicators of the offer of products, as well as for designation of the commodity nomenclature, each assortment, each product of the strategic program for the subsequent definition over the barcode of any assortment or product the planned plurality of data of the offer of it in the strategic program during the long-term period; as a result, users form barcodes for the integrated target strategic program and for a block of strategic programs and transfer all created barcodes to the application server of the target appointment over communication channels owing to using OLE technology, implementing the mechanism of interprocessor interaction based on COM, and come out of operation process on the application server of digital transformation of data; *the eleventh operation* - users enter operating process of the application server of target appointment; using the system of the generated digital codes and a synergetic plurality of data of models, they create files of final documents of strategic programs, namely, of the strategic program over commodity nomenclature and assortments with range of the output data of the width, depth, composition of the offer of each assortment - at the first step, of the strategic program over temporal parameters of the offer of products with range of the output data of time of the beginning, duration and the termination of phases of life cycle of the offer of each product - at the second step, of the strategic program of quality with range of the output data of a plurality of indicators of quality and the target function of each product - at the third step, of the strategic program of the offer of products with range of the output data of a plurality of indicators of the effectiveness of the target function, the volume, price of the offer of each product in various markets during phases of long-term period - at the fourth step of the fifth stage of the Way; users unite all strategic programs, which are connected with each other, one program cannot be performed without each another program, into the target strategic program of the offer of products of the company; users carry out direct transfer of the created files to the file server owing to using by servers of the installed program «FTP Rush» by means of a session «FXP» under «FTP» protocol and come out of operation process of the application server of target appointment; *the twelfth operation* - users enter operating process of the file server, register the received files of models and strategic programs under their barcodes for storage and file operations, send files into storage of the file server and place into a digital block of strategic programs, which unites all files of the fifth stage; this block is a result of operation process of all steps of the fifth stage of the Way on all levels of the Fifth subsystem; users carry out direct transfer of the files of the models and strategic programs of the fifth stage from a block of strategic programs of the storage of the file server to the application server of target appointment owing to using by servers of the installed program «FTP Rush» by means of «FXP» session under «FTP» protocol and come out of operating process of the file server; upon termination of the twelfth operation at all levels of the Fifth subsystem and finishing of all steps of the fifth stage of the Way, users come out of network of the Fifth subsystem;
users enter into network of the Sixth subsystem and perform the sixth stage of the Way, which includes a set of actions over situational transformation of a plurality of data of the current programs of the offer of products and over formation of a digital block of the situational-strategic program; for this purpose users carry out four step entering in the sixth stage, on each step create the digital sequence of operations and the matrix-digital mechanism of process of situational transformation of a plurality of data, namely: at the first step - of the situational transformation of a plurality of data of width, depth and composition of the offer of commodity assortments for updating of the current program over assortments; at the second step - of the situational transformation of a plurality of temporal parameters of the offer of products for updating of the current program of life cycles of products; at the third step - of the situational transformation of a plurality of data of the target function, quality of the offer of products for updating of the current program of quality of products; at the fourth step - of the situational transformation of a plurality of data of the effectiveness of the target function, the volumes, prices of the offer of products for updating of the current program of the offer of products; for implementing each step of the sixth stage the users use servers and their software of the Sixth of subsystems of the System and carry out fourteen consecutive operations, which are typical for all steps of the sixth stage of the Way, namely: *the first operation* - users enter operating process of the application server of the target appointment, establish connection with matrix-digital models of the fifth stage, on their basis and by means of use of the program of type ZWCAD build in 3D format the situational matrix-digital models, called hereinafter in the reduced form «situational models», which are tools for multi-purpose optimization and situational transformation of data in real time according current need, namely :«situational model of assortments» is being built at the first step; «situational model of life cycles» - at the second step; «situational model of quality» - at the third step; «situational model of the offer of products» - at the fourth step of the sixth stage of the Way; *the second operation* - users use the Scheduler of tasks, which is a part of the software «FTR Ruch», to fill situational models by data of the target strategic program in the automatic mode, namely users fill situational models by the forecasted data of demand and planned data of the offer of products during the current period, as well as denote fields of situational models by digital codes, which are identical with codes of fields of models of the fifth stage of the Way but contain in composition the index indicating their current appointment in role of situational models for updating the data of the current program of the offer of products, it allows to reach the best commonality of lines and columns and the best comparability of data of strategic and situational models at each step of the sixth stage of the Way; *the third operation* - users reflect the situational models, which are created in 3D format, on interactive displays of type «SMART Board», series 7000 Pro for the coordinated correction by developers of the project of data of these models by means of use of the software «SMART Meeting Pro» and «SMART ink»; users monitor change of the current demand, update in real time in the top part of cells of each situational model the forecasted data by current data of demand of the markets in various products by means of use of interactive displays at each step of the sixth stage of the Way; *the fourth operation* - users, using the visual image on interactive displays, define such cells in situational models, in which the current actual data of demand do not correspond to the planned data of the offer of these products in various markets during current period and define the direction of discrepancies at performance of each step of the sixth stage of the Way, namely: in a situational model of assortments - at the first step; in a situational model of life cycles - at the second step; in a situational model of quality - at the third step; in a situational model of the offer of products - at the fourth step of the sixth stage of the Way; *the fifth operation* - users simulate various combinations of transformation of a plurality of data of the offer of products in conformity with data of demand of various markets during the current period by means of use of the software of type «IBM WebSphere Business Modeler» that allows to carry out not only strategic modeling at the fifth stage, but it intended also for situational transformation of data of these indicators of the offer of products in limits of resources opportunities and in borders of range of the data defined in the target strategic program of the enterprise for ensuring unity and balance of the current and strategic programs, including performance of multidimensional graphic modeling of data at once over several parameters by use of the program of type «Advanced Grapher», which is compatible to the software «IBM WebSphere Business Modeler», and it is applicable as an additional graphic tool of optimization, namely users define on a vertical axis of coordinates the data of a main indicator according to the chosen strategy and in the range of the restrictions that were set by the strategic program, whereas on the horizontal axes of coordinates at the left and on the right they define data of two other indicators in dependence from a main indicator and owing to crossing of curves functions of supply and demand at realization of the chosen strategy of positioning products in the markets during the current period; as a result, users generate a potentially possible plurality of the current data of the key indicators of the offer of products at each step of the sixth stage of the Way, namely: in a situational model of assortments - at the first step; in a situational model of life cycles - at the second step; in a situational model of quality - at the third step; in a situational model of the offer of products - at the fourth step of the sixth stage of the Way; users send tasks for generating the digital codes over communication channels to the application server of digital transformation of data and come out of operating process of the application server of the target appointment; *the sixth operation* - users enter operating process of the application server of digital transformation of data and generate the integrated digital codes for designation of indicators of both demand and the offer of products in situational models on each step of the sixth stage of the Way according the specified parameters, by use of the program of type «Serial Key Generator»; users include into structure of these digital codes the references not only to digital identifiers of situational models, types of products, various indicators of demand or offer but also to identifiers of both a certain market and a certain phase of the current period, define common features of the generated codes of indicators of the current offer of each product with digital codes of indicators of current demand and with the corresponding digital codes of the strategic program of the offer of each product in a long-term perspective for establishment of communication between these data with the help of digital codes; on the basis of digital codes for designation of the current data of the offer of products users form series of intermediate digital codes for designation of data in various combinations of a situational model of each step of the sixth stage of the Way; users transfer digital data to the application server of the target appointment over communication channels by means of the OLE technology, implementing the mechanism of interprocessor interaction based on COM, and come out of operating process of the application server of digital transformation of data; *the seventh operation* - users enter operating process of the application server of the target appointment and reflect a situational model of each step of the sixth stage of the Way on different interactive displays for simultaneous work of group of developers by means of the software «SMART Meeting Pro» and «SMART ink» for creation of models combinations; users create various combinations of each model by consecutive replacement in the lower part of its cells of one combination of data of indicators of the current offer of products and their intermediate codes by another combination of data and their digital codes, which are different not only over a plurality of data of the offer of products, but also over spatial parameters of placement of products in various markets in different phases of the current period, and reflect the created various combinations of each situational model on separate interactive displays in 3D format and in a digital format for the subsequent comparison of productivity of combinations of each of models in a digital format; users carry out remote connection to the computing server by means of use of the program for remote access of type «SMART TeamWorks» for further work of group of developers on interactive displays of the computing server with the combinations of situational models of each step of the sixth stage of the Way, suspend operating process on the application server of the target appointment, but do not come out of it fully, they do not switch off interactive displays and do not close programs «SMART Meeting Pro» and «SMART ink», *the eighth operation* - users enter operating process of the computing server, compare various combinations of each situational model among themselves over degree of correspondence of the transformed data with the planned relevant data of the strategic program and with data of the current consumer demand of the markets by means of use of the program of type «IBM SPSS Statistics»; as a result, users assess, select and reject over the majority of key parameters the least possible combinations of a situational model of assortments, life cycles, quality and the offer of products, respectively at each step of the sixth stage of the Way; *the ninth operation* - users carry out comparative assessment of the selected combinations of each situational model owing to the solution of tasks of multicriteria optimization of data on the basis of drawing up of the flowcharts of decision-making in a digital format, their of realization by means of the program of type «DecideIT» and of the calculation of increment of aggregate useful effect from all transformed plurality of data of each combination of the situational models over comparison with the planned aggregate useful effect for the current period in the corresponding strategic program; for this purpose users calculate over formulas «*AUE*», «*AUE*_{U}» aggregate useful effect in total cells of various combinations of each situational model and obtain data about synergistic effectiveness of both each type of a product and all set of products during the current period of their offer in all markets; users display on interactive displays by means of programs «SMART Meeting Pro» and «SMART ink» results of the multicriteria assessment of productivity of various combinations, respectively of a situational model of assortments - at the first step, of a situational model of life cycles - at the second step, of a situational model of quality - at the third step, of a situational model of the offer of products - at the fourth step of the sixth stage of the Way; users transfer results of operations of the computing server to the application server of the target appointment by means of a remote session of the program for remote access of type «SMART TeamWorks» and come out of operating process of the computing server; *the tenth operation* - users resume the suspended operating process on the application server of the target appointment; on the basis of the data, obtained from the computing server, users choose the most productive combination from all possible combinations, respectively for a situational model of assortments, for a situational model of life cycles, for a situational model of quality, for a situational model of the offer of products, in each of which such plurality of data of the offer of each product during the current period is generated, which provides the highest synergistic effectiveness of the updated current program in a whole, also users synthesize summary cells of situational models and change the intermediate digital codes by the constant digital codes for designation of data of the offer of products in the lower half of cells of models, complete formation of the files of created situational models of assortments, life cycles, quality and the offer of products at each step of the sixth stage of the Way; users send tasks for generating the barcodes over communication channels to the application server of digital transformation of data and come out of operating process of the application server of the target appointment; *the eleventh operation* - users enter operating process of the application server of digital transformation of data and according the specified parameters, by means of use of the program of type «ActiveBarcode» generate the barcodes of type «QR» or «Data Matrix for designation of each created situational model and the current program over assortments, temporary parameters, quality, indicators of the offer of products, as well as for designation of the commodity nomenclature, each assortment, each product of the current program for the subsequent definition over the their barcode of the range of the planned plurality of data of the offer of a certain assortment or a product in the program for the current period; as a result, users generate barcodes for the integrated current program and the integrated situational-strategic program and their blocks; users transfer digital data to the application server of the target appointment over communication channels by means of OLE technology, implementing the mechanism of interprocessor interaction based on COM, and come out of operating process of the application server of digital transformation of data; *the twelfth operation* - users enter operating process of the application server of the target appointment and create files of the current programs on the basis of situational models and the received barcodes, namely files of the current program of the offer of assortments - at the first step, of the current program of the temporal parameters of the offer of products - at the second step, of the current program of the target function, quality of the offer of products - at the third step, of the current program of effectiveness of the target function, the volume, price of the offer of products - at the fourth step of the sixth stage of the Way, as well as generate a plurality of the output data of the integrated current program of the offer of products; users carry out direct transfer of the created files of models and the current programs to the file server owing to use by servers of the installed program «FTP Rush» by means of sessions «FXP» under «FTP» protocol and come out of operating process on the application server of the target appointment; *the thirteenth operation* - users enter operating process of the file server, register the received files of situational models and the current programs under their barcodes for storage and file operations, send files into storage of the file server and place into a digital block of the current programs, where all current programs under their barcodes are united into the united current program, which is denoted by an integrated barcode; *the fourteenth operation* - users enter digital blocks of strategic and current programs, which there are in storage of the file server, and users do copies of files of strategic and current programs, place these copies in the new folder and create an integrated block of the situational-strategic program of the offer of products under a separate barcode; it is a result of operating process of all levels of the Sixth subsystem at performance of all steps of the sixth stage of the Way, as well as it is a result of functioning of all subsystems and of the System in a whole owing to implementing all stages of the Way; users send from the file server via web-server of the System to web-server of the enterprise the created files and the information that all blocks are formed, all files of the situational-strategic program are created and sent, action of the System is finished; users come out of operating process of the file server, of network of the Sixth subsystem and the System in a whole.
